# EUROPEAN PATENT APPLICATION

(11) **EP 4 736 640 A1**
(43) Date of publication of application: **06.05.2026**
(21) Application number: 24831866.9
(22) Date of filing: 21.06.2024
(51) Int. Cl.: A01M 7/00, A01B 51/02, A01B 59/06, A01B 63/11

(54) **WORK VEHICLE AND METHOD FOR INSTALLING WORK DEVICE**

(30) Priority: 27.06.2023 JP 2023105379; 27.12.2023 JP 2023220485
(71) Applicant: KUBOTA CORPORATION, Osaka-shi, Osaka 556-8601 (JP)
(72) Inventor: SAKANO, Tomoyoshi, Sakai-shi, Osaka 590-0908 (JP); SOEJIMA, Masaru, Sakai-shi, Osaka 590-0908 (JP); HIBINO, Tsuyoshi, Sakai-shi, Osaka 590-0908 (JP); YOSHIDOME, Kazuhiro, Sakai-shi, Osaka 590-0908 (JP); TESHIMA, Takeshi, Sakai-shi, Osaka 590-0908 (JP); FUKUDA, Ryosuke, Sakai-shi, Osaka 590-0908 (JP); MAKINO, Ryota, Sakai-shi, Osaka 590-0908 (JP)
(74) Representative: Cabinet Beau de Loménie
(86) International application number: PCT/JP2024/022581
(87) International publication number: WO 2025/005005

(57) **Abstract**

Provided is a working vehicle to lower the position of the center of gravity of the vehicle to improve the stability of the vehicle. A working vehicle (1) includes a vehicle body (2), a traveling device (3) to support the vehicle body (2) such that the vehicle body (2) is allowed to travel, a working device (200) to perform work. The working device (200) includes pieces of equipment (201) located at opposite sides of the vehicle body (2) from each other.

## Description

### Technical Field

The present invention relates to a working vehicle to perform work such as agricultural work, and a method of attaching a working device to the working vehicle.

### Background Art

The working vehicle disclosed in PTL 1 has been known. The working vehicle disclosed in PTL 1 includes a vehicle body, a traveling device, and a working device (spreader). The working device includes a plurality of pieces of equipment, such as tanks, which house a substance to be spread.

The working vehicle disclosed in PTL 2 has been known. The working vehicle (tractor) disclosed in PTL 2 includes a vehicle body (traveling machine body), a power supply apparatus (engine) mounted on the vehicle body, an output shaft (PTO shaft) to rearwardly take power generated by the power supply apparatus, and a mount (three-point linkage mechanism) for attaching a working device (cultivator) to a rear portion of the vehicle body.

### Citation List

### Patent Literature

PTL 1: Japanese Unexamined Patent Application Publication No. 2015-39319
PTL 2: Japanese Unexamined Patent Application Publication No. 2016-15936

### Summary of Invention

### Technical Problem

**In** the working vehicle disclosed in PTL 1, a tank that houses a substance to be spread is located at an upper rear portion of the vehicle body, the tank being part of pieces of equipment of the working device. Thus, the height of the vehicle is increased due to the tank, and the position of the center of gravity of the vehicle is elevated, therefore, the stability of the vehicle may be reduced.

The present invention has been made in consideration of the above-described problem, and it is an object to provide a working vehicle that can improve the stability of the vehicle by lowering the position of the center of gravity of the vehicle.

**In** the working vehicle disclosed in PTL 2, a working device can be attached to a rear portion of the vehicle body via the mount provided rearward of the vehicle body. However, the working device cannot be attached to an upper portion of the vehicle body.

The present invention has been made in consideration of the above-described problem, and it is an object to provide a working vehicle and a method of attaching a working device thereto, the working vehicle being configured to allow a working device to be attached to an upper portion of the vehicle body.

### Solution to Problem

A working vehicle according to an example embodiment of the present invention includes a vehicle body, a traveling device to support the vehicle body such that the vehicle body is allowed to travel, and a working device to perform work, wherein the working device includes pieces of equipment located at opposite sides of the vehicle body from each other.

The opposite sides of the vehicle body at which the pieces of equipment are located may be left and right sides of the vehicle body.

The opposite sides of the vehicle body at which the pieces of equipment are located may be front and rear sides of the vehicle body.

The pieces of equipment located at the opposite sides of the vehicle body from each other may have the same function.

The pieces of equipment located at the opposite sides of the vehicle body from each other may have respective different functions.

The working device may be a spreader to spread a liquid substance. The pieces of equipment may be tanks to store the liquid substance to be spread. The tanks may include a first tank and a second tank located at the opposite sides of the vehicle body from each other.

The pieces of equipment of the working device may include batteries. The batteries may include a first battery and a second battery located at the opposite sides of the vehicle body from each other.

The working vehicle may further include a support frame to support the pieces of equipment and attachable to and detachable from the vehicle body. The support frame may be located above the pieces of equipment.

The working vehicle may further include a support frame to support the pieces of equipment and attachable to and detachable from the vehicle body. The support frame may be located below the pieces of equipment.

The working vehicle may further include a frame structure provided at a periphery of the vehicle body and attached to the vehicle body. The frame structure may include a left frame located leftward of the vehicle body to extend in an up-down direction, a right frame located rightward of the vehicle body to extend in the up-down direction, and a lateral frame connecting the left frame and the right frame. The pieces of equipment may include a first piece of equipment located leftward of the left frame and a second piece of equipment located rightward of the right frame.

The support frame may be configured to be attached to the vehicle body from above.

The support frame may be configured to be attached to the vehicle body from front or rear.

The working vehicle may further include a height changing mechanism to change a height of the vehicle body that is a distance of the vehicle body from a ground surface.

A working vehicle according to an example embodiment of the present invention includes a vehicle body, a traveling device to support the vehicle body such that the vehicle body is allowed to travel, and a lifting mechanism to raise and lower the vehicle body, wherein the lifting mechanism is configured to raise the vehicle body from a position below a working device to attach the working device to the vehicle body.

The lifting mechanism may be configured to lower, together with the vehicle body, the working device attached to the vehicle body from a position above a rest toward the rest to detach the working device from the vehicle body.

The vehicle body may have therein or thereon a power supply apparatus and a power transmission mechanism to transmit power generated by the power supply apparatus to the working device. The lifting mechanism may be configured to raise the vehicle body, which has therein or thereon the power supply apparatus and the power transmission mechanism, to attach the working device to the vehicle body.

The power supply apparatus may include a battery and a motor to be driven by electricity supplied from the battery. The lifting mechanism may be configured to raise the vehicle body, which has therein or thereon the battery and the motor, to attach the working device to the vehicle body.

The vehicle body may include an attaching/detaching mechanism to allow attachment and detachment of the working device to and from the vehicle body.

The attaching/detaching mechanism may include a locking mechanism to secure the working device to the vehicle body when the working device is placed on the vehicle body.

The vehicle body may include a protrusion raised upward at an upper portion thereof. The working device may include, at a lower portion thereof, a recess to receive the protrusion when the working device is attached to the vehicle body.

The protrusion may include a first inclined surface inclined such that a width of the protrusion decreases upward. The recess may include a second inclined surface to contact the first inclined surface when the working device is attached to the vehicle body.

The working device may include a harvester to perform harvesting work including at least one of reaping, digging or pulling a crop. The harvester may be configured to perform the harvesting work with the vehicle body in a lowered position.

A method of attaching a working device according to an example embodiment of the present invention is a method of attaching a working device to a traveling machine body which includes a vehicle body, a traveling device to support the vehicle body such that the vehicle body is allowed to travel, and a lifting mechanism to raise and lower the vehicle body, the method including an attaching step including raising the vehicle body from a position below the working device to attach the working device to the vehicle body.

### Advantageous Effects of Invention

The working vehicle according to the present invention can improve the stability of the vehicle by lowering the position of the center of gravity of the vehicle.

With the working vehicle and the method of attaching a working device thereto according to the present invention, the working device can be attached to an upper portion of the vehicle body.

### Brief Description of Drawings

[FIG. 1] FIG. 1 is a perspective view illustrating an embodiment (embodiment A) of a working vehicle.
[FIG. 2] FIG. 2 is a left side view illustrating the embodiment (embodiment A) of the working vehicle.
[FIG. 3] FIG. 3 is a right side view illustrating the embodiment (embodiment A) of the working vehicle.
[FIG. 4] FIG. 4 is a front view illustrating the embodiment (embodiment A) of the working vehicle.
[FIG. 5] FIG. 5 is a rear view illustrating the embodiment (embodiment A) of the working vehicle.
[FIG. 6] FIG. 6 is a plan view illustrating the embodiment (embodiment A) of the working vehicle.
[FIG. 7] FIG. 7 is a block diagram illustrating an example (embodiment A) of an entire configuration of the working vehicle.
[FIG. 8] FIG. 8 is a perspective view of a frame structure.
[FIG. 9] FIG. 9 is an exploded perspective view of side frames (left frame and right frame).
[FIG. 10] FIG. 10 is a perspective view illustrating an upper frame (lateral frame) and the side frames separately.
[FIG. 11] FIG. 11 is a left rear view of a first drive assembly (not including a steering mechanism).
[FIG. 12] FIG. 12 is a right front view of the first drive assembly (not including a steering mechanism).
[FIG. 13] FIG. 13 is a right rear view of a third drive assembly.
[FIG. 14] FIG. 14 is an upper left view of the third drive assembly.
[FIG. 15] FIG. 15 is a right rear view of the first drive assembly (including a steering mechanism).
[FIG. 16] FIG. 16 is a rear view of the first drive assembly (including a steering mechanism).
[FIG. 17] FIG. 17 is a rear view of the first drive assembly (not including a steering mechanism).
[FIG. 18] FIG. 18 is a plan view illustrating a steering mechanism (left steering mechanism) and a wheel (left front wheel).
[FIG. 19] FIG. 19 is a plan view illustrating a state where the rod of a cylinder of the steering mechanism (left steering mechanism) is extended.
[FIG. 20] FIG. 20 is a plan view illustrating a state where the rod of a cylinder of the steering mechanism (left steering mechanism) is retracted.
[FIG. 21] FIG. 21 is a plan view illustrating a change in the position of the left front wheel when the left front wheel is rotated inward.
[FIG. 22] FIG. 22 is a perspective view illustrating another embodiment (embodiment A1) of the working vehicle.
[FIG. 23] FIG. 23 is a left side view illustrating another embodiment (embodiment A1) of the working vehicle.
[FIG. 24] FIG. 24 is a schematic front view illustrating the first drive assembly with a first transmission shaft retracted.
[FIG. 25] FIG. 25 is a right rear view of the first drive assembly with the first transmission shaft retracted.
[FIG. 26] FIG. 26 is a left front view of the first drive assembly with the first transmission shaft extended.
[FIG. 27] FIG. 27 is a front view of the first drive assembly with the first transmission shaft extended.
[FIG. 28] FIG. 28 is a left front view of the third drive assembly with a lower transmission shaft extended.
[FIG. 29] FIG. 29 is a right rear view of the third drive assembly with the lower transmission shaft extended.
[FIG. 30] FIG. 30 is a perspective view of the working vehicle with the first transmission shaft and the lower transmission shaft extended.
[FIG. 31] FIG. 31 is a left side view of the working vehicle with the first transmission shaft and the lower transmission shaft extended.
[FIG. 32] FIG. 32 is a front view indicating that at least a portion of the first drive assembly is at an outer overlapping position.
[FIG. 33] FIG. 33 is a plan view indicating that at least a portion of the third drive assembly is at an outer overlapping position.
[FIG. 34] FIG. 34 is a schematic plan view illustrating the working vehicle with the rods of left and right cylinders retracted.
[FIG. 35] FIG. 35 is a plan view illustrating the working vehicle with the rods of left and right cylinders extended.
[FIG. 36] FIG. 36 is a schematic plan view illustrating the working vehicle including a distance changing mechanism including a first changing mechanism, a second changing mechanism, a third changing mechanism and a fourth changing mechanism.
[FIG. 37] FIG. 37 is a schematic rear view for explaining a configuration in which a left changing mechanism and a right changing mechanism are independently actuated.
[FIG. 38] FIG. 38 is a flowchart illustrating an example (first example) of the operation of the distance changing mechanism.
[FIG. 39] FIG. 39 is a schematic plan view for explaining the example (first example) of the operation of the distance changing mechanism.
[FIG. 40] FIG. 40 is a schematic plan view for explaining the example (first example) of the operation of the distance changing mechanism.
[FIG. 41] FIG. 41 is a schematic plan view for explaining the example (first example) of the operation of the distance changing mechanism.
[FIG. 42] FIG. 42 is a flowchart illustrating a variation of the first example.
[FIG. 43] FIG. 43 is a flowchart illustrating other example (second example) of the operation of the distance changing mechanism.
[FIG. 44] FIG. 44 is a schematic plan view for explaining another example (second example) of the operation of the distance changing mechanism.
[FIG. 45] FIG. 45 is a schematic plan view for explaining another example (second example) of the operation of the distance changing mechanism.
[FIG. 46] FIG. 46 is a schematic plan view for explaining another example (second example) of the operation of the distance changing mechanism.
[FIG. 47] FIG. 47 is a flowchart illustrating a variation of the second example.
[FIG. 48] FIG. 48 is a perspective view illustrating a state where the vehicle body is raised in an embodiment (embodiment A) of the working vehicle.
[FIG. 49] FIG. 49 is a left side view illustrating a state where the vehicle body is raised in an embodiment (embodiment A) of the working vehicle.
[FIG. 50] FIG. 50 is a front view illustrating a state where the vehicle body is raised in an embodiment (embodiment A) of the working vehicle.
[FIG. 51] FIG. 51 is a view illustrating a first correspondence table.
[FIG. 52] FIG. 52 is a view illustrating a second correspondence table.
[FIG. 53] FIG. 53 is a front view illustrating the working vehicle with the height of the vehicle body at a first crop correspondence height.
[FIG. 54] FIG. 54 is a front view illustrating the working vehicle with the height of the vehicle body at a second crop correspondence height.
[FIG. 55] FIG. 55 is a flowchart illustrating an example (first example) of the operation of a height changing mechanism.
[FIG. 56] FIG. 56 is a flowchart illustrating a variation of the first example.
[FIG. 57] FIG. 57 is a flowchart illustrating an example (second example) of the operation of the height changing mechanism.
[FIG. 58] FIG. 58 is a flowchart illustrating a variation of the second example.
[FIG. 59] FIG. 59 is a schematic side view for explaining the example (first example) of the operation of the height changing mechanism.
[FIG. 60] FIG. 60 is a schematic side view for explaining the example (first example) of the operation of the height changing mechanism.
[FIG. 61] FIG. 61 is a schematic front view for explaining the example (second example) of the operation of the height changing mechanism.
[FIG. 62] FIG. 62 is a schematic side view illustrating the working vehicle including a position changing mechanism, and a state where a power supply apparatus (battery) is at a rear position.
[FIG. 63] FIG. 63 is a schematic side view illustrating the working vehicle including the position changing mechanism, and a state where the power supply apparatus (battery) is at an optimal position between a front position and a rear position.
[FIG. 64] FIG. 64 is a schematic side view illustrating the working vehicle including the position changing mechanism, and a state where the power supply apparatus (battery) is at a front position.
[FIG. 65] FIG. 65 is a schematic perspective view illustrating a variation of the position changing mechanism, and a state where a housing frame and the power supply apparatus (battery) are at a rear position.
[FIG. 66] FIG. 66 is a schematic perspective view illustrating a variation of the position changing mechanism, and a state where the housing frame and the power supply apparatus (battery) are moved forward.
[FIG. 67] FIG. 67 is a flowchart illustrating an example of a control operation of a position changing control unit in a first embodiment.
[FIG. 68] FIG. 68 is a graph illustrating an example of a change in the slip ratio measured by a slip ratio measurer.
[FIG. 69] FIG. 69 is a flowchart illustrating an example of a control operation of a position changing control unit in a second embodiment.
[FIG. 70] FIG. 70 is a schematic side view for explaining an example of the operation of the position changing mechanism.
[FIG. 71] FIG. 71 is a graph illustrating an example of a change in the torque measured by a torque measurer.
[FIG. 72] FIG. 72 is a schematic side view for explaining an example of the operation of the position changing mechanism.
[FIG. 73] FIG. 73 is a flowchart illustrating another example of the control operation of the position changing control unit in the second embodiment.
[FIG. 74] FIG. 74 is a left side view illustrating still another embodiment (embodiment A2) of the working vehicle.
[FIG. 75] FIG. 75 is a front view illustrating still another embodiment (embodiment A2) of the working vehicle.
[FIG. 76] FIG. 76 is a front view for explaining a method of attaching a support frame to the vehicle body from above.
[FIG. 77] FIG. 77 is a left side view for explaining the method of attaching the support frame to the vehicle body from above.
[FIG. 78] FIG. 78 is a front view illustrating a working vehicle in an embodiment (embodiment A3) not including the height changing mechanism.
[FIG. 79] FIG. 79 is a left side view of a working vehicle including a support frame in another embodiment (embodiment A4).
[FIG. 80] FIG. 80 is a front view of the working vehicle including the support frame in another embodiment (embodiment A4).
[FIG. 81] FIG. 81 is a plan view illustrating the support frame and the like in another embodiment.
[FIG. 82] FIG. 82 is a left side view for explaining a method of attaching the support frame in another embodiment to the vehicle body from the rear.
[FIG. 83] FIG. 83 is a front view for explaining a method of attaching the support frame in another embodiment to the vehicle body from above.
[FIG. 84] FIG. 84 is a front view illustrating a working vehicle in an embodiment (embodiment A5) in which the support frame is located below the side frames.
[FIG. 85] FIG. 85 is a perspective view illustrating an embodiment (embodiment B) of the working vehicle.
[FIG. 86] FIG. 86 is a left side view illustrating the embodiment (embodiment B) of the working vehicle.
[FIG. 87] FIG. 87 is a right side view illustrating the embodiment (embodiment B) of the working vehicle.
[FIG. 88] FIG. 88 is a front view illustrating the embodiment (embodiment B) of the working vehicle.
[FIG. 89] FIG. 89 is a rear view illustrating the embodiment (embodiment B) of the working vehicle.
[FIG. 90] FIG. 90 is a plan view illustrating the embodiment (embodiment B) of the working vehicle.
[FIG. 91] FIG. 91 is a block diagram illustrating an example of an entire configuration of the working vehicle (embodiment B).
[FIG. 92] FIG. 92 is a perspective view of a frame structure.
[FIG. 93] FIG. 93 is an exploded perspective view of the frame structure.
[FIG. 94] FIG. 94 is a perspective view illustrating the working vehicle (embodiment B) with the vehicle body raised.
[FIG. 95] FIG. 95 is a front perspective view illustrating an embodiment of a harvesting machine (working vehicle in which a harvester is attached to a traveling machine body).
[FIG. 96] FIG. 96 is a left side view illustrating the embodiment of the harvesting machine (working vehicle in which a harvester is attached to the traveling machine body).
[FIG. 97] FIG. 97 is a right side view illustrating the embodiment of the harvesting machine (working vehicle in which a harvester is attached to the traveling machine body).
[FIG. 98] FIG. 98 is a rear perspective view illustrating the embodiment of the harvesting machine (working vehicle in which a harvester is attached to the traveling machine body).
[FIG. 99] FIG. 99 is a left side view illustrating another embodiment of a harvesting machine (working vehicle in which a harvester is attached to a traveling machine body).
[FIG. 100] FIG. 100 is a perspective view of the harvester as seen from below.
[FIG. 101] FIG. 101 is a side view illustrating a first example of structure of attachment of the harvester to the traveling machine body.
[FIG. 102] FIG. 102 is a side view illustrating a second example of structure of attachment of the harvester to the traveling machine body.
[FIG. 103] FIG. 103 is a side view illustrating a third example of structure of attachment of the harvester to the traveling machine body.
[FIG. 104] FIG. 104 is a front view illustrating the third example of structure of attachment of the harvester to the traveling machine body.
[FIG. 105] FIG. 105 is a side view illustrating a fourth example of structure of attachment of the harvester to the traveling machine body.
[FIG. 106] FIG. 106 is a front view illustrating the fourth example of structure of attachment of the harvester to the traveling machine body.
[FIG. 107] FIG. 107 is an explanatory view for a configuration that allows a projection to appear.
[FIG. 108] FIG. 108 is a vertical sectional view of a locking mechanism and a to-be-fixed portion as seen from the side.
[FIG. 109] FIG. 109 is a vertical sectional view of the locking mechanism and the to-be-fixed portion as seen from the front.
[FIG. 110] FIG. 110 illustrates a state (left figure) in which the locking mechanism is not actuated, and a state (right figure) after the locking mechanism is actuated.
[FIG. 111] FIG. 111 is an explanatory view of a first example of a method of attaching the harvester to the traveling machine body.
[FIG. 112] FIG. 112 is an explanatory view of the first example of the method of attaching the harvester to the traveling machine body.
[FIG. 113] FIG. 113 is an explanatory view of the first example of the method of attaching the harvester to the traveling machine body.
[FIG. 114] FIG. 114 is an explanatory view of the first example of the method of attaching the harvester to the traveling machine body.
[FIG. 115] FIG. 115 is an explanatory view of the first example of the method of attaching the harvester to the traveling machine body.
[FIG. 116] FIG. 116 is a plan view of a rest.
[FIG. 117] FIG. 117 is a plan view of a variation of a rest.
[FIG. 118] FIG. 118 is an explanatory view of an example of a method of detaching the harvester from the traveling machine body.
[FIG. 119] FIG. 119 is an explanatory view of the example of the method of detaching the harvester from the traveling machine body.
[FIG. 120] FIG. 120 is an explanatory view of a second example of a method of attaching the harvester to the traveling machine body.
[FIG. 121] FIG. 121 is an explanatory view of the second example of the method of attaching the harvester to the traveling machine body.
[FIG. 122] FIG. 122 is an explanatory view of the second example of the method of attaching the harvester to the traveling machine body.
[FIG. 123] FIG. 123 is an explanatory view of the second example of the method of attaching the harvester to the traveling machine body.
[FIG. 124] FIG. 124 is an explanatory view of a third example of a method of attaching the harvester to the traveling machine body.
[FIG. 125] FIG. 125 is an explanatory view of the third example of the method of attaching the harvester to the traveling machine body.
[FIG. 126] FIG. 126 is an explanatory view of the third example of the method of attaching the harvester to the traveling machine body.
[FIG. 127] FIG. 127 is an explanatory view of the third example of the method of attaching the harvester to the traveling machine body.
[FIG. 128] FIG. 128 is an explanatory view of a fourth example of a method of attaching the harvester to the traveling machine body.
[FIG. 129] FIG. 129 is an explanatory view of the fourth example of the method of attaching the harvester to the traveling machine body.
[FIG. 130] FIG. 130 is an explanatory view of the fourth example of the method of attaching the harvester to the traveling machine body.
[FIG. 131] FIG. 131 is an explanatory view of the fourth example of the method of attaching the harvester to the traveling machine body.
[FIG. 132] FIG. 132 is a view illustrating an example (first example) of a power transmission path of the harvesting machine (working vehicle in which the harvester is attached to the traveling machine body).
[FIG. 133] FIG. 133 is a view illustrating an example (second example) of a power transmission path of the harvesting machine (working vehicle in which the harvester is attached to the traveling machine body).
[FIG. 134] FIG. 134 is a view illustrating: a traveling machine body including a first example of a power transmission mechanism; and a harvester attached to the traveling machine body.
[FIG. 135] FIG. 135 is a view illustrating a state where an upward output shaft and a downward input shaft are connected via a shaft coupling.
[FIG. 136] FIG. 136 is a view illustrating a traveling machine body including a second example of a power transmission mechanism.
[FIG. 137] FIG. 137 is a view illustrating a state where a horizontal output shaft is changed to an upward shaft which extends upward.
[FIG. 138] FIG. 138 is a view illustrating the configuration of a harvester attached to the traveling machine body including the second example of the power transmission mechanism.
[FIG. 139] FIG. 139 is a view illustrating a state where the horizontal output shaft changed to upward, and the downward input shaft are connected via a shaft coupling.
[FIG. 140] FIG. 140 is a plan view illustrating a state where a projection of the horizontal output shaft is connected to a lower link and a top link via a connecting member.
[FIG. 141] FIG. 141 is a view illustrating: the traveling machine body including a third example of a power transmission mechanism; and a harvester attached to the traveling machine body.
[FIG. 142] FIG. 142 is a view illustrating a state where an output gear provided in the traveling machine body and an input gear provided in the harvester are engaged.
[FIG. 143] FIG. 143 is a view illustrating: a traveling machine body including a fourth example of a power transmission mechanism; and a harvester attached to the traveling machine body.
[FIG. 144] FIG. 144 is a view illustrating a state before a belt is wrapped around an output pulley provided in the traveling machine body and an input pulley provided in the harvester.
[FIG. 145] FIG. 145 is a state where a belt is wrapped around the output pulley provided in the traveling machine body and the input pulley provided in the harvester, and a tension pulley is brought into contact with the outer surface of the belt.
[FIG. 146] FIG. 146 is a view illustrating an example (first example) of the power transmission path of the harvesting machine (working vehicle in which the harvester is attached to the traveling machine body) when the harvester is a digging machine that digs up crops.
[FIG. 147] FIG. 147 is a view illustrating an example (second example) of the power transmission path of the harvesting machine (working vehicle in which the harvester is attached to the traveling machine body) when the harvester is a digging machine.
[FIG. 148] FIG. 148 is a view illustrating an example (first example) of the power transmission path of the harvesting machine (working vehicle in which the harvester is attached to the traveling machine body) when the harvester is a pulling up machine.
[FIG. 149] FIG. 149 is a view illustrating an example (second example) of the power transmission path of the harvesting machine (working vehicle in which the harvester is attached to the traveling machine body) when the harvester is a pulling up machine.

### Description of Embodiments

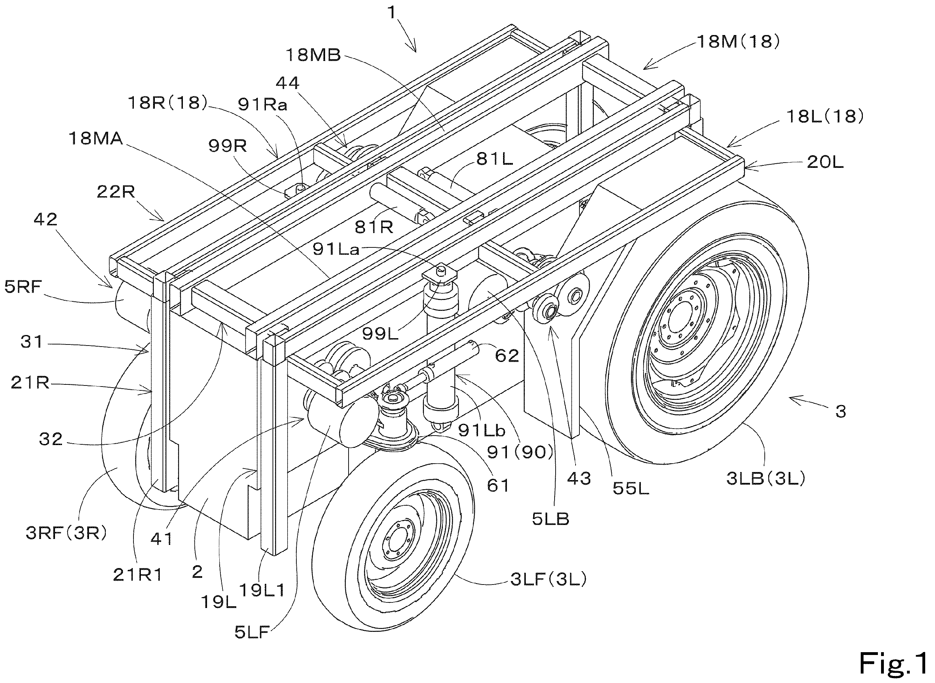

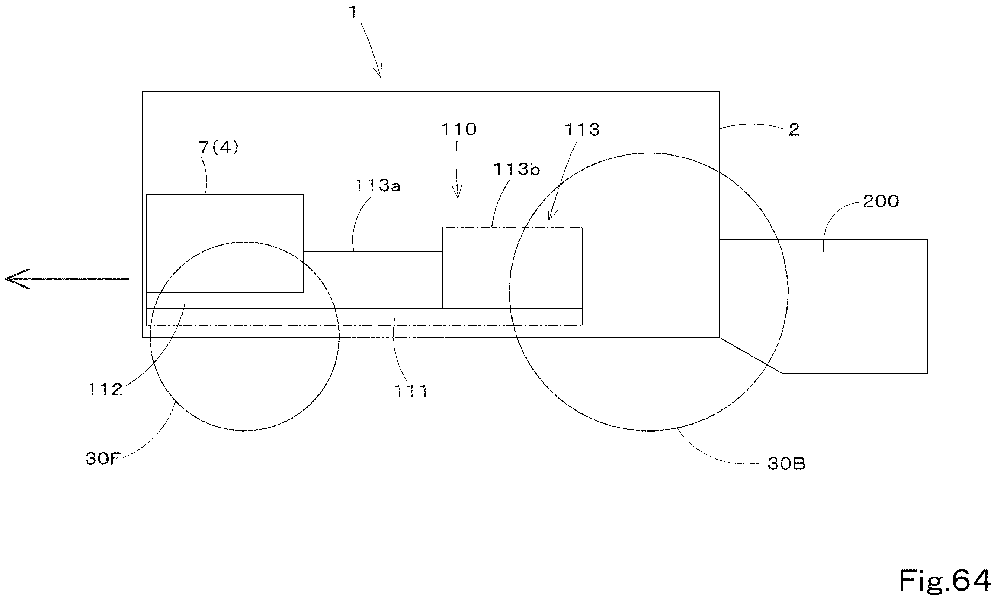

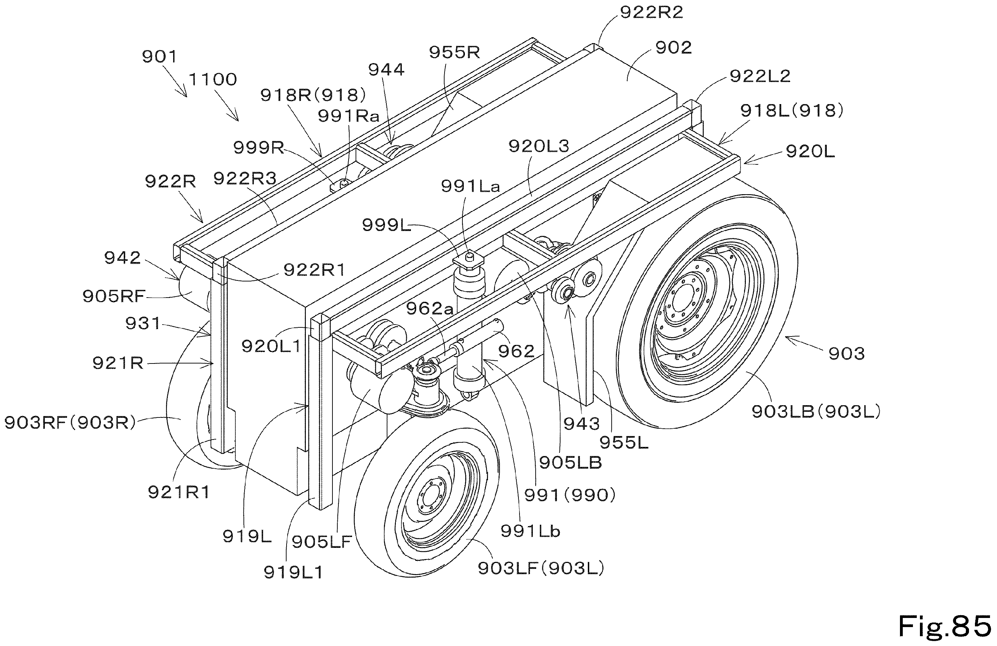

Hereinafter, a preferred embodiment of a working vehicle according to the present invention will be described. FIG. 1 to FIG. 84 are each a view related to a working vehicle 1 according to an embodiment (embodiment A) of the present invention and their variations (embodiments A1 to A5). FIG. 85 to FIG. 149 are each a view related to a working vehicle 901 according to another embodiment (embodiment B) of the present invention.

The work performed by the working vehicles 1 and 901 includes, e.g., work related to agriculture, work related to industry (such as civil engineering or architecture), and work related to transportation, but is not limited to such work. In the preferred embodiment of the present invention, the work performed by the working vehicles 1 and 901 is the work (agricultural work) related to agriculture. Hereinafter, as an example, the case will be described where the work performed by the working vehicles 1 and 901 is agricultural work. In this case, the working vehicles 1 and 901 are agricultural working vehicles.

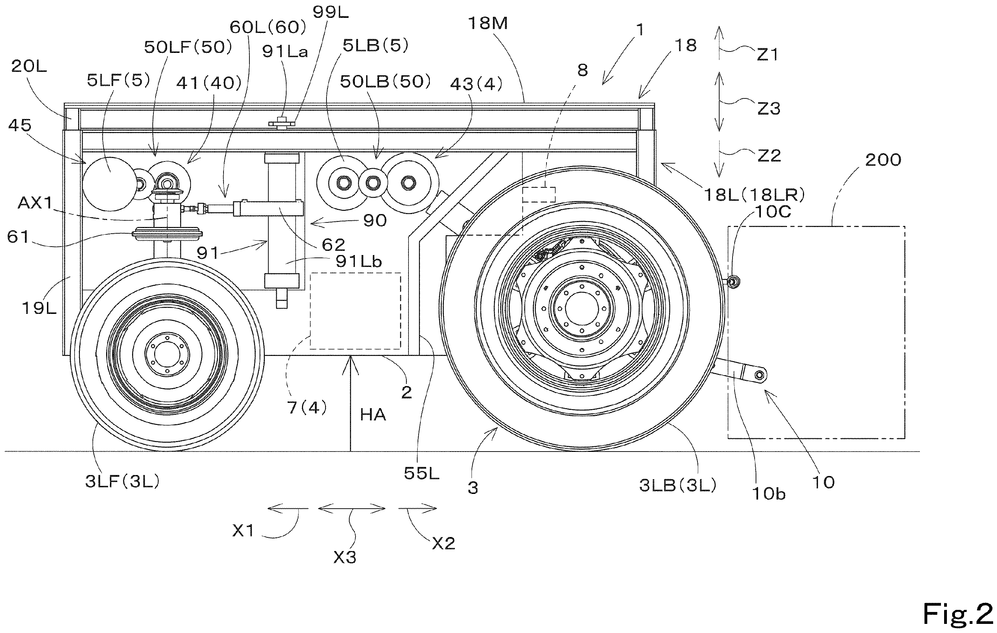

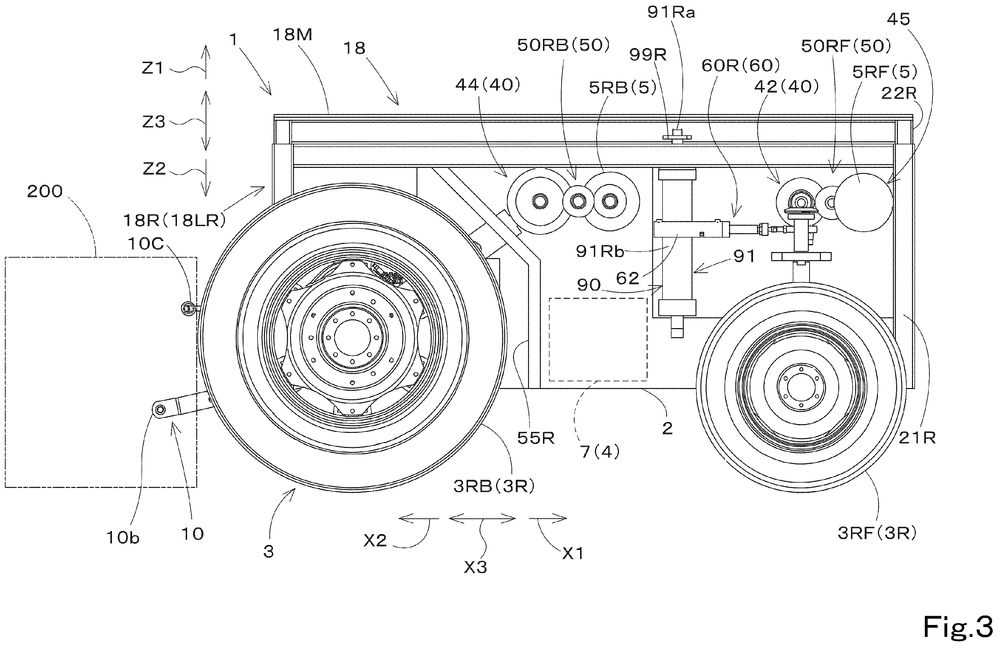

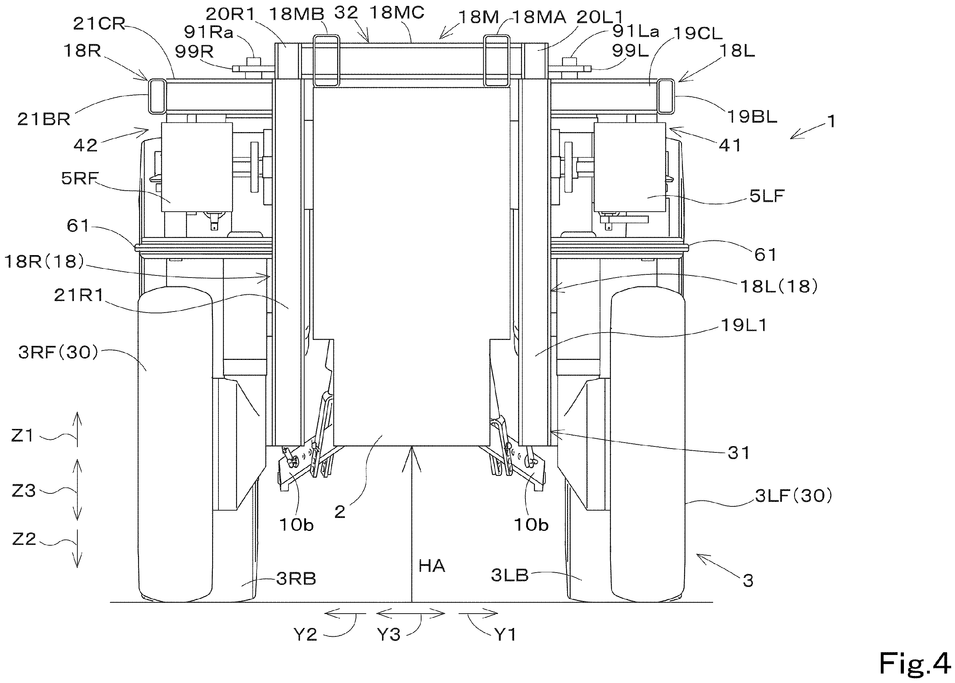

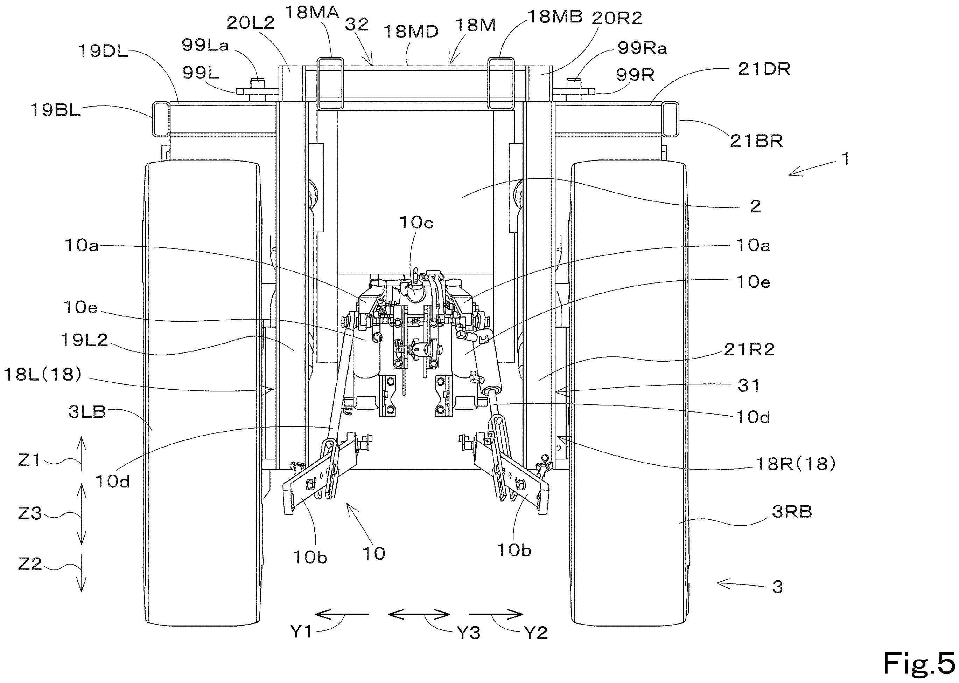

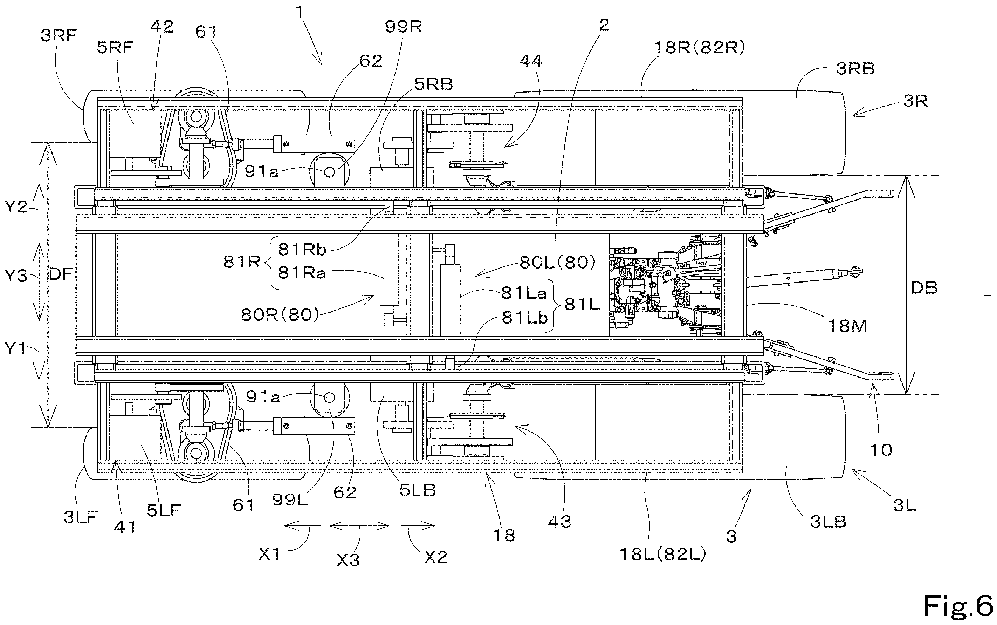

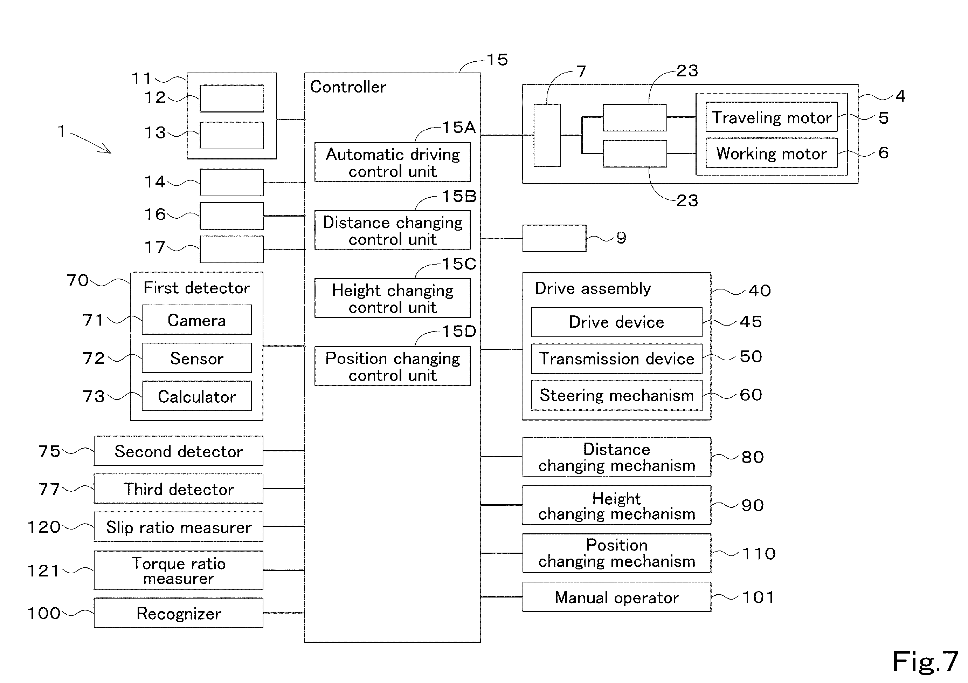

FIG. 1 to FIG. 7 are views illustrating an embodiment (embodiment A) of the working vehicle 1. FIG. 1 is a perspective view of the working vehicle 1. FIG. 2 is a left side view of the working vehicle 1. FIG. 3 is a right side view of the working vehicle 1. FIG. 4 is a front view of the working vehicle 1. FIG. 5 is a rear view of the working vehicle 1. FIG. 6 is a plan view of the working vehicle 1. FIG. 7 is a block diagram illustrating the entire configuration of the working vehicle 1.

**In** the following description related to FIG. 1 to FIG. 84, in the drawings, the direction indicated by an arrow X1 is referred to as forward, the direction indicated by an arrow X2 is referred to as rearward, the direction indicated by an arrow Y1 is referred to as leftward, the direction indicated by an arrow Y2 is referred to as rightward, the direction indicated by an arrow Z1 is referred to as upward, and the direction indicated by an arrow Z2 is referred to as downward in FIG. 1 to FIG. 84. In addition, the direction indicated by an arrow X3 is referred to as the front-rear direction, the direction indicated by an arrow Y3 is referred to as the lateral direction, and the direction indicated by an arrow Z3 is referred to as the up-down direction.

As illustrated in FIG. 1 to FIG. 6, the working vehicle 1 includes a vehicle body 2, and a traveling device 3 to support the vehicle body 2 such that the vehicle body 2 is allowed to travel. In the present embodiment, the vehicle body 2 is in a substantially rectangular parallelepiped shape having an internal space. However, the shape of the vehicle body 2 is not limited to the substantially rectangular parallelepiped shape. Various devices and pieces of equipment are housed in the internal space of the vehicle body 2. Thus, in the following description, the vehicle body 2 may be referred to as the "housing frame 2". In the present embodiment, the housing frame 2 is the entirety of the vehicle body 2. In other words, the housing frame 2 constitutes the vehicle body 2.

As illustrated in FIG. 2 and FIG. 3, a power supply apparatus 4 to drive the traveling device 3 is provided (housed) in the internal space of the vehicle body 2. The power supply apparatus 4 generates power to drive the traveling device 3, and the power is supplied to the traveling device 3. As illustrated in FIG. 7, the power supply apparatus 4 includes a motor 5 and a battery 7. In the present embodiment, as the power supply apparatus 4, the later-described battery 7 is provided (housed) in the vehicle body 2.

The motor 5 is a traveling motor that generates power to drive the traveling device 3. The motor 5 is an electric motor driven by electricity. An inverter 23 (see FIG. 7) is connected to the motor 5. The inverter 23 controls the rotation of the motor 5 based on a control signal from the later-described controller 15. The battery 7 stores the electricity to be supplied to the motor 5. However, the power supply apparatus 4 may include an engine instead of the motor 5. Alternatively, the power supply apparatus 4 may include fuel cells.

As illustrated in FIG. 7, the working vehicle 1 includes a motor 6 serving as a working motor in addition to the motor 5 serving as a traveling motor. The working motor generates power to drive devices and mechanisms which are different from the traveling device 3. The motor 6 is an electric motor driven by the electricity supplied from the battery 7. The rotation of the motor 6 can be controlled by the inverter 23. Hereinafter, the motor 5 may be referred to as the "traveling motor 5", and the motor 6 may be referred to as the "working motor 6".

The traveling motor 5 and the working motor 6 can be driven independently from each other. The working motor 6 is a motor to drive a hydraulic pump for actuating the later-described hydraulic cylinder. In addition, the working motor 6 also serves as a motor to drive an external output shaft 8.

As described above, the battery 7 which is part of the power supply apparatus 4 is housed in the vehicle body 2 (see FIG. 2 and FIG. 3). Although not illustrated, the vehicle body 2 further houses a cooling system (a radiator, a fan, a water pump, a compressor and the like) that cools the power supply apparatus 4 (the motor 5, the motor 6, the battery 7 and the like); and a hydraulic system (a control valve and the like) to actuate the later-described hydraulic cylinders (cylinder 62, left cylinder 81L, right cylinder 81R, lifting cylinder 91, cylinder 113) and the like based on a control signal from the controller 15.

As illustrated in FIG. 2, the external output shaft 8 projects rearward from the rear of the vehicle body 2. Thus, the external output shaft 8 is an output shaft to take the power from the working motor 6 to the outside of the vehicle body 2. The power taken from the external output shaft 8 can be input to a working device (implement) 200 which performs work. Thus, the working device 200 is driven to perform the work.

The working device 200 includes, e.g., a device to perform the work (agricultural work) related to agriculture, a device to perform the work related to civil engineering, a device to perform the work related to architecture, and a device to perform the work related to transportation; however, the working device 200 is not limited to these working devices. In the embodiment shown below, the working device 200 is a device that performs agricultural work.

The working device 200 that performs agricultural work includes, e.g., a spreader to spread a substance to be spread such as a fertilizer or an agricultural chemical, a seeder to plant seeds, a cultivator to cultivate the soil, a tiller (plow) to till the soil, a weed remover to remove weeds, and a ridging machine to ridge the soil surface. However, the working device 200 may be any device that performs agricultural work, and the type thereof is not limited to a specific one. When the working device 200 is an electric working device, the working device 200 may be driven by the electricity taken from the battery 7 to the outside of the vehicle body 2 through an electricity line, instead of being driven by the power taken from the external output shaft 8.

The vehicle body 2 is allowed to travel by driving the traveling device 3. As illustrated in FIG. 4, FIG. 5 and the like, the traveling device 3 includes a left traveling device 3L located leftward of the vehicle body 2, and a right traveling device 3R located rightward of the vehicle body 2. The vehicle body 2 is between the left traveling device 3L and the right traveling device 3R. As illustrated in FIG. 2, the left traveling device 3L includes a left front wheel 3LF and a left rear wheel 3LB. As illustrated in FIG. 3, the right traveling device 3R includes a right front wheel 3RF and a right rear wheel 3RB.

Hereinafter, for the purpose of illustration, the left front wheel 3LF, the right front wheel 3RF, the left rear wheel 3LB, and the right rear wheel 3RB may be collectively referred to as the "wheels 30". Also, the left front wheel 3LF and the right front wheel 3RF may be collectively referred to as the "front wheels 30F", and the left rear wheel 3LB and the right rear wheel 3RB may be collectively referred to as the "rear wheels 30B".

The wheels 30 (left front wheel 3LF, right front wheel 3RF, left rear wheel 3LB, and right rear wheel 3RB) are located at opposite sides of the vehicle body 2. The left front wheel 3LF and the left rear wheel 3LB are located leftward of the vehicle body 2. The right front wheel 3RF and the right rear wheel 3RB are located rightward of the vehicle body 2. In the working vehicle 1 in the present embodiment, the size (the diameter and width) of the rear wheels (the left rear wheel 3LB and the right rear wheel 3RB) is larger than the size (diameter and width) of the front wheels (the left front wheel 3LF and the right front wheel 3RF). However, the size of the front wheels (the left front wheel 3LF and the right front wheel 3RF) may be the same as the size of the rear wheels (the left rear wheel 3LB and the right rear wheel 3RB), or the size of the front wheels may be larger than the size of the rear wheels.

**In** the present embodiment, the traveling device 3 is a wheel traveling device in which the front wheels (the left front wheel 3LF and the right front wheel 3RF) and the rear wheels (the left rear wheel 3LB and the right rear wheel 3RB) are all tires. However, the traveling device 3 may be a crawler traveling device in which the left traveling device 3L and the right traveling device 3R are crawlers, or the traveling device 3 may be a traveling device in which one of the front wheels and the rear wheels are wheels, and the other are crawlers.

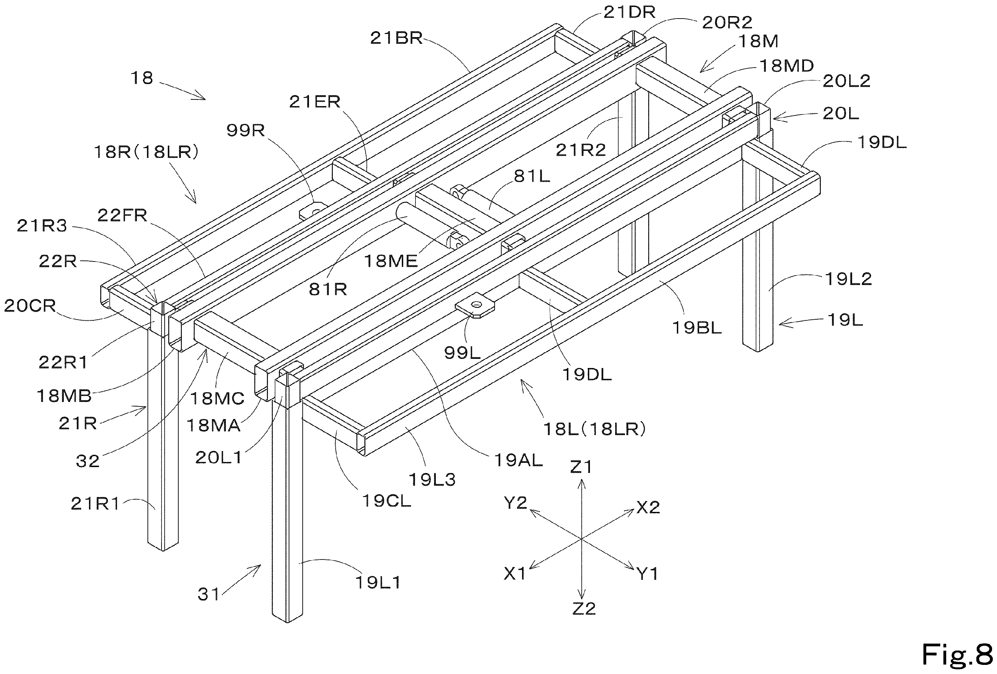

As illustrated in FIG. 1 to FIG. 3, the working vehicle 1 includes a fender 55L to cover upper and forward areas of the left rear wheel 3LB, and a fender 55R to cover upper and forward areas of the right rear wheel 3LR. The fender 55L is attached to a first connector 19L3 (see FIG. 8) of the later-described frame structure 18. The fender 55R is attached to a first connector 21R3 (see FIG. 8) of the later-described frame structure 18. Although not illustrated, the working vehicle 1 may include a fender to cover the front wheels (the left front wheel 3LF and the right front wheel 3RF).

As illustrated in FIG. 7, the working vehicle 1 includes a transmission 9. The transmission 9 can change the driving force of the traveling device 3 by changing speed stages. In addition, the transmission 9 can switch between forward drive and reverse drive of the traveling device 3. The transmission 9 may include a transmission clutch that can switch between a four-wheel drive state (4WD) and a two-wheel drive state (2WD), the four-wheel drive state allowing all four wheels (the left front wheel 3LF, the right front wheel 3RF, the left rear wheel 3LB, and the right rear wheel 3RB) to be driven, and the two-wheel drive state allowing only the rear wheels (the left rear wheel 3LB and the right rear wheel 3RB) or only the front wheels (the left front wheel 3LF and the right front wheel 3RF) to be driven.

As illustrated in FIG. 2, FIG. 3, FIG. 5, and FIG. 6, the working vehicle 1 includes a mount 10 to which the working device 200 to perform the above-mentioned work is attached. The working device 200 is detachably attached to the mount 10. The mount 10 is provided rearward of the vehicle body 2. FIG. 5 is a rear view of the mount 10.

The mount 10 includes a three-point linkage mechanism. Specifically, as illustrated in FIG. 5, the mount 10 includes a lift arm 10a, a lower link 10b, a top link 10c, a lift rod 10d, and a lift cylinder 10e. The front end of the lift arm 10a is supported on a rear upper portion of the vehicle body 2 swingably upward or downward. The lift arm 10a is swung (raised or lowered) by driving the lift cylinder 10e. The lift cylinder 10e includes a hydraulic cylinder. The lift cylinder 10e is connected to a hydraulic pump (not illustrated) via a control valve (not illustrated).

The hydraulic pump is driven by the working motor 6. The control valve is a solenoid valve such that opening and closing of a flow path is controlled by the controller 15. The lift cylinder 10e can be extended and retracted by the control valve controlling the flow of the hydraulic fluid discharged from the hydraulic pump.

The front end of the lower link 10b is supported on a lower rear portion of the vehicle body 2 swingably upward or downward. The front end of the top link 10c is supported on a rear portion of the vehicle body 2 swingably upward or downward, the rear portion being upward of the lower link 10b. The lift rod 10d connects the lift arm 10a and the lower link 10b. The working device 200 is connected to a rear portion of the lower link 10b and a rear portion of the top link 10c. When the lift cylinder 10e is driven (extended or retracted), the lift arm 10a is raised or lowered as well as the lower link 10b connected to the lift arm 10a through the lift rod 10d is raised or lowered. Thus, the working device 200 is swung (raised or lowered) upward or downward around a front portion of the lower link 10b, as a fulcrum.

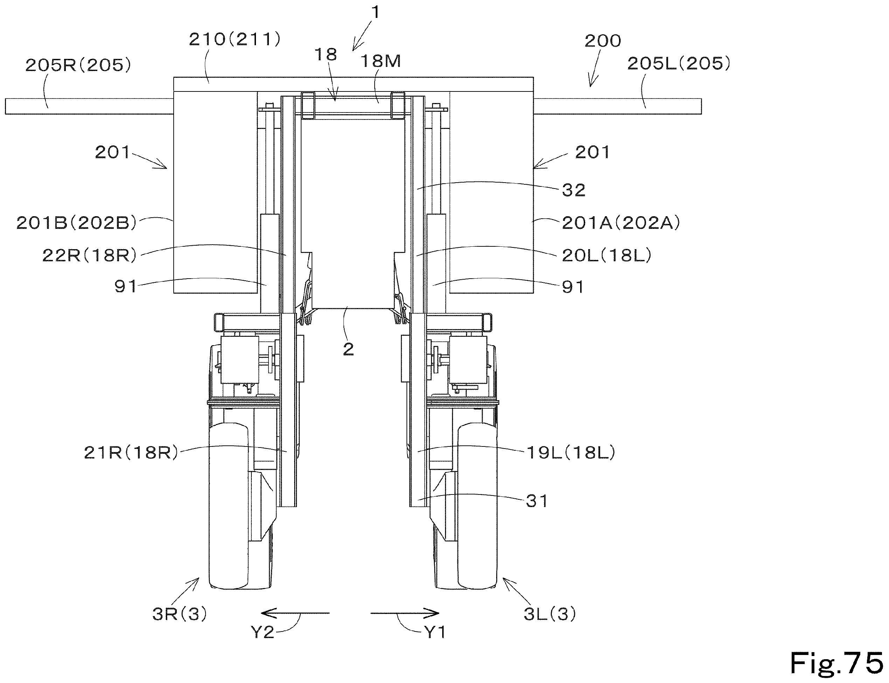

The working device 200 attached to the mount 10 is towed and moved by the working vehicle 1 with travel of the working vehicle 1. Note that instead of the working device 200, a carriage or the like that transports agricultural crops may be attached to the mount 10. The mount 10 may be provided at a portion other than a rear portion (for example, a front portion and a side portion) of the vehicle body 2. The working device 200 may be placed on an upper portion of the working vehicle 1, instead of being attached to the mount 10 (see FIG. 75). In this case, the working device 200 placed on the working vehicle 1 moves with travel of the working vehicle 1.

As illustrated in FIG. 7, the working vehicle 1 includes a positioning device 11. The positioning device 11 can detect the position (measured position information including the latitude and longitude) of the vehicle body 2 by a satellite positioning system (positioning satellites) such as D-GPS, GPS, GLONASS, Hokuto, Galileo, or Michibiki. Specifically, the positioning device 11 receives satellite signals (such as the positions of the positioning satellites, transmission time, and correction information) transmitted from the positioning satellites, and detects the position (for example, the latitude and longitude) of the vehicle body 2 based on the satellite signals.

The positioning device 11 includes a receiver 12, and an inertial measurement unit (IMU) 13. The receiver 12 is a device including an antenna and being configured to receive the satellite signals transmitted from the positioning satellites, and the device is attached to the vehicle body 2. The IMU 13 includes an acceleration sensor to detect an acceleration, and a gyroscope sensor to detect an angular velocity. The IMU 13 is attached to the vehicle body 2. The IMU 13 can detect the roll angle, pitch angle, yaw angle, and the like of the vehicle body 2. Note that the yaw angle may be detected by installing a plurality of positioning devices 11.

As illustrated in FIG. 7, the working vehicle 1 includes a communication device 14. The communication device 14 includes a communication circuit to perform communication through an in-vehicle network, and a wireless communication circuit to perform wireless communication. The wireless communication circuit can directly or indirectly communicate with an external equipment by Wireless Fidelity (Wi-Fi, registered trademark), Bluetooth Low Energy (BLE, registered trademark), Low Power, Wide Area (LPWA), Low-Power Wide-Area Network (LPWAN) and the like of IEEE802.11 series which is a communication standard. As another example, the communication device 14 may be provided with a communication circuit that can indirectly communicate with an external equipment by, e.g., a mobile phone communication network or a data communication network and the like. The external equipment is, e.g., a personal computer, a smartphone, a tablet computer, a PDA or a server and the like. The external equipment may include, e.g., the later-described manual operator 101.

As illustrated in FIG. 7, the working vehicle 1 includes the controller 15. The controller 15 performs various controls on the working vehicle 1. The controller 15 includes an arithmetic unit (such as a CPU) and a storage (such as a RAM or a ROM). The storage may include an external memory provided outside the controller 15. The controller 15 is connected to various devices and mechanisms illustrated in FIG. 7 through an in-vehicle network (in-vehicle LAN) such as a Controller Area Network (CAN), or a communication line.

The controller 15 controls the operation of various devices and mechanisms communicably connected to the controller 15, by the arithmetic unit executing various control programs stored in the storage. The function of the later-described control units (the automatic driving control unit 15A, distance changing control unit 15B, height changing control unit 15C, and position changing control unit 15D) of the controller 15 is implemented by the arithmetic unit executing a predetermined control program stored in the storage.

As illustrated in FIG. 7, the controller 15 includes the automatic driving control unit 15A. The automatic driving control unit 15A controls the automatic driving of the working vehicle 1. The automatic driving control unit 15A can perform line automatic driving control and autonomous driving control. In the line automatic driving control, the automatic driving control unit 15A controls the operation of the later-described steering mechanism 60, transmission 9, motor 5 and the like such that the working vehicle 1 (vehicle body 2) moves along a preset travel scheduled line.

**In** the autonomous driving control, the automatic driving control unit 15A sets the travel direction (steering direction) and the vehicle speed (speed) of the vehicle body 2 by the positioning device 11 and the like based on a result of sensing (detection of an object) the surroundings of the working vehicle 1 (vehicle body 2), and controls the operation of the steering mechanism 60, the transmission 9, the motor 5 and the like such that the set steering and vehicle speed are achieved. Note that the line automatic driving control and the autonomous driving control may be switched by a switch or the like. Alternatively, the automatic driving control unit 15A may be configured to perform either the line automatic driving control or the autonomous driving control. Note that the configuration of the automatic driving control unit 15A is not limited to the one described above.

The controller 15 includes the automatic driving control unit 15A, and thus the working vehicle 1 can perform automatic driving (unmanned driving) without an operator on board. Thus, the working vehicle 1 in the illustrated embodiment includes no operator's seat where an operator is seated. However, the working vehicle 1 may perform automatic driving with an operator on board. Alternatively, the working vehicle 1 may be driven to travel with an operator on board. When the working vehicle 1 is driven by an operator on board, the vehicle body 2 is provided with an operator's seat.

As illustrated in FIG. 7, the working vehicle 1 includes an illumination device 16. The illumination device 16 is provided in the vehicle body 2. The illumination device 16 includes a headlight that illuminates at least the area ahead of the vehicle body 2. In addition to the headlight, the illumination device 16 may include a plurality of work lights that illuminate the periphery of the vehicle body 2. The work lights can illuminate, for example, the side areas (leftward area and rightward area) of the vehicle body 2 and the rearward area of the vehicle body 2. In addition, the illumination device 16 may include a status indicator light, left and right lights, a brake light and the like.

As illustrated in FIG. 7, the working vehicle 1 includes a notification device 17. The notification device 17 notifies people in the periphery of the vehicle body 2 of danger (such as approach of the vehicle body 2) by sound and light or the like. The notification device 17 is a speaker or a warning light.

As illustrated in FIG. 1 and the like, the working vehicle 1 includes a frame structure 18 that is located in the periphery of the vehicle body 2 and attached to the vehicle body 2. As illustrated in FIG. 8 and the like, the frame structure 18 includes a left frame 18L, a right frame 18R and a lateral frame 18M. As illustrated in FIG. 1, FIG. 4 and the like, the left frame 18L is located leftward of the vehicle body 2. The left frame 18L extends in the up-down direction along the vehicle body 2. The left frame 18L also extends in the front-rear direction along the vehicle body 2. The right frame 18R is located rightward of the vehicle body 2. The right frame 18R extends in the up-down direction along the vehicle body 2. The right frame 18R also extends in the front-rear direction along the vehicle body 2.

The left frame 18L connects the left front wheel 3LF and the left rear wheel 3LB. The right frame 18R connects the right front wheel 3RF and the right rear wheel 3RB. The left frame 18L and the right frame 18R are located on both sides of the vehicle body 2. Thus, the left frame 18L and the right frame 18R may be collectively referred to as the "side frames 18LR".

The lateral frame 18M connects the left frame 18L and the right frame 18R. Specifically, the lateral frame 18M connects an upper portion of the left frame 18L and an upper portion of the right frame 18R. The lateral frame 18M is located above the vehicle body. Thus, the lateral frame 18M may be referred to as the "upper frame 18M".

As illustrated in FIG. 4, the vehicle body 2 is provided between the left frame 18L and the right frame 18R in a front view. In other words, the vehicle body 2 is located in an area between the left frame 18L and the right frame 18R. The vehicle body 2 is located below the lateral frame 18M. Thus, the vehicle body 2 is located in the area surrounded by the left frame 18L, the right frame 18R and the lateral frame 18M in a front view.

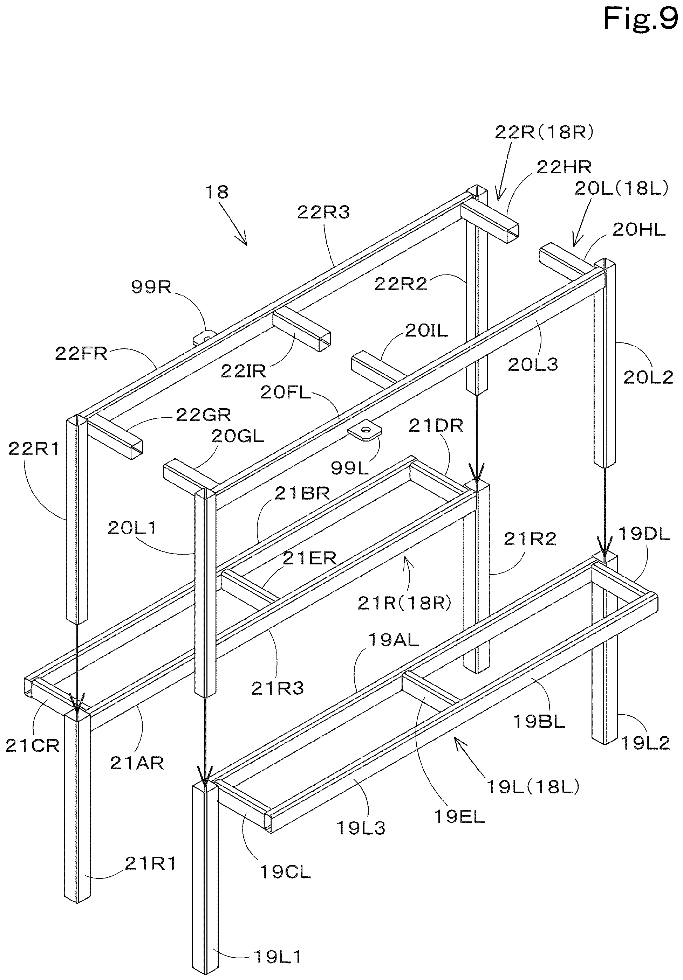

As illustrated in FIG. 9 and the like, the left frame 18L includes a first left frame 19L and a second left frame 20L. The first left frame 19L includes a first front pillar 19L1, a first rear pillar 19L2, and a first connector 19L3. The first front pillar 19L1 and the first rear pillar 19L2 are spaced apart in the front-rear direction, and extend in parallel to each other in the up-down direction. As illustrated in FIG. 1 and FIG. 4, the first front pillar 19L1 is located leftward of the front of the vehicle body 2. As illustrated in FIG. 5, the first rear pillar 19L2 is located leftward of the rear of the vehicle body 2. The first front pillar 19L1 and the first rear pillar 19L2 are in a tubular (square tubular) shape.

As illustrated in FIG. 9, the first connector 19L3 connects the first front pillar 19L1 and the first rear pillar 19L2. The first connector 19L3 includes a frame member 19AL, a frame member 19BL, a frame member 19CL, a frame member 19DL, and a frame member 19EL. The frame member 19AL extends in the front-rear direction, and connects an upper portion of the first front pillar 19L1 and an upper portion of the first rear pillar 19L2. The frame member 19BL is leftward of the frame member 19AL, and extends in the front-rear direction. The frame member 19CL connects a front portion of the frame member 19AL and a front portion of the frame member 19BL. The frame member 19DL connects a rear portion of the frame member 19AL and a rear portion of the frame member 19BL. The frame member 19EL connects an intermediate portion of the frame member 19AL in the front-rear direction and an intermediate portion of the frame member 19BL in the front-rear direction.

As illustrated in FIG. 9, the second left frame 20L includes a second front pillar 20L1, a second rear pillar 20L2, and a second connector 20L3. The second front pillar 20L1 and the second rear pillar 20L2 are spaced apart in the front-rear direction, and extend in parallel to each other in the up-down direction. The second connector 20L3 connects the second front pillar 20L1 and the second rear pillar 20L2. The second connector 20L3 includes a frame member 20FL, a frame member 20GL, a frame member 20HL, and a frame member 20IL. The frame member 20FL extends in the front-rear direction, and connects an upper portion of the second front pillar 20L1 and an upper portion of the second rear pillar 20L2. The frame member 20GL extends rightward from a front portion of the right surface of the frame member 20FL. The frame member 20HL extends rightward from a rear portion of the right surface of the frame member 20FL. The frame member 20IL extends rightward from an intermediate portion of the right surface of the frame member 20FL in the front-rear direction.

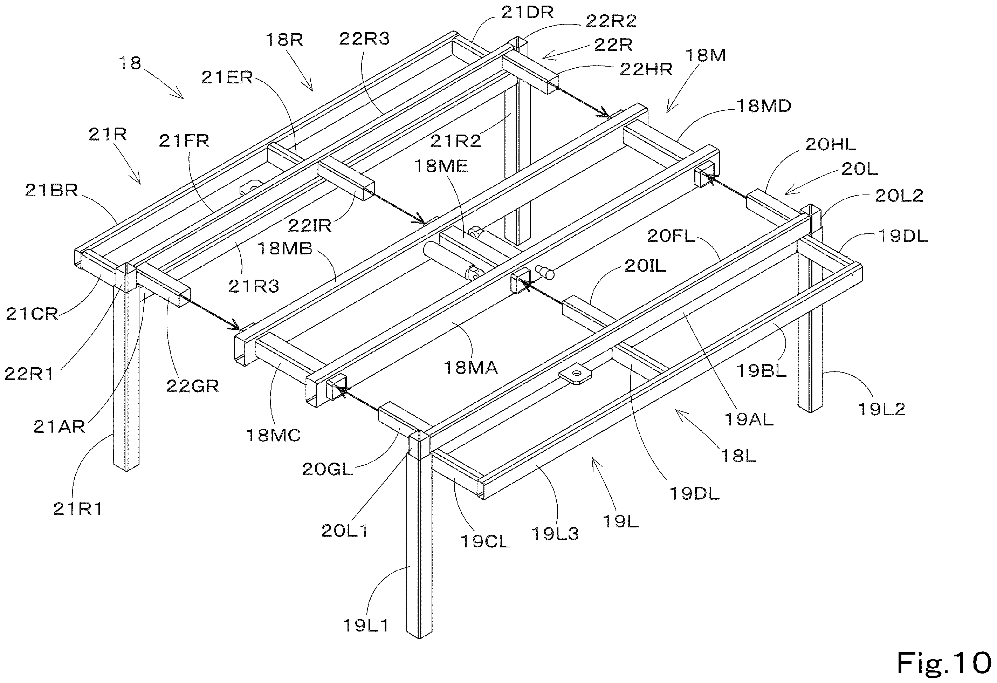

As indicated by a downward arrow in FIG. 9, the second front pillar 20L1 is inserted into the inside of the tubular first front pillar 19L1 from above. The second rear pillar 20L2 is inserted into the inside of the tubular first rear pillar 19L2 from above. Thus, the first left frame 19L and the second left frame 20L are combined (see FIG. 10). The second front pillar 20L1 can be moved in the up-down direction along the first front pillar 19L1. The second rear pillar 20L2 can be moved in the up-down direction along the first rear pillar 19L2. Thus, the second left frame 20L can be moved in the up-down direction with respect to the first left frame 19L.

As illustrated in FIG. 9, the right frame 18R includes a first right frame 21R and a second right frame 22R. The first right frame 21R includes a first front pillar 21R1, a first rear pillar 21R2, and a first connector 21R3. The first front pillar 21R1 and the first rear pillar 21R2 are spaced apart in the front-rear direction, and extend in parallel to each other in the up-down direction. As illustrated in FIG. 1 and FIG. 4, the first front pillar 21R1 is located rightward of the front of the vehicle body 2. As illustrated in FIG. 5, the first rear pillar 21R2 is located rightward of the rear of the vehicle body 2. The first front pillar 21R1 and the first rear pillar 21R2 are in a tubular (square tubular) shape.

The first connector 21R3 connects the first front pillar 21R1 and the first rear pillar 21R2. The first connector 21R3 includes a frame member 21AR, a frame member 21BR, a frame member 21CR, a frame member 21DR, and a frame member 21ER. The frame member 21AR extends in the front-rear direction, and connects an upper portion of the first front pillar 21R1 and an upper portion of the first rear pillar 21R2. The frame member 21BR is rightward of the frame member 21AR, and extends in the front-rear direction. The frame member 21CR connects a front portion of the frame member 21AR and a front portion of the frame member 21BR. The frame member 21DR connects a rear portion of the frame member 21AR and a rear portion of the frame member 21BR. The frame member 21ER connects an intermediate portion of the frame member 21AR in the front-rear direction and an intermediate portion of the frame member 21BR in the front-rear direction.

The second right frame 22R includes a second front pillar 22R1, a second rear pillar 22R2, and a second connector 22R3. The second front pillar 22R1 and the second rear pillar 22R2 are spaced apart in the front-rear direction, and extend in parallel to each other in the up-down direction. The second connector 22R3 connects the second front pillar 22R1 and the second rear pillar 22R2. The second connector 22R3 includes a frame member 22FR, a frame member 22GR, a frame member 22HR, and a frame member 22IR. The frame member 22FR extends in the front-rear direction, and connects an upper portion of the second front pillar 22R1 and an upper portion of the second rear pillar 22R2. The frame member 22GR extends leftward from a front portion of the left surface of the frame member 22FR. The frame member 22HR extends leftward from a rear portion of the left surface of the frame member 22FR. The frame member 22IR extends leftward from an intermediate portion of the left surface of the frame member 22FR in the front-rear direction.

As indicated by a downward arrow in FIG. 9, the second front pillar 22R1 is inserted into the inside of the tubular first front pillar 21R1 from above. The second rear pillar 22R2 is inserted into the inside of the tubular first rear pillar 21R2 from above. Thus, the first right frame 21R and the second right frame 22R are combined (see FIG. 10). The second front pillar 22R1 can be moved in the up-down direction along the first front pillar 21R1. The second rear pillar 22R2 can be moved in the up-down direction along the first rear pillar 21R2. Thus, the second right frame 22R can be moved in the up-down direction with respect to the first right frame 21R.

As illustrated in FIG. 10, the lateral frame 18M includes a frame member 18MA, a frame member 18MB, a frame member 18MC, a frame member 18MD, and a frame member 18ME. The frame member 18MA is located at a left portion of the lateral frame 18M, and extends in the front-rear direction. The frame member 18MB is located at a right portion of the lateral frame 18M, and extends in the front-rear direction. The frame member 18MA and the frame member 18MB are spaced apart in the lateral direction, and located in parallel to each other.

The frame member 18MC, the frame member 18MD and the frame member 18ME are in parallel to each other, and extend in the lateral direction. The frame member 18MC connects a front portion of the frame member 18MA and a front portion of the frame member 18MB. The frame member 18MD connects a rear portion of the frame member 18MA and a rear portion of the frame member 18MB. The frame member 18ME connects an intermediate portion of the frame member 18MA in the front-rear direction and an intermediate portion of the frame member 18MB in the front-rear direction.

The frame member 18MC, the frame member 18MD and the frame member 18ME are in a tubular (square tubular) shape. As indicated by an arrow in FIG. 10, to the frame member 18MC, the frame member 20GL is inserted from the left, and the frame member 22GR is inserted from the right. Into the frame member 18MD, the frame member 20HL is inserted from the left, and the frame member 22HR is inserted from the right. Into the frame member 18ME, the frame member 20IL is inserted from the left, and the frame member 22IR is inserted from the right. Thus, the lateral frame 18M, the second left frame 20L and the second right frame 22R are combined (see FIG. 10).

The frame member 20GL inserted into the frame member 18MC from the left can be moved in the lateral direction along the frame member 18MC. The frame member 20HL inserted into the frame member 18MD from the left can be moved in the lateral direction along the frame member 18MD. The frame member 20IL inserted into the frame member 18ME from the left can be moved in the lateral direction along the frame member 18ME. Thus, the left frame 18L can be moved on the left side of the lateral frame 18M in the lateral direction with respect to the lateral frame 18M.

The frame member 22GR inserted into the frame member 18MC from the right can be moved in the lateral direction along the frame member 18MC. The frame member 22HR inserted into the frame member 18MD from the right can be moved in the lateral direction along the frame member 18MD. The frame member 22IR inserted into the frame member 18ME from the right can be moved in the lateral direction along the frame member 18ME. Thus, the right frame 18R can be moved on the right side of the lateral frame 18M in the lateral direction with respect to the lateral frame 18M.

As described above, the second left frame 20L can be moved in the up-down direction with respect to the first left frame 19L. Also, the second right frame 22R can be moved in the up-down direction with respect to the first right frame 21R. Thus, the lateral frame 18M (the later-described movable frame 32) combined with the second left frame 20L and the second right frame 22R can be moved in the up-down direction with respect to the first left frame 19L and the first right frame 21R (later-described fixed frame 31).

As illustrated in FIG. 1, FIG. 4, and FIG. 5, the vehicle body 2 is fixed to a portion below the lateral frame 18M. Specifically, the vehicle body 2 is fixed to the bottom of the frame member 18MA and the frame member 18MB. Thus, the vehicle body 2 can be moved integrally with the lateral frame 18M. Thus, when the lateral frame 18M is moved in the up-down direction with respect to the first left frame 19L and the first right frame 21R, the vehicle body 2 is moved in the up-down direction with the lateral frame 18M.

The frame structure 18 includes a fixed frame 31 to which the traveling device 3 is attached, and a movable frame 32 attached to the vehicle body 2. In the frame structure 18, the second left frame 20L, the second right frame 22R and the lateral frame 18M are the movable frame 32 which is movable in the up-down direction. The first left frame 19L and the first right frame 21R are the fixed frame 31 which is not moved in the up-down direction. The vehicle body 2 is moved, i.e., raised or lowered in the up-down direction with the movable frame 32 with respect to the fixed frame 31.

The later-described height changing mechanism 90 changes the height of the vehicle body 2 that is the distance of the vehicle body 2 from the ground surface by raising or lowering the movable frame 32 with respect to the fixed frame 31. The traveling device 3 is attached to the fixed frame. Specifically, the left traveling device 3L is attached to the first left frame 19L. The right traveling device 3R is attached to the first right frame 21R. When the movable frame 32 is raised or lowered with respect to the fixed frame 31, the vehicle body 2 is raised or lowered with respect to the traveling device 3.

As described above, the left frame 18L and the right frame 18R can be moved in the lateral direction with respect to the lateral frame 18M. Since the vehicle body 2 is fixed to the lateral frame 18M, the left frame 18L and the right frame 18R can be moved in the lateral direction with respect to the vehicle body 2. Specifically, the left frame 18L can be moved in a direction (leftward) away from the vehicle body 2 and a direction (rightward) closer to the vehicle body 2. The right frame 18R can be moved in a direction (rightward) away from the vehicle body 2 and a direction (leftward) closer to the vehicle body 2.

Since the left traveling device 3L is attached to the left frame 18L (the first left frame 19L), the left traveling device 3L can also be moved in the lateral direction with the movement of the left frame 18L in the lateral direction. Since the right traveling device 3R is attached to the right frame 18R (the first right frame 21R), the right traveling device 3R can also be moved in the lateral direction with the movement of the right frame 18R in the lateral direction.

As illustrated in FIG. 7, the working vehicle 1 includes a drive assembly 40 to drive the wheels (the left front wheel 3LF, the right front wheel 3RF, the left rear wheel 3LB, and the right rear wheel 3RB). The drive assembly 40 includes: a drive device 45 to generate power; a transmission mechanism 50 to transmit the power generated by the drive device 45 to the wheels 30; and a steering mechanism 60 to change the direction of the wheels (the left front wheel 3LF and the right front wheel 3RF).

As illustrated in FIG. 2 and FIG. 3, the drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The first drive assembly 41, the second drive assembly 42, the third drive assembly 43 and the fourth drive assembly 44 each include the later-described drive device 45 and transmission mechanism 50. The first drive assembly 41 and the second drive assembly 42 each include the later-described steering mechanism 60. The drive assemblies are attached to the frame structure 18.

As illustrated in FIG. 2 and FIG. 3, the first drive assembly 41 includes a portion located at the periphery of the left front wheel 3LF. The second drive assembly 42 includes a portion located at the periphery of the right front wheel 3RF. The third drive assembly 43 includes a portion located at the periphery of the left rear wheel 3LB. The fourth drive assembly 44 includes a portion located at the periphery of the right rear wheel 3RB.

Specifically, the first drive assembly 41 includes a portion which is leftward of the vehicle body 2 and located at the periphery of the left front wheel 3LF (see FIG. 2). The second drive assembly 42 includes a portion which is rightward of the vehicle body 2 and located at the periphery of the right front wheel 3RF (see FIG. 3). The third drive assembly 43 includes a portion which is leftward of the vehicle body 2 and located at the periphery of the left rear wheel 3LB (see FIG. 2). The fourth drive assembly 44 includes a portion which is rightward of the vehicle body 2 and located at the periphery of the right rear wheel 3RB (see FIG. 3).

**In** the present embodiment, the drive device 45 is a motor. Specifically, the drive device 45 is the above-described traveling motor 5. In other words, the motor included in the drive device 45 is the same as the motor included in the above-described power supply apparatus 4. As described below, the motors 5 included in the drive device 45 of the drive assembly 40 include a motor 5LF, a motor 5RF, a motor 5LB and a motor 5RB.

First, the configuration of the first drive assembly 41 will be described. As illustrated in FIG. 2, FIG. 11, and FIG. 12, the first drive assembly 41 includes the motor 5LF, and a transmission mechanism 50LF to transmit the power of the motor 5LF to the left front wheel 3LF. When the first drive assembly 41 drives the motor 5LF, the power of the motor 5LF is transmitted to the left front wheel 3LF through the transmission mechanism 50LF.

As illustrated in FIG. 2, the motor 5LF is located above the left front wheel 3LF. The motor 5LF is located forward of the central shaft (rotational shaft) of the left front wheel 3LF. The motor 5LF is attached to the side frames 18LR (see FIG. 8) of the frame structure 18. Specifically, the motor 5LF is attached, via a motor bracket (not illustrated), to the first left frame 19L which is the left one of the side frames 18LR. The output shaft of the motor 5LF extends in the lateral direction.

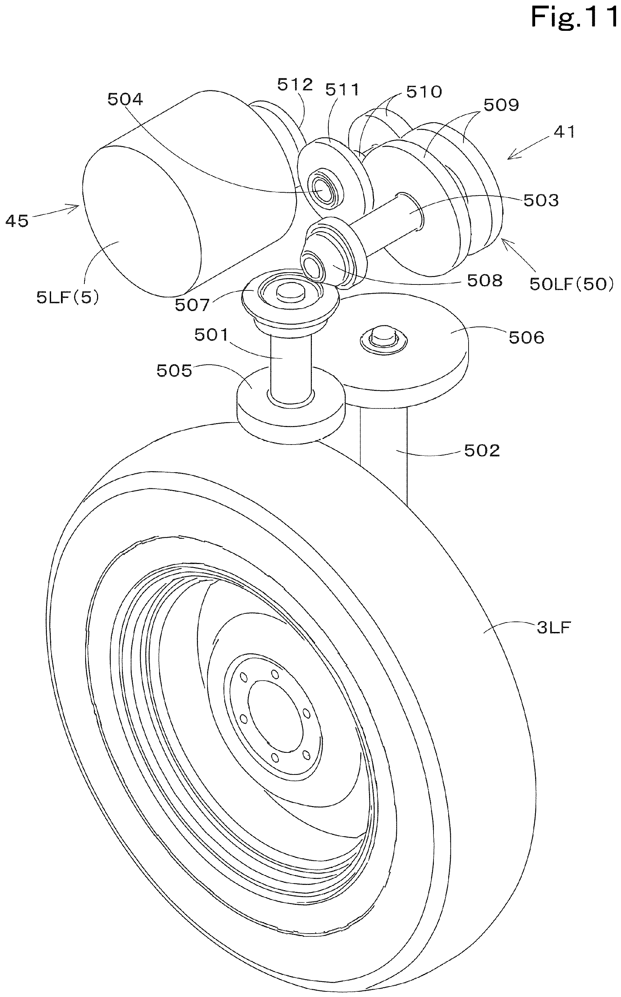

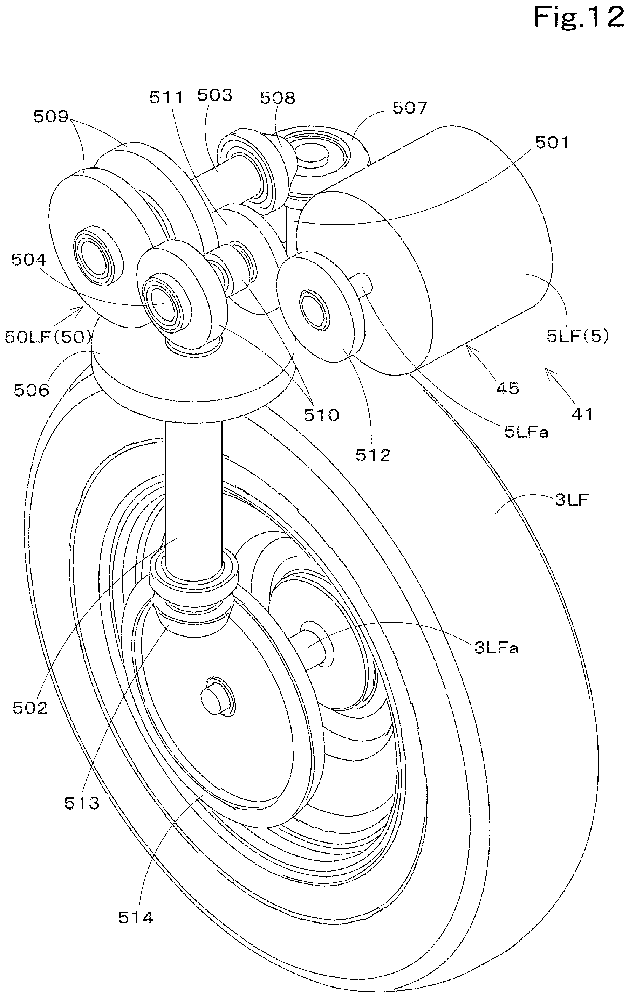

As illustrated in FIG. 11 and FIG. 12, the transmission mechanism 50LF includes a plurality of transmission shafts and a plurality of gears. The plurality of transmission shafts include a first transmission shaft 501, a second transmission shaft 502, a third transmission shaft 503, and a fourth transmission shaft 504. The plurality of gears include a first gear 505, a second gear 506, a third gear 507, a fourth gear 508, a fifth gear 509, a sixth gear 510, a seventh gear 511, an eighth gear 512, a ninth gear 513, and a 10th gear 514.

As mentioned above, the transmission mechanism 50LF includes the first transmission shaft 501 and the second transmission shaft 502. The first transmission shaft 501 is located above the left front wheel 3LF, and extends in the up-down direction. The second transmission shaft 502 receives the power transmitted from the first transmission shaft 501 and rotates. The second transmission shaft 502 is located inward (rightward) of the left front wheel 3LF, and extends in the up-down direction. The first gear 505 is attached to a lower portion of the first transmission shaft 501. The second gear 506 is attached to an upper portion of the second transmission shaft 502. The first gear 505 and the second transmission shaft 502 are engaged with each other. The third gear 507 is attached to an upper portion of the first transmission shaft 501. The third gear 507 is a bevel gear, and engaged with the fourth gear 508 which is also a bevel gear.

The fourth gear 508 is attached to a left portion of the third transmission shaft 503 extending in the lateral direction. The fifth gear 509 is attached to a right portion of the third transmission shaft 503. The fifth gear 509 is engaged with the sixth gear 510. The fifth gear 509 and the sixth gear 510 each include a pair of gears located in parallel to each other. The sixth gear 510 is attached to the fourth transmission shaft 504 extending in the lateral direction. The seventh gear 511 is attached to a left portion of the fourth transmission shaft 504. The seventh gear 511 is engaged with the eighth gear 512. The eighth gear 512 is attached to an output shaft 5LFa of the motor 5LF.

The ninth gear 513 is attached to a lower portion of the second transmission shaft 502. The ninth gear 513 is a bevel gear, and engaged with the 10th gear 514 which is also a bevel gear. The 10th gear 514 is attached to a rotational shaft 3LFa (central shaft of the left front wheel 3LF) extending inward (rightward) from the center of the left front wheel 3LF.

When the output shaft 5LFa of the motor 5LF rotates, the eighth gear 512 rotates, and the seventh gear 511 engaged with the eighth gear 512 rotates. When the seventh gear 511 rotates, the sixth gear 510 rotates with the fourth transmission shaft 504. When the sixth gear 510 rotates, the fifth gear 509 engaged with the sixth gear 510 rotates. When the fifth gear 509 rotates, the fourth gear 508 rotates with the third transmission shaft 503. When the fourth gear 508 rotates, the third gear 507 engaged with the fourth gear 508 rotates. When the third gear 507 rotates, the first gear 505 rotates with the first transmission shaft 501.

When the first gear 505 rotates, the second gear 506 engaged with the first gear 505 rotates. When the second gear 506 rotates, the ninth gear 513 rotates with the second transmission shaft 502. When the ninth gear 513 rotates, the 10th gear 514 engaged with the ninth gear 513 rotates. When the 10th gear 514 rotates, the left front wheel 3LF rotates with the rotational shaft 3LFa. In this manner, the left front wheel 3LF can be rotated by the driving the motor 5LF.

Next, the configuration of the second drive assembly 42 that rotates the right front wheel 3RF will be described. As illustrated in FIG. 3, the second drive assembly 42 includes the motor 5RF, and a transmission mechanism 50RF to transmit the power of the motor 5RF to the right front wheel 3RF. When the second drive assembly 42 drives the motor 5RF, the power of the motor 5RF is transmitted to the right front wheel 3RF through the transmission mechanism 50RF.

The motor 5RF is located above the right front wheel 3RF. The motor 5RF is located forward of the central shaft (rotational shaft) of the right front wheel 3RF. The motor 5RF is attached to the side frames 18LR (see FIG. 8) of the frame structure 18. Specifically, the motor 5RF is attached, via a motor bracket (not illustrated), to the first right frame 21R which is the right one of the side frames 18LR. The right front wheel 3RF can be rotated by driving the motor 5RF.

The configuration of the transmission mechanism 50RF is the same as the configuration of the transmission mechanism 50LF except that both transmission mechanisms are located symmetrically with respect to the center of the vehicle body 2 in the width direction (lateral direction), and thus a description will be omitted.

Next, the configuration of the third drive assembly 43 that rotates the left rear wheel 3LB will be described. As illustrated in FIG. 2, FIG. 13, and FIG. 14, the third drive assembly 43 includes the motor 5LB, and a transmission mechanism 50LB to transmit the power of the motor 5LB to the left rear wheel 3LB. When the third drive assembly 43 drives the motor 5LB, the power of the motor 5LB is transmitted to the left rear wheel 3LB through the transmission mechanism 50LB.

As illustrated in FIG. 2, the motor 5LB is located forward above the left rear wheel 3LB. The motor 5LB is attached to the side frames 18LR (see FIG. 8) of the frame structure 18. Specifically, the motor 5LB is attached, via a motor bracket (not illustrated), to the first left frame 19L which is the left one of the side frames 18LR.

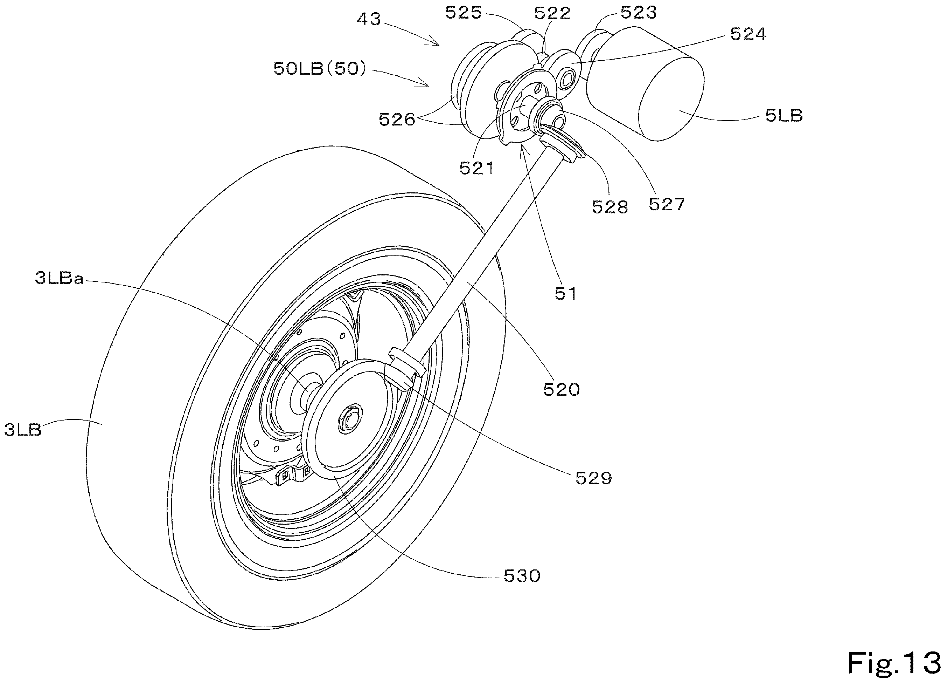

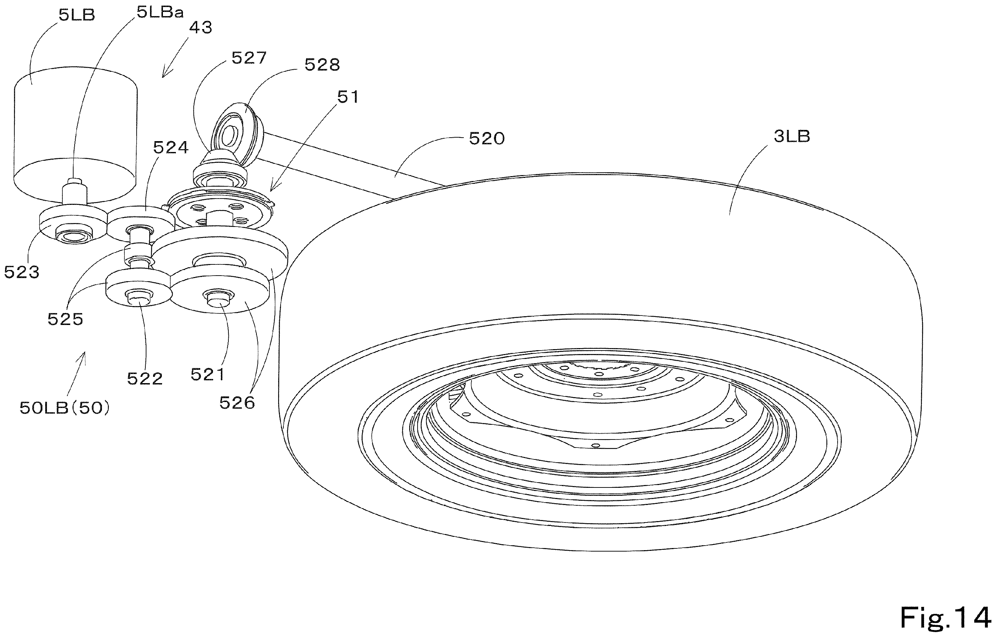

As illustrated in FIG. 13 and FIG. 14, the transmission mechanism 50LB includes a plurality of transmission shafts and a plurality of gears. The plurality of transmission shafts include a lower transmission shaft 520, an intermediate transmission shaft 521, and an upper transmission shaft 522. The plurality of gears include an 11th gear 523, a 12th gear 524, a 13th gear 525, a 14th gear 526, a 15th gear 527, a 16th gear 528, a 17th gear 529, and an 18th gear 530.

As mentioned above, the transmission mechanism 50LB includes the lower transmission shaft 520, the intermediate transmission shaft 521, and the upper transmission shaft 522. The upper transmission shaft 522 is located rearward of an output shaft 5LBa of the motor 5LB, and extends in parallel with the output shaft 5LBa in the lateral direction. The upper transmission shaft 522 transmits the power from the output shaft 5LBa of the motor 5LB to the intermediate transmission shaft 521. The intermediate transmission shaft 521 is located rearward of the upper transmission shaft 522, and extends in parallel with the upper transmission shaft 522 in the lateral direction. The intermediate transmission shaft 521 transmits the power transmitted from the upper transmission shaft 522 to the lower transmission shaft 520. The lower transmission shaft 520 is located inward (rightward) of the left rear wheel 3LB, and extends forward upward.

The output shaft 5LBa of the motor 5LB extends in the lateral direction. The 11th gear 523 is attached to the output shaft 5LBa of the motor 5LB. The 12th gear 524 is attached to a right portion of the upper transmission shaft 522. The 11th gear 523 and the 12th gear 524 are engaged with each other. The 13th gear 525 is attached to a left portion of the upper transmission shaft 522. The 14th gear 526 is attached to a left portion of the intermediate transmission shaft 521. The 13th gear 525 and the 14th gear 526 each include a pair of gears located in parallel to each other. The 13th gear 525 and the 14th gear 526 are engaged with each other.

The 15th gear 527 is attached to a right portion of the intermediate transmission shaft 521. The 15th gear 527 is a bevel gear, and engaged with the 16th gear 528 which is also a bevel gear. The 16th gear 528 is attached to an upper portion of the lower transmission shaft 520. The 17th gear 529 is attached to a lower portion of the lower transmission shaft 520. The 17th gear 529 is a bevel gear, and engaged with the 18th gear 530 which is also a bevel gear. The 18th gear 530 is attached to a rotational shaft 3LBa extending inward (rightward) from the center of the left rear wheel 3LB.

When the output shaft 5LBa of the motor 5LB rotates, the 11th gear 523 rotates, and the 12th gear 524 engaged with the 11th gear 523 rotates. When the 12th gear 524 rotates, the 13th gear 525 rotates with the upper transmission shaft 522. When the 13th gear 525 rotates, the 14th gear 526 engaged with the 13th gear 525 rotates. When the 14th gear 526 rotates, the 15th gear 527 rotates with the intermediate transmission shaft 521. When the 15th gear 527 rotates, the 16th gear 528 engaged with the 15th gear 527 rotates. When the 16th gear 528 rotates, the 17th gear 529 rotates with the lower transmission shaft 520. When the 17th gear 529 rotates, the 18th gear 530 engaged with the 17th gear 529 rotates. When the 18th gear 530 rotates, the left rear wheel 3LB rotates with the rotational shaft 3LBa. In this manner, the left rear wheel 3LB can be rotated by driving the motor 5LB.

Next, the configuration of the fourth drive assembly 44 that rotates the right rear wheel 3RB will be described. As illustrated in FIG. 3, the fourth drive assembly 44 includes the motor 5RB, and a transmission mechanism 50RB to transmit the power of the motor 5RB to the right rear wheel 3RB. When the fourth drive assembly 44 drives the motor 5RB, the power of the motor 5RB is transmitted to the right rear wheel 3RB through the transmission mechanism 50RB.

The motor 5RB is located forward above the right rear wheel 3RB. The motor 5RB is attached to the side frames 18LR (see FIG. 8) of the frame structure 18. Specifically, the motor 5RB is attached, via a motor bracket (not illustrated), to the first right frame 21R which is the right one of the side frames 18LR.

The configuration of the transmission mechanism 50RB is the same as the configuration of the transmission mechanism 50LB except that both transmission mechanisms are located symmetrically with respect to the center of the vehicle body 2 in the width direction (lateral direction), and thus a description will be omitted.

The third drive assembly 43 and the fourth drive assembly 44 are provided with a brake system 51 (see FIG. 13 and FIG. 14). The brake system 51 is, e.g., a disc brake. Rotation of the left rear wheel 3LB can be stopped by actuating the brake system 51 of the third drive assembly 43. Rotation of the right rear wheel 3RB can be stopped by actuating the brake system 51 of the fourth drive assembly 44. The operation of the brake system 51 can be controlled by the controller 15.

As illustrated in FIG. 7, the drive assembly 40 includes the steering mechanism 60 to change the direction of the wheels 30. In the present embodiment, the steering mechanism 60 changes the direction of the front wheels (the left front wheel 3LF and the right front wheel 3RF) among the wheels 30. As illustrated in FIG. 2 and FIG. 3, the steering mechanism 60 includes a left steering mechanism 60L to change the direction of the left front wheel 3LF, and a right steering mechanism 60R to change the direction of the right front wheel 3RF.

As illustrated in FIG. 2, the first drive assembly 41 includes the left steering mechanism 60L. As illustrated in FIG. 3, the second drive assembly 42 includes the right steering mechanism 60R. The configuration of the left steering mechanism 60L is the same as the configuration of the right steering mechanism 60R except that both transmission mechanisms are symmetric with respect to the center of the vehicle body 2 in the width direction (lateral direction). Thus, the configuration of the left steering mechanism 60L will be described below as the configuration of the steering mechanism 60, and a description of the configuration of the right steering mechanism 60R will be omitted.

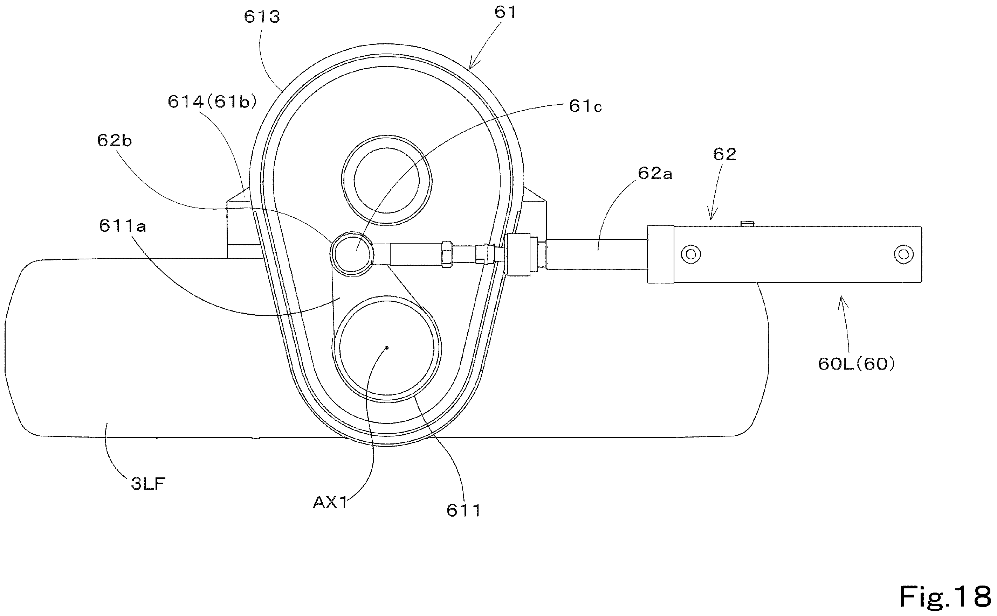

As illustrated in FIG. 2, FIG. 15, and FIG. 16, the steering mechanism 60 (the left steering mechanism 60L) includes a rotating body 61 that rotates about an axis AX1 in the up-down direction at the time of steering the wheel (the left front wheel 3LF). The axis AX1 of the rotating body 61 is located above the wheel (the left front wheel 3LF). The axis AX1 of the rotating body 61 is at a position overlapping the wheel (the left front wheel 3LF) in a plan view (see FIG. 18). The rotating body 61 includes a first section 611, a second section 612, a third section 613 and a fourth section 614. The first section 611, the second section 612, the third section 613 and the fourth section 614 are integrated to constitute one rotating body 61.

The first section 611 is in a tubular (cylindrical) shape with the central shaft in the up-down direction. The axis of the central shaft (cylindrical central shaft) of the first section 611 matches the above-mentioned axis AX1. Thus, the central shaft of the first section 611 is located above the left front wheel 3LF. At the time of steering the left front wheel 3LF, the rotating body 61 rotates about the axis (i.e., about the axis AX1) of the central shaft of the first section 611. The first transmission shaft 501 is inserted into the first section 611. The top of the first transmission shaft 501 projects upward from the first section 611. The outer peripheral surface of the first section 611 is provided with a projection 611a which projects in a radial direction (horizontal direction away from the central shaft of the first section 611) of the first section 611.

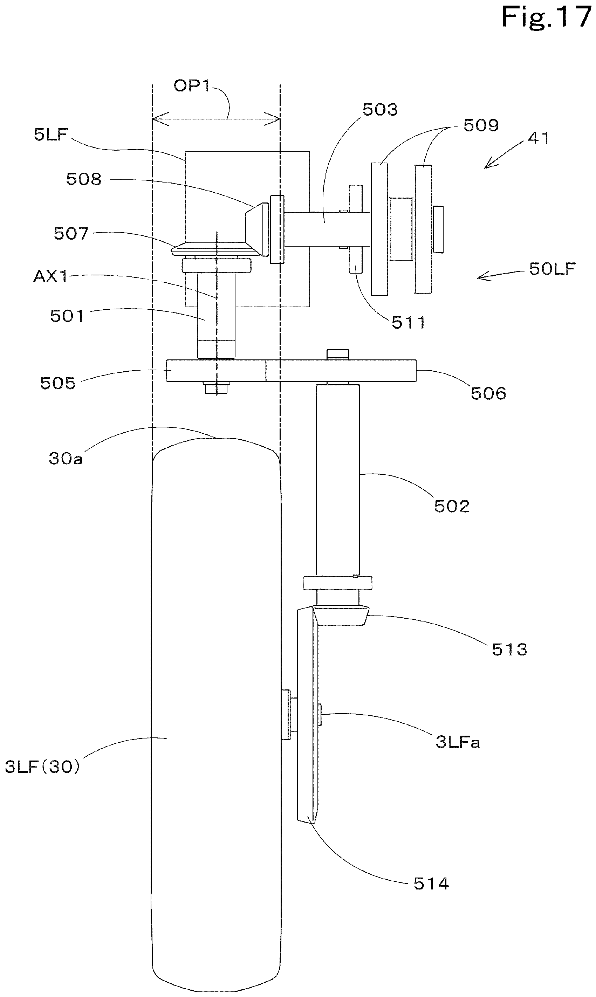

The second section 612 is in a tubular (cylindrical) shape with the central shaft in the up-down direction. The second section 612 is located inward (rightward) of the wheel (the left front wheel 3LF). The second transmission shaft 502 (see FIG. 11 and FIG. 17) is housed internally of the second section 612.

The third section 613 connects the lower end of the first section 611 and the upper end of the second section 612. The third section 613 is located above the left front wheel 3LF. The third section 613 is in a substantially elliptical shape in a plan view. The third section 613 serves as a gearbox that houses the first gear 505 and the second gear 506 (see FIG. 11 and FIG. 17).

The fourth section 614 is connected to the lower end of the second section 612. The fourth section 614 includes a tubular portion 614a connected to the lower end of the second section 612, and a conical portion 614b provided at the lower end of the tubular portion 614a. The fourth section 614 is located inward (rightward) of the left front wheel 3LF. The fourth section 614 serves as a gearbox that houses the ninth gear 513 and the 10th gear 514 (see FIG. 12 and FIG. 17).

The conical portion 614b of the fourth section 614 is connected to the left front wheel 3LF. Thus, when the fourth section 614 rotates about the axis AX1 due to rotation of the rotating body 61 about the axis AX1, the left front wheel 3LF also rotates about the axis AX1. That is, with the rotation of the rotating body 61 about the axis AX1, the left front wheel 3LF also rotates about the axis AX1. Note that the fourth section 614 does not rotate with the rotation (rotation about the rotational shaft 3LFa) of the left front wheel 3LF at the time of travel of the working vehicle 1.

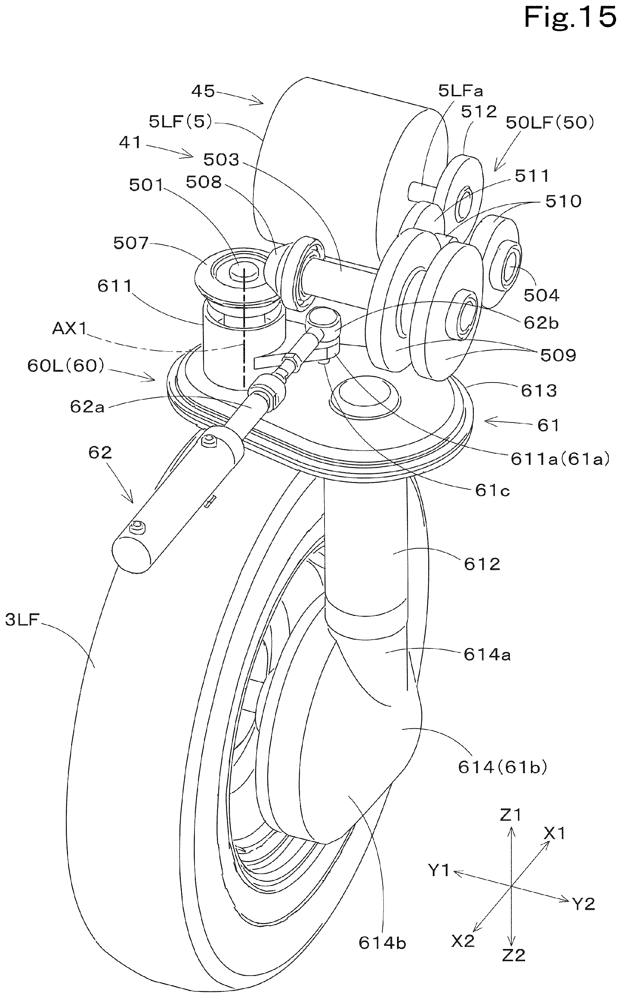

As illustrated in FIG. 15, FIG. 16, and FIG. 18, the steering mechanism 60 includes a cylinder 62 including a rod 62a which extends and retracts in a direction (front-rear direction) perpendicular to the axis AX1. The cylinder 62 includes a hydraulic cylinder. The rotating body 61 includes a first connection portion 61a to which the rod 62a is connected, and a second connection portion 61b connected to the wheel (the left front wheel 3LF).

The first connection portion 61a is defined by the above-mentioned projection 611a. A shaft body 61c penetrates, in up-down direction, the projection 611a defining the first connection portion 61a. A distal end member 62b attached to the distal end of the rod 62a is fitted in an upper portion of the shaft body 61c. The distal end member 62b can rotate about the central shaft of the shaft body 61c.

The second connection portion 61b is defined by the above-described fourth section 614. The second connection portion 61b is connected, below the rotating body 61, to an inward (rightward) portion of the wheel (the left front wheel 3LF). To prevent the second connection portion 61b from rotating with the rotation of the wheel (the left front wheel 3LF) at the time of travel, the second connection portion 61b is connected to the wheel, e.g., through a bearing or the like.

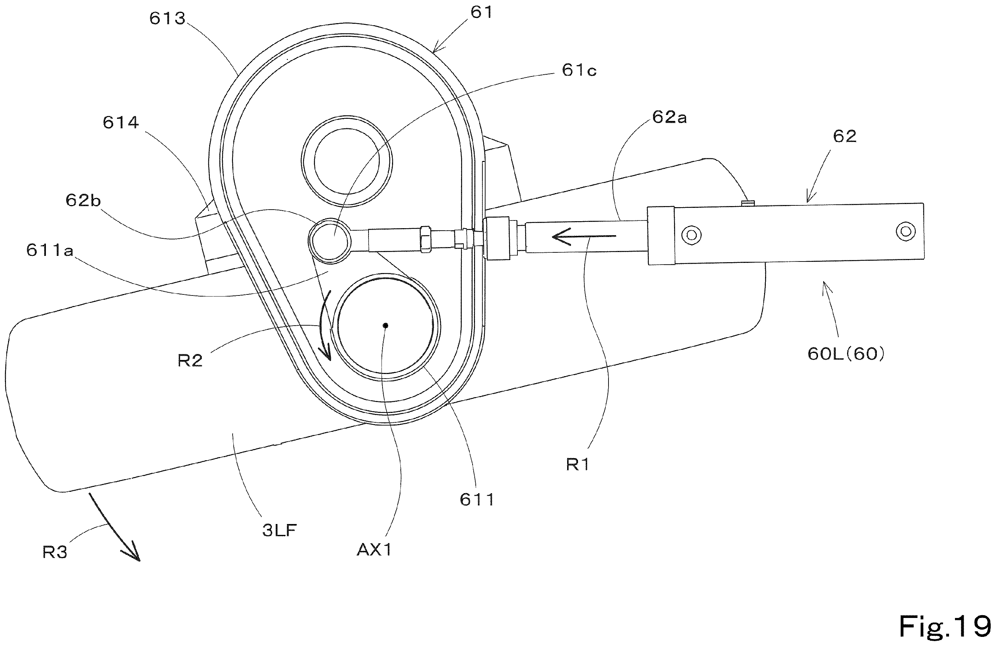

The cylinder 62 rotates the left front wheel 3LF about the axis AX1 by rotating the rotating body 61 about the axis AX1 by extension and retraction of the rod 62a. First, the situation where the rod 62a is extended will be described. As illustrated in FIG. 19, when the rod 62a is extended (see an arrow R1), the first section 611 rotates about the axis AX1 with the projection 611a (see an arrow R2). When the first section 611 rotates about the axis AX1, the second section 612, the third section 613 and the fourth section 614 which are integrated with the first section 611, also rotate about the axis AX1. When the fourth section 614 rotates about the axis AX1, the left front wheel 3LF connected to the fourth section 614 also rotates about the axis AX1 (see an arrow R3). Thus, the left front wheel 3LF changes its direction such that the front thereof faces outward (rightward).

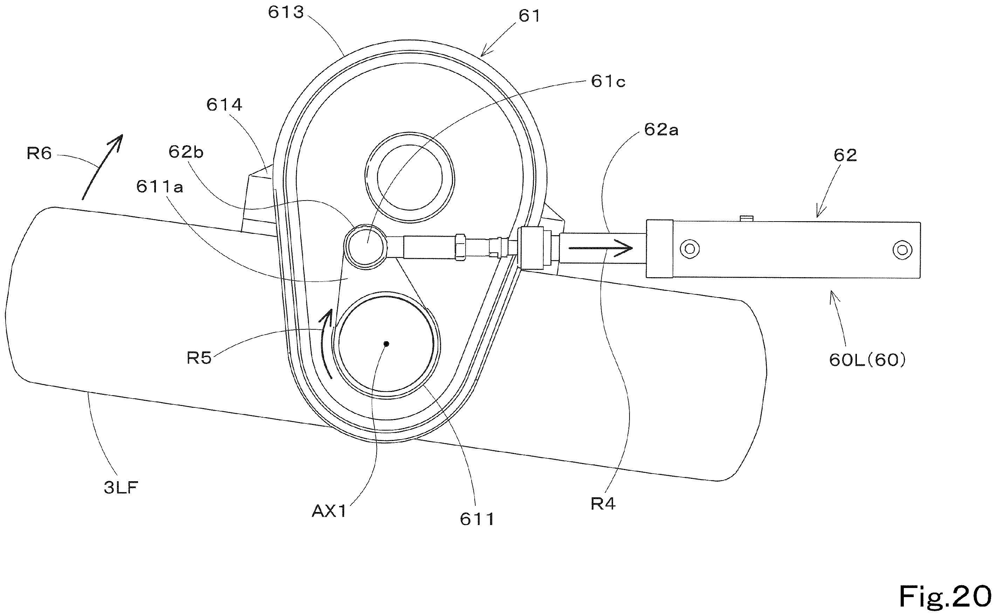

Next, the situation where the rod 62a is retracted will be described. As illustrated in FIG. 20, when the rod 62a is retracted (see an arrow R4), the first section 611 rotates about the axis AX1 with the projection 611a (see an arrow R5). The rotational direction then is opposite to the direction when the rod 62a extended. When the first section 611 rotates about the axis AX1, the second section, the third section 613, and the fourth section 614 which are integrated with the first section 611, also rotate about the axis AX1. When the fourth section 614 rotates about the axis AX1, the left front wheel 3LF connected to the fourth section 614 also rotates about the axis AX1 (see an arrow R6). Thus, the left front wheel 3LF changes its direction such that the front thereof faces inward (leftward).

As described above, the left steering mechanism 60L can rotate the left front wheel 3LF about the axis AX1 by extending or retracting the rod 62a by driving the cylinder 62. Similarly, the right steering mechanism 60R can rotate the right front wheel 3RF about the axis AX1 by extending or retracting the rod 62a by driving the cylinder 62. In this manner, the travel direction of the working vehicle 1 can be changed by changing the direction of the left front wheel 3LF and the right front wheel 3RF by driving the steering mechanism 60.

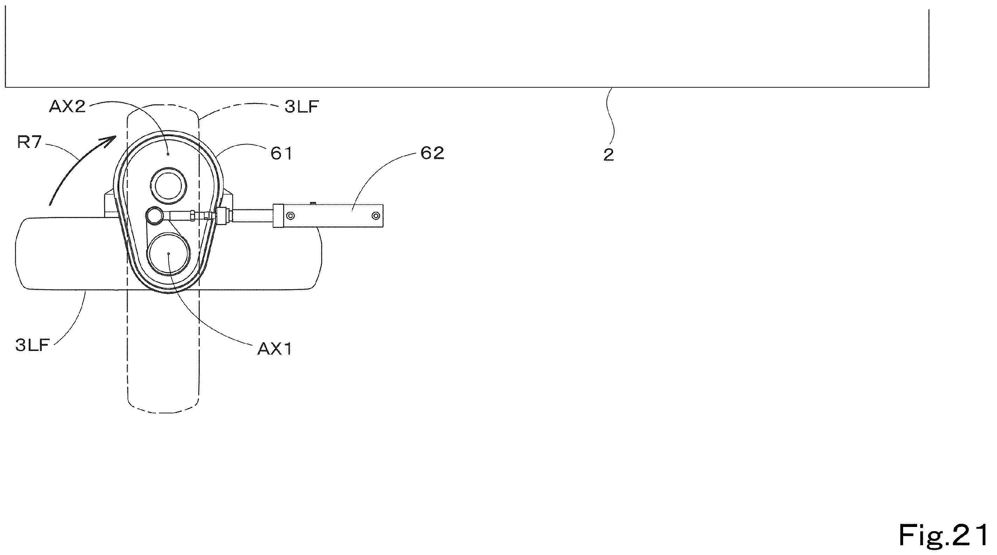

As is apparent from the above description, the axis AX1 that is the rotation axis of the wheels (the left front wheel 3LF and the right front wheel 3RF) is the steering axis when the wheels (the left front wheel 3LF and the right front wheel 3RF) are steered. Here, as described above, the axis AX1 serving as the steering axis is upward of the wheels (front wheels). Thus, as compared to when the steering axis is inward of the wheels, the wheels (front wheels) do not move toward the vehicle body 2 side at the time steering. Hereinafter, this point will be described with reference to FIG. 21.

FIG. 21 is a plan view illustrating a change in the position of the left front wheel 3LF when the left front wheel 3LF is rotated inward (when the left front wheel 3LF is steered leftward) as indicated by an arrow R7. The position of the left front wheel 3LF before rotation (before steering) is indicated by a solid line, and the position of the left front wheel 3LF after rotation (after steering) is indicated by an imaginary line. As illustrated in FIG. 21, the steering axis (the axis AX1) of the left front wheel 3LF is upward of the left front wheel 3LF, and thus as compared to when the steering axis is inward of the left front wheel 3LF (for example, when the steering axis is at the position of AX2), the amount (length) of inward movement of the left front wheel 3LF to the vehicle body 2 side reduces after steering. Thus, at the time of steering, interference between the wheels (front wheels) and the vehicle body 2 is prevented, and a larger steering angle can be secured.

Note that as a different embodiment of the drive device 45, the motor in the drive device 45 may be an in-wheel motor. In this case, all the left front wheel 3LF, the right front wheel 3RF, the left rear wheel 3LB, and the right rear wheel 3RB may be driven by an in-wheel motor, or part (for example, the left front wheel 3LF and the right front wheel 3RF, or the left rear wheel 3LB and the right rear wheel 3RB) may be driven by an in-wheel motor.

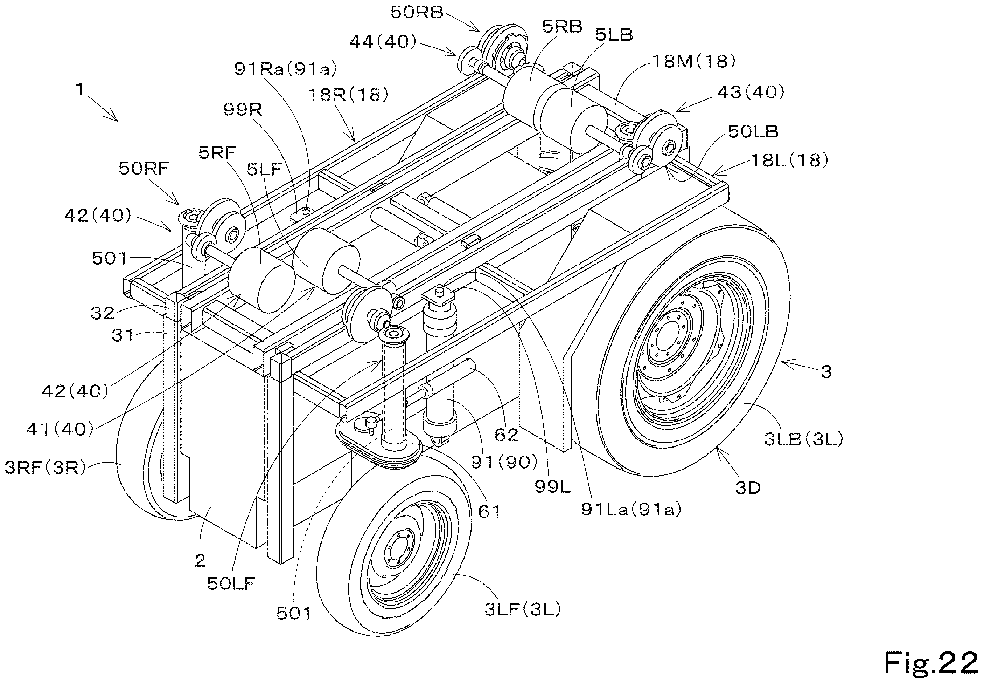

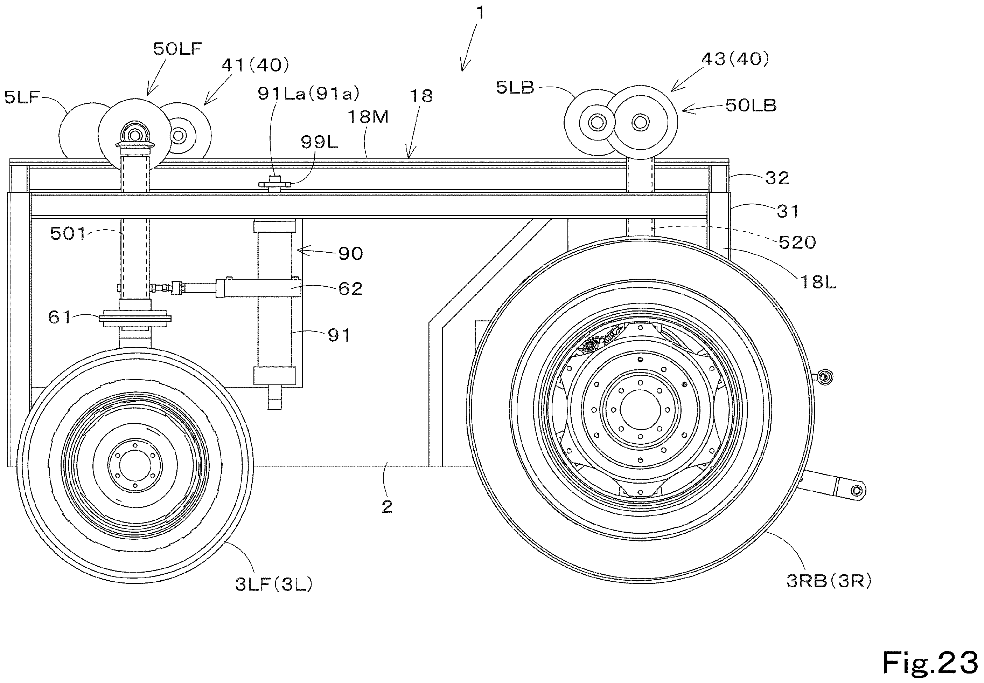

FIG. 22 and FIG. 23 are views illustrating another embodiment (embodiment A1) of the working vehicle 1. In the working vehicle 1 according to another embodiment (embodiment A1), the configuration (positioning) of the drive assembly 40 to drive the wheels 30 is partially different from the configuration of the working vehicle 1 in the above-described embodiment (see FIG. 1 to FIG. 6). Hereinafter, the drive assembly 40 of the working vehicle 1 according to another embodiment (embodiment A1) will be described.

The drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The drive assemblies are attached to a frame structure 18.

First, the configuration of the first drive assembly 41 will be described. The first drive assembly 41 includes the motor 5LF, and a transmission mechanism 50LF to transmit the power of the motor 5LF to the left front wheel 3LF. The motor 5LF is located above the vehicle body 2. The motor 5LF is attached to the upper frame 18M of the frame structure 18. The motor 5LF is attached to the upper frame 18M via a motor bracket (not illustrated). The output shaft of the motor 5LF extends leftward.

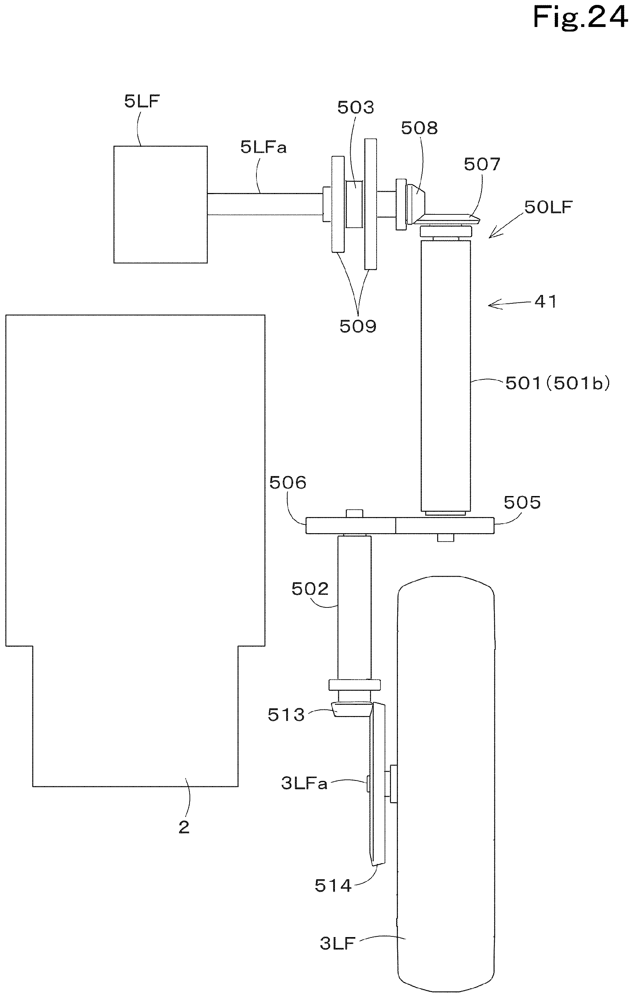

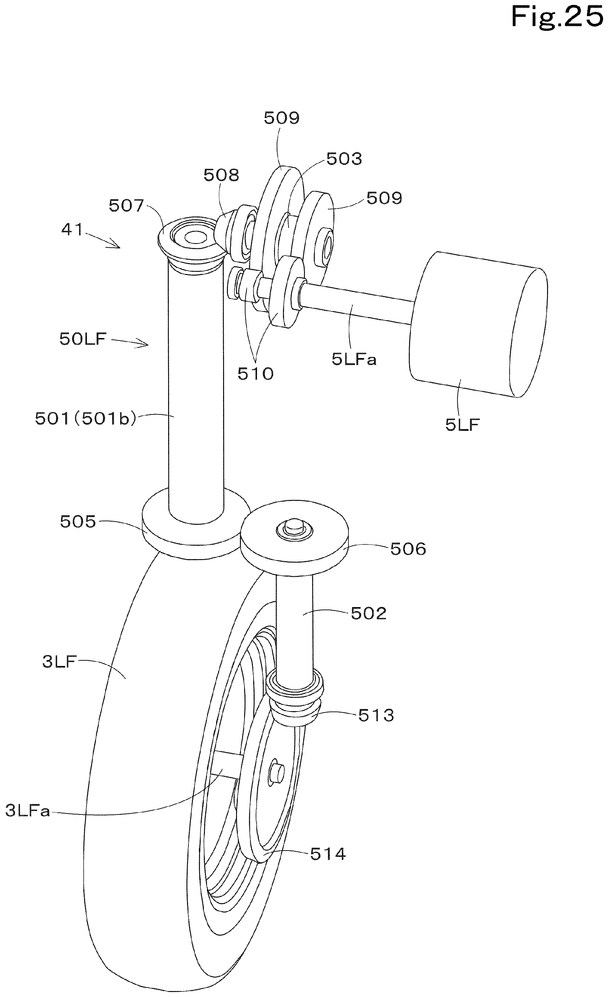

As illustrated in FIG. 24 and FIG. 25, the transmission mechanism 50LF includes a plurality of transmission shafts and a plurality of gears. The plurality of transmission shafts include a first transmission shaft 501, a second transmission shaft 502, and a third transmission shaft 503. The plurality of gears include a first gear 505, a second gear 506, a third gear 507, a fourth gear 508, a fifth gear 509, a sixth gear 510, a ninth gear 513, and a 10th gear 514.

As described above, the transmission mechanism 50LF includes the first transmission shaft 501, the second transmission shaft 502 and the third transmission shaft 503. The first transmission shaft 501 is located above the left front wheel 3LF, and extends in the up-down direction. The second transmission shaft 502 is located inward (rightward) of the left front wheel 3LF, and extends in the up-down direction. The third transmission shaft 503 is located above the first transmission shaft 501 and the second transmission shaft 502, and extends in the lateral direction.

The first transmission shaft 501, the second transmission shaft 502 and the third transmission shaft 503 are attached to the frame structure 18 through a bearing or the like. The first transmission shaft 501 is attached, at an upper portion, to the movable frame 32 (the second left frame 20L or the lateral frame 18M). The second transmission shaft 502 is attached to the fixed frame 31. The third transmission shaft 503 is attached to the movable frame 32 (the second left frame 20L or the lateral frame 18M).

The third transmission shaft 503 receives the rotational power of the motor 5LF and rotates. The first transmission shaft 501 receives the power transmitted from the third transmission shaft 503 and rotates. The second transmission shaft 502 receives the power transmitted from the first transmission shaft 501 and rotates.

The first gear 505 is attached to a lower portion of the first transmission shaft 501. The second gear 506 is attached to an upper portion of the second transmission shaft 502. The first gear 505 and the second gear 506 are engaged with each other. The third gear 507 is attached to an upper portion of the first transmission shaft 501. The third gear 507 is a bevel gear, and engaged with the fourth gear 508 which is also a bevel gear.

The fourth gear 508 is attached to a left portion of the third transmission shaft 503. The fifth gear 509 is attached to a right portion of the third transmission shaft 503. The fifth gear 509 is engaged with the sixth gear 510. The fifth gear 509 and the sixth gear 510 each include a pair of gears located in parallel to each other. The sixth gear 510 is attached to the output shaft 5LFa of the motor 5LF.

The ninth gear 513 is attached to a lower portion of the second transmission shaft 502. The ninth gear 513 is a bevel gear, and engaged with the 10th gear 514 which is also a bevel gear. The 10th gear 514 is attached to a rotational shaft 3LFa (central shaft of the left front wheel 3LF) extending inward (rightward) from the center of the left front wheel 3LF.

As described above, the first drive assembly 41 in another embodiment (embodiment A1) differs from the first drive assembly 41 (see FIG. 11, FIG. 12, and FIG. 17) of the above-described embodiment (embodiment A) in that the fourth transmission shaft 504, the seventh gear 511, and the eighth gear 512 are not provided, and the sixth gear 510 is attached to the output shaft 5LFa of the motor 5LF.

When the output shaft 5LFa of the motor 5LF rotates, the sixth gear 510 rotates, and the fifth gear 509 engaged with the sixth gear 510 rotates. When the fifth gear 509 rotates, the fourth gear 508 rotates with the third transmission shaft 503. When the fourth gear 508 rotates, the third gear 507 engaged with the fourth gear 508 rotates. When the third gear 507 rotates, the first gear 505 rotates with the first transmission shaft 501. When the first gear 505 rotates, the second gear 506 engaged with the first gear 505 rotates. When the second gear 506 rotates, the ninth gear 513 rotates with the second transmission shaft 502. When the ninth gear 513 rotates, the 10th gear 514 engaged with the ninth gear 513 rotates. When the 10th gear 514 rotates, the left front wheel 3LF rotates with the rotational shaft 3LFa. In this manner, the left front wheel 3LF can be rotated by driving the motor 5LF.

The first transmission shaft 501 can be extended and retracted in the up-down direction. Specifically, the first transmission shaft 501 can be extended and retracted as the height of the vehicle body 2 is changed by the later-described height changing mechanism 90. The height changing mechanism 90 is a mechanism that can change the height of the vehicle body 2 that is the distance of the vehicle body 2 from the ground surface. The specific configuration of the height changing mechanism 90 will be described in detail later. Here, the structure that allows the first transmission shaft 501 to be extended and retracted will be described.

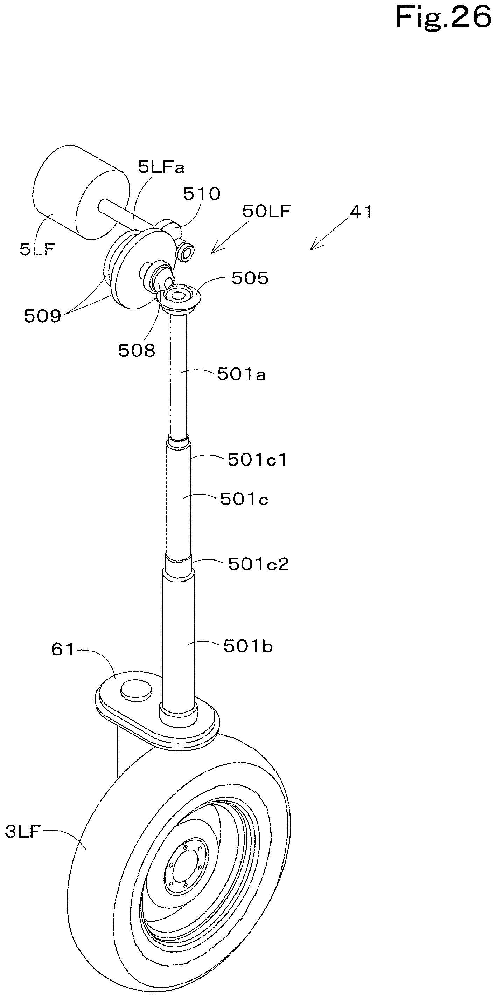

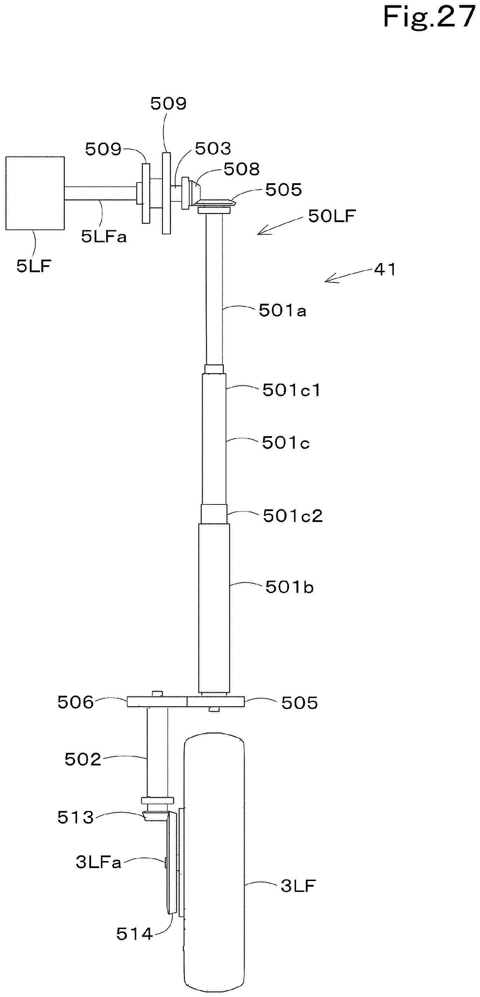

As illustrated in FIG. 26 and FIG. 27, the first transmission shaft 501 includes an upper shaft 501a and a lower shaft 501b. The power from the motor 5LF is transmitted to the upper shaft 501a. The lower shaft 501b transmits, to the second transmission shaft 502, the power transmitted to the upper shaft 501a. The upper shaft 501a is in a cylindrical shape or a columnar shape. The lower shaft 501b is in a cylindrical shape. The axis of the upper shaft 501a and the axis of the lower shaft 501b are located on the same straight line extending in the up-down direction. In the first transmission shaft 501, the distance between the upper end of the upper shaft 501a and the lower end of the lower shaft 501b changes as the height of the vehicle body 2 is changed by the height changing mechanism 90. In other words, the upper shaft 501a is raised with respect to the lower shaft 501b. Thus, the length of the first transmission shaft 501 in the up-down direction is changed.

The first transmission shaft 501 includes an intermediate shaft 501c. The axis of the intermediate shaft 501c, and the axes of the upper shaft 501a and the lower shaft 501b are located on the same straight line. The intermediate shaft 501c is in a cylindrical shape. The intermediate shaft 501c includes an upper portion 501c1 into which the upper shaft 501a is inserted, and a lower portion 501c2 into which the lower shaft 501b is inserted.

The outer surface of the upper shaft 501a is provided with a first spline. The first spline includes elongated protrusion(s) extending in the up-down direction, the protrusions being provided on the outer surface of the upper shaft 501a at regular intervals in a circumferential direction. The inner surface of the lower shaft 501b is provided with a second spline. The second spline includes groove(s) extending in the up-down direction, the grooves being provided on the inner surface of the lower shaft 501b at regular intervals in a circumferential direction.

The inner surface of the intermediate shaft 501c is provided with an inner spline. The inner spline includes grooves extending in the up-down direction, the grooves being provided on inner surface of the intermediate shaft 501c at regular intervals in a circumferential direction. The outer surface of the intermediate shaft 501c is provided with an outer spline. The outer spline includes protrusions extending in the up-down direction, the protrusions being provided on the outer surface of the intermediate shaft 501c at regular intervals in a circumferential direction.

The first spline is engaged with the inner spline. Specifically, the protrusions of the first spline are engaged with the grooves of the inner spline. The second spline is engaged with the outer spline. Specifically, the grooves of the second spline are engaged with the protrusions of the outer spline. Consequently, the rotation of the upper shaft 501a is transmitted to the intermediate shaft 501c, and the rotation of the intermediate shaft 501c is transmitted to the lower shaft 501b. Thus, in the first transmission shaft 501, the upper shaft 501a, the intermediate shaft 501c and the lower shaft 501b integrally rotate about the axis.

Since both the protrusions of the first spline and the grooves of the inner spline extend in the up-down direction, the upper shaft 501a can be moved in the up-down direction along the axis of the intermediate shaft 501c. Since both the grooves of the second spline and the protrusions of the outer spline extend in the up-down direction, the intermediate shaft 501c can be moved in the up-down direction along the axis of the lower shaft 501b. Due to these movements in the up-down direction, the first transmission shaft 501 can be extended and retracted. FIG. 26 and FIG. 27 illustrate a state where the first transmission shaft 501 is extended. FIG. 24 and FIG. 25 illustrate a state where the first transmission shaft 501 is retracted.

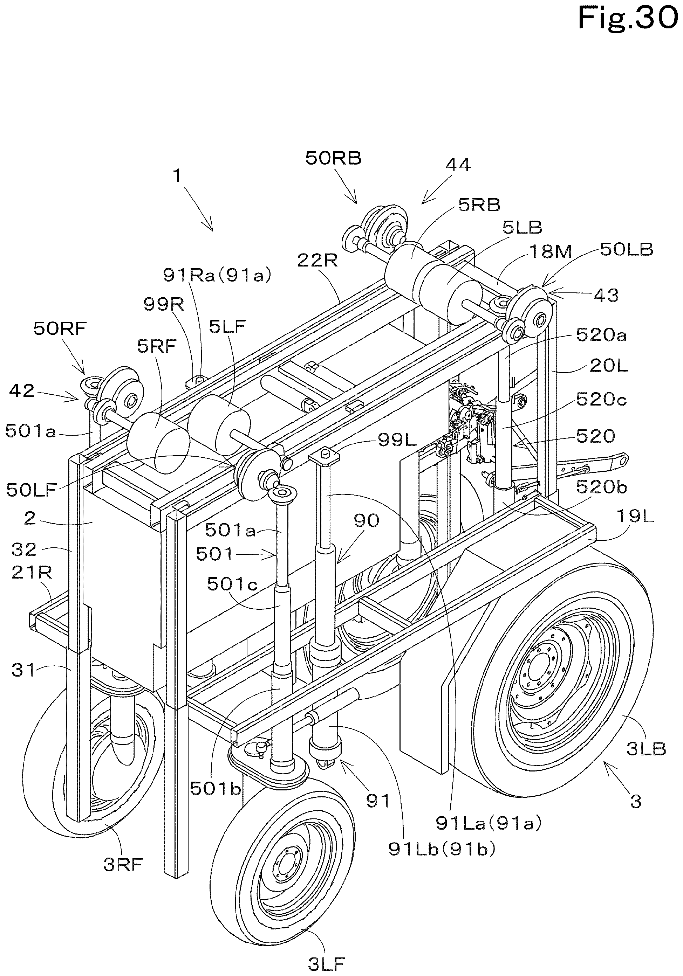

The first transmission shaft 501 is extended or retracted by driving the lifting cylinder 91 (see FIG. 22 and FIG. 30) of the height changing mechanism 90. The first transmission shaft 501 is extended or retracted with the extension or retraction of the rod 91a of the lifting cylinder 91. When the vehicle body 2 is raised or lowered with the frame structure 18 by extending or retracting the rod 91a of the lifting cylinder 91, the first transmission shaft 501 is extended or retracted.

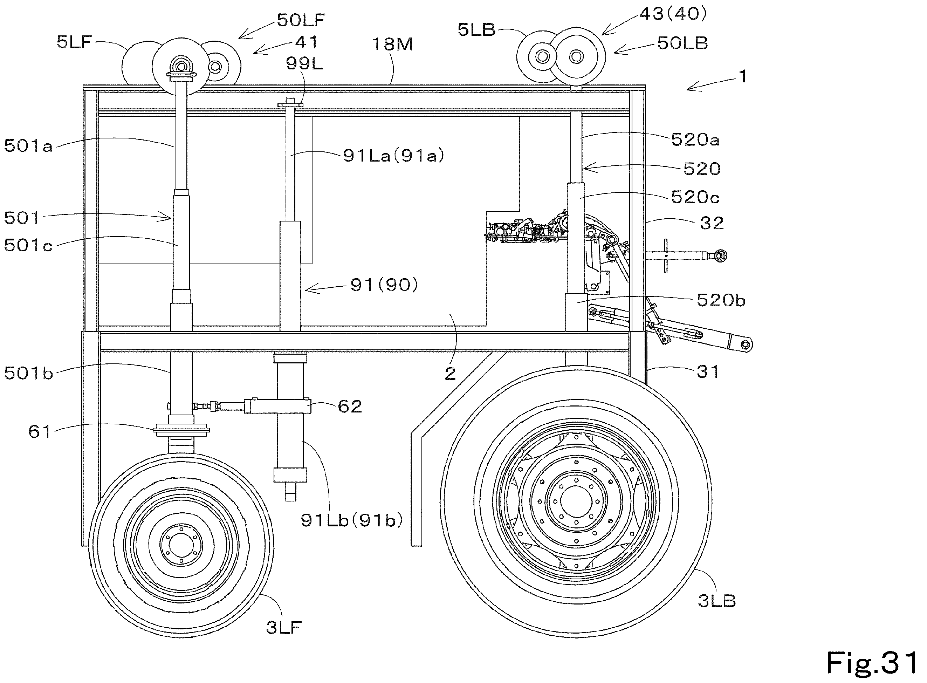

As illustrated in FIG. 30 and FIG. 31, when the vehicle body 2 is raised by extending the rod 91a of the lifting cylinder 91, the first transmission shaft 501 is extended. As illustrated in FIG. 22 and FIG. 23, when the vehicle body 2 is lowered by retracting the rod 91a of the lifting cylinder 91, the first transmission shaft 501 is retracted.

Movable members (the upper shaft 501a and the intermediate shaft 501c) at the time of extension or retraction of the first transmission shaft 501 are attached to the movable frame 32 (the second left frame 20L or the second right frame 22R) via a bearing device (not illustrated). Thus, when the movable frame 32 is raised or lowered with the vehicle body 2, the upper shaft 501a and the intermediate shaft 501c can be extended or retracted.

Note that in the above description, the configuration has been described in which the first transmission shaft 501 can be extended and retracted in the up-down direction; however, a configuration may be adopted in which the second transmission shaft 502 instead of the first transmission shaft 501 can be extended and retracted in the up-down direction. In this case, it is sufficient that a configuration be adopted in which the second transmission shaft 502 includes the above-described upper shaft, lower shaft, and intermediate shaft.

**In** the above description, a configuration has been described in which the first transmission shaft 501 includes the upper shaft 501a, the lower shaft 501b and the intermediate shaft 501c; however, the intermediate shaft 501c may be omitted. In this case, it is sufficient that the upper shaft 501a and the lower shaft 501b be connected by a spline without using an intermediate shaft. Specifically, it is sufficient that the outer peripheral surface of the upper shaft 501a be provided with an outer spline, the inner peripheral surface of the lower shaft 501b be provided with an inner spline, and these outer and inner splines be engaged with each other.

Next, a configuration of the second drive assembly 42 that rotates the right front wheel 3RF will be described. As illustrated in FIG. 22 and the like, the second drive assembly 42 includes a motor 5RF, and a transmission mechanism 50RF to transmit the power of the motor 5RF to the right front wheel 3RF. The motor 5RF is located above the vehicle body 2. The motor 5RF is attached to the upper frame 18M of the frame structure 18.

The motor 5RF is attached to the upper frame 18M via a motor bracket (not illustrated). The output shaft of the motor 5RF extends rightward. The configuration of the transmission mechanism 50RF is the same as the configuration of the transmission mechanism 50LF except that both transmission mechanisms are located symmetrically with respect to the center of the vehicle body 2 in the width direction (lateral direction), and thus a description will be omitted. The first transmission shaft 501 of the transmission mechanism 50RF can be extended and retracted with the change in the height of the vehicle body 2 made by the height changing mechanism 90.

Next, the configuration of the third drive assembly 43 that rotates the left rear wheel 3LB will be described. As illustrated in FIG. 22 and the like, the third drive assembly 43 includes a motor 5LB, and a transmission mechanism 50LB to transmit the power of the motor 5LB to the left rear wheel 3LB. The motor 5LB is attached to the upper frame 18M of the frame structure 18. The motor 5LB is attached to the upper frame 18M via a motor bracket (not illustrated). The output shaft of the motor 5RB extends leftward.

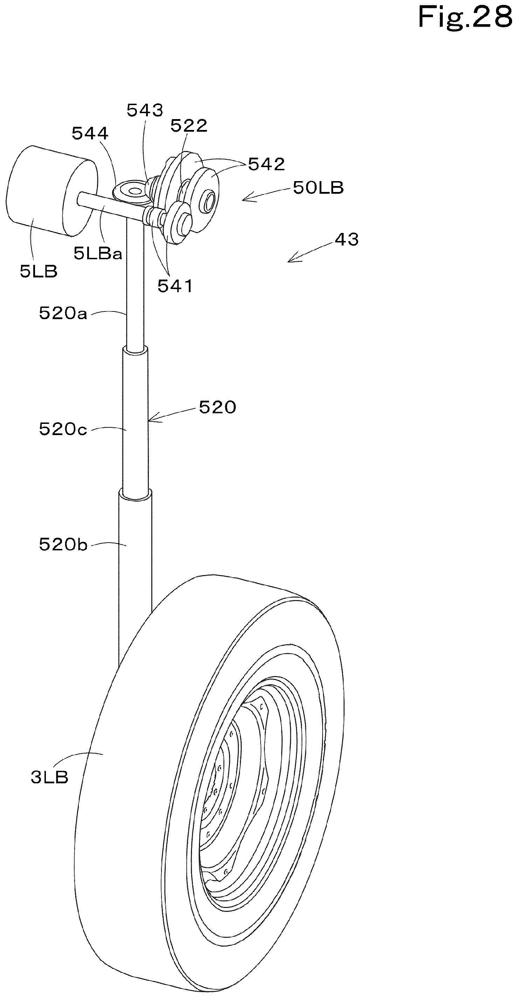

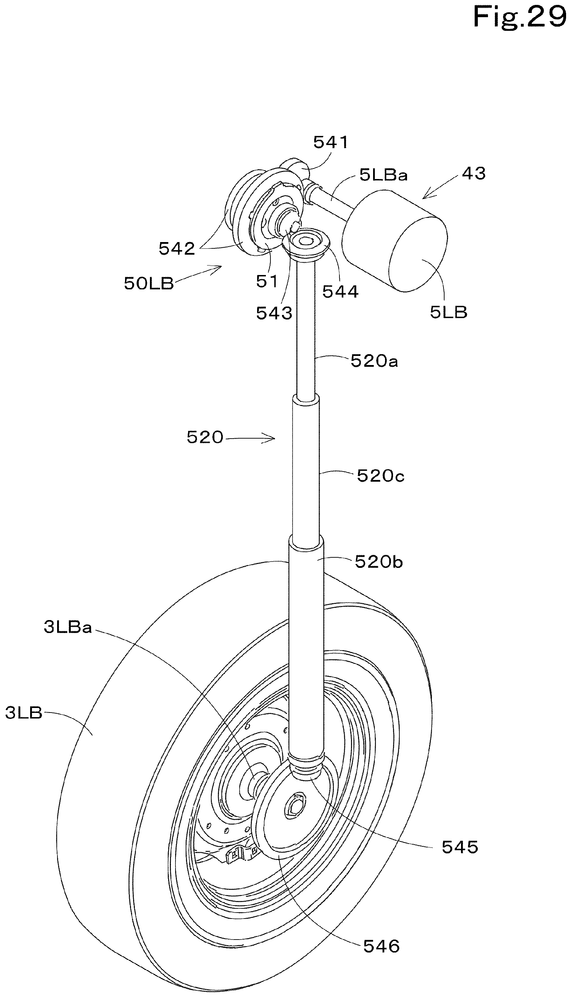

As illustrated in FIG. 28 and FIG. 29, the transmission mechanism 50LB includes a lower transmission shaft 520, an upper transmission shaft 522, a first transmission gear 541, a second transmission gear 542, a third transmission gear 543, a fourth transmission gear 544, a fifth transmission gear 545, and a sixth transmission gear 546.

As described above, the transmission mechanism 50LB includes the lower transmission shaft 520 and the upper transmission shaft 522. The upper transmission shaft 522 is located rearward of the output shaft 5LBa of the motor 5LB, and extends in parallel with the output shaft 5LBa in the lateral direction. The upper transmission shaft 522 receives the power from the output shaft 5LBa of the motor 5LB, and transmits the power to the lower transmission shaft 520. The lower transmission shaft 520 extends in the up-down direction.

The output shaft 5LBa of the motor 5LB extends in the lateral direction. The first transmission gear 541 is attached to the output shaft 5LBa. The second transmission gear 542 is attached to a left portion of the upper transmission shaft 522. The first transmission gear 541 and the second transmission gear 542 are engaged with each other. The first transmission gear 541 and the second transmission gear 542 each include a pair of gears located in parallel to each other.

The third transmission gear 543 is attached to a right portion of the upper transmission shaft 522. The third transmission gear 543 is a bevel gear, and engaged with the fourth transmission gear 544 which is also a bevel gear. The fourth transmission gear 544 is attached to an upper portion of the lower transmission shaft 520. The fifth transmission gear 545 is attached to a lower portion of the lower transmission shaft 520. The fifth transmission gear 545 is a bevel gear, and engaged with the sixth transmission gear 546 which is also a bevel gear. The sixth transmission gear 546 is attached to a rotational shaft 3LBa extending inward (rightward) from the center of the left rear wheel 3LB.

When the output shaft 5LBa of the motor 5LB rotates, the first transmission gear 541 rotates, and the second transmission gear 542 engaged with the first transmission gear 541 rotates. When the second transmission gear 542 rotates, the third transmission gear 543 rotates with the upper transmission shaft 522. When the third transmission gear 543 rotates, the fourth transmission gear 544 engaged with the third transmission gear 543 rotates. When the fourth transmission gear 544 rotates, the fifth transmission gear 545 rotates with the lower transmission shaft 520. When the fifth transmission gear 545 rotates, the sixth transmission gear 546 engaged with the fifth transmission gear 545 rotates. When the sixth transmission gear 546 rotates, the left rear wheel 3LB rotates with the rotational shaft 3LBa. In this manner, the left rear wheel 3LB can be rotated by driving the motor 5LB.

Next, the configuration of the fourth drive assembly 44 that rotates the right rear wheel 3RB will be described. As illustrated in FIG. 22 and the like, the fourth drive assembly 44 includes a motor 5RB, and a transmission mechanism 50RB to transmit the power of the motor 5RB to the right rear wheel 3RB. The motor 5RB is attached to the upper frame 18M of the frame structure 18. The configuration of the transmission mechanism 50RB is the same as the configuration of the transmission mechanism 50LB except that both transmission mechanisms are located symmetrically with respect to the center of the vehicle body 2 in the width direction (lateral direction), and thus a description will be omitted. The transmission mechanism 50RB can rotate the right rear wheel 3RB by driving the motor 5RB.

The third drive assembly 43 and the fourth drive assembly 44 are provided with a brake system 51. The operation of the brake system 51 can be controlled by the controller 15.

The lower transmission shaft 520 of the third drive assembly 43 and the fourth drive assembly 44 can be extended and retracted with the change in the height of the vehicle body 2 made by the height changing mechanism 90. FIG. 28 and FIG. 29 illustrate a state where the lower transmission shaft 520 is extended. The extension and retraction structure of the lower transmission shaft 520 is the same as the extension and retraction structure of the above-described first transmission shaft 501. Specifically, the lower transmission shaft 520 includes an upper shaft 520a, a lower shaft 520b and an intermediate shaft 520c which are similar in configuration to the upper shaft 501a, the lower shaft 501b and the intermediate shaft 501c of the above-described first transmission shaft 501.

**In** the lower transmission shaft 520, the rotation of the upper shaft 520a is transmitted to the intermediate shaft 520c, and the rotation of the intermediate shaft 520c is transmitted to the lower shaft 520b. Thus, in the first transmission shaft 501, the upper shaft 520a, the intermediate shaft 520c and the lower shaft 520b integrally rotate about the axis. The upper shaft 520a can be moved in the up-down direction along the axis of the intermediate shaft 520c, and the intermediate shaft 520c can be moved in the up-down direction along the axis of the lower shaft 520b. Due to this movement, the lower transmission shaft 520 can be extended and retracted in the up-down direction.

The lower transmission shaft 520 is extended and retracted by driving the lifting cylinder 91 of the height changing mechanism 90. The lower transmission shaft 520 is extended or retracted with the extension or retraction of the rod 91a of the lifting cylinder 91. When the vehicle body 2 is raised or lowered with the frame structure 18 by extending or retracting the rod 91a of the lifting cylinder 91, the lower transmission shaft 520 is extended or retracted.

When the vehicle body 2 is raised by extending the rod 91a of the lifting cylinder 91, the lower transmission shaft 520 is extended (see FIG. 30 and FIG. 31). When the vehicle body 2 is lowered by retracting the rod 91a of the lifting cylinder 91 (see FIG. 22 and FIG. 23), the lower transmission shaft 520 is retracted.

Movable members (the upper shaft 520a and the intermediate shaft 520c) at the time of extension or retraction of the lower transmission shaft 520 are attached to the movable frame 32 (the second left frame 20L or the second right frame 22R) via a bearing device (not illustrated). Thus, when the movable frame 32 is raised or lowered with the vehicle body 2, the upper shaft 520a and the intermediate shaft 520c can be extended or retracted.

As described above, the drive assembly 40 of the working vehicle 1 according to another embodiment (embodiment A1) can extend and retract the first transmission shaft 501 of the first drive assembly 41 and the second drive assembly 42, and the lower transmission shaft 520 of the third drive assembly 43 and the fourth drive assembly 44 by driving the lifting cylinder 91 of the height changing mechanism 90. Thus, the vehicle body 2 can be raised or lowered with power transmission from the motor 5 located above the vehicle body 2 to the wheels 30 maintained.

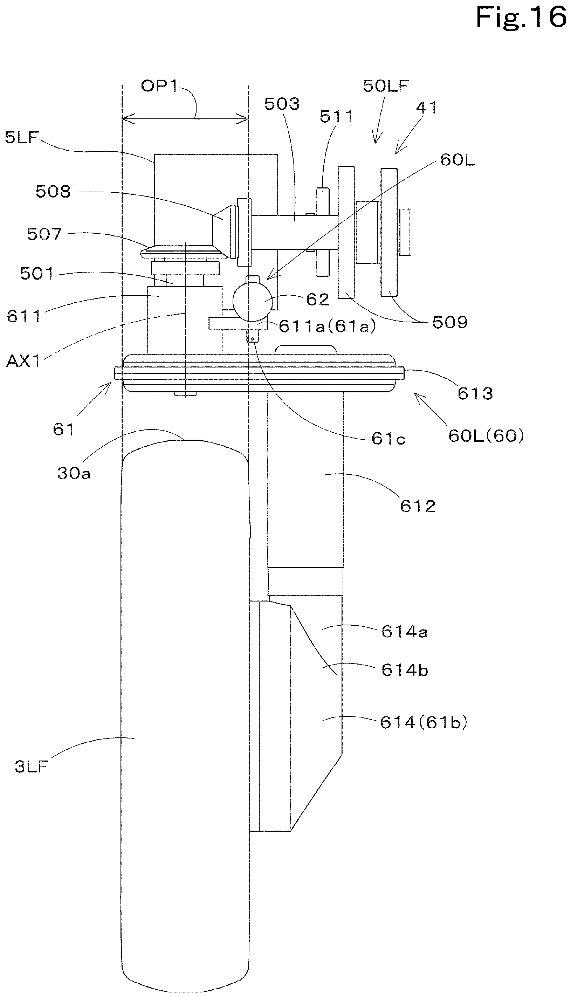

As illustrated in FIG. 16, FIG. 17, FIG. 32, and FIG. 33, at least a portion of the drive assembly 40 is located at a position which is radially outward of and faces a tread portion 30a of the wheel 30 and which overlaps the position of the wheel 30 in the width direction (lateral direction) of the vehicle body 2. The tread portion 30a is the portion where the wheel 30 is to be in contact with the ground surface.

Hereinafter, for convenience of description, the "position which is radially outward of and faces the tread portion 30a of the wheel 30 and which overlaps the position of the wheel 30 in the width direction of the vehicle body 2" is referred to as the "outer overlapping position". Also, the "position radially outward of and facing the tread portion 30a of the wheel 30" may be referred to as the "periphery of the wheel 30".

The reference position (angle) of the wheel 30 to determine whether at least a portion of the drive assembly 40 is at the outer overlapping position is given by the position (angle) of the wheel 30 when the working vehicle 1 travels straight forward or rearward. In other words, the reference position (angle) of the wheel 30 to determine whether at least a portion of the drive assembly 40 is at the outer overlapping position is given by the position (angle) of the wheel 30 with the position (angle) not steered to the left or the right.

The "at least a portion of the drive assembly 40" at the outer overlapping position is, for example, the drive device 45. In this case, the entirety of the drive device 45 may be at the outer overlapping position, or part of the drive device 45 may be at the outer overlapping position. In other words, it is sufficient that at least a portion of the drive device 45 be at the outer overlapping position.

As illustrated in FIG. 16, FIG. 17, and FIG. 32, in the first drive assembly 41, part of the motor 5LF serving as the drive device 45 is at an outer overlapping position OP1. Part of the motor 5LF is located at a position upward of the tread portion 30a of the left front wheel 3LF, the position being opposed to the tread portion 30a. Although explanation with an illustration is omitted, in the second drive assembly 42, as in the first drive assembly 41, part of the motor 5RF serving as the drive device 45 is at the outer overlapping position. Part of the motor 5RF is located at a position upward of the tread portion 30a of the right front wheel 3RF, the position being opposed to the tread portion 30a.

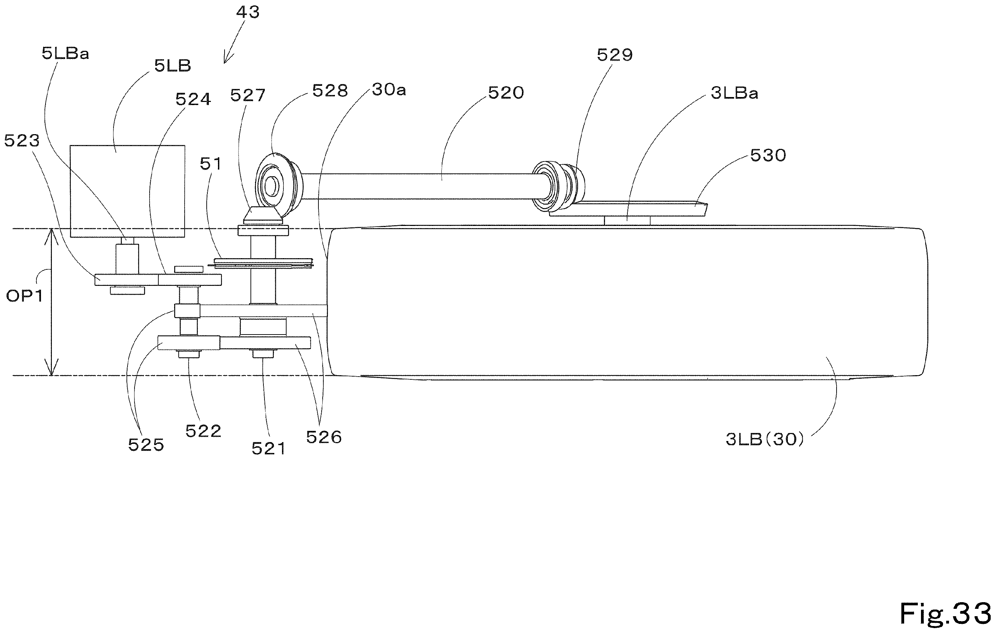

As illustrated in FIG. 33, in the third drive assembly 43, part of the motor 5LB serving as the drive device 45 is at an outer overlapping position OP1. Part of the motor 5LB is located at a forward upper position of the tread portion 30a of the left rear wheel 3LB, the forward upper position being opposed to the tread portion 30a. Although explanation with an illustration is omitted, in the fourth drive assembly 44, as in the third drive assembly 43, part of the motor 5RB serving as the drive device 45 is at an outer overlapping position. Part of the motor 5RB is located at a forward upper position of the tread portion 30a of the right rear wheel 3RB, the forward upper position being opposed to the tread portion 30a.

The "at least a portion of the drive assembly 40" at the outer overlapping position may be, for example, the transmission mechanism 50. In this case, the entirety of the transmission mechanism 50 may be at the outer overlapping position, or part of the transmission mechanism 50 may be at the outer overlapping position. In other words, it is sufficient that at least a portion of the transmission mechanism 50 be at the outer overlapping position.

As illustrated in FIG. 16, FIG. 17, and FIG. 32, in the first drive assembly 41, part of the transmission mechanism 50LF is at the outer overlapping position OP1. Specifically, part or the entirety of the first transmission shaft 501, the third transmission shaft 503, the first gear 505, the second gear 506, the third gear 507, and the fourth gear 508 of the transmission mechanism 50LF are at the outer overlapping position OP1. Although explanation with an illustration is omitted, in the second drive assembly 42, as in the first drive assembly 41, part or the entirety of the first transmission shaft 501, the third transmission shaft 503, the first gear 505, the second gear 506, the third gear 507, and the fourth gear 508 of the transmission mechanism 50RF are at the outer overlapping position.

As illustrated in FIG. 33, in the third drive assembly 43, part of the transmission mechanism 50LB is at the outer overlapping position. Specifically, part or the entirety of the intermediate transmission shaft 521, the upper transmission shaft 522, the 11th gear 523, the 12th gear 524, the 13th gear 525, the 14th gear 526 of the transmission mechanism 50LB are at the outer overlapping position OP1. Although explanation with an illustration is omitted, in the fourth drive assembly 44, as in the third drive assembly 43, part or the entirety of the intermediate transmission shaft 521, the upper transmission shaft 522, the 11th gear 523, the 12th gear 524, the 13th gear 525, and the 14th gear 526 of the transmission mechanism 50RB are at the outer overlapping position.

The "at least a portion of the drive assembly 40" at the outer overlapping position may be, for example, the steering mechanism 60. In this case, the entirety of the steering mechanism 60 may be at the outer overlapping position, or part of the steering mechanism 60 may be at the outer overlapping position. In other words, it is sufficient that at least a portion of the steering mechanism 60 be at the outer overlapping position.

As illustrated in FIG. 16, in the first drive assembly 41, part of the left steering mechanism 60L is at the outer overlapping position OP1. Specifically, part of the rotating body 61 and part of the cylinder 62 of the left steering mechanism 60L are at the outer overlapping position OP1. Although explanation with an illustration is omitted, in the second drive assembly 42, a portion of the rotating body 61 and a portion of the cylinder 62 of the right steering mechanism 60R are at the outer overlapping position OP1.

The "at least a portion of the drive assembly 40" at the outer overlapping position is at least one of the drive device 45, the transmission mechanism 50, or the steering mechanism 60. In other words, the "at least a portion of the drive assembly 40" at the outer overlapping position may be one of the drive device 45, the transmission mechanism 50, and the steering mechanism 60, or may be two of them, or may be all of them.

For example, a configuration may be adopted in which at least a portion of each of the drive device 45, the transmission mechanism 50 and the steering mechanism 60 is at the outer overlapping position. In the embodiment (embodiment A) illustrated in FIG. 1 to FIG. 6, FIG. 15, FIG. 16, and the like, part of the drive device 45, part of the transmission mechanism 50, and part of the steering mechanism 60 are at the outer overlapping position.

In another embodiment (embodiment A1) illustrated in FIG. 22 to FIG. 25, at least a portion of the drive assembly 40 (the first drive assembly 41 and the second drive assembly 42) is at the outer overlapping position, and the "at least a portion of the drive assembly 40" at the outer overlapping position is two of the drive device 45, the transmission mechanism 50, or the steering mechanism 60. Specifically, in another embodiment (embodiment A1), part of the transmission mechanism 50 and the part of the steering mechanism 60 are at the outer overlapping position, and the drive device 45 is not at the outer overlapping position. That is, as illustrated in FIG. 22 and the like, the motors 5LF, 5RF, 5LB, and 5RB serving as the drive device 45 are upward of the vehicle body 2 and inward of the wheel 30, and thus are not at the outer overlapping position.

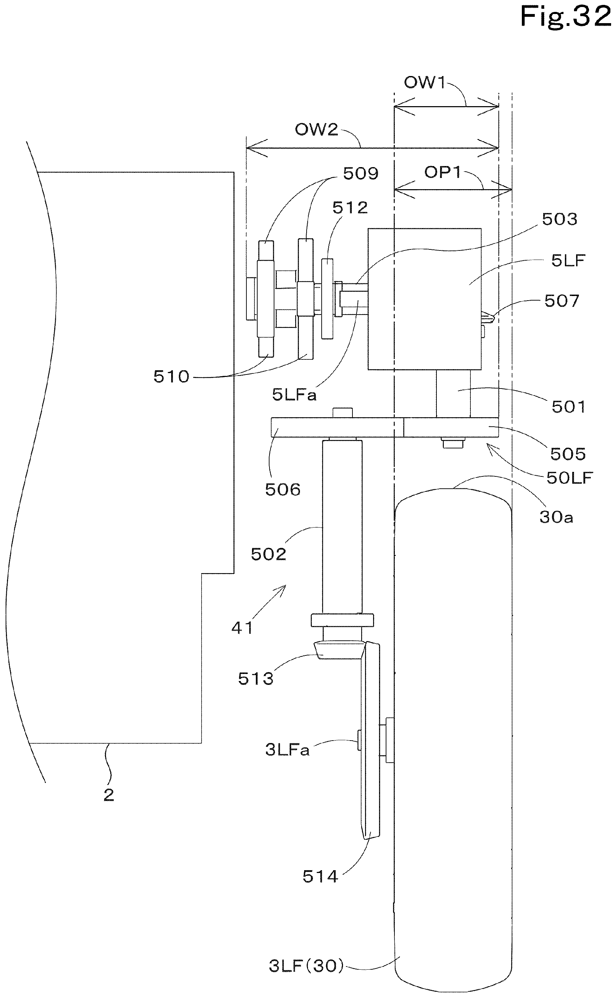

As illustrated in FIG. 32, at least a portion of the drive assembly 40 is at the outer overlapping position OP1, and thus as compared to related art in which the drive assembly 40 is inward (on the vehicle body 2 side) of the wheels 30, it is possible to achieve an area for steering the wheels (the left front wheel 3LF and the right front wheel 3RF) that is larger by an amount of overlap OW1 between a width OW2 of the drive assembly 40 in the lateral direction and the outer overlapping position OP1. Thus, a larger steering angle of the wheels (the left front wheel 3LF and the right front wheel 3RF) can be achieved.

As illustrated in FIG. 7, the working vehicle 1 includes a first detector 70. The first detector 70 detects the situation in the surrounding area of the vehicle body 2. Hereinafter, the first detector 70 may be referred to as the "situation detector". The first detector 70 detects, as the situation in the surrounding area of the vehicle body 2, road information relating to a road travelable by the traveling device 3. Specifically, the first detector 70 detects road information including a value relating to a road travelable by the traveling device 3. The first detector 70 detects, as the road information, e.g., the width of a travelable road. The width of a travelable road detected by the first detector 70 is the width of an object located between the left traveling device 3L and the right traveling device 3R of the working vehicle 1 while traveling. The first detector 70 detects, as the width of a travelable road, e.g., the width of a ridge on the ground surface, and the width of an obstacle on the ground surface that hinders travel.

In addition, the first detector 70 detects, as the road information, e.g., the height of a travelable road. The height of a travelable road detected by the first detector 70 is the height of an object located between the left traveling device 3L and the right traveling device 3R of the working vehicle 1 while traveling. The first detector 70 detects, as the height of a travelable road, e.g., the height of a ridge on the ground surface, and the height of an obstacle on the ground surface that hinders travel.

The obstacle that hinders travel is, e.g., a groove and a hole in the ground surface, a crop planted in the ground surface, an obstacle (for example, a stone and an artificial structure) on the ground surface. Typically, the first detector 70 detects, as the height of an obstacle, the height of crop planted in the ground surface. The height of crop detected by the first detector 70 is the height of the upper end of the crop relative to the ground surface in contact with the wheels 30 of the traveling device 3. For example, when a crop is planted on a ridge, the wheels 30 of the traveling device 3 are in contact with not the ridge, but the ground between ridges, and thus the height of crop detected by the first detector 70 is "the height of the crop itself + the height of the ridge".

As illustrated in FIG. 7, the first detector 70 includes a camera (image pickup device) 71, a sensor 72, and a calculator 73. In the present embodiment, the first detector 70 includes both the camera 71 and the sensor 72, but may include only one of them.

The camera 71 is a charge coupled device (CCD) camera equipped with a CCD image sensor, or a complementary metal oxide semiconductor (CMOS) camera equipped with a CMOS image sensor. The camera 71 is mounted on the vehicle body 2 to capture an image of the surrounding area of the vehicle body 2. It is only necessary for the camera 71 to capture an image in at least one or more directions including the travel direction of the vehicle body 2 among the forward, rearward, leftward, and rightward directions of the vehicle body 2. Preferably, the camera 71 is located to capture an image forward, rearward, or laterally (leftward or rightward) of the vehicle body 2. The camera 71 may be located to allow an image to be captured in a direction (e.g., right forward, left forward, front below, or rear below) other than the forward, rearward, and lateral (leftward and rightward) directions of the vehicle body 2.

The camera 71 captures an image of the surrounding area of the vehicle body 2 to generate an image signal. The calculator 73 includes a computer or the like including a signal processing circuit to process the generated image signal. The signal processing circuit detects the state (such as the presence or absence of an object, the position of an object, the type of an object, and the size of an object) of an object based on the image signal output from the camera 71. The object includes the above-mentioned ridge and obstacle.

The sensor 72 is an optical sensor, and uses, e.g., light detection and ranging (LiDAR). A LiDAR (laser sensor) emits pulsed measurement light (laser light) millions of times per second from a light source such as a laser diode, and performs scanning in a horizontal direction or a vertical direction by reflecting the measurement light by a rotatable mirror to project the measurement light in a predetermined detection range (sensing range). The LiDAR receives, by a light receiving element, reflected light of the measurement light from an object. The signal processing circuit of the calculator 73 detects the state (such as the presence or absence of an object, the position of an object, the type of an object, and the size of an object) of an object based on a light receiving signal output from the light receiving element of the LiDAR. The object includes the above-mentioned ridge and obstacle. The signal processing circuit detects the distance to the object based on the time from emission of the measurement light by the LiDAR until the reflected light is received (time of flight (TOF) method). Note that the distance detection method used by the LiDAR may be a method other than the TOF method.

The sensor 72 may be a sonic sensor. The sensor 72 preferably includes both an optical sensor and a sonic sensor, but may include either one of the sensors. The sonic sensor is, e.g., an airborne ultrasonic sensor such as a sonar. The airborne ultrasonic sensor transmits measurement waves (ultrasonic waves) in a predetermined detection range by a transmitter, and receives, by a receiver, reflection waves which are reflected measurement waves from an object. The signal processing circuit detects the state (such as the presence or absence of an object, the position of an object, the type of an object, and the size of an object) of an object based on the signal output from the receiver. The object includes the above-mentioned ridge and obstacle. The signal processing circuit detects the distance to the object based on the time from transmission of measurement waves by the airborne ultrasonic sensor until the reflected waves are received (time of flight (TOF) method). Note that the distance detection method used by the sonic sensor may be a method other than the TOF method.

The above-described sensor 72 is mounted on the vehicle body 2 to detect an object in the surrounding area of the vehicle body 2. It is only necessary for the sensor 72 to detect an object in at least one or more directions including the travel direction of the vehicle body 2 among the forward, rearward, leftward, and rightward directions of the vehicle body 2. Preferably, the sensor 72 is located to detect an object forward, rearward, or laterally (leftward or rightward) of the vehicle body 2. The sensor 72 may be located to allow an object to be detected in a direction (e.g., right forward, left forward, front below, and rear below) other than the forward, rearward, and lateral (leftward and rightward) directions of the vehicle body 2.

The first detector 70 may detect, as the situation in the surrounding area of the vehicle body 2, the inclination of the ground surface in the lateral direction. In this case, the first detector 70 can detect, as the situation in the surrounding area of the vehicle body 2, the height of the ground surface on which the left traveling device 3L travels, and the height of the ground surface on which the right traveling device 3R travels. In this case, as the first detector 70, e.g., an inclination sensor may be used, which detects the inclination of the vehicle body 2 in the lateral direction. A configuration may be adopted in which the camera 71 is used as the first detector 70, and the calculator 73 detects the inclination of the ground surface in the lateral direction based on the image captured by the camera 71.

As illustrated in FIG. 7, the working vehicle 1 includes a second detector 75. The second detector 75 detects the distance between the left traveling device 3L and the right traveling device 3R. Hereinafter, the second detector 75 may be referred to as the "distance detector". As the second detector (distance detector) 75, for example, the above-mentioned optical sensor and sonic sensor may be used.

The distance between the left traveling device 3L and the right traveling device 3R detected by the second detector 75 is the distance between the inner surface of the left traveling device 3L and the inner surface of the right traveling device 3R. Specifically, the distance is the smaller one of the distance between the inner surface of the left front wheel 3LF and the inner surface of the right front wheel 3RF and the distance between the inner surface of the left rear wheel 3LB and the inner surface of the right rear wheel 3RB.

For example, as illustrated in FIG. 6, when the distance DB between the inner surface of the left rear wheel 3LB and the inner surface of the right rear wheel 3RB is smaller than the distance DF between the inner surface of the left front wheel 3LF and the inner surface of the right front wheel 3RF (DB < DF), the second detector 75 detects, as the distance between the left traveling device 3L and the right traveling device 3R, the distance DB between the inner surface of the left rear wheel 3LB and the inner surface of the right rear wheel 3RB. When the distance DF between the inner surface of the left front wheel 3LF and the inner surface of the right front wheel 3RF is the same as the distance DB between the inner surface of the left rear wheel 3LB and the inner surface of the right rear wheel 3RB (DB = DF), the second detector 75 detects, as the distance between the left traveling device 3L and the right traveling device 3R, either the distance DF or the distance DB. When the distance DF between the inner surface of the left front wheel 3LF and the inner surface of the right front wheel 3RF is smaller than the distance DB between the inner surface of the left rear wheel 3LB and the inner surface of the right rear wheel 3RB (DB > DF), the second detector 75 detects, as the distance between the left traveling device 3L and the right traveling device 3R, the distance DF between the inner surface of the left front wheel 3LF and the inner surface of the right front wheel 3RF.

As illustrated in FIG. 7, the working vehicle 1 includes a third detector 77. The third detector 77 detects the height of the vehicle body 2 that is the distance of the vehicle body 2 from the ground surface. Hereinafter, the third detector 77 may be referred to as the "height detector". As the third detector 77, for example, the above-mentioned optical sensor and sonic sensor may be used. The height of the vehicle body 2 detected by the third detector 77 is the distance between the ground surface and the lower surface of the vehicle body 2. Specifically, the height of the vehicle body 2 detected by the third detector 77 is the distance between the ground surface and the lowermost portion (bottom) of the vehicle body 2 (see height HA in FIG. 2 and FIG. 4 as an example).

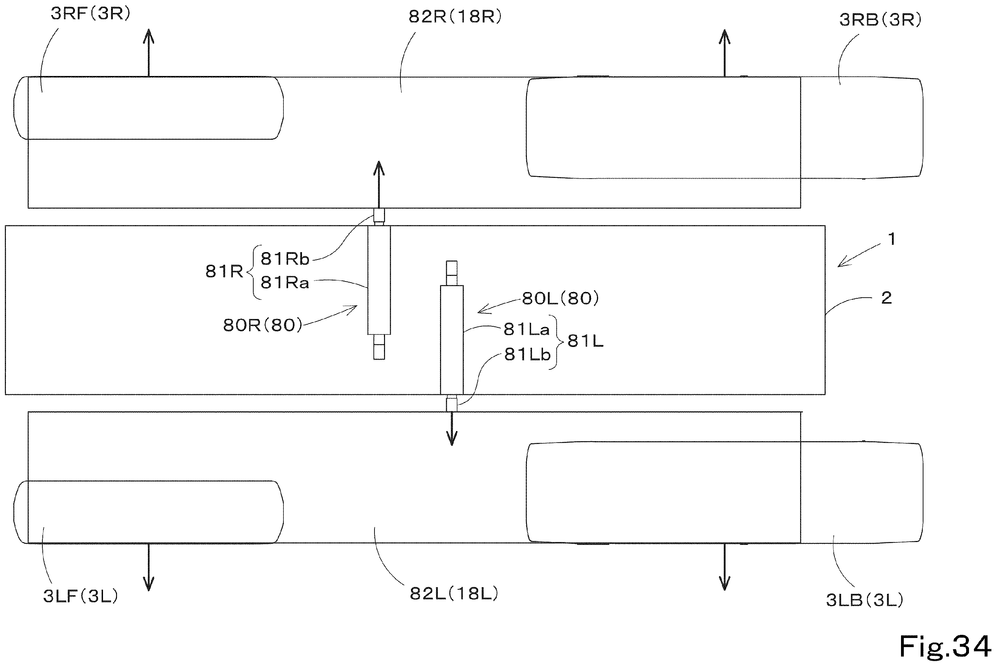

As illustrated in FIG. 7, the working vehicle 1 includes a distance changing mechanism 80. The distance changing mechanism 80 changes the distance between the left traveling device 3L and the right traveling device 3R. As illustrated in FIG. 6 and FIG. 34, the distance changing mechanism 80 includes a left changing mechanism 80L to change the position of the left traveling device 3L in the lateral direction, and a right changing mechanism 80R to change the position of the right traveling device 3R in the lateral direction. Note that FIG. 34 is a simplified figure of FIG. 6.

As illustrated in FIG. 6 and FIG. 34, the left changing mechanism 80L includes a left cylinder 81L to move the left traveling device 3L leftward or rightward. The left cylinder 81L moves the left front wheel 3LF and the left rear wheel 3LB leftward or rightward. The left front wheel 3LF and the left rear wheel 3LB are connected by a left coupler 82L. Thus, the left cylinder 81L can move the left front wheel 3LF and the left rear wheel 3LB integrally leftward or rightward by moving the left coupler 82L leftward or rightward.

As illustrated in FIG. 6 and FIG. 34, the right changing mechanism 80R includes a right cylinder 81R to move the right traveling device 3R leftward or rightward. The right cylinder 81R moves the right front wheel 3RF and the right rear wheel 3RB leftward or rightward. The right front wheel 3RF and the right rear wheel 3RB are connected by a right coupler 82R. Thus, the right cylinder 81R can move the right front wheel 3RF and the right rear wheel 3RB integrally leftward or rightward by moving the right coupler 82R leftward or rightward.

The lower end of the left coupler 82L is at a position higher than the lower end of the left traveling device 3L. The lower end of the right coupler 82R is at a position higher than the lower end of the right traveling device 3R. Thus, unlike the left traveling device 3L and the right traveling device 3R, the left coupler 82L and the right coupler 82R are not in contact with the ground. The left coupler 82L and the right coupler 82R are located at a predetermined height to prevent contact with a ridge and a crop.

In the present embodiment, the left coupler 82L is the left frame 18L of the frame structure 18. The right coupler 82R is the right frame 18R of the frame structure 18. The left front wheel 3LF is rotatably attached to the first left frame 19L (see FIG. 9) of the left frame 18L via the above-described first drive assembly 41 and the like. The left rear wheel 3LB is rotatably attached to the first left frame 19L of the left frame 18L at the time of travel via the above-described third drive assembly 43 and the like.

The right front wheel 3RF is rotatably attached to the first right frame 21R (see FIG. 9) of the right frame 18R via the above-described second drive assembly 42 and the like. The right rear wheel 3RB is rotatably attached to the first right frame 21R of the right frame 18R at the time of travel via the above-described fourth drive assembly 44 and the like.

Thus, the left front wheel 3LF and the left rear wheel 3LB (that is, the left traveling device 3L) can be moved with the left frame 18L in the lateral direction. Also, the right front wheel 3RF and the right rear wheel 3RB (that is, the right traveling device 3R) can be moved with the right frame 18R in the lateral direction.

The right cylinder 81R and the left cylinder 81L each include a hydraulic cylinder. The hydraulic cylinders included in the right cylinder 81R and the left cylinder 81L are actuated (extended and retracted) by the hydraulic fluid supplied from a hydraulic pump driven by the above-described working motor 6.

As illustrated in FIG. 6 and FIG. 34, the left cylinder 81L includes a cylinder tube 81La attached to the vehicle body 2, and a rod 81Lb which projects from the cylinder tube 81La and extends leftward. The left coupler 82L is connected to the distal end of the rod 81Lb of the left cylinder 81L. When the rod 81Lb of the left cylinder 81L is extended leftward, the left coupler 82L is moved leftward, and the left front wheel 3LF and the left rear wheel 3LB are integrally moved leftward. When the rod 81Lb of the left cylinder 81L is retracted rightward, the left coupler 82L is moved rightward, and the left front wheel 3LF and the left rear wheel 3LB are integrally moved rightward.

As illustrated in FIG. 6 and FIG. 34, the right cylinder 81R includes a cylinder tube 81Ra attached to the vehicle body 2, and a rod 81Rb which projects from the cylinder tube 81Ra and extends rightward. The right coupler 82R is connected to the distal end of the rod 81Rb of the right cylinder 81R. When the rod 81Rb of the right cylinder 81R is extended rightward, the right coupler 82R is moved rightward, and the right front wheel 3RF and the right rear wheel 3RB are integrally moved rightward. When the rod 81Rb of the right cylinder 81R is retracted leftward, the right coupler 82R is moved leftward, and the right front wheel 3RF and the right rear wheel 3RB are integrally moved leftward.

As described above, the position of the left front wheel 3LF and the left rear wheel 3LB (that is, the left traveling device 3L) in the lateral direction can be changed by actuating (extending or retracting) the left cylinder 81L. Also, the position of the right front wheel 3RF and the right rear wheel 3RB (that is, the right traveling device 3R) in the lateral direction can be changed by actuating (extending or retracting) the right cylinder 81R. Therefore, the distance between the left traveling device 3L and the right traveling device 3R can be changed by actuating one or both of the left cylinder 81L and the right cylinder 81R.

When the distance between the left traveling device 3L and the right traveling device 3R is changed, the respective rods of the left cylinder 81L and the right cylinder 81R are preferably moved (extended or retracted) by the same distance in opposite directions to each other. However, when the distance between the left traveling device 3L and the right traveling device 3R is changed, the respective rods of the left cylinder 81L and the right cylinder 81R may be moved by different distances in opposite directions to each other, or the respective rods of the left cylinder 81L and the right cylinder 81R may be moved by different distances in the same direction.

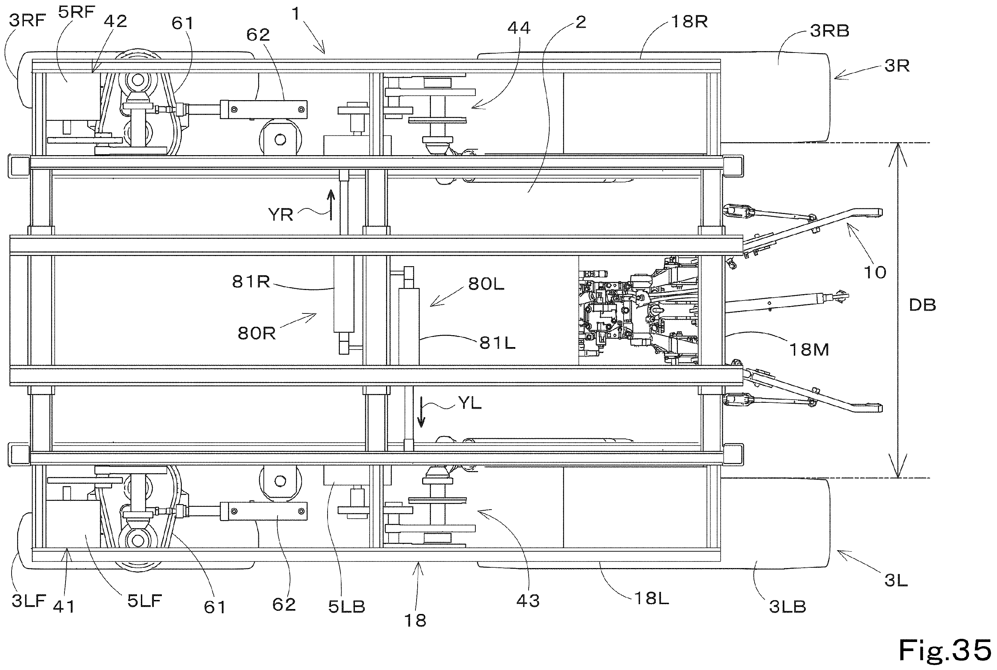

FIG. 6 and FIG. 34 illustrate a state where the rods of the left cylinder 81L and the right cylinder 81R are retracted. In this state, the distance DB (see FIG. 6) between the left traveling device 3L and the right traveling device 3R is short. In this state, the left traveling device 3L (the left front wheel 3LF and the left rear wheel 3LB) and the right traveling device 3R (the right front wheel 3RF and the right rear wheel 3RB) are moved in opposite directions to each other (see arrows in FIG. 34) by extending the rods of the left cylinder 81L and the right cylinder 81R (see arrows YL, YR in FIG. 35). Thus, as illustrated in FIG. 35, the distance DB (see FIG. 6) between the left traveling device 3L and the right traveling device 3R can be increased.

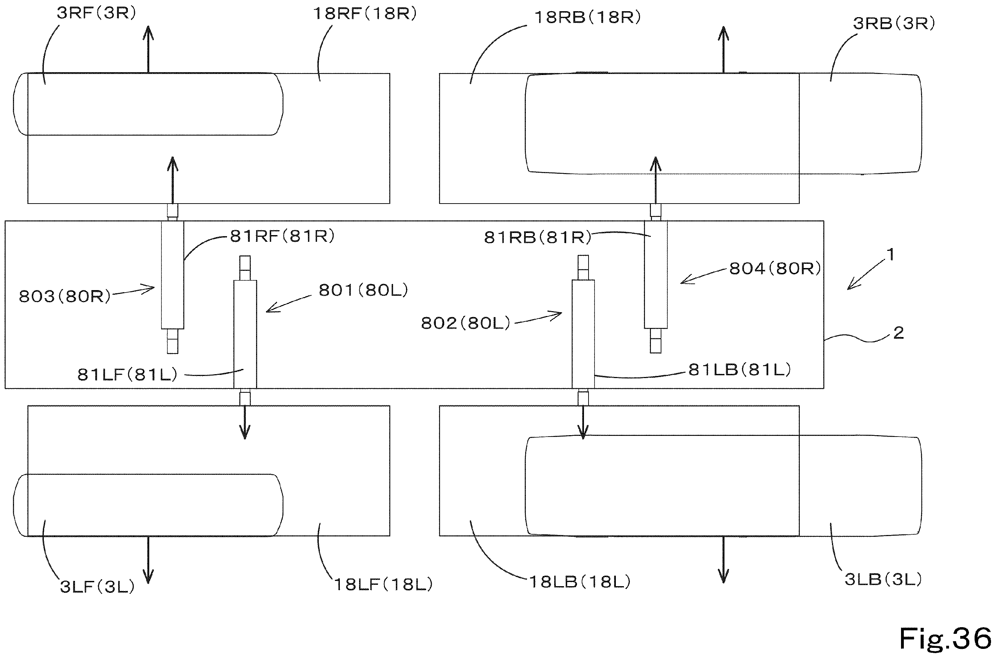

FIG. 36 illustrates a variation of the distance changing mechanism 80. As illustrated in FIG. 36, the distance changing mechanism 80 may include a first changing mechanism 801 to change the position of the left front wheel 3LF in the lateral direction, a second changing mechanism 802 to change the position of the left rear wheel 3LB in the lateral direction, a third changing mechanism 803 to change the position of the right front wheel 3RF in the lateral direction, and a fourth changing mechanism 804 to change the position of the right rear wheel 3RB in the lateral direction. In this case, the left changing mechanism 80L includes the first changing mechanism 801 and the second changing mechanism 802. The right changing mechanism 80R includes the third changing mechanism 803 and the fourth changing mechanism 804.

In this case, the left cylinder 81L includes a left front cylinder 81LF to move the left front wheel 3LF leftward or rightward, and a left rear cylinder 81LB to move the left rear wheel 3LB leftward or rightward. The right cylinder 81R includes a right front cylinder 81RF to move the right front wheel 3RF leftward or rightward, and a right rear cylinder 81RB to move the right rear wheel 3RB leftward or rightward.

In this case, the left coupler 82L to connect the left front wheel 3LF and the left rear wheel 3LB is not provided, and thus the left front wheel 3LF and the left rear wheel 3LB are not connected. The left frame 18L is divided into two front and rear members, the left front wheel 3LF is attached to a front left frame 18LF, and the left rear wheel 3LB is attached to a rear left frame 18LB. Thus, the left front wheel 3LF and the left rear wheel 3LB can be moved in the lateral direction independently from each other.

The right coupler 82R to connect the right front wheel 3RF and the right rear wheel 3RB is not provided, and thus the right front wheel 3RF and the right rear wheel 3RB are not connected. The right frame 18R is divided into two front and rear members, the right front wheel 3RF is attached to a front right frame 18RF, and the right rear wheel 3RB is attached to a rear right frame 18RB. Thus, the right front wheel 3RF and the right rear wheel 3RB can be moved in the lateral direction independently from each other.

The first changing mechanism 801, the second changing mechanism 802, the third changing mechanism 803 and the fourth changing mechanism 804 can be driven independently. Specifically, the left front cylinder 81LF, the left rear cylinder 81LB, the right front cylinder 81RF and the right rear cylinder 81RB can be actuated independently. Thus, the position of the left front wheel 3LF in the lateral direction, the position of the left rear wheel 3LB in the lateral direction, the position of the right front wheel 3RF in the lateral direction, and the position of the right rear wheel 3RB in the lateral direction can be changed independently.

The arrows in FIG. 36 illustrate a state where the position of the left front wheel 3LF in the lateral direction, the position of the left rear wheel 3LB in the lateral direction, the position of the right front wheel 3RF in the lateral direction, and the position of the right rear wheel 3RB in the lateral direction are changed independently by extending the respective rods of the left front cylinder 81LF, the left rear cylinder 81LB, the right front cylinder 81RF and the right rear cylinder 81RB.

The operation of the distance changing mechanism 80 is controlled by the controller 15. As illustrated in FIG. 7, the controller 15 includes a distance changing control unit 15B. The distance changing mechanism 80 changes the distance between the left traveling device 3L and the right traveling device 3R such that the distance between the left traveling device 3L and the right traveling device 3R corresponds to the result of detection by the first detector 70. In the present embodiment, the distance changing control unit 15B changes the distance between the left traveling device 3L and the right traveling device 3R by actuating the distance changing mechanism 80 based on detection results from the first detector 70 and the second detector 75.

The change operation by the distance changing mechanism 80 is performed by the distance changing control unit 15B controlling the distance changing mechanism 80. Hereinafter, an example of the operation of the distance changing mechanism 80 will be described. The operation of the distance changing mechanism 80 in the following description is performed by the distance changing control unit 15B controlling the distance changing mechanism 80 based on detection results from the first detector 70 and/or the second detector 75. In short, the below-described operation of the distance changing mechanism 80 is controlled by the distance changing control unit 15B.

For example, when the first detector 70 detects the width of a travelable road, the distance changing mechanism 80 changes the distance between the left traveling device 3L and the right traveling device 3R such that the changed distance between the left traveling device 3L and the right traveling device 3R corresponds to the width of the travelable road. Specifically, when the first detector 70 detects the width of a travelable road, the distance changing mechanism 80 changes the distance between the left traveling device 3L and the right traveling device 3R such that the changed distance between the left traveling device 3L and the right traveling device 3R reaches the width of the travelable road or exceeds the width of the travelable road (that is, the changed distance is greater than or equal to the width of the travelable road).

As a specific example, when the first detector 70 detects the width of a ridge path, the distance changing mechanism 80 changes the distance between the left traveling device 3L and the right traveling device 3R such that the changed distance between the left traveling device 3L and the right traveling device 3R corresponds to the width of the ridge. Specifically, the distance between the left traveling device 3L and the right traveling device 3R is changed such that the traveling device 3 can pass the detected ridge at the time of travel of the vehicle body 2. In other words, the distance changing mechanism 80 changes the distance between the left traveling device 3L and the right traveling device 3R such that the changed distance between the left traveling device 3L and the right traveling device 3R reaches the width of the ridge or exceeds the width of the ridge (that is, the changed distance is greater than or equal to the width of the ridge).

When the first detector 70 detects the width of an obstacle, the distance changing mechanism 80 changes the distance between the left traveling device 3L and the right traveling device 3R such that the traveling device 3 can pass the detected obstacle at the time of travel of the vehicle body 2. In other words, the distance changing mechanism 80 changes the distance between the left traveling device 3L and the right traveling device 3R such that the changed distance between the left traveling device 3L and the right traveling device 3R reaches the width of the obstacle or exceeds the width of the obstacle (that is, the changed distance is greater than or equal to the width of the obstacle).

The distance changing mechanism 80 can actuate the left changing mechanism 80L and the right changing mechanism 80R independently based on detection results from the first detector 70. In the present embodiment, the distance changing mechanism 80 can actuate the left changing mechanism 80L and the right changing mechanism 80R independently based on detection results from the first detector 70 and detection results from the second detector 75. Thus, the distance changing mechanism 80 can actuate only the left changing mechanism 80L, or can actuate only the right changing mechanism 80R, or can actuate both the left changing mechanism 80L and the right changing mechanism 80R.

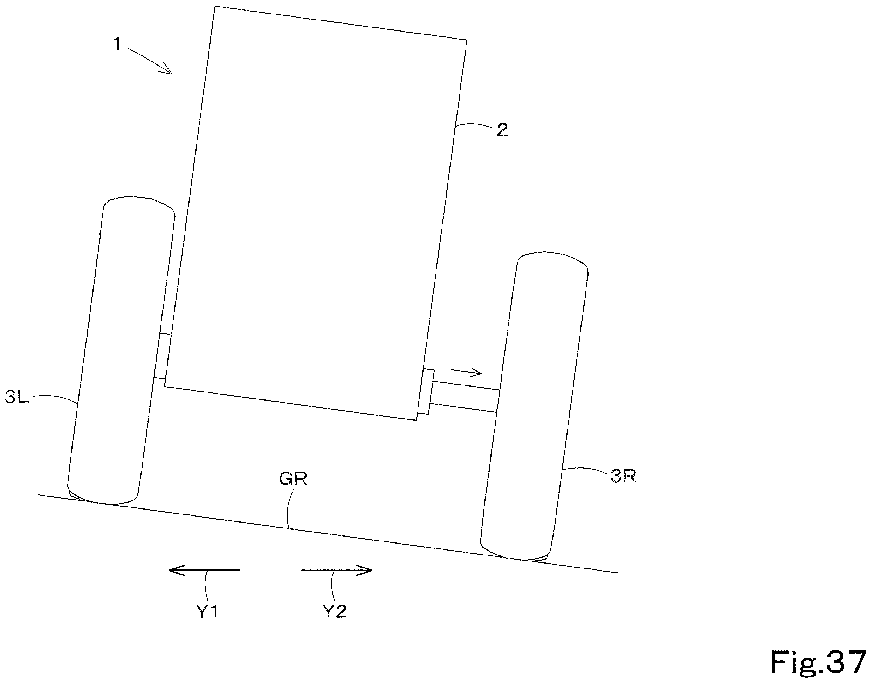

As described above, the distance changing mechanism 80 can actuate the left changing mechanism 80L and the right changing mechanism 80R independently based on detection results from the first detector 70. Thus, the distance changing mechanism 80 can move away, from the widthwise center of the vehicle body 2, the lower traveling device between the left traveling device 3L and the right traveling device 3R based on the inclination of the ground surface in the lateral direction detected by the first detector 70. FIG. 37 schematically illustrates the operation of the distance changing mechanism 80. For example, when inclination with the right side lower than the left side on the ground surface GR is detected by the first detector 70, the distance changing mechanism 80 moves away, from the widthwise center of the vehicle body 2, the right traveling device 3R which is lower between the left traveling device 3L and the right traveling device 3R. Consequently, the vehicle body 2 can be stabilized on an inclined surface.

The distance changing mechanism 80 changes the distance between the left traveling device 3L and the right traveling device 3R by actuating both or one of the left changing mechanism 80L and the right changing mechanism 80R of the distance changing mechanism 80. When the left changing mechanism 80L is actuated, the rod of the left cylinder 81L is extended or retracted, and the position of the left traveling device 3L in the lateral direction is changed. When the right changing mechanism 80R is actuated, the rod of the right cylinder 81R is extended or retracted, and the position of the right traveling device 3R in the lateral direction is changed. The distance between the left traveling device 3L and the right traveling device 3R is changed by changing the positions of both or one of the left traveling device 3L and the right traveling device 3R in the lateral direction. Preferably, the distance changing control unit 15B changes the positions of both the left traveling device 3L and the right traveling device 3R in the lateral direction by the same distance in opposite directions to each other.

The second detector 75 can detect the distance between the left traveling device 3L and the right traveling device 3R by detecting the amount of extension or retraction of each of the left changing mechanism 80L and the right changing mechanism 80R. Specifically, the second detector 75 can detect the distance between the left traveling device 3L and the right traveling device 3R by detecting the amount of extension or retraction of the rod of the left cylinder 81L of the left changing mechanism 80L, and the amount of extension or retraction of the rod of the right cylinder 81R of the right changing mechanism 80R.

In this case, information is pre-stored in the storage of the controller 15, the information including a relationship between the amount of extension or retraction of the rod of the left cylinder 81L and the position of the left traveling device 3L, a relationship between the amount of extension or retraction of the rod of the right cylinder 81R and the position of the right traveling device 3R, and a relationship between "the positions of the left traveling device 3L and the right traveling device 3R" and "the distance between the left traveling device 3L and the right traveling device 3R". The second detector 75 detects the amount of extension or retraction of each of the rods of the left cylinder 81L and the right cylinder 81R, and detects the distance between the left traveling device 3L and the right traveling device 3R based on the result of the detection and the information stored in the storage.

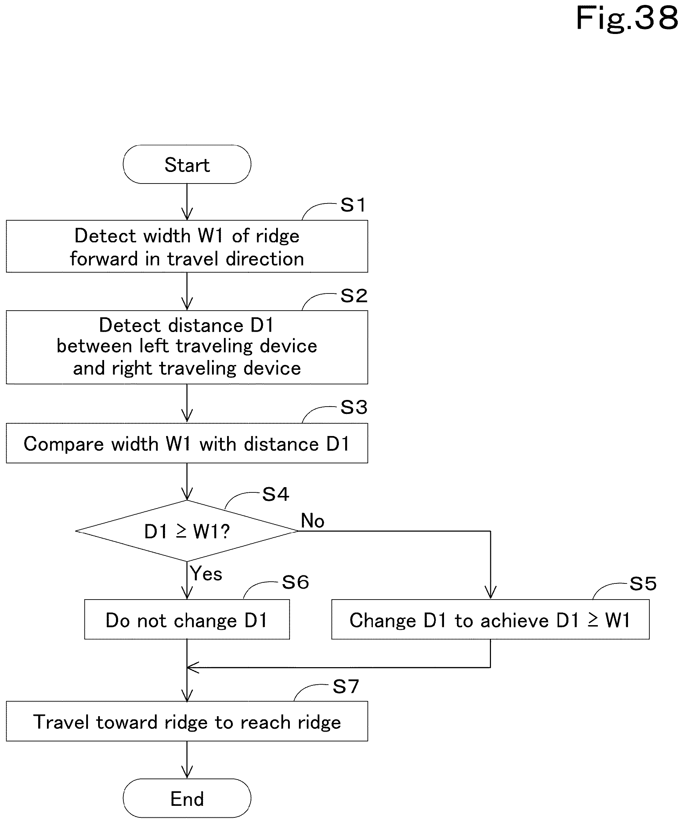

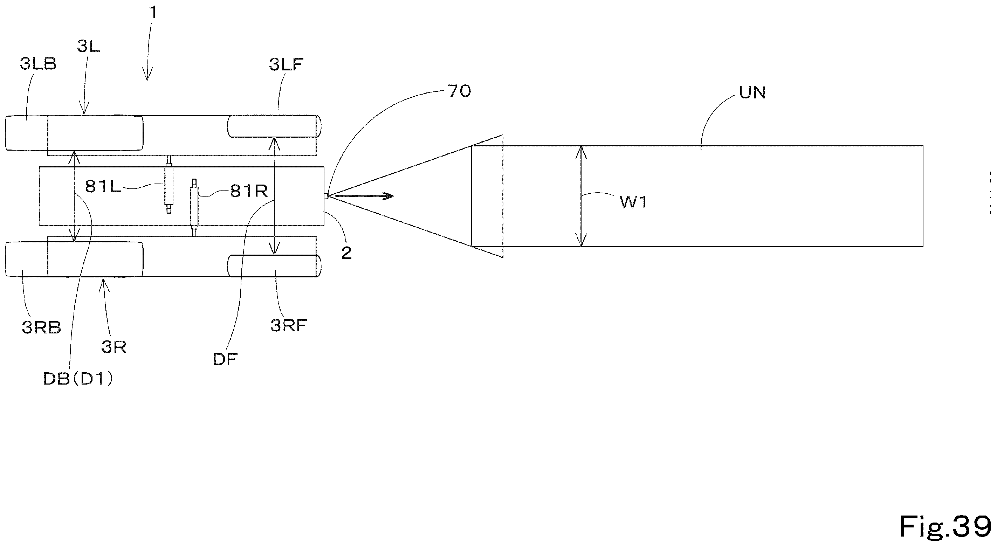

FIG. 38 is a flowchart illustrating an example (first example) of the operation of the distance changing mechanism 80 controlled by the distance changing control unit 15B. Hereinafter, an example of the operation of the distance changing mechanism 80 controlled by the distance changing control unit 15B will be described based on FIG. 38. Note that here, as an example, the case will be described where the "road information" of the "situation in the surrounding area of the vehicle body 2" detected by the first detector 70 is the "width of a ridge on the ground surface", and a ridge UN with a width to be detected is located in front of the vehicle body 2 in the direction of travel of the vehicle body 2 of the working vehicle 1 (see FIG. 39).

In this case, the first detector 70 detects, as the road information of the situation in the surrounding area of the vehicle body 2, the width W1 of the ridge UN in front of the vehicle body 2 in the travel direction of the vehicle body 2 (S1). The width W1 of the ridge UN to be detected may be the width of the hem (lower end) of the ridge UN, may be the width of the upper surface (upper end) of the ridge UN, or may be the width at the height between the lower end and the upper end of the ridge UN.

When the width W1 of the ridge UN is detected and the first detector 70 is a camera, the camera 71 captures an image of the ridge UN in front of the vehicle body 2, and generates an image signal. The calculator 73 detects the width W1 of the ridge UN based on the generated image signal. Meanwhile, the second detector 75 detects the distance D1 between the left traveling device 3L and the right traveling device 3R (S2). In the example illustrated in FIG. 39, the distance DB between the left rear wheel 3LB and the right rear wheel 3RB is smaller than the distance DF between the left front wheel 3LF and the right front wheel 3RF, and thus the distance DB is detected as the distance D1 (the same applies to the following example). The width W1 and the distance D1 are detected before the vehicle body 2 reaches the ridge UN. The time of detection of the width W1 and the time of detection of the distance D1 may be the same or either one may precede the other.

The distance changing control unit 15B compares the width W1 of the ridge detected by the first detector 70 with the distance D1 detected by the second detector 75 (S3). The distance changing control unit 15B changes the distance D1 by actuating the distance changing mechanism 80 based on the comparison result such that the distance D1 corresponds to the width W1 of the ridge. The distance D1 is changed by the distance changing mechanism 80 during or before travel of the vehicle body 2 to reach an area above the ridge UN located in front of the vehicle body 2 in the travel direction.

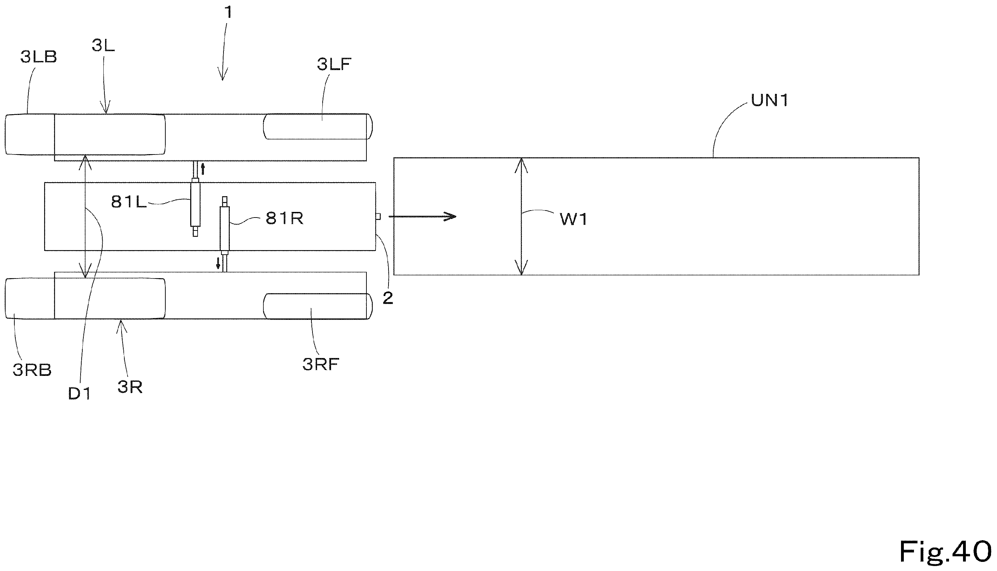

When the comparison result is D1 < W1 (No in S4), the distance changing mechanism 80 changes the distance D1 to achieve D1 ≥ W1 (S5). Specifically, the distance D1 is expanded by extending the rods of the left cylinder 81L and the right cylinder 81R (see FIG. 40). When the comparison result is D1 ≥ W1 (Yes in S4), the distance changing mechanism 80 does not change the distance D1 (S6). In a state where the distance D1 is changed (S5) or a state where the distance D1 is not changed (S6), the working vehicle 1 travels toward the ridge UN to reach the ridge UN (S7).

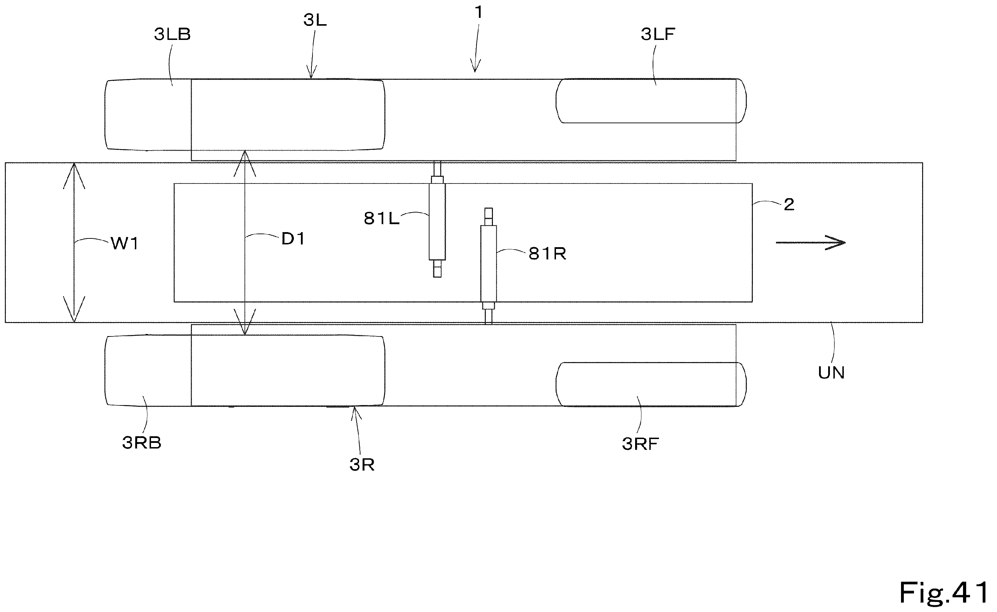

Even if the width W1 of the ridge UN is larger or smaller than the distance D1 between the left traveling device 3L and the right traveling device 3R, when the working vehicle 1 reaches the ridge UN, D1 ≥ W1 is satisfied by the above-described control operation. Thus, the working vehicle 1 can perform the work while traveling with the ridge UN located between the left traveling device 3L and the right traveling device 3R (see FIG. 41).

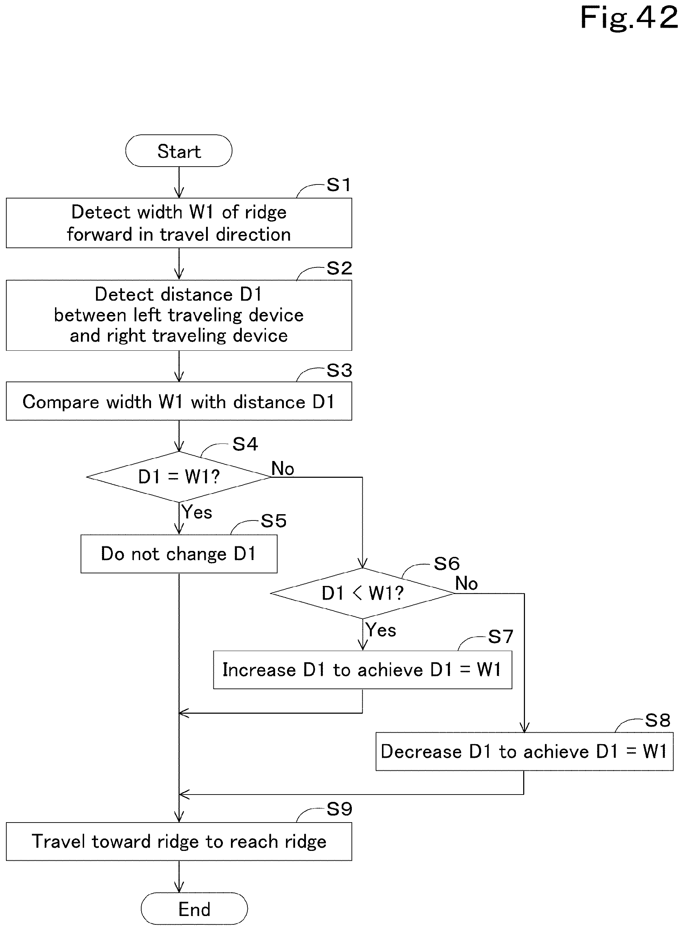

FIG. 42 is a flowchart illustrating a variation of the first example. In the variation, the first step (S1) to the third step (S3) of the operation of the distance changing mechanism 80 are the same as the operation in the first example, and the fourth step (S4) and subsequent steps are different from the operation in the first example.

In the fourth step (S4), the distance changing control unit 15B determines whether the width W1 of the ridge is the same as the distance D1 between the left traveling device 3L and the right traveling device 3R (S4). When D1 = W1 (Yes in S4), the distance changing mechanism 80 does not change the distance D1 (S5). When D1 = W1 is not the case (No in S4), it is determined whether D1 < W1 (S6). When D1 < W1 (Yes in S6), the distance changing mechanism 80 changes (expands) the distance D1 to achieve D1 = W1 (S7). Specifically, the distance D1 is expanded by extending the rods of the left cylinder 81L and the right cylinder 81R. When D1 > W1 (No in S6), the distance changing mechanism 80 changes (reduces) the distance D1 to achieve D1 = W1 (S8). Specifically, the distance D1 is reduced by retracting the rods of the left cylinder 81L and the right cylinder 81R. In a state where the distance D1 is changed (expanded or reduced) (S7, S8) or a state where the distance D1 is not changed (S5), the working vehicle 1 travels toward the ridge UN to reach the ridge UN (S9).

Even if the width W1 of the ridge UN is larger or smaller than the distance D1 between the left traveling device 3L and the right traveling device 3R, when the working vehicle 1 reaches the ridge UN, D1 = W1 is satisfied by the above-described control operation. Thus, the working vehicle 1 can perform the work while traveling with the ridge UN located between the left traveling device 3L and the right traveling device 3R in a state where the distance D1 is not too narrow and not too wide i.e., has an appropriate length with respect to the width W1 of the ridge.

When a working device is attached to the mount 10 and the wheels 30 overlap the position of the working device in the front-rear direction, the shortest value of the distance D1 between the left traveling device 3L and the right traveling device 3R is set larger than the width of the working device. Thus, when the distance D1 is changed, interference between the wheels 30 and the working device can be prevented.

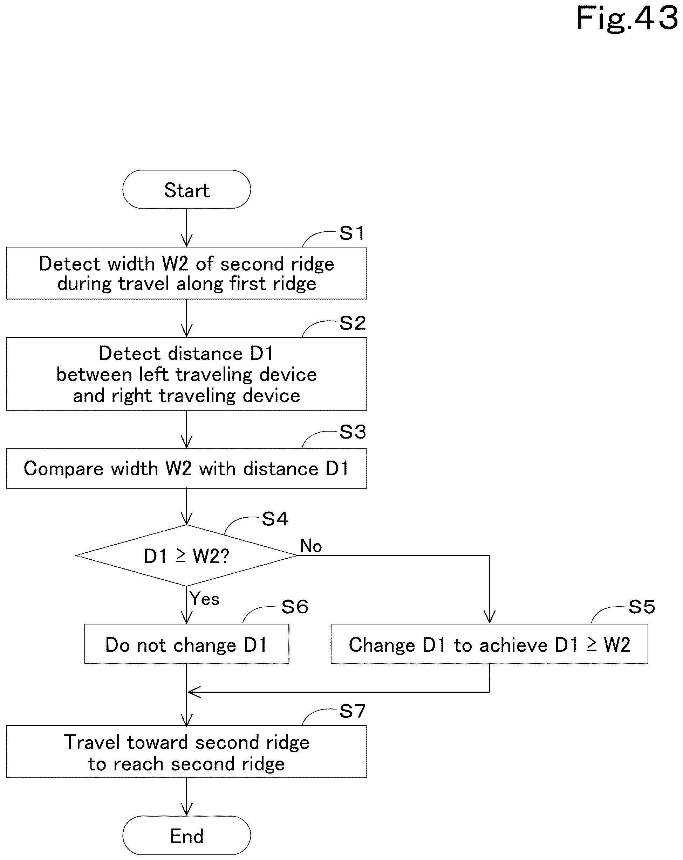

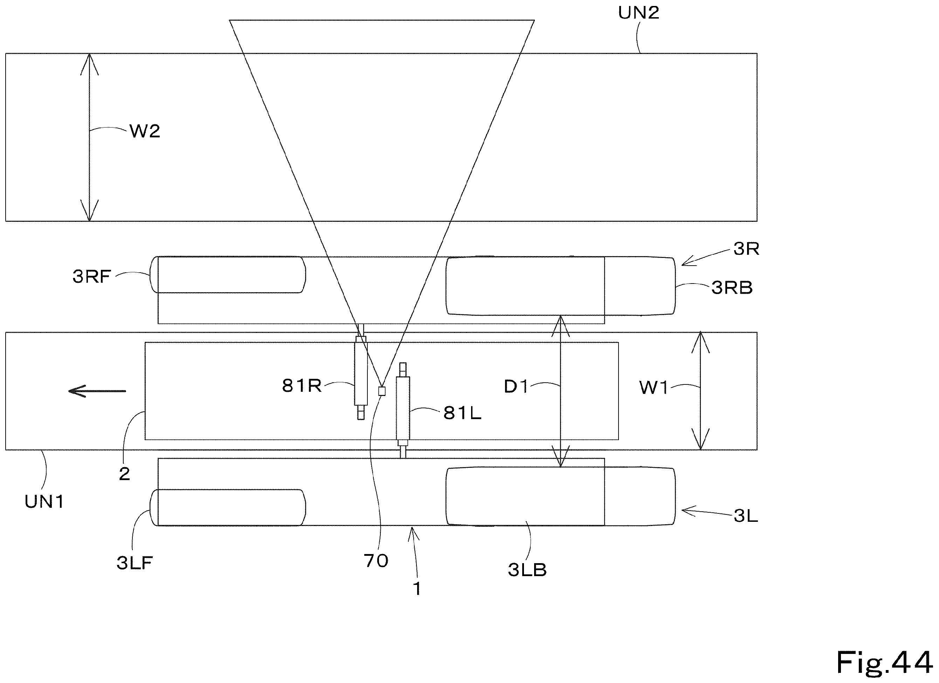

FIG. 43 is a flowchart illustrating another example (second example) of the operation of the distance changing mechanism 80 controlled by the distance changing control unit 15B. Hereinafter, another example (second example) of the operation of the distance changing mechanism 80 controlled by the distance changing control unit 15B will be described based on FIG. 43. Note that here, as an example, the case will be described where the "road information" of the "situation in the surrounding area of the vehicle body 2" detected by the first detector 70 is the "width of a ridge on the ground surface", and a ridge (second ridge UN2) with a width to be detected is located laterally (leftward or rightward) of the vehicle body 2 of the working vehicle 1 (see FIG. 44).

In this case, when the vehicle body 2 travels along the first ridge UN1 (passes the first ridge UN1), the first detector 70 detects a width W2 of a second ridge UN2 adjacent to the first ridge UN1 (S1). The second ridge UN2 is the ridge on which the work is performed subsequently after the work on the first ridge UN1 is finished. The second ridge UN2 can be detected by providing the first detector 70 at a position higher than the second ridge UN2. When the first detector 70 is a camera, the camera 71 captures an image of the second ridge UN2 laterally of the vehicle body 2, and generates an image signal. The calculator 73 detects the width W2 of the second ridge UN2 based on the generated image signal. Meanwhile, the second detector 75 detects the distance D1 between the left traveling device 3L and the right traveling device 3R (S2). The width W2 and the distance D1 are detected before the vehicle body 2 reaches the second ridge UN2. The time of detection of the width W2 and the time of detection of the distance D1 may be the same or either one may precede the other.

The distance changing control unit 15B compares the width W2 of the ridge detected by the first detector 70 with the distance D1 detected by the second detector 75 (S3). The distance changing control unit 15B changes the distance D1 by actuating the distance changing mechanism 80 based on the comparison result such that the distance D1 corresponds to the width W2 of the ridge.

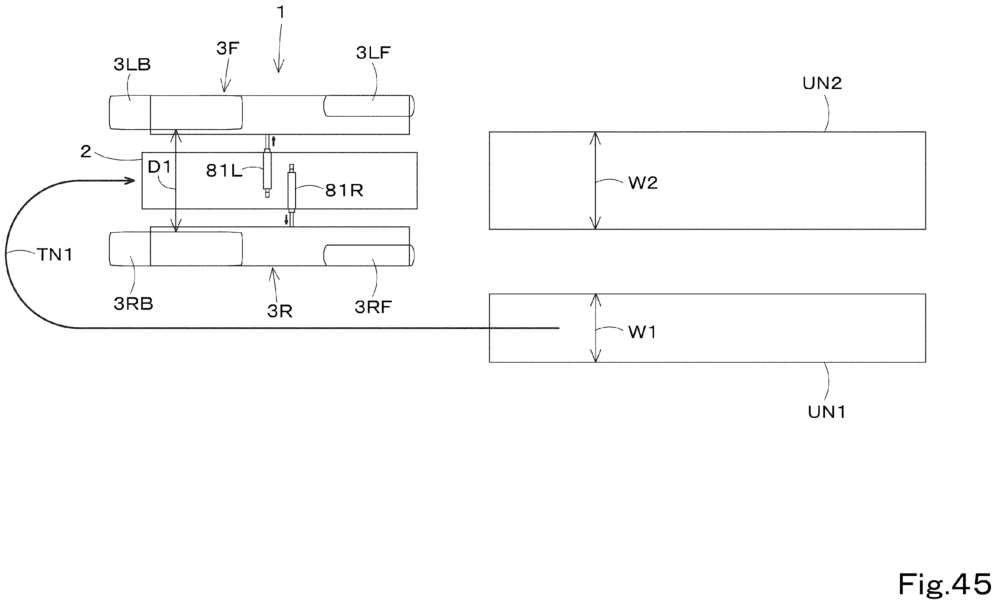

When the comparison result is D1 < W2 (No in S4), the distance changing mechanism 80 changes the distance D1 to achieve D1 ≥ W2 (S5). Specifically, the distance D1 is expanded by extending the rods of the left cylinder 81L and the right cylinder 81R. When the comparison result is D1 ≥ W1 (Yes in S4), the distance changing mechanism 80 does not change the distance D1 (S6). The distance changing mechanism 80 changes the distance D1 while the vehicle body 2 which has finished traveling along the first ridge is turning to start traveling along the second ridge UN2 (see an arrow TN1 in FIG. 45). However, the distance changing mechanism 80 may change the distance D1 not during turning, but while the vehicle body 2 is traveling straight before turning or after turning. In a state where the distance D1 is changed (S5) or a state where the distance D1 is not changed (S6), the working vehicle 1 travels toward the second ridge UN2 to reach the second ridge UN2 (S7).

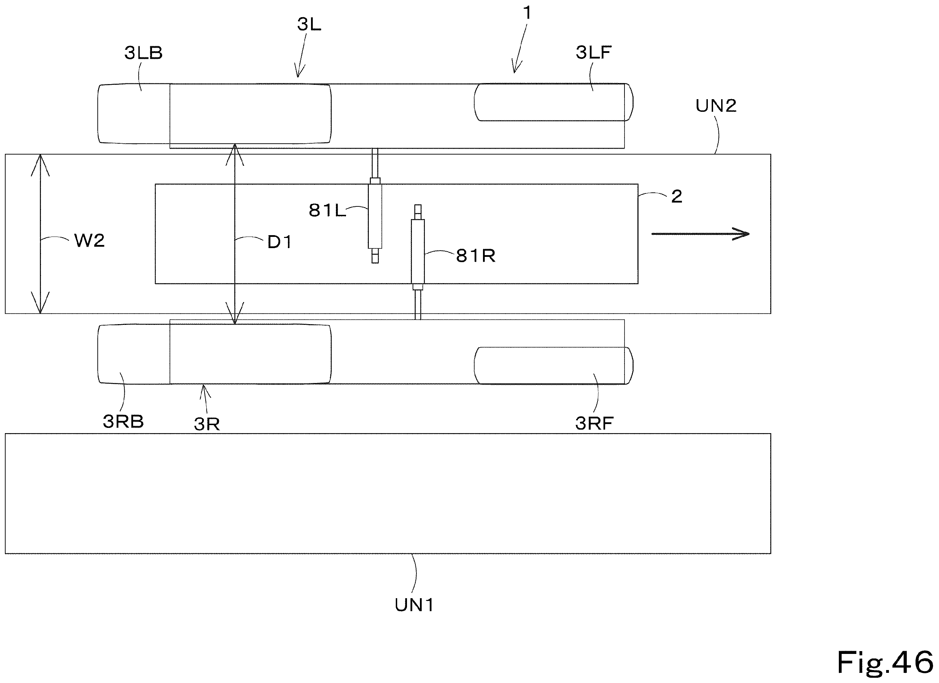

Even if the width W2 of the second ridge UN2 is larger or smaller than the distance D1 between the left traveling device 3L and the right traveling device 3R, when the working vehicle 1 reaches the second ridge UN2, D1 ≥ W2 is satisfied by the above-described control operation. Thus, the working vehicle 1 can perform the work while traveling with the second ridge UN2 located between the left traveling device 3L and the right traveling device 3R (see FIG. 46).

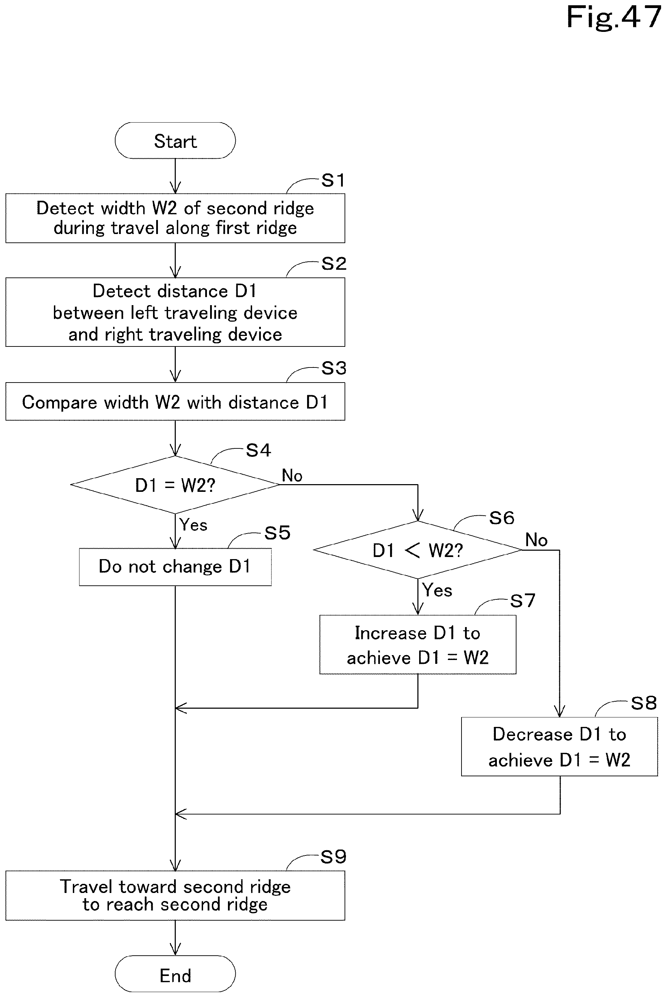

FIG. 47 is a flowchart illustrating a variation of the second example. In the variation, the first step (S1) to the third step (S3) of the operation of the distance changing mechanism 80 are the same as the operation in the second example, and the fourth step (S4) and subsequent steps are different from the operation in the second example.

In the fourth step (S4), the distance changing control unit 15B determines whether the width W2 of the ridge is the same as the distance D1 between the left traveling device 3L and the right traveling device 3R (S4). When D1 = W2 (Yes in S4), the distance changing mechanism 80 does not change the distance D1 (S5). When D1 = W2 is not the case (No in S4), it is determined whether D1 < W2 (S6). When D1 < W2 (Yes in S6), the distance changing mechanism 80 changes (expands) the distance D1 to achieve D1 = W2 (S7). Specifically, the distance D1 is expanded by extending the rods of the left cylinder 81L and the right cylinder 81R. When D1 > W2 (No in S6), the distance changing mechanism 80 changes (reduces) the distance D1 to achieve D1 = W2 (S8). Specifically, the distance D1 is reduced by retracting the rods of the left cylinder 81L and the right cylinder 81R. In a state where the distance D1 is changed (expanded or reduced) (S7, S8) or a state where the distance D1 is not changed (S5), the working vehicle 1 travels toward the ridge UN to reach the second ridge UN2 (S9).

Even if the width W2 of the second ridge UN2 is larger or smaller than the distance D1 between the left traveling device 3L and the right traveling device 3R, when the working vehicle 1 reaches the second ridge UN2, D1 = W2 is satisfied by the above-described control operation. Thus, the working vehicle 1 can perform the work while traveling with the second ridge UN2 located between the left traveling device 3L and the right traveling device 3R in a state where the distance D1 is not too narrow and not too wide, i.e., has an appropriate length with respect to the width W2 of the second ridge.

The above-described operation in the first example (including the variation) and operation in the second example (including the variation) can be combined and performed. In this case, when the vehicle body 2 travels along the first ridge UN1 of crop, as in the first example, the control operation illustrated in FIG. 38 or FIG. 42 is performed. Specifically, the first detector 70 detects the width W1 of the first ridge in front of the vehicle body 2 in the travel direction, and the second detector 75 detects the distance D1 between the left traveling device 3L and the right traveling device 3R before the vehicle body 2 reaches the crop. Next, the distance changing control unit 15B compares the width W1 with the distance D1, and changes the distance D1 by actuating the distance changing mechanism 80 to achieve D1 ≥ W1 or D1 = W1 based on the comparison result.

Next, when the vehicle body 2 travels along the first ridge UN1, as in the second example, the control operation illustrated in FIG. 43 or FIG. 47 is performed. Specifically, the first detector 70 detects the width W2 of a second ridge UN2 adjacent to the first ridge UN1, and the second detector 75 detects the distance D1 between the left traveling device 3L and the right traveling device 3R. Next, the distance changing control unit 15B compares the width W2 with the distance D1, and changes the distance D1 by actuating the distance changing mechanism 80 to achieve D1 ≥ W2 or D1 = W2 based on the comparison result.

When there are three or more ridges of crop, it is only necessary to repeat the above-described operation when the vehicle body 2 travels along the second ridge UN2. Specifically, it is only necessary to detect the width of a third ridge adjacent to the second ridge, compare the width of the third ridge with the distance D1 between the left traveling device 3L and the right traveling device 3R, and change the distance D1 by actuating the distance changing mechanism 80 based on the comparison result.

In the above-described control operation in the first example (including the variation) and the control operation in the second example (including the variation), the first detector 70 may detect, in addition to the width of the ridge or in substitution for the width of the ridge, either one or both of the interval (pitch of paths) between a path and a path between ridges, and the width of a path between ridges. In this case, the distance changing control unit 15B changes the distance D1 by actuating the distance changing mechanism 80 such that the left traveling device 3L or the right traveling device 3R can travel with the ridge located therebetween in consideration of the interval (pitch of paths) between a path and a path between ridges and/or the width of a path between ridges.

As described above, the distance D1 can be changed according to the width of the ridge by actuating the distance changing mechanism 80 to change the distance D1 based on detection results from the first detector 70 and the second detector 75. Thus, even if the width of the ridge is wider than an expected width (standard width), the working vehicle 1 can travel with the ridge reliably located between the left traveling device 3L and the right traveling device 3R.

In the above-described example (see FIG. 38 to FIG. 45), the vehicle body 2 can travel by the control of the automatic driving control unit 15A such that the center of the vehicle body 2 in the width direction (lateral direction) matches the center of the ridge in the width direction. Thus, when the distance changing mechanism 80 changes the distance D1 to achieve D1 ≥ W1 (or D1 = W1) or D1 ≥ W2 (or D1 = W2), the working vehicle 1 can travel with the ridge reliably located between the left traveling device 3L and the right traveling device 3R.

The distance changing control unit 15B may change the distance D1 between the left traveling device 3L and the right traveling device 3R by actuating the distance changing mechanism 80 before the working vehicle 1 starts working or while the working vehicle 1 is working. When the distance D1 is changed while the working vehicle 1 is working, the distance D1 can be changed (finely adjusted) as appropriate according to the situation of the work.

As illustrated in FIG. 7, the working vehicle 1 includes the height changing mechanism 90. The height changing mechanism 90 changes the height of the vehicle body 2 that is the distance of the vehicle body 2 from the ground surface. The height changing mechanism 90 raises and lowers the vehicle body 2 which is the housing frame 2 in which the battery 7 is housed. The height changing mechanism 90 raises and lowers the vehicle body 2 at a location between the left traveling device 3L and the right traveling device 3R in the width direction (lateral direction) of the vehicle body 2. The height changing mechanism 90 changes the height of the vehicle body 2 that is the distance of the vehicle body 2 from the ground surface by raising or lowering the frame structure 18 attached to the vehicle body 2.

As illustrated in FIG. 1 to FIG. 3 and the like, the height changing mechanism 90 includes the lifting cylinder 91. The lifting cylinder 91 raises and lowers the movable frame 32 (the second left frame 20L, the second right frame 22R, and the lateral frame 18M) of the frame structure 18. The vehicle body 2 is raised or lowered by raising or lowering the movable frame 32. Thus, the vehicle body 2 can be raised or lowered by driving the lifting cylinder 91.

The lifting cylinder 91 includes a hydraulic cylinder. The lifting cylinder 91 includes a rod 91a which extends and retracts in the up-down direction, and a cylinder tube 91b to which hydraulic fluid to drive the rod 91a is supplied (see FIG. 1, FIG. 30 and the like). The frame structure 18 is connected to the distal end of the rod 91a. The lifting cylinder 91 includes a left lifting cylinder 91L and a right lifting cylinder 91R. The left lifting cylinder 91L is located leftward of the vehicle body 2. The right lifting cylinder 91R is located rightward of the vehicle body 2.

As illustrated in FIG. 1 and FIG. 2, a rod 91La of the left lifting cylinder 91L is connected to the second left frame 20L of the frame structure 18. Specifically, the rod 91La of the left lifting cylinder 91L is connected to a left plate 99L fixed to the second left frame 20L. Thus, the left lifting cylinder 91L can raise and lower the second left frame 20L which is a movable frame of the left frame 18L by extension and retraction of the rod 91La.

As illustrated in FIG. 1 and FIG. 3, a rod 91Ra of the right lifting cylinder 91R is connected to the second right frame 22R of the frame structure 18. Specifically, the rod 91Ra of the right lifting cylinder 91R is connected to a right plate 99R fixed to the second right frame 22R. Thus, the right lifting cylinder 91R can raise and lower the second right frame 22R which is a movable frame of the right frame 18R by extension and retraction of the rod 91Ra.

A cylinder tube 91Lb of the left lifting cylinder 91L is attached to a bracket (not illustrated) fixed to the first left frame 19L. A cylinder tube 91Rb of the right lifting cylinder 91R is attached to a bracket (not illustrated) fixed to the first right frame 21R. As illustrated in FIG. 2 and FIG. 3, the lower end (the lower end of the cylinder tubes 91Lb and 91Rb) of the lifting cylinder (the left lifting cylinder 91L and the right lifting cylinder 91R) is located at a height which is the same or substantially the same as the height of the vehicle body 2 that is the distance of the vehicle body 2 from the ground surface when the vehicle body 2 is at the height (the later-described first height) located between the left traveling device 3L and the right traveling device 3R.

However, the lower end of the lifting cylinder (the left lifting cylinder 91L and the right lifting cylinder 91R) need not be located at a height which is the same or substantially the same as the height of the vehicle body 2 that is the distance of the vehicle body 2 from the ground surface when the vehicle body 2 is at the height (the later-described first height) located between the left traveling device 3L and the right traveling device 3R.

In the present embodiment, the lower end (the lower end of the cylinder tubes 91Lb and 91Rb) of the lifting cylinder (the left lifting cylinder 91L and the right lifting cylinder 91R) is located at a height which is slightly higher than the height HA of the vehicle body 2 that is the distance of the vehicle body 2 from the ground surface when the vehicle body 2 is at the height located between the left traveling device 3L and the right traveling device 3R (see FIG. 2).

When the rod 91La of the left lifting cylinder 91L is extended or retracted, the second left frame 20L is raised or lowered. When the rod 91Ra of the right lifting cylinder 91R is extended or retracted, the second right frame 22R is raised or lowered. Thus, the frame structure 18 can be raised and lowered with the extension or retraction of the rod 91a of the lifting cylinder 91 (the left lifting cylinder 91L and the right lifting cylinder 91R). The vehicle body 2 is attached to the frame structure 18, and thus the vehicle body 2 can be raised and lowered with the extension and retraction of the rod 91a of the lifting cylinder 91. The height of the vehicle body 2 that is the distance of the vehicle body 2 from the ground surface can be changed by raising or lowering the vehicle body 2.

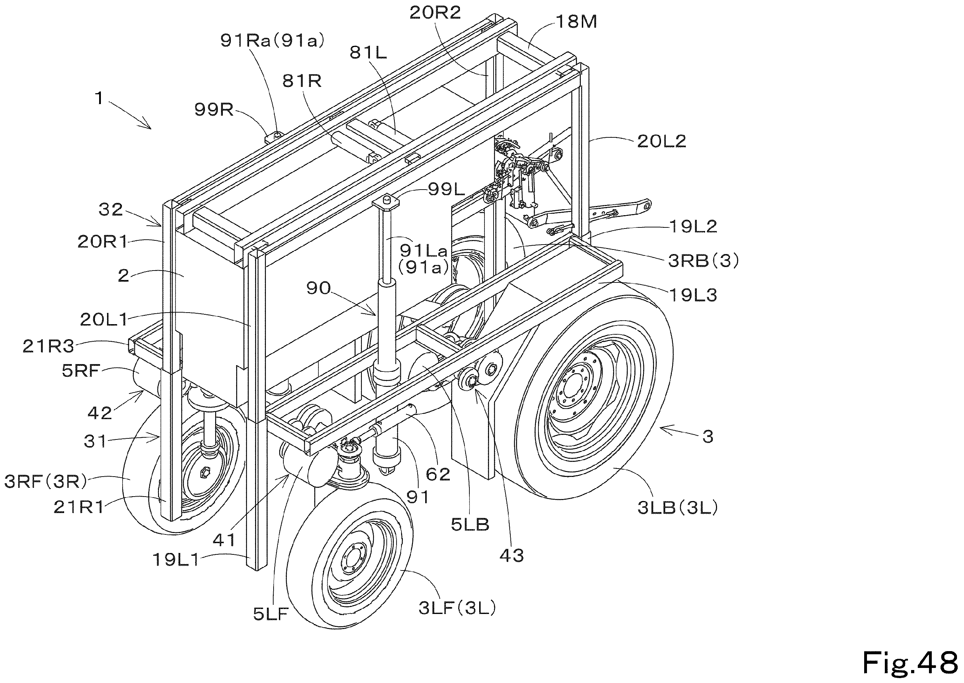

FIG. 48, FIG. 49, and FIG. 50 illustrate a state where the rod 91a of the lifting cylinder 91 is extended to raise the vehicle body 2. With the rise of the vehicle body 2, the mount 10 provided in the vehicle body 2 also rises. Thus, the working device attached to the mount 10 can be lifted by raising the vehicle body 2.

The operation of the height changing mechanism 90 is controlled by the controller 15. As illustrated in FIG. 7, the controller 15 includes a height changing control unit 15C. The height changing control unit 15C transmits a control signal to the height changing mechanism 90 by executing a program stored in the storage by the arithmetic unit of the controller 15. The height changing mechanism 90 is driven based on the control signal transmitted from the height changing control unit 15C. That is, the height changing mechanism 90 changes the height of the vehicle body 2 by being driven based on the control by the controller 15.

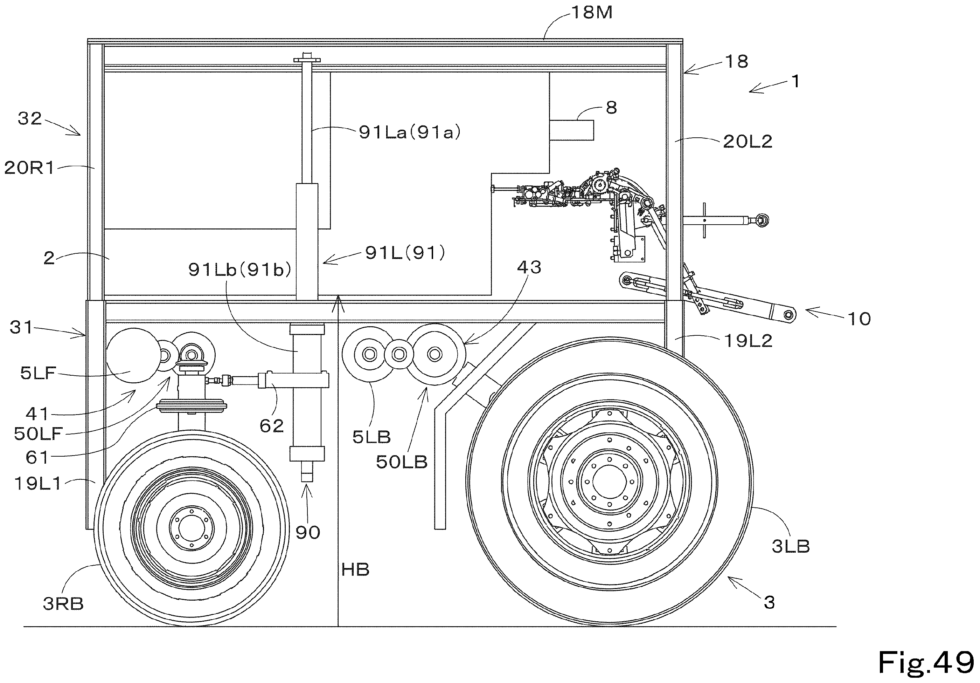

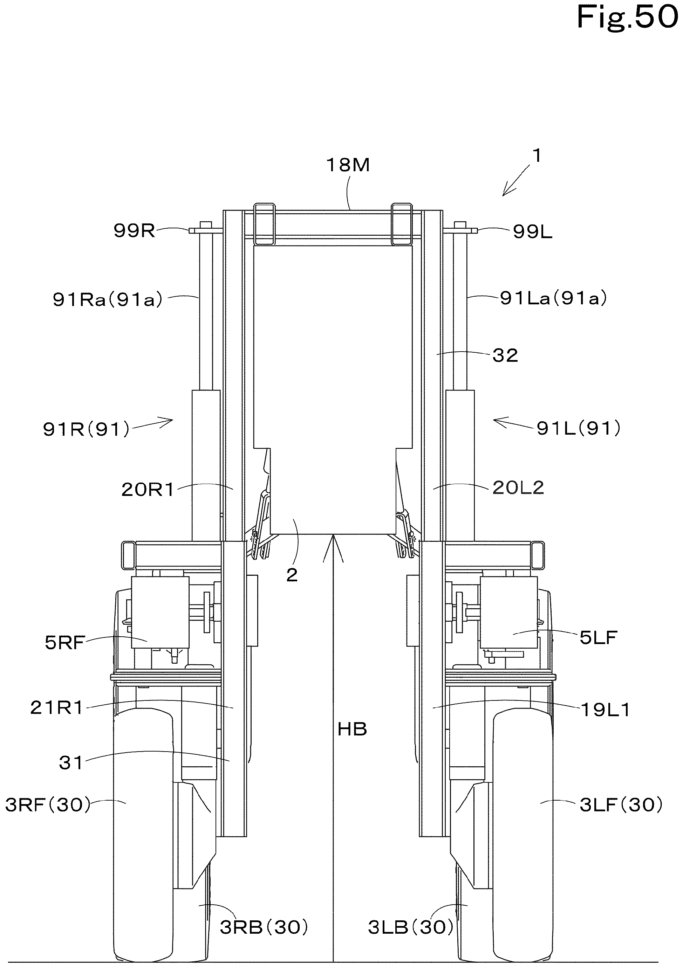

The height changing mechanism 90 can change the height of the vehicle body 2 to any height in a preset height range. Specifically, the height changing mechanism 90 can change the height of the vehicle body 2 to any height between a first height HA (see FIG. 2 and FIG. 4) and a second height HB (see FIG. 49 and FIG. 50) higher than the first height HA. That is, the preset height range is the range between the first height HA and the second height HB. In this embodiment, the height of the vehicle body 2 when the rod of the lifting cylinder 91 is the shortest is the first height HA, and the height of the vehicle body 2 when the rod of the lifting cylinder 91 is the longest is the second height HB.

The first height HA is the lower limit (lower limit height) of the height of the vehicle body 2, which is changeable by the height changing mechanism 90. The second height HB is the upper limit (upper limit height) of the height of the vehicle body 2, which is changeable by the height changing mechanism 90. The height changing mechanism 90 can change the height of the vehicle body 2 to the first height HA as the lower limit height, the second height HB as the upper limit height, and any height (intermediate height) between the upper limit height and the lower limit height.

The height changing mechanism 90 can change the height of the vehicle body 2 according to the work performed by a working device, for example. Specifically, the height changing mechanism 90 can change the height of the vehicle body 2 according to the work performed by the working device attached to the mount 10. The height of the working device attached to the mount 10 is also changed by changing the height of the vehicle body 2.

As illustrated in FIG. 7, the working vehicle 1 includes a recognizer 100 to recognize the working device attached to the mount 10. The recognizer 100 recognizes the type of the working device attached to the mount 10. For example, when a working device is attached to the mount 10, the recognizer 100 receives an identification signal transmitted from the working device, and recognizes the working device attached to the mount 10 based on the identification signal. The recognizer 100 may be a camera that captures an image of the working device attached to the mount 10. In this case, the recognizer 100 recognizes the working device attached to the mount 10 based on the image of the working device captured by the camera.

The height changing mechanism 90 can change the height of the vehicle body 2 according to the working device recognized by the recognizer 100. In other words, the height changing mechanism 90 can change the height of the vehicle body 2 according to the working device attached to the mount 10. For example, when the working device attached to the mount 10 is a first working device, the working vehicle 1 sets the height of the vehicle body 2 to a first work height, and when the working device attached to the mount 10 is a second working device, the working vehicle 1 sets the height of the vehicle body 2 to a second work height.

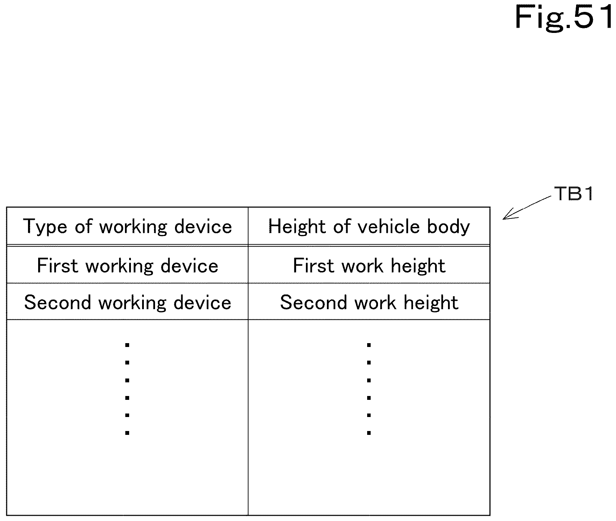

The storage of the controller 15 stores a first correspondence table TB1 (see FIG. 51) that associates the type of working device with the height of the vehicle body 2. The number of combinations of the type of working device and the height of the vehicle body 2 included in the first correspondence table TB1 is not limited to a specific number, and may be any number greater than 1.

When the working device recognized by the recognizer 100 is the first working device, the height changing control unit 15C reads, from the first correspondence table TB1, the height (the first work height) of the vehicle body 2 corresponding to the first working device, and transmits a control signal to drive the lifting cylinder 91 of the height changing mechanism 90 such that the height of the vehicle body 2 is set to the read height (the first work height). When the working device recognized by the recognizer 100 is the second working device, the height changing control unit 15C reads, from the first correspondence table TB1, the height (the second work height) of the vehicle body 2 corresponding to the second working device, and transmits a control signal to drive the lifting cylinder 91 of the height changing mechanism 90 such that the height of the vehicle body 2 is set to the read height (the second work height).

The first work height and the second work height are one of the first height (the lower limit height), the second height (the upper limit height), and any height (intermediate height) between the upper limit height and the lower limit height. The first work height and the second work height are normally different heights, but may be the same height.

The first work height is set to a height suitable for performing work by the first working device. The first work height is suitable, for example, when the working device (e.g., a cultivator) has a work position located below the vehicle body 2. When the first working device is a cultivator to cultivate an agricultural field, the first work height is set to a height suitable for performing work (cultivation) by the cultivator (the first working device).

When the first working device is a working device such as a cultivator, with the work position located below the vehicle body 2, the height of the working device is also reduced by lowering the height of the vehicle body 2 (to the first work height), and thus work (such as cultivation work) can be smoothly performed.

When the first working device is a device, such as a cultivator, which is attached to the mount 10 of the vehicle body 2 and towed, the work performed by the working device is for the ground surface (ground work) and is often a heavy load work. Thus, when the first working device is a device to be towed, the vehicle body 2 can perform the work in a stable state by lowering the height of the vehicle body 2 (to the first work height) to lower the center of gravity position of the working vehicle 1.

The second work height is set to a height suitable for performing work by the second working device. The second work height is suitable, for example, when the working device (e.g., a spreader) has a work position located above the vehicle body 2. When the second working device is a spreader to spread a liquid agricultural chemical, the second work height is set to a height suitable for performing work (liquid agricultural chemical spreading) by the spreader (the second working device). In this case, the second work height is set to a height higher than the first work height.

When the second working device is a working device, such as a spreader, with the work position located above the vehicle body 2, work (such as spreading work) can be smoothly performed by raising the height of the vehicle body 2 (to the second work height).

As described above, the working vehicle 1 includes the height changing mechanism 90, and thus can change the height of the vehicle body 2 according to multiple types of working devices with different work heights. Thus, one working vehicle can perform the work using multiple types of working devices with different work heights.

The height changing mechanism 90 can change the height of the vehicle body 2 in response to indication of the height by the manual operator 101 (see FIG. 7). The manual operator 101 is a device capable of performing an operation of indicating the height of the vehicle body 2. The manual operator 101 is a device (external equipment) outside the working vehicle 1, and is configured to communicate with the controller 15 in a wireless or wired manner. The manual operator 101 is, for example, a portable device such as a remote control device, a tablet, a smartphone, or a PDA.

The manual operator 101 includes an input unit to receive an indicated height of the vehicle body 2. The input unit is, e.g., a push-button, a rotary dial, and a touch panel. When an operator inputs the height to be indicated via the input unit of the manual operator 101, the indicated input height is transmitted to the controller 15. The controller 15 transmits a control signal to drive the lifting cylinder 91 of the height changing mechanism 90 such that the height of the vehicle body 2 is set to the indicated height. Thus, the height of the vehicle body 2 is changed to the height indicated by the manual operator 101.

The height changing mechanism 90 can change the height of the vehicle body 2 according to the height of the crop planted in the ground surface on which the working vehicle 1 travels. For example, when the crop planted in the ground surface is the first crop, the height changing mechanism 90 sets the height of the vehicle body 2 higher than or equal to the first height (the lower limit height). The storage of the controller 15 stores the height (hereinafter referred to as the "first crop correspondence height") of the vehicle body 2 corresponding to the first crop. The first crop correspondence height is a predetermined height of the vehicle body 2 that corresponds to the first crop, and is higher than or equal to the first height (the lower limit height).

Note that the area where the first crop is planted may include weeds shorter than the first crop (weeds shorter than or equal to the first height HA), the weeds being mixed in the first crop. Even in this case, the height changing mechanism 90 sets the height of the vehicle body 2 higher than or equal to the first height (the lower limit height) without being affected by the presence of the shorter weeds.

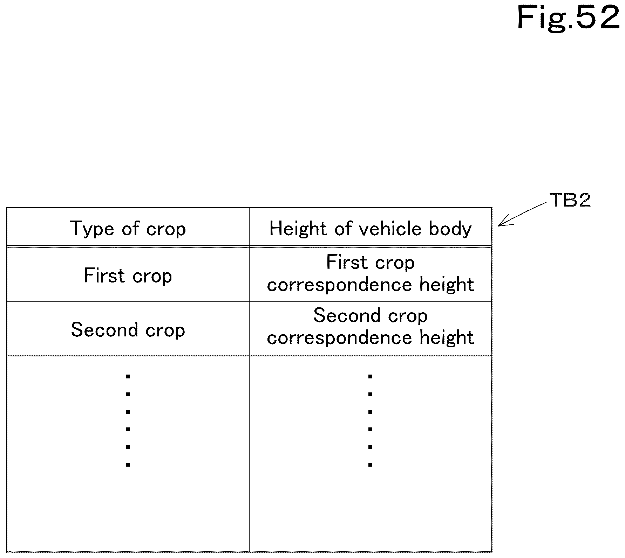

The above-described first detector 70 can detect that the crop planted in the ground surface is the first crop. The storage of the controller 15 stores a second correspondence table TB2 (see FIG. 52) that associates the type of crop with the height of the vehicle body 2. The number of combinations of the type of crop and the height of the vehicle body 2 included in the second correspondence table TB2 is not limited to a specific number, and may be any number greater than 1.

The height of the vehicle body 2 associated with the first crop stored in the second correspondence table TB2 is the first crop correspondence height. In the second correspondence table TB2, the first crop correspondence height is set higher than or equal to the height of the first crop or higher than the first crop. The height changing mechanism 90 can change the height of the vehicle body 2 under the condition that the first crop correspondence height is higher than or equal to the height of the first crop or higher than the first crop.

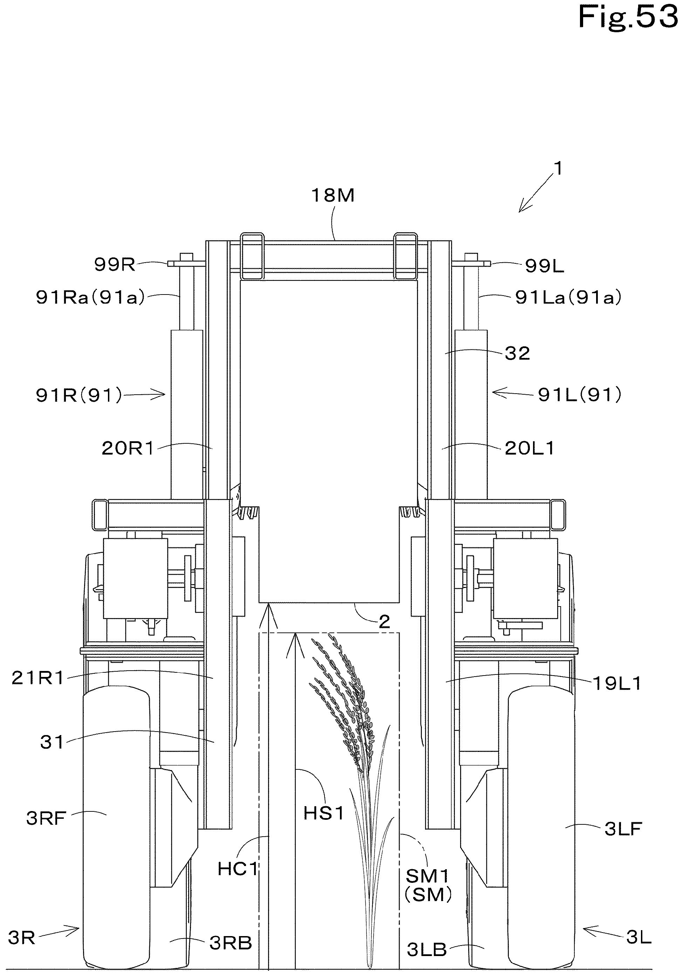

When the crop recognized by the first detector 70 is the first crop, the height changing control unit 15C reads, from the second correspondence table TB2, the height (the first crop correspondence height) of the vehicle body 2 corresponding to the first crop, and transmits a control signal to drive the lifting cylinder 91 of the height changing mechanism 90 such that the height of the vehicle body 2 is set to the read height (the first crop correspondence height). Thus, the height of the vehicle body 2 is changed to the first crop correspondence height. As a result, the height of the vehicle body 2 is set to a height higher than or equal to a first crop SM1 or a height higher than the first crop SM1 (see FIG. 53). Thus, when the vehicle body 2 travels with the first crop SM1 located between the left traveling device 3L and the right traveling device 3R, it is possible to avoid contact of the bottom of the vehicle body 2 with the first crop SM1. In the example illustrated in FIG. 53, the first crop correspondence height HC1 of the vehicle body 2 is higher than the height HS1 of the first crop SM1, but may be the same as the height HS1 of the first crop SM1.

When the crop planted in the ground surface is a second crop which is higher than the first crop, the height changing mechanism 90 sets the height of the vehicle body 2 higher than the first crop correspondence height and lower than or equal to the second height (the upper limit height). The storage of the controller 15 stores the height (hereinafter referred to as the "second crop correspondence height") of the vehicle body 2 corresponding to the second crop. The second crop correspondence height is a predetermined height of the vehicle body 2 that corresponds to the second crop, and is higher than the first crop correspondence height and lower than or equal to the second height (the upper limit height).

In the above-described second correspondence table TB2, the second crop correspondence height is set higher than or equal to the height of the second crop or higher than the second crop. The height changing mechanism 90 can change the height of the vehicle body 2 under the condition that the second crop correspondence height is higher than or equal to the height of the second crop or higher than the second crop.

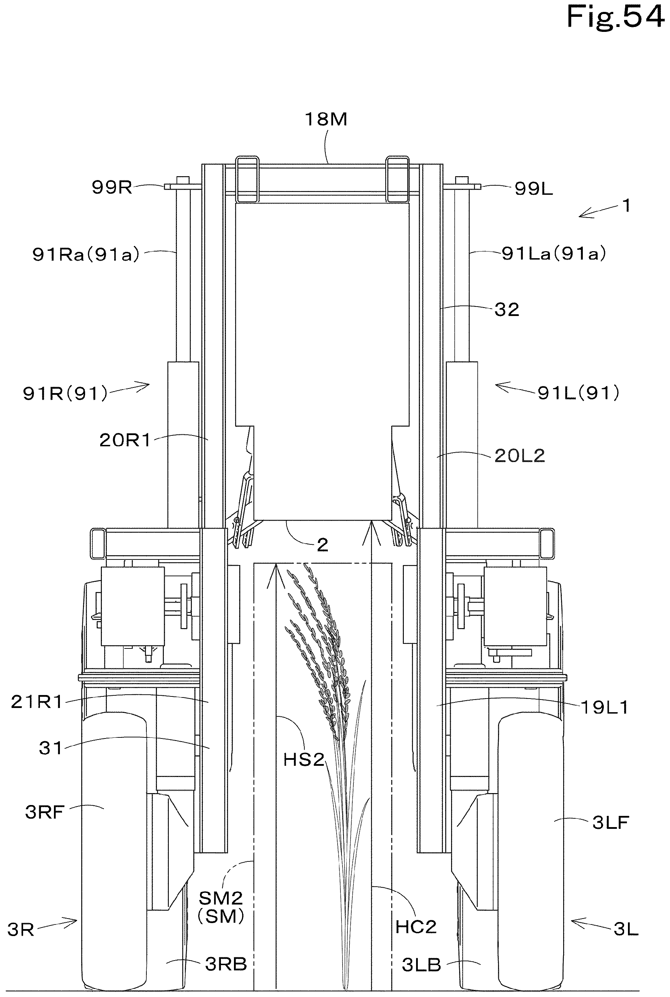

The first detector 70 can detect that the crop planted in the ground surface is the second crop. When the crop detected by the first detector 70 is the second crop, the height changing control unit 15C reads, from the second correspondence table TB2, the height (the second crop correspondence height) of the vehicle body 2 corresponding to the second crop, and transmits a control signal to drive the lifting cylinder 91 of the height changing mechanism 90 such that the height of the vehicle body 2 is set to the read height (the second crop correspondence height). Thus, the height of the vehicle body 2 is changed to the second crop correspondence height. As a result, the height of the vehicle body 2 is set to a height higher than or equal to the height of a second crop SM2 or higher than the second crop SM2 (see FIG. 54). Thus, when the vehicle body 2 travels with the second crop SM2 located between the left traveling device 3L and the right traveling device 3R, it is possible to avoid contact of the bottom of the vehicle body 2 with the second crop SM2. In the example illustrated in FIG. 54, the second crop correspondence height HC2 of the vehicle body 2 is higher than the height HS2 of the second crop SM2, but may be the same as the height HS2 of the second crop SM2.

The height changing mechanism 90 can change the height of the vehicle body 2 to a height at which the position of the vehicle body 2 in the up-down direction overlaps the position of the wheels 30 in the up-down direction, and to a height at which the vehicle body 2 is located higher than the wheels 30 in the up-down direction. In the present embodiment, the height at which the vehicle body 2 overlaps the wheels 30 is the above-mentioned first height (the lower limit height) (see FIG. 4), but may be a height higher than the first height. In the present embodiment, the height at which the vehicle body 2 is upward of the wheels 30 is the above-mentioned second height (the upper limit height) (see FIG. 50), but may be a height lower than the second height.

The height changing mechanism 90 can change the height of the vehicle body 2 to a height at which the position of the vehicle body 2 in the up-down direction overlaps the position of the traveling device 3 in the up-down direction, and to a height at which the vehicle body 2 is located higher the traveling device 3 in the up-down direction. The height at which the vehicle body 2 overlaps the traveling device 3 is such that the vehicle body 2 is interposed between the left traveling device 3L and the right traveling device 3R (see FIG. 4). The height of the vehicle body 2 upward of the traveling device 3 is such that the vehicle body 2 is located above the left traveling device 3L and the right traveling device 3R (see FIG. 50).

In the example illustrated in FIG. 4, the height at which the vehicle body 2 overlaps the traveling device 3 is the same as the above-mentioned height at which the vehicle body 2 overlaps the wheels 30. In short, the height at which the vehicle body 2 overlaps the traveling device 3 is the above-mentioned first height (the lower limit height) in the present embodiment. However, the height at which the vehicle body 2 overlaps the traveling device 3 may be the height of the vehicle body 2 upward of the wheels 30 (that is, the height at which the vehicle body 2 overlaps a portion of the traveling device 3 other than the wheels 30). In other words, the above-mentioned height may be higher than the first height. In the example illustrated in FIG. 50, the height of the vehicle body 2 upward of the traveling device 3 is the second height (the upper limit height), but may be lower than the second height.

As described above, the vehicle body 2 is provided between the left traveling device 3L and the right traveling device 3R. The height changing mechanism 90 changes the height of the vehicle body 2 by raising or lowering the vehicle body 2 between the left traveling device 3L and the right traveling device 3R. In other words, the vehicle body 2 is moved in the up-down direction through the space between the left traveling device 3L and the right traveling device 3R.

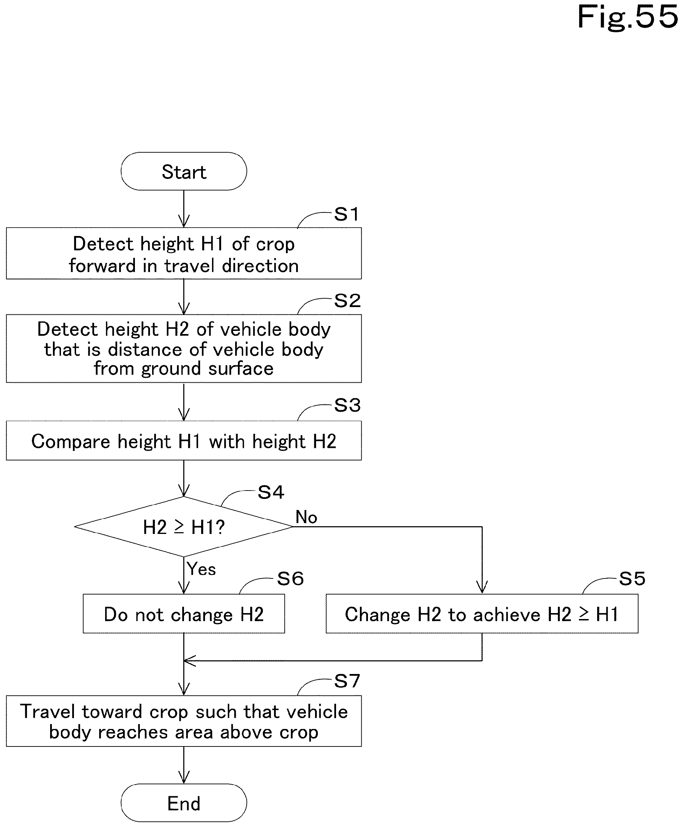

FIG. 55 to FIG. 58 are each a flowchart illustrating an example of the operation of the height changing mechanism 90 controlled by the height changing control unit 15C. Hereinafter, two examples (a first example and a second example) and their variations of the operation of the height changing mechanism 90 controlled by the height changing control unit 15C will be described based on FIG. 55 to FIG. 58. First, the first example of the operation of the height changing mechanism 90 will be described based on FIG. 55.

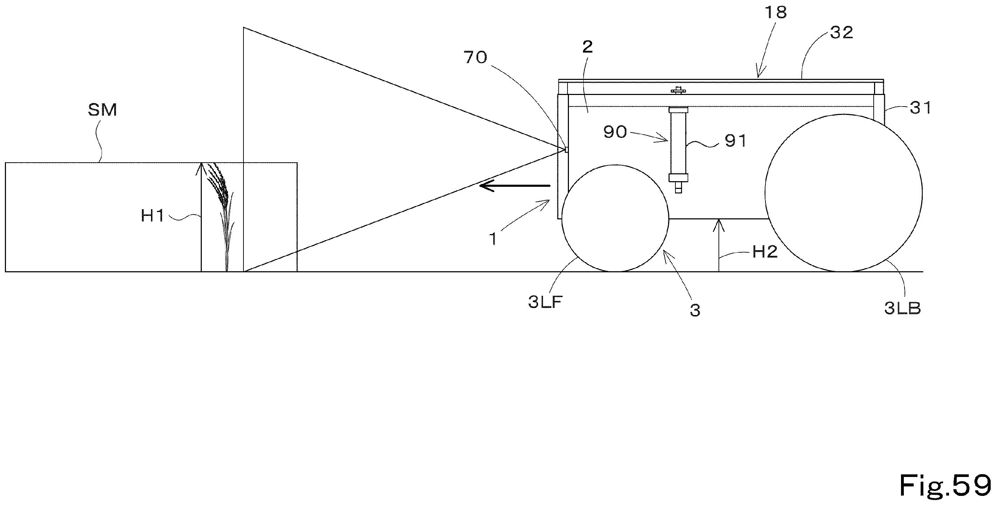

The first example is an example in which the "situation in the surrounding area of the vehicle body 2" detected by the first detector 70 is the "height of crop in front of the vehicle body 2". In this case, the first detector 70 detects the height H1 of crop SM in front of the vehicle body 2 in the travel direction (S1) (see FIG. 59). When the first detector 70 is the camera 71 in this situation, the camera 71 captures an image of the crop SM in front of the vehicle body 2, and generates an image signal. The calculator 73 detects the height H1 of the crop SM based on the generated image signal. The height H1 of the crop SM is detected by the calculator 73, for example, by measuring (estimating) the distance (length) from the ground surface to the upper end of the crop based on the image of the crop.

Meanwhile, the third detector 77 detects the height H2 of the vehicle body 2 that is the distance of the vehicle body 2 from the ground surface (S2). The heights H1 and H2 are detected before the vehicle body 2 reaches the crop. The time of detection of the height H1 and the time of detection of the height H2 may be the same or either one may precede the other. The height changing control unit 15C compares the height H1 of the crop detected by the first detector 70 with the height H2 of the vehicle body 2 detected by the third detector 77 (S3).

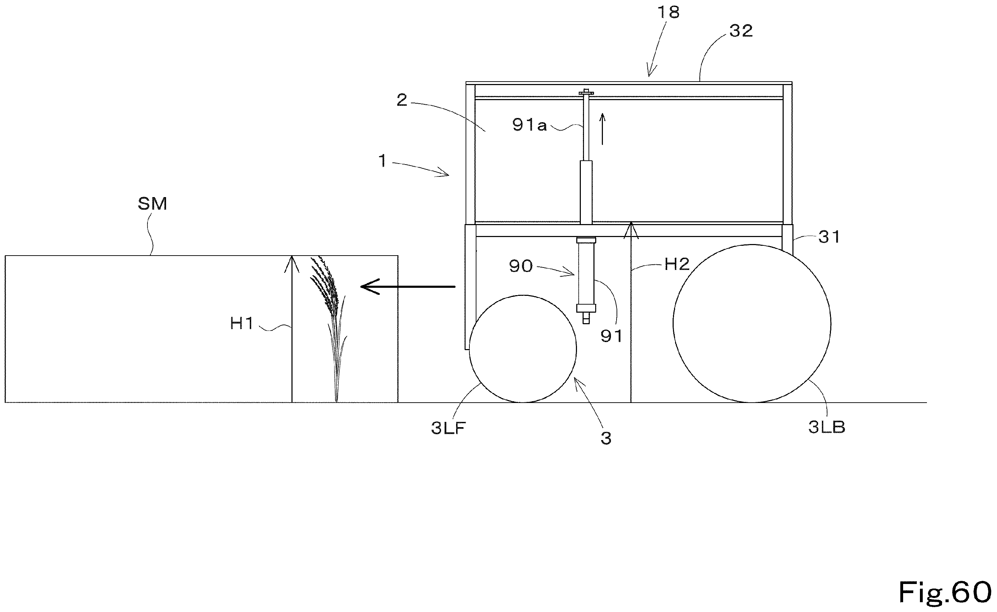

The height changing control unit 15C changes the height H2 of the vehicle body 2 by actuating the height changing mechanism 90 based on the comparison result such that the height H2 is higher than or equal to the height H1 of the crop. When the comparison result is H2 < H1 (No in S4), the height changing mechanism 90 changes the height H2 to achieve H2 ≥ H1 (H2 = H1 or H2 > H1) (S5). Specifically, the height H2 is changed to increase the height of the vehicle body 2 by extending the rod 91a of the lifting cylinder 91 (see FIG. 60). The height H2 is changed by the height changing mechanism 90 during or before travel of the vehicle body 2 to reach an area above the crop SM located in front of the vehicle body 2 in the travel direction. When the comparison result is H2 ≥ H1 (Yes in S4), the height changing mechanism 90 does not change the height H2 (S6). In a state where the height H2 is changed (S5) or a state where the height H2 is not changed (S6), the working vehicle 1 travels toward the crop SM, and the vehicle body 2 reaches an area above the crop SM (S7).

Even if the height H1 of the crop SM is higher than the height H2 of the vehicle body 2, when the vehicle body 2 of the working vehicle 1 reaches an area above the crop SM, H2 ≥ H1 is satisfied by the above-described control operation. Thus, the working vehicle 1 can perform the work on the crop SM while avoiding contact of the vehicle body 2 with the crop SM.

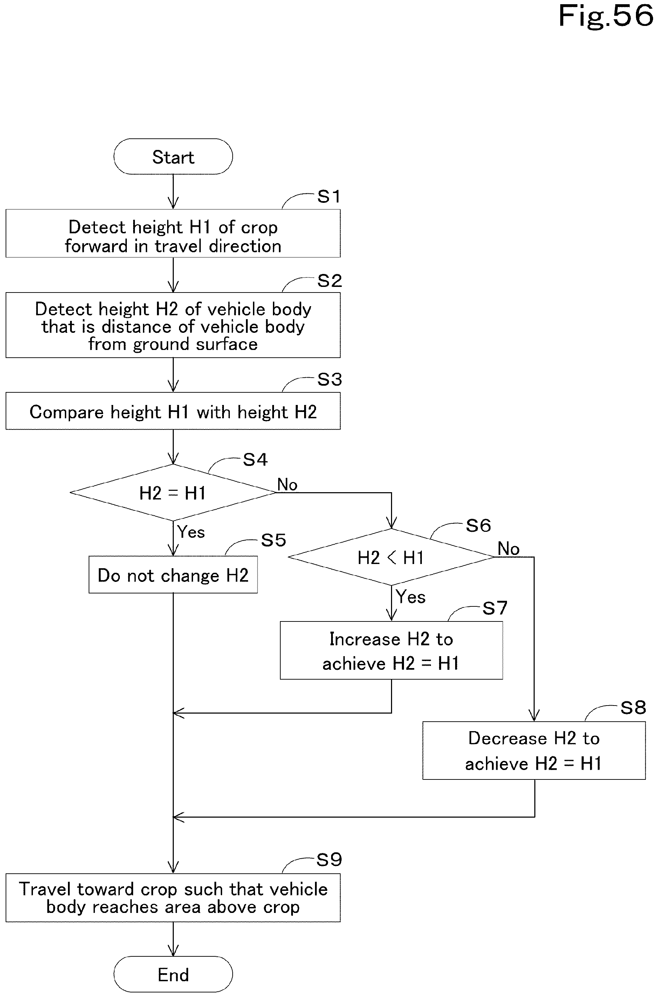

FIG. 56 is a flowchart illustrating a variation of the first example. In the variation, the first step (S1) to the third step (S3) of the operation of the height changing mechanism 90 are the same as the operation in the first example, and the fourth step (S4) and subsequent steps are different from the operation in the first example.

In the fourth step (S4), the height changing control unit 15C determines whether the height H1 of the crop is the same as the height H2 of the vehicle body 2 (S4). When H1 = H2 (Yes in S4), the height changing mechanism 90 does not change the height H2 (S5). When H1 = H2 is not the case (No in S4), the height changing mechanism 90 determines whether H2 < H1 (S6).

When H2 < H1 (Yes in S6), the height changing mechanism 90 changes (increases) the height H2 to achieve H1 = H2 (S7). Specifically, the height H2 is changed to increase the height of the vehicle body 2 by extending the rod 91a of the lifting cylinder 91. When H2 > H1 (No in S6), the height changing mechanism 90 changes (decreases) the height H2 to achieve H1 = H2 (S8). Specifically, the height H2 is changed to decrease the height of the vehicle body 2 by retracting the rod 91a of the lifting cylinder 91. In a state where the height H2 is changed (increased or decreased) (S7, S8) or a state where the height H2 is not changed (S5), the working vehicle 1 travels toward the crop, and the vehicle body 2 reaches an area above the crop SM (S9).

Even if the height H1 of the crop is higher or lower than the height H2 of the vehicle body 2, when the vehicle body 2 of the working vehicle 1 reaches an area above the crop, H1 = H2 is satisfied by the above-described control operation. Thus, the working vehicle 1 can perform the work while traveling in a state where the height H2 of the vehicle body 2 is not too high and not too low, i.e., has an appropriate height with respect to the height H1 of the crop. Thus, the working vehicle 1 can successfully perform the work on the crop.

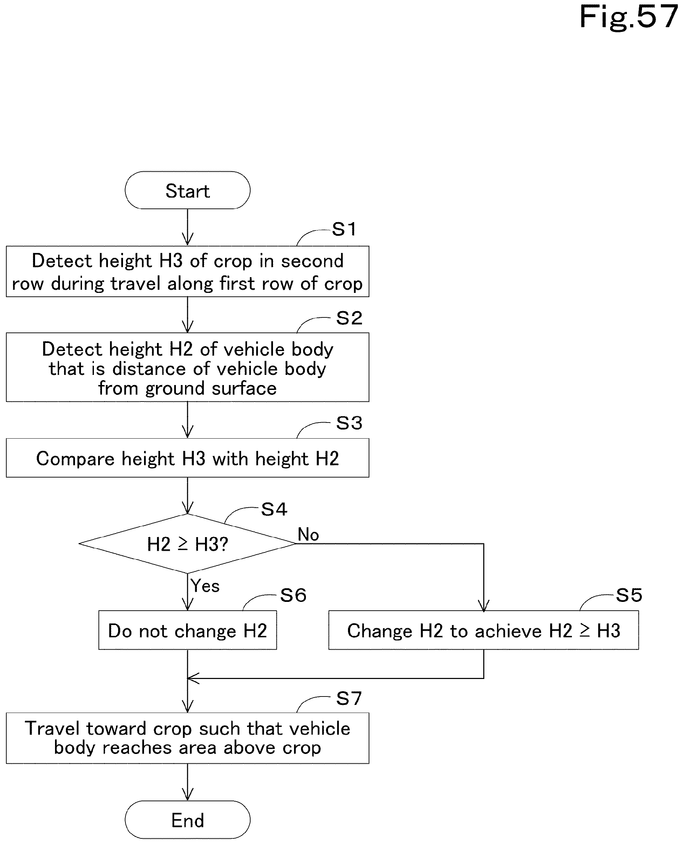

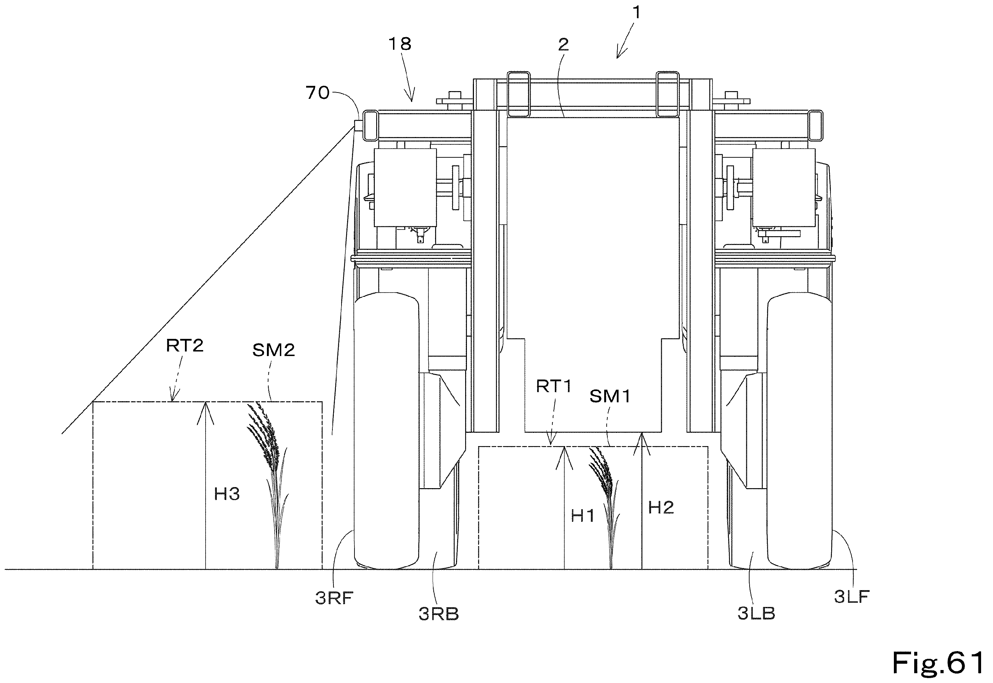

Next, a second example of the control operation performed by the height changing control unit 15C will be described based on FIG. 57. The second example is an example in which the "situation in the surrounding area of the vehicle body 2" detected by the first detector 70 is the "the height of the crop located laterally of the vehicle body 2". In other words, the second example is an example (see FIG. 61) in which the crop SM2 with a height to be detected is located laterally (leftward or rightward) of the vehicle body 2 of the working vehicle 1. The crop SM is planted in multiple rows, and FIG. 61 illustrates a first row RT1 and a second row RT2.

In this case, when the vehicle body 2 is traveling along the first row RT1 of the crop SM1, the first detector 70 detects the height H3 of the crop SM2 in the second row RT2 adjacent to the first row RT1 (S1). The second row RT2 is the row on which the work is performed subsequently after the work on the first row RT1 is finished. The height H3 of the crop SM2 in the second row RT2 can be detected by providing the first detector 70 at a position higher than the crop SM2 in the second row RT2. When the first detector 70 is the camera 71, the camera 71 captures an image of the crop SM2 in the second row RT2 located laterally of the vehicle body 2, and generates an image signal. The calculator 73 detects the height H3 of the crop SM2 in the second row RT2 based on the generated image signal. The method of detecting the height H3 of the crop SM2 by the calculator 73 is similar to the above-described method of detecting the height H1 of the crop SM.

Meanwhile, the third detector 77 detects the height H2 of the vehicle body 2 that is the distance of the vehicle body 2 from the ground surface (S2). The height H2 is detected before the vehicle body 2 reaches the second row RT2. The height changing control unit 15C compares the height H3 of the crop SM2 in the second row RT2 detected by the first detector 70 with the height H2 of the vehicle body 2 detected by the third detector 77 (S3). The height changing control unit 15C changes the height H2 by actuating the height changing mechanism 90 based on the comparison result such that the height H2 of the vehicle body 2 is higher than or equal to the height H3 of the crop SM2.

When the comparison result is H2 < H3 (No in S4), the distance changing mechanism 80 changes the height H2 to achieve H2 ≥ H3 (H2 = H3 or H2 > H3) (S5). Specifically, the height H2 is changed by extending the rod 91a of the lifting cylinder 91. The height changing mechanism 90 changes the height H2 while the vehicle body 2 which has finished traveling along the first row RT1 is turning to start traveling along the second row RT2. However, the height changing mechanism 90 may change the height H2 not during turning, but while the vehicle body 2 is traveling straight before turning or after turning. When the comparison result is H2 ≥ H3 (Yes in S4), the height changing mechanism 90 does not change the height H2 (S6). In a state where the height H2 is changed (S5) or a state where the height H2 is not changed (S6), the working vehicle 1 travels toward the crop, and the vehicle body 2 reaches an area above the crop SM2 (S7).

Even if the height H3 of the crop SM2 is higher than the height H2 of the vehicle body 2, when the vehicle body 2 of the working vehicle 1 reaches an area above the crop SM2, H2 ≥ H3 is satisfied by the above-described control operation. Thus, the working vehicle 1 can perform the work on the crop SM2 while avoiding contact of the vehicle body 2 with the crop SM2.

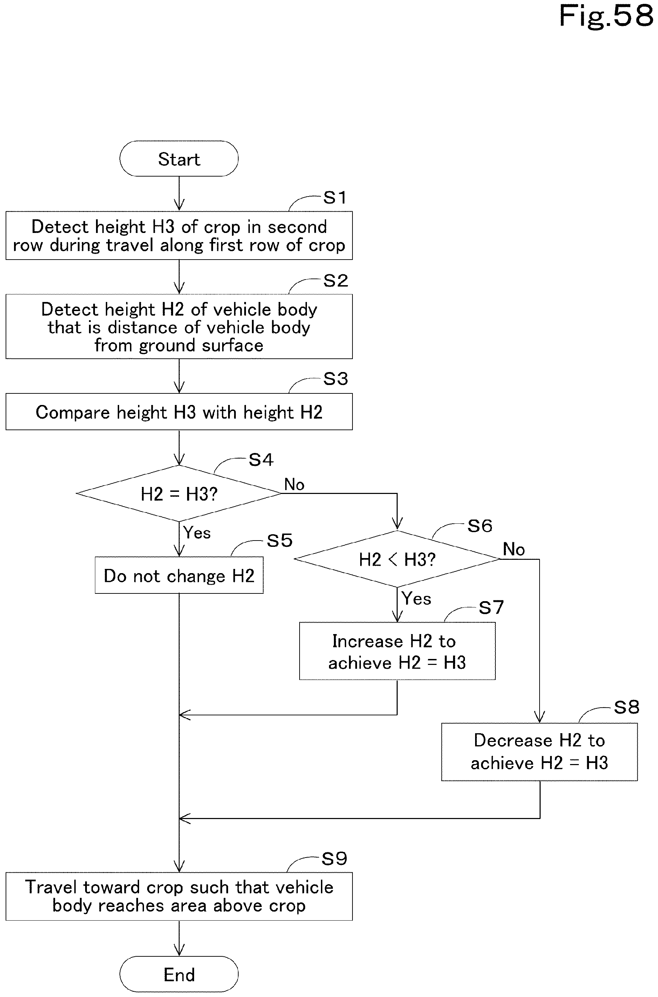

FIG. 58 is a flowchart illustrating a variation of the second example. In the variation, the first step (S1) to the third step (S3) of the operation of the height changing mechanism 90 are the same as the operation in the second example, and the fourth step (S4) and subsequent steps are different from the operation in the second example.

In the fourth step (S4), the height changing control unit 15C determines whether the height H3 of the crop SM2 is the same as the height H2 of the vehicle body 2 (S4). When H2 = H3 (Yes in S4), the height changing mechanism 90 does not change the height H2 (S5). When H2 = H3 is not the case (No in S4), the height changing mechanism 90 determines whether H2 < H3 (S6). When H2 < H3 (Yes in S6), the height changing mechanism 90 changes (increases) the height H2 to achieve H2 = H3 (S7). Specifically, the height H2 is changed to increase the height of the vehicle body 2 by extending the rod 91a of the lifting cylinder 91. When H2 > H3 (No in S6), the height changing mechanism 90 changes (decreases) the height H2 to achieve H2 = H3 (S8). Specifically, the height H2 is changed to decrease the height of the vehicle body 2 by retracting the rod 91a of the lifting cylinder 91. In a state where the height H2 is changed (increased or decreased) (S7, S8) or a state where the height H2 is not changed (S5), the working vehicle 1 travels toward the crop, and the vehicle body 2 reaches an area above the crop SM2 (S9).

Even if the height H3 of the crop SM2 is higher or lower than the height H2 of the vehicle body 2, when the vehicle body 2 of the working vehicle 1 reaches an area above the crop SM2, H2 = H3 is satisfied by the above-described control operation. Thus, the working vehicle 1 can perform the work while traveling in a state where the height H2 of the vehicle body 2 is not too high and not too low, that is, at an appropriate height with respect to the height H3 of the crop SM2. Thus, the working vehicle 1 can successfully perform the work on the crop SM2.

As described above, the height H2 corresponding to the height of the crop SM can be changed by actuating the height changing mechanism 90 to change the height H2 of the vehicle body 2 based on detection results from the first detector 70 and the third detector 77. Thus, even if the height of the crop SM is high, when the working vehicle 1 travels with the crop SM located between the left traveling device 3L and the right traveling device 3R, the working vehicle 1 can travel while avoiding contact of the vehicle body 2 with the crop (see FIG. 54).

When the height of the vehicle body 2 is changed to be the same as the height of the crop SM (see FIG. 56 and FIG. 58), the working vehicle 1 can perform the work while traveling in a state where the height H2 of the vehicle body 2 is at an appropriate height with respect to the height H1 or H3 of the crop. Thus, the working vehicle 1 can successfully perform the work on the crop while avoiding contact of the vehicle body 2 with the crop.

The above-described operation in the first example (including the variation) and operation in the second example (including the variation) can be combined and performed. In this case, when the vehicle body 2 travels along the first row RT1 of the crop, as in the first example, the control operation illustrated in FIG. 55 (or FIG. 56) is performed. Specifically, before the vehicle body 2 reaches the crop, the first detector 70 detects the height H1 of the crop in the first row RT1 in front of the vehicle body 2 in the travel direction, and the third detector 77 detects the height H2 of the vehicle body 2 that is the distance of the vehicle body 2 from the ground surface. Next, the height changing control unit 15C compares the height H1 with the height H2, and changes the height H2 by actuating the height changing mechanism 90 based on the comparison result such that the height H2 is higher than or equal to the height H1 of the crop (or the same as the height H1). Subsequently, the working vehicle 1 travels along the first row RT1.

Next, when the vehicle body 2 travels along the first row RT1, as in the second example, the operation illustrated in FIG. 57 (or FIG. 58) is performed. Specifically, the first detector 70 detects the height H3 of the crop SM in the second row RT2 adjacent to the first row RT1, and the third detector 77 detects the height H2 of the vehicle body 2 that is the distance of the vehicle body 2 from the ground surface. Next, the height changing control unit 15C compares the height H3 with the height H2, and changes the height H2 by actuating the height changing mechanism 90 based on the comparison result such that the height H2 is higher than or equal to the height H3 (or the same as the height H3). Subsequently, the working vehicle 1 travels along the second row RT2.

When there are three or more rows of the crop, it is only necessary to repeat the above-described operation. Specifically, when the vehicle body 2 travels along the second row, it is only necessary to detect the height of the crop SM in the third row adjacent to the second row, compare the height with the height H2 of the vehicle body 2 that is the distance of the vehicle body 2 from the ground surface, and change the height H2 by actuating the height changing mechanism 90 based on the comparison result.

The height changing control unit 15C may change the height of the vehicle body 2 by driving the height changing mechanism 90 before the working vehicle 1 starts to work or while the working vehicle 1 is working. The height of the vehicle body 2 can be changed (finely adjusted) according to the situation of the work by changing the height of the vehicle body 2 while the working vehicle 1 is working.

As illustrated in FIG. 7, the working vehicle 1 includes a position changing mechanism 110. The position changing mechanism 110 changes the position of the power supply apparatus 4. In the present embodiment, the position changing mechanism 110 changes the position of the power supply apparatus 4 with respect to the vehicle body 2. Specifically, the position changing mechanism 110 changes the position of the battery 7 with respect to the vehicle body 2. However, the position changing mechanism 110 may change the position of the power supply apparatus 4 other than the battery 7 rather than the position of the battery 7. The power supply apparatus 4 different from the battery 7, moved by the position changing mechanism 110 includes, e.g., the motor 5, an engine and fuel cells which serve as a substitute for the motor 5.

In the following description, it is assumed that the position changing mechanism 110 changes the position of the battery 7 with respect to the vehicle body 2. The position changing mechanism 110 changes the position of the battery 7 with respect to the vehicle body 2 in the front-rear direction or the lateral direction. In the present embodiment, the position changing mechanism 110 changes the position of the battery 7 with respect to the vehicle body 2 in the front-rear direction.

In the present embodiment, the positional relationship (the positional relationship in the travel direction of the power supply apparatus 4) between the vehicle body 2 and the traveling device 3 is constant (stationary). Thus, the position changing mechanism 110 may be regarded as a mechanism that changes the position of the power supply apparatus 4 with respect to the traveling device 3.

As described above, the battery 7 which is part of the power supply apparatus 4 is housed in the housing frame 2 that constitutes the vehicle body 2. The position changing mechanism 110 changes the position of the battery 7 (power supply apparatus) in the housing frame 2. In other words, the position changing mechanism 110 changes the position of the battery 7 (power supply apparatus) in the vehicle body 2.

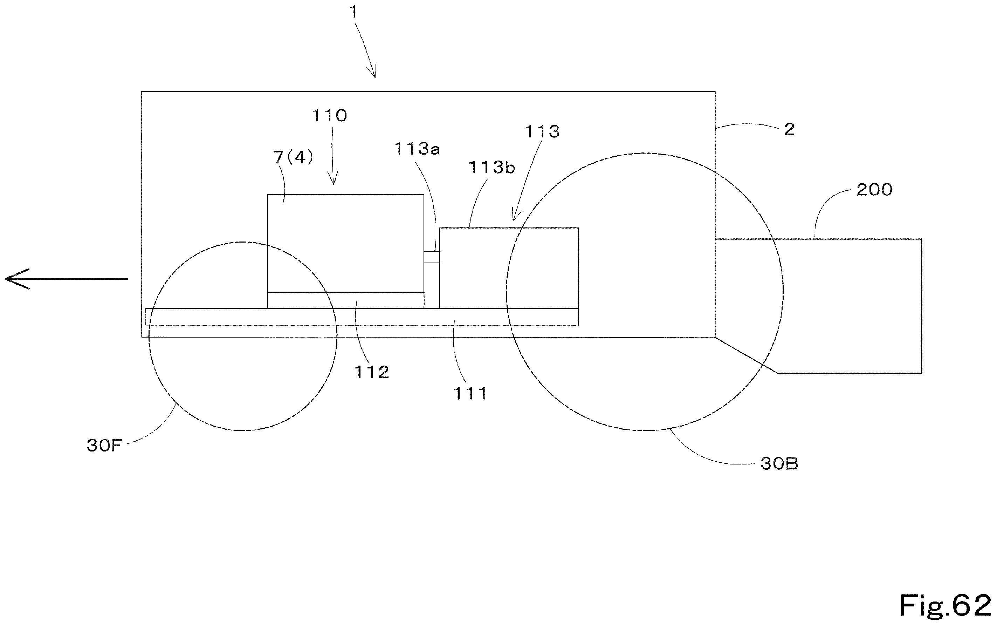

As illustrated in FIG. 62, the position changing mechanism 110 includes a guide rail 111, a slide member 112 and a cylinder 113. Note that the working vehicle 1 is illustrated in a simplified manner in FIG. 62 to facilitate the understanding of the position changing mechanism 110.

The guide rail 111 is fixed to the housing frame (vehicle body) 2, and extends in the front-rear direction. The slide member 112 is located on the guide rail 111, and movable along the guide rail 111 in the front-rear direction. The battery 7 is fixed to the slide member 112. The battery 7 is movable along the guide rail 111 in the front-rear direction with the movement of the slide member 112.

The cylinder 113 includes a hydraulic cylinder. The cylinder 113 includes an extendable and retractable rod 113a, and a cylinder tube 113b. The cylinder tube 113b is fixed to the housing frame 2. The distal end of the rod 113a is attached to the battery 7 or the slide member 112. The slide member 112 moves in the front-rear direction along the guide rail 111 with extension and retraction of the rod 113a. Thus, the battery 7 also moves in the front-rear direction along the guide rail 111 (see FIG. 62, FIG. 63, and FIG. 64).

Note that the position changing mechanism 110 may adopt a configuration in which the position of the battery 7 (power supply apparatus) is changed with the housing frame 2, instead of a configuration in which the position of the battery 7 (power supply apparatus) is changed in the housing frame 2. In this case, it is only necessary to fix the guide rail 111 to the frame structure 18 (see FIG. 8), and attach the housing frame 2 which houses the battery 7 to the slide member 112.

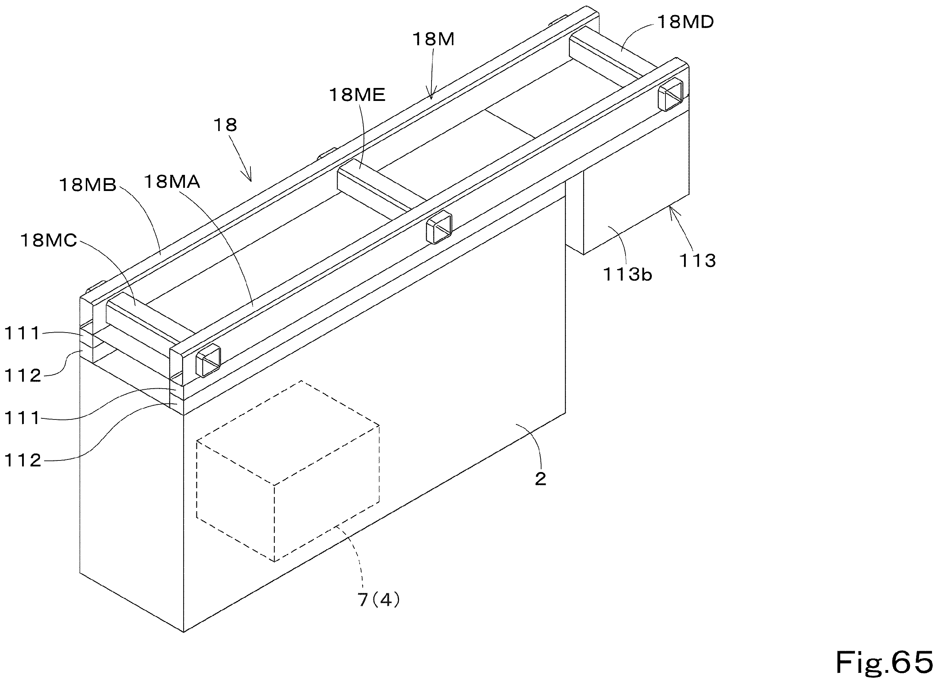

Specifically, for example, as illustrated in FIG. 65, the guide rail 111 is fixed to each of a frame member 18MA and a frame member 18MB of the lateral frame 18M of the frame structure 18, and the housing frame 2 is attached to the slide member 112 which is movable along the guide rail 111. The cylinder tube 113b of the cylinder 113 is fixed to the lateral frame 18M.

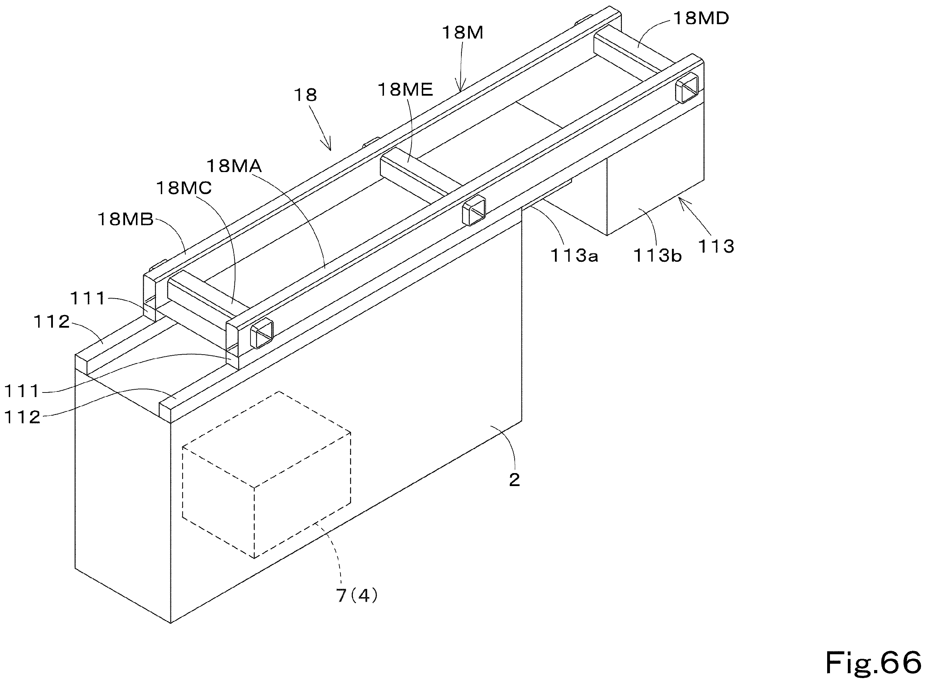

Thus, when the rod 113a of the cylinder 113 extends or retracts, the housing frame 2 moves with the slide member 112 in the front-rear direction along the guide rail 111, and the battery 7 housed in the housing frame 2 also moves in the front-rear direction along the guide rail 111 (see FIG. 65 and FIG. 66). In this manner, when the housing frame 2 moves in the front-rear direction, the position of the housing frame 2 with respect to the traveling device 3 in the front-rear direction changes.

In the above-described embodiment, the housing frame 2 constitutes the entirety of the vehicle body 2; however, the housing frame 2 may constitute part of the vehicle body 2. Thus, the configuration in which the position of the power supply apparatus 4 is changed with the housing frame 2 may be a configuration in which the position of the power supply apparatus 4 is changed with the position of the housing frame which is the entirety of the vehicle body 2, or may be a configuration in which the position of the power supply apparatus 4 is changed with the position of the housing frame which is part of the vehicle body 2. In either configuration, the positions of the housing frame 2 and the power supply apparatus 4 with respect to the traveling device 3 are changed.

In a configuration in which the position of the power supply apparatus 4 is changed with the housing frame which is part of the vehicle body 2 (that is, when the housing frame is part of the vehicle body 2), the position changing mechanism 110 moves the housing frame which is part of the vehicle body 2 with respect to the vehicle body 2. In this case, the housing frame may be any frame that houses at least the power supply apparatus 4 (such as the battery 7).

The operation of the position changing mechanism 110 is controlled by the controller 15. As illustrated in FIG. 7, the controller 15 includes the position changing control unit 15D. Hereinafter, two embodiments of the position changing control unit 15D will be described. The following two embodiments are examples in which the power supply apparatus 4 is the battery 7, but the power supply apparatus 4 is not limited to the battery 7, and may be a motor, an engine, fuel cells or the like. Thus, the description of the following two embodiments holds even if the battery 7 is replaced by the power supply apparatus 4.

First, the position changing control unit 15D in a first embodiment will be described. The position changing control unit 15D in the first embodiment changes the position of the power supply apparatus 4 by actuating the position changing mechanism 110 based on the slip ratio of the wheels 30 at the time of travel of the working vehicle 1.

In the first embodiment, the working vehicle 1 includes a slip ratio measurer 120 to measure the slip ratio of the wheels 30 at the time of travel (see FIG. 7). The slip ratio measurer 120 calculates the slip ratio by the Expression, "the slip ratio = (Vb - Vw)/Vb where Vb is the vehicle body speed, and Vw is the wheel speed (circumferential speed of the wheels)" ... (1)

Specifically, the slip ratio measurer 120 calculates the slip ratio of the rear wheels by the Expression, "the slip ratio = (Vb - Vr)/Vb where Vb is the vehicle body speed, and Vr is the rear wheel speed (circumferential speed of the rear wheels)" ... (2)
The slip ratio measurer 120 calculates the slip ratio of the front wheels by the Expression, "the slip ratio = (Vb - Vf)/Vb where Vb is the vehicle body speed, and Vf is the front wheel speed (circumferential speed of the front wheels)" ... (3)

When the driving wheels of the working vehicle 1 are the rear wheels, the slip ratio measurer 120 calculates the slip ratio using the above Expression (2). When the driving wheels of the working vehicle 1 are the front wheels, the slip ratio measurer 120 calculates the slip ratio using the above Expression (3).

The position changing control unit 15D changes the position of the battery 7 by actuating the position changing mechanism 110 based on the slip ratio of the wheels 30 measured by the slip ratio measurer 120 at the time of travel of the working vehicle 1. Specifically, the position changing control unit 15D changes the position of the battery 7 by extending or retracting the rod 113a by actuating the cylinder 113 of the position changing mechanism 110.

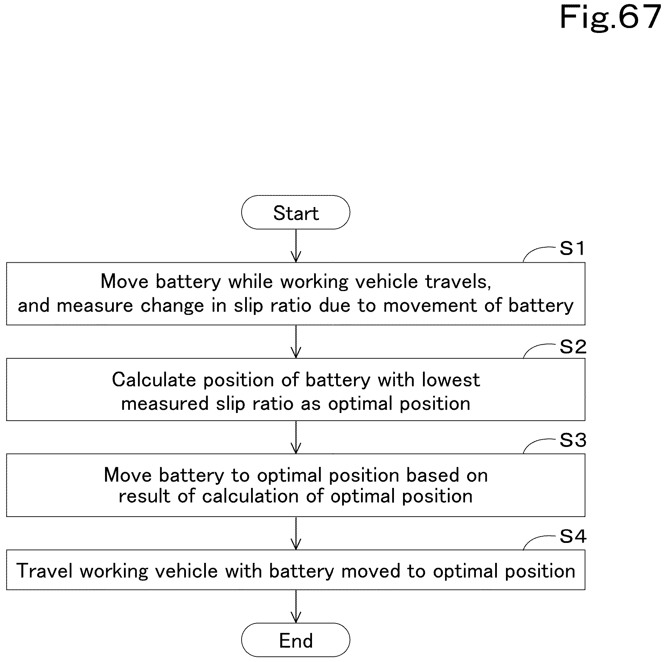

FIG. 67 is a flowchart illustrating an example of the control operation of the position changing control unit 15D in the first embodiment. Hereinafter, an example of the control operation performed by the position changing control unit 15D in the first embodiment will be described based on FIG. 67.

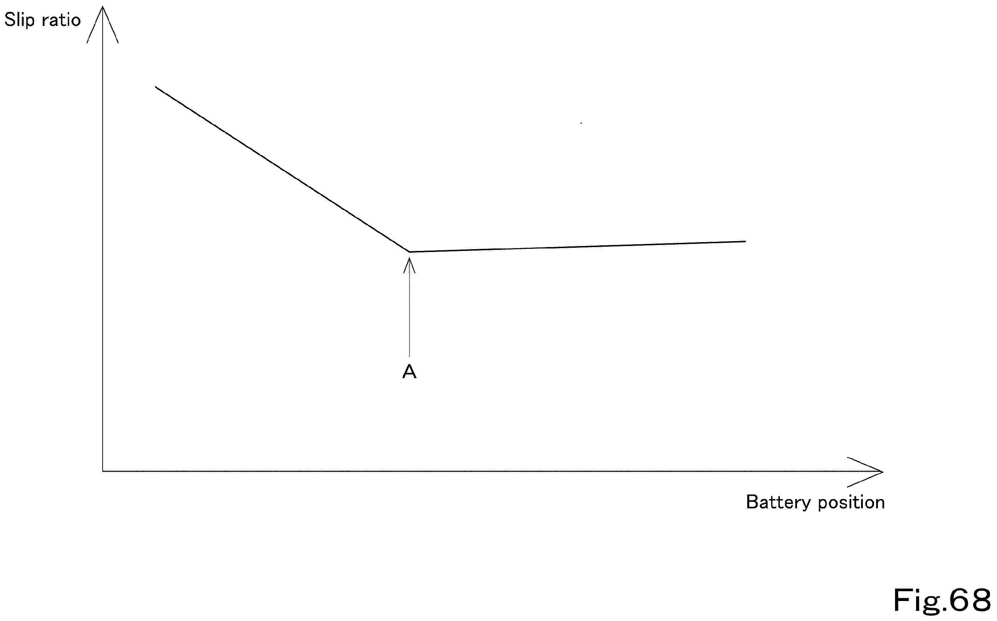

First, the position changing control unit 15D drives the position changing mechanism 110 to move the battery 7 (see FIG. 62 to FIG. 64) while the working vehicle 1 is traveling, and measures the change in the slip ratio due to the movement of the battery 7 by the slip ratio measurer 120 (S1). The graph in FIG. 68 illustrates an example of a change in the slip ratio measured by the slip ratio measurer 120. The horizontal axis of the graph in FIG. 68 indicates the front-rear position (position in the front-rear direction) of the battery 7, the left side of the horizontal axis indicates forward, and the right side of the horizontal axis indicates rearward.

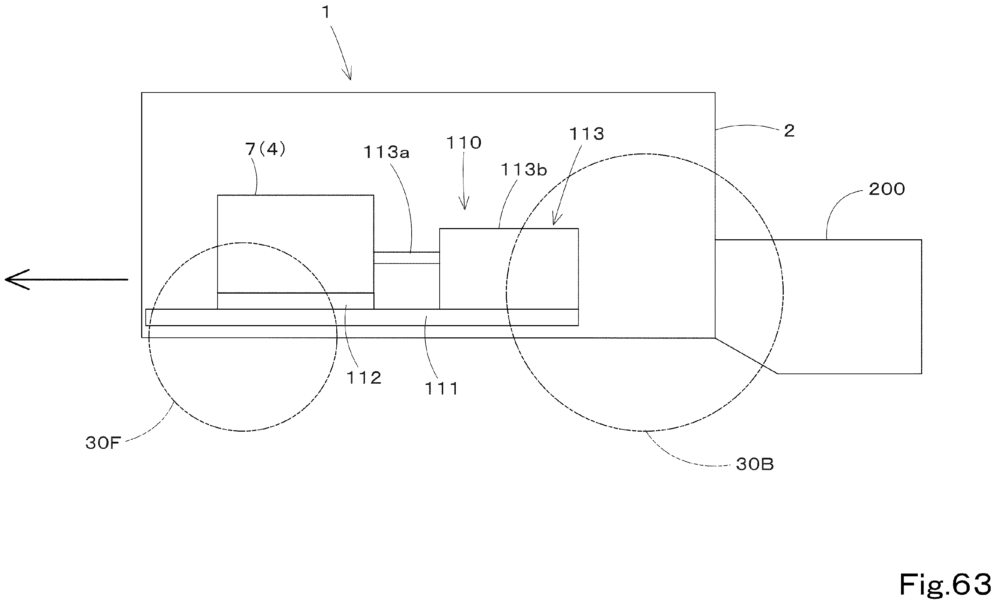

Subsequently, the position changing control unit 15D calculates, as the optimal position, the position of the battery 7 where the slip ratio measured by the slip ratio measurer 120 is the lowest (S2). In the graph in FIG. 68, the slip ratio is the lowest at point A. Thus, the position changing control unit 15D calculates, as the optimal position of the battery 7, the front-rear position of the battery 7 corresponding to the point A. The optimal position of the battery 7 is the position (the optimal center of gravity position) at which the center of gravity of the vehicle body 2 is optimal. Subsequently, the position changing control unit 15D moves the battery 7 to the optimal position (see FIG. 63) by actuating the position changing mechanism 110 based on the result of the calculation of the optimal position (S3). Subsequently, the working vehicle 1 travels with the battery 7 moved to the optimal position (S4).

Thus, the working vehicle 1 can travel stably in a state where the wheels are unlikely to slip. In addition, it is possible to improve the working power when the work is performed with a working device (implement) attached to the mount 10. In the working vehicle 1, the center of gravity position changes due to attachment or detachment of a working device to or from the mount 10 provided at a rear portion of the vehicle body 2, and thus the weight balance changes. In this situation, the weight balance can be normalized by moving the battery 7 by driving the position changing mechanism 110 using the position changing control unit 15D. For example, when a working device is attached to the mount 10 provided at a rear portion of the vehicle body 2, the weight balance of the working vehicle 1 is normalized by moving the battery 7 forward, and thus the working power can be improved.

Note that the position changing control unit 15D calculates the center of gravity position of the vehicle body 2 based on the front-rear position of the battery 7, and may perform the control operation using the front-rear position of the center of gravity of the vehicle body 2 instead of using the front-rear position of the battery 7. In this case, the horizontal axis of the graph in FIG. 68 indicates the front-rear position of the center of gravity of the vehicle body 2. The control operation in this case is given by replacing the "front-rear position of the battery 7" in the above description with the "front-rear position of the center of gravity of the vehicle body 2".

Next, the position changing control unit 15D in a second embodiment will be described. The position changing control unit 15D in the second embodiment changes the position of the battery 7 by actuating the position changing mechanism 110 based on the torque of the wheels 30 at the time of travel of the working vehicle 1.

In the second embodiment, the working vehicle 1 includes a torque measurer 121 to measure the torque of the wheels 30 at the time of travel (see FIG. 7). The torque measurer 121 measures each of the torque of the front wheels 30F and the torque of the rear wheels 30B. The torque measurer 121 measures, e.g., the rotational torque of the motor 5 which drives the wheels 30 (the front wheels 30F and the rear wheels 30B). The torque measurer 121 calculates the measured rotational torque of the motor 5 as the torque of the wheels 30 (the front wheels 30F and the rear wheels 30B).

As described above, the motor 5 includes the motor 5LF to drive the left front wheel 3LF, the motor 5RF to drive the right front wheel 3RF, the motor 5LB to drive the left rear wheel 3LB, and the motor 5RB to drive the right rear wheel 3RB. When the torque measurer 121 measures the rotational torque of the motor 5 which drives the wheels 30, the torque measurer 121 measures the rotational torque of each of four motors (the motor 5LF, the motor 5RF, the motor 5LB, and the motor 5RB). The torque measurer 121 then calculates, as the torque of the front wheels 30F, the average value or the total value of the rotational torques of the motor 5LF and the motor 5RF. Also, the torque measurer 121 calculates, as the torque of the rear wheels 30B, the average value or the total value of the rotational torques of the motor 5LB and the motor 5RB.

The position changing control unit 15D changes the position of the battery 7 by actuating the position changing mechanism 110 based on the torque of the wheels 30 measured by the torque measurer 121 at the time of travel of the working vehicle 1. Specifically, the position changing control unit 15D changes the position of the battery 7 by extending or retracting the rod 113a by actuating the cylinder 113 of the position changing mechanism 110. Specifically, the position changing control unit 15D moves the battery 7 forward when the torque of the rear wheels 30B is less than or equal to a predetermined value, and moves the battery 7 rearward when the torque of the front wheels 30F is less than or equal to a predetermined value.

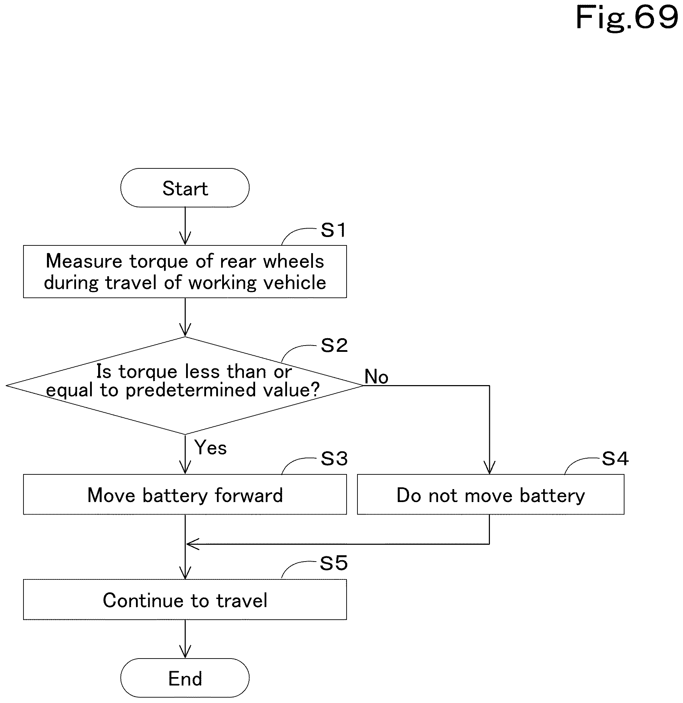

FIG. 69 is a flowchart illustrating an example of the control operation of the position changing control unit 15D in the second embodiment. Hereinafter, an example of the control operation performed by the position changing control unit 15D in the second embodiment will be described based on FIG. 69. Here, the case where the rear wheels are caught in mud or mire and get stuck during travel of the working vehicle 1 will be described as an example. Note that "get stuck" means that the wheels are caught in mud or mire, and the working vehicle becomes immobile.

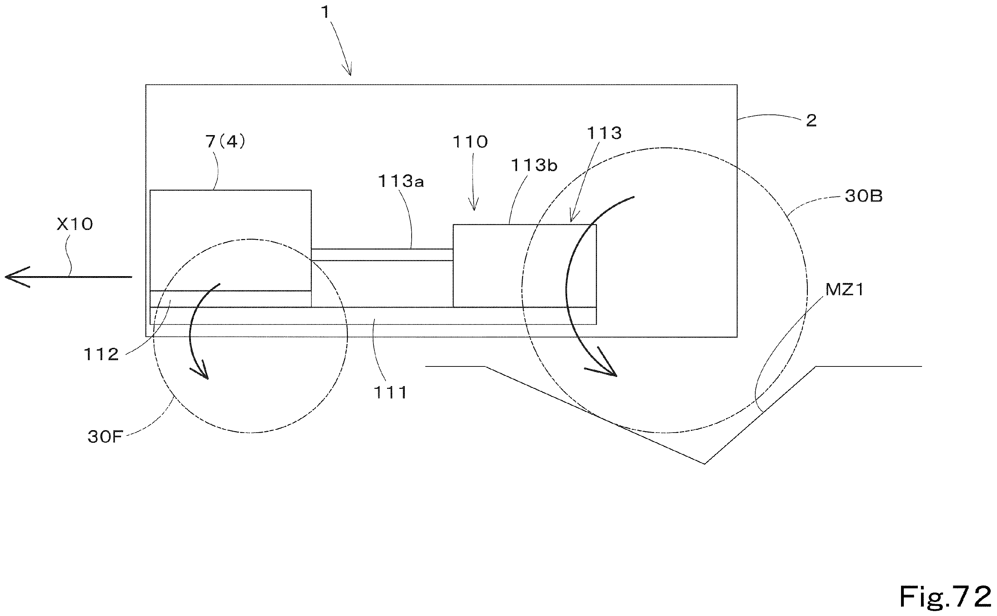

During travel of the working vehicle 1, the torque measurer 121 measures the torque of the rear wheels 30B (S1). The position changing control unit 15D determines whether the torque of the rear wheels 30B measured by the torque measurer 121 is less than or equal to a predetermined value (S2). When the torque of the rear wheels 30B is determined to be less than or equal to a predetermined value (Yes in S2), the position changing control unit 15D moves the battery 7 forward by actuating the position changing mechanism 110 (S3) (see FIG. 72).

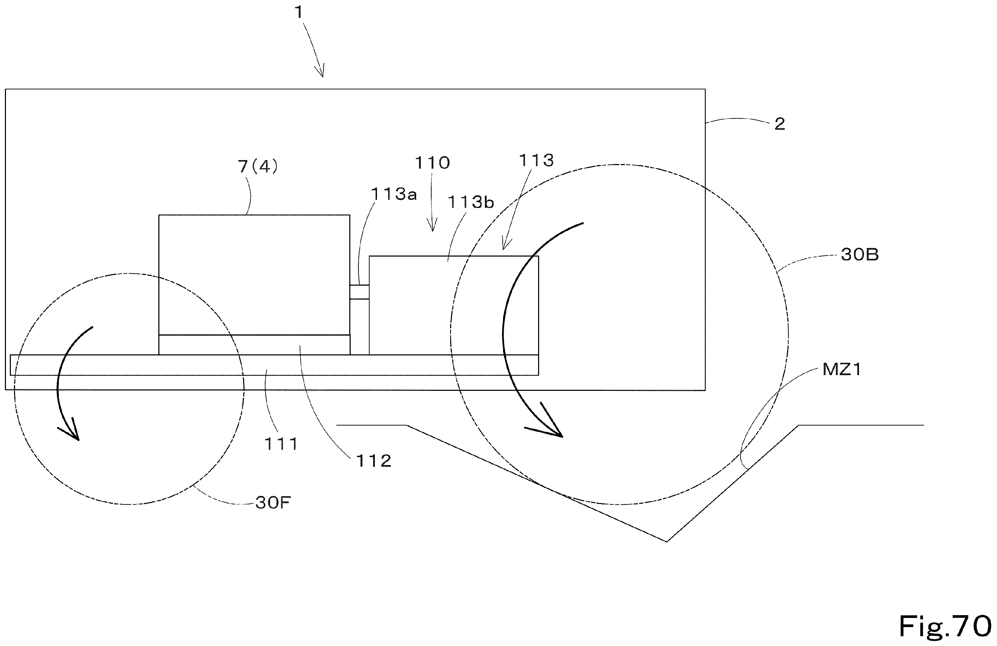

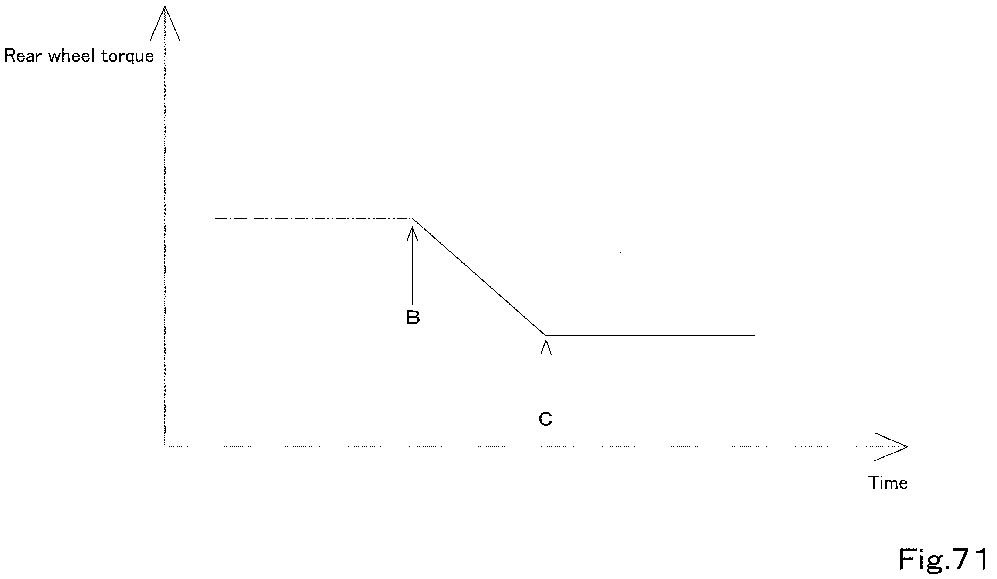

The situation where the torque of the rear wheels 30B is less than or equal to a predetermined value occurs when the rear wheels 30B are caught in a groove MZ1 and the working vehicle 1 gets stuck (see FIG. 70). The graph in FIG. 71 illustrates an example of a change in the torque measured by the torque measurer 121. In the graph in FIG. 71 at and after time B, the torque of the rear wheels suddenly drops, and at and after time C, the torque of the rear wheels 30B has a substantially constant low value. From this observation, it is seen that at and after time C, the rear wheels 30B are spinning, in other words, the working vehicle 1 has got stuck.

When the battery 7 is moved forward by actuating the position changing mechanism 110 (S3), the center of gravity position of the working vehicle 1 moves forward. Consequently, the working vehicle 1 can recover from the stuck state (the state where the rear wheels 30B are spinning), and thus can continue to travel (move forward) (S5) (see an arrow X10 in FIG. 72).

When it is determined that the torque of the rear wheels 30B exceeds a predetermined value (No in S2), the position changing control unit 15D does not actuate the position changing mechanism 110, and thus does not move the battery 7 (S4). When the torque of the rear wheels 30B exceeds a predetermined value, the working vehicle 1 is not in a stuck state (the rear wheels are not spinning), and thus can continue to travel (move forward) without actuating (moving the battery 7) the position changing mechanism 110 to move the center of gravity (S5).

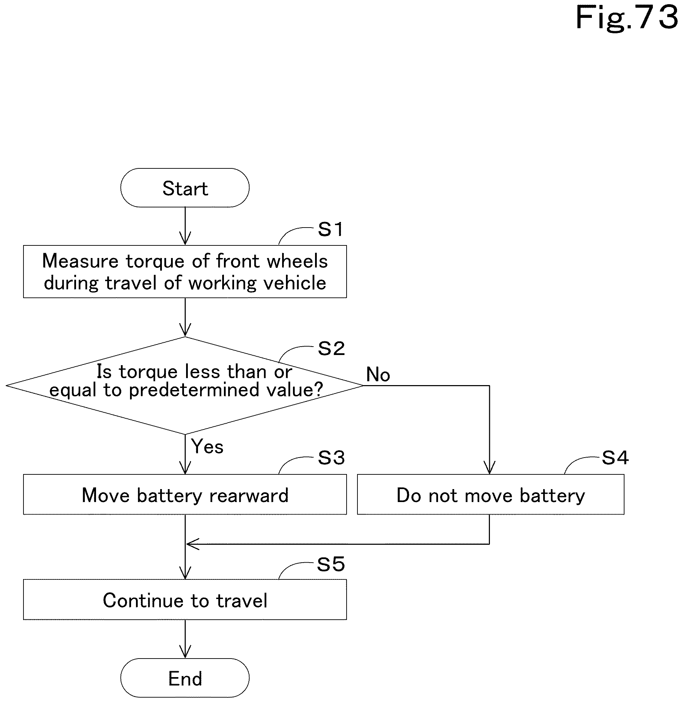

FIG. 73 is a flowchart illustrating an example of the control operation of the position changing control unit 15D when the front wheels get stuck in mud or mire during travel of the working vehicle 1. That is, FIG. 69 illustrates the case where the working vehicle 1 gets stuck due to spinning of the rear wheels, and FIG. 73 illustrates the case where the working vehicle 1 gets stuck due to spinning of the front wheels.

During travel of the working vehicle 1, the torque measurer 121 measures the torque of the front wheels (S1). The position changing control unit 15D determines whether the torque of the front wheels measured by the torque measurer 121 is less than or equal to a predetermined value (S2). The situation where the torque of the front wheels is less than or equal to a predetermined value occurs when the front wheels are caught in a groove and the working vehicle 1 gets stuck. When the torque of the front wheels is determined to be less than or equal to a predetermined value (Yes in S2), the battery 7 is moved rearward by actuating the position changing mechanism 110 (S3).

When the battery 7 is moved rearward by actuating the position changing mechanism 110 (S3), the center of gravity position of the working vehicle 1 moves rearward. Thus, the working vehicle 1 can recover from the stuck state (the state where the front wheels are spinning), and thus can continue to travel (S5).

When it is determined that the torque of the front wheels exceeds a predetermined value (No in S2), the position changing control unit 15D does not actuate the position changing mechanism 110, and thus does not move the battery 7 (S4). When the torque of the front wheels exceeds a predetermined value, the working vehicle 1 is not in a stuck state (the front wheels are not spinning), and thus can continue to travel without actuating (moving the battery 7) the position changing mechanism 110 to move the center of gravity (S5).

When an unmanned working vehicle 1 gets stuck while traveling to perform the work, the work may be stopped for a long time. However, as described above, when the torque of the wheels (front wheels or rear wheels) is less than or equal to a predetermined value, the position changing control unit 15D can eliminate a stuck state of the working vehicle 1 in which the wheels (front wheels or rear wheels) are spinning, by moving the battery 7 forward or rearward by actuating the position changing mechanism 110, and thus the work can be prevented from being stopped for a long time.

As described above, the weight balance of the working vehicle 1 can be adjusted by driving the position changing mechanism 110 to change the position of the power supply apparatus 4 by the position changing control unit 15D. Thus, the weight balance of the working vehicle 1 can be adjusted without using a weight (counterweight) to adjust the weight balance of the working vehicle 1. Thus, the working vehicle 1 including the position changing mechanism 110 does not need to be equipped with a weight to adjust the weight balance of the working vehicle 1. However, the working vehicle 1 may be equipped with a weight. In this case, the weight can be miniaturized.

The situation where the weight balance of the working vehicle 1 is adjusted by driving the position changing mechanism 110 to change the position of the power supply apparatus 4 by the position changing control unit 15D, includes when the wheels (front wheels or rear wheels) are caught in a groove, and the working vehicle 1 gets stuck as mentioned above, when a working device is attached or detached, and additionally when the soil on which the working vehicle 1 travels has changed. For example, when the working vehicle 1 travels on a paved public road and enters an agricultural field, the soil on which the working vehicle 1 travels changes. In this case, even if the soil changes, stable travel can be continued by adjusting the weight balance of the working vehicle 1 by changing the position of the power supply apparatus 4.

The above-described control operation performed by the position changing control unit 15D is to change the front-rear position of the power supply apparatus 4 (battery 7) with respect to the vehicle body 2 by the position changing mechanism 110. However, the control operation performed by the position changing control unit 15D may be to change the position of the power supply apparatus 4 (battery 7) with respect to the vehicle body 2 in the lateral direction by the position changing mechanism 110.

When a configuration is adopted in which the position changing mechanism 110 changes the position of the power supply apparatus 4 (battery 7) with respect to the vehicle body 2 in the lateral direction, it is sufficient that the guide rail 111 be located to extend in the lateral direction, the extension and retraction direction of the rod 113a of the cylinder 113 be set to the lateral direction, and thus the slide member 112 be allowed to be movable in the lateral direction.

According to the configuration in which the position changing mechanism 110 changes the position of the power supply apparatus 4 (battery 7) with respect to the vehicle body 2 in the lateral direction, for example, when the heights of the right and left sides of the vehicle body 2 are different on an inclined ground, the vehicle body 2 can be stabilized by changing the position of the power supply apparatus 4 with respect to the vehicle body 2 in the lateral direction.

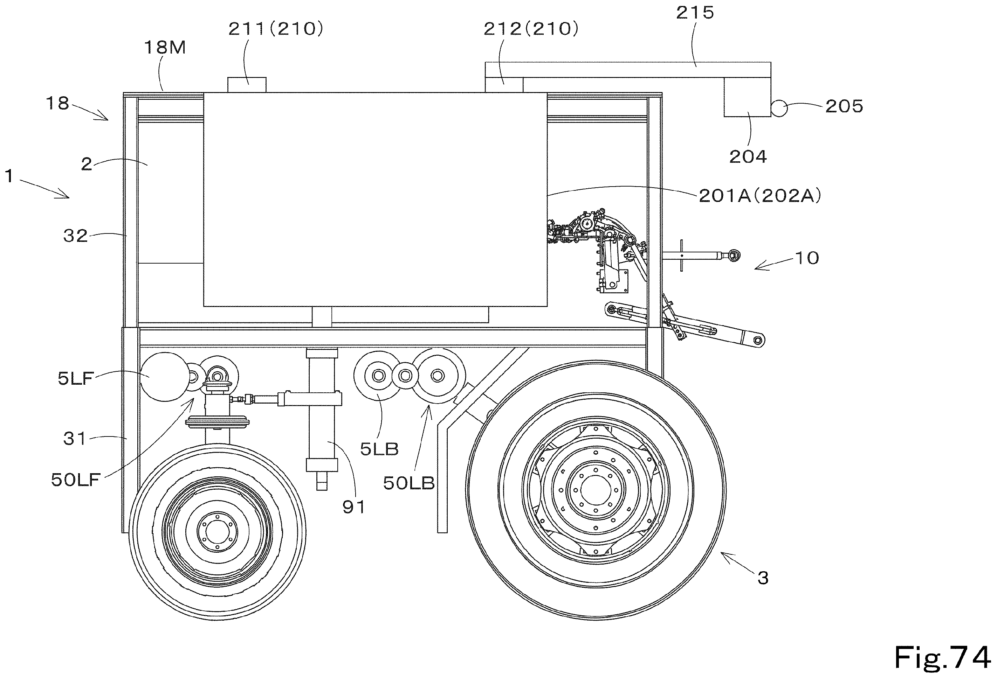

FIG. 74 and FIG. 75 illustrate still another embodiment (embodiment A2) of the working vehicle 1. The working vehicle 1 includes the vehicle body 2, the traveling device 3 to support the vehicle body 2 such that the vehicle body 2 is allowed to travel, and a working device (implement) 200 to perform the work. The configuration of the vehicle body 2 and the traveling device 3 is as described above. As described above, the working device 200 is a device that performs various types of work such as agricultural work.

As illustrated in FIG. 75, pieces of equipment 201 included in the working device 200 are located at opposite sides of the vehicle body 2 from each other. Hereinafter, one piece of equipment 201 located at one of the opposite sides of the vehicle body 2 is referred to as a first piece of equipment 201A, and one piece of equipment 201 located at the other of the opposite sides of the vehicle body 2 is referred to as a second piece of equipment 201B.

In the present embodiment, the pieces of equipment 201 included in the working device 200 are located leftward Y1 and rightward Y2 at opposite sides of the vehicle body 2 from each other. Specifically, the first piece of equipment 201A is located leftward Y1, and the second piece of equipment 201B is located rightward Y2. However, the pieces of equipment 201 included in the working device 200 may be located forward and rearward at opposite sides of the vehicle body 2 from each other. In this case, the first piece of equipment 201A is located forward, and the second piece of equipment 201B is located rearward.

The pieces of equipment 201 included in the working device 200 may be located leftward and rightward as well as forward and rearward at opposite sides of the vehicle body 2 from each other. In this case, the pieces of equipment 201 may include a first piece of equipment, a second piece of equipment, a third piece of equipment, and a fourth piece of equipment. For example, the first piece of equipment is located leftward, the second piece of equipment is located rightward, the third piece of equipment is located forward, and the fourth piece of equipment is located rearward.

One (the first piece of equipment 201A) of the pieces of equipment located at opposite sides of the vehicle body 2, and the other (the second piece of equipment 201B) may have the same function, or may have different functions. For example, when both the first piece of equipment 201A and the second piece of equipment 201B are tanks to hold liquid, the first piece of equipment 201A and the second piece of equipment 201B have the same function (function of holding liquid). For example, when the first piece of equipment 201A is a tank to hold liquid, and the second piece of equipment 201B is a battery to store electricity, the first piece of equipment 201A and the second piece of equipment 201B have different functions (function of holding liquid and function to store electricity).

In the present embodiment, the working device 200 is a device (agricultural working device) that performs agricultural work. Specifically, the working device 200 is a spreader to spread a liquid substance such as a liquid agricultural chemical or a liquid fertilizer. However, the working device 200 is not limited to the spreader. The working device 200 may be an agricultural working device that performs work other than spreading on an agricultural field, or may be a machine that performs work other than agricultural work. Hereinafter, a description will be given assuming that the working device 200 is a spreader, and it is referred to as the "spreader 200".

In the present embodiment, the piece of equipment 201 included in the spreader 200 is a tank 202 to hold the liquid substance of the spreader 200. The tank 202 includes a first tank 202A located on one side (leftward) of the vehicle body 2, and a second tank 202B located on the other side (rightward) of the vehicle body 2. In other words, the first piece of equipment 201A is the first tank 202A, and the second piece of equipment 201B is the second tank 202B.

The spreader 200 includes a pump 204 and a boom 205. The pump 204 can be driven by the working motor 6 mounted on the vehicle body 2. The pump 204 and the boom 205, and the pump 204 and the tank 202 are each connected by a tube (not illustrated), such as a pipe or a hose, which allows the liquid substance to flow. Although not illustrated, the spreader 200 may have another configuration as appropriate necessary for spreading the liquid substance.

The pump 204 delivers, to the boom 205, the liquid substance stored in the first tank 202A and the second tank 202B. The boom 205 includes a left boom 205L and a right boom 205R. The left boom 205L extends leftward of the vehicle body 2. The right boom 205R extends rightward of the vehicle body 2. The boom 205 (the left boom 205L and the right boom 205R) extend in the lateral direction rearward of an upper portion of the vehicle body 2. The position (direction) of the left boom 205L and the right boom 205R may be changeable to a spread position extending in the horizontal direction (lateral direction), and a storage position extending upward.

The left boom 205L and the right boom 205R include multiple nozzles (not illustrated) arranged in a longitudinal direction. The liquid substance stored in the first tank 202A and the second tank 202B is delivered to the left boom 205L and the right boom 205R by driving the pump 204, and is sprayed downward through the nozzles of the left boom 205L and the right boom 205R.

As illustrated in FIG. 74 and FIG. 75, the working vehicle 1 includes the frame structure 18. As described above, the frame structure 18 includes the left frame 18L, the right frame 18R and the lateral frame 18M (see FIG. 8 and the like). The pieces of equipment 201 include the first piece of equipment 201A located leftward of the left frame 18L, and the second piece of equipment 201B located rightward of the right frame 18R. In the present embodiment, as the first piece of equipment 201A, the first tank 202A is located leftward of the left frame 18L, and as the second piece of equipment 201B, the second tank 202B is located rightward of the right frame 18R.

The working vehicle 1 includes a support frame 210 which supports the pieces of equipment 201 and is attachable and detachable to and from the vehicle body 2. The support frame 210 is located above the pieces of equipment 201. The support frame 210 extends in the lateral direction to be located across the first piece of equipment 201A and the second piece of equipment 201B. The first piece of equipment 201A is attached to a lower left portion of the support frame 210. The second piece of equipment 201B is attached to a lower right portion of the support frame 210. In other words, the support frame 210 extends in the lateral direction to connect an upper portion of the first piece of equipment 201A and an upper portion of the second piece of equipment 201B. Thus, the support frame 210 supports the pieces of equipment 201 (the first piece of equipment 201A and the second piece of equipment 201B) from above.

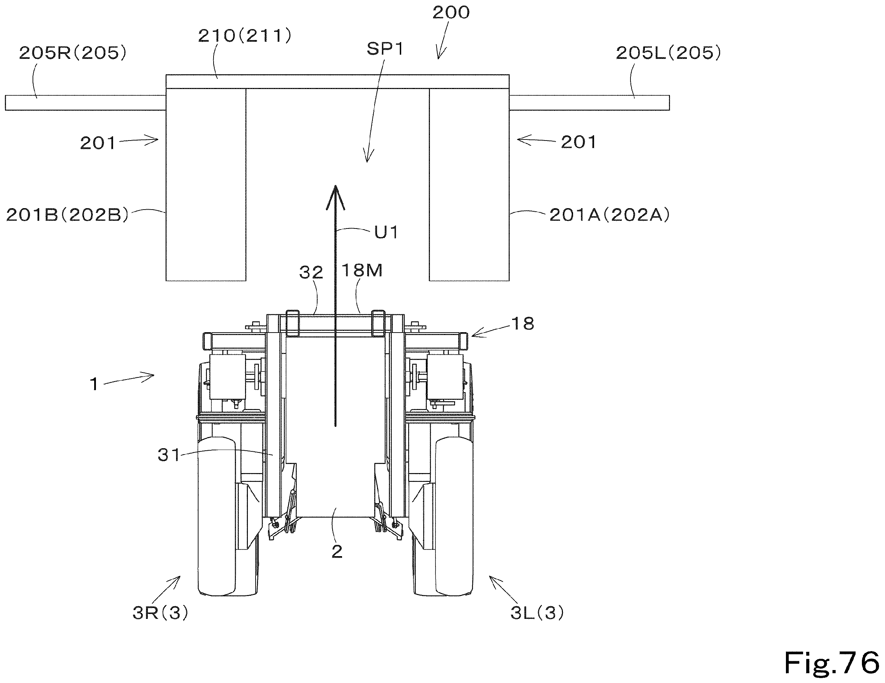

As illustrated in FIG. 75, the distance (distance in the lateral direction) between the first piece of equipment 201A and the second piece of equipment 201B attached to the support frame 210 is longer than the width (length in the lateral direction) of the vehicle body 2. Also, the distance between the first piece of equipment 201A and the second piece of equipment 201B attached to the support frame 210 is longer than the width (length in the lateral direction) of the frame structure 18. Thus, a space SP1 (see FIG. 76) is provided between the first piece of equipment 201A and the second piece of equipment 201B such that the vehicle body 2 and the frame structure 18 can be located in the space SP1. As illustrated in FIG. 75, with the spreader 200 attached to the vehicle body 2, the vehicle body 2 and the frame structure 18 are located in the space SP1.

As illustrated in FIG. 74 and FIG. 75, the support frame 210 includes a first support frame 211 and a second support frame 212. The first support frame 211 and the second support frame 212 are spaced apart in the front-rear direction and located in parallel to each other. The first support frame 211 is attached so as to connect a front upper portion of the first piece of equipment 201A and a front upper portion of the second piece of equipment 201B. The second support frame 212 is attached so as to connect a rear upper portion of the first piece of equipment 201A and a rear upper portion of the second piece of equipment 201B.

Note that the support frame 210 may include one support frame or more than two support frames instead of two support frames: the first support frame 211 and the second support frame 212. The support frame 210 may be any frame that can support the first piece of equipment 201A and the second piece of equipment 201B from above, and its specific shape is not limited to a particular one.

As illustrated in FIG. 74, the pump 204 is attached to the support frame 210. Specifically, the pump 204 is attached to a support member 215 which extends rearward from the second support frame 212. The pump 204 attached to the support member 215 is located rearward of an upper portion of the vehicle body 2. However, the pump 204 may be attached to another position of the working vehicle 1, such as the mount 10 (see FIG. 74).

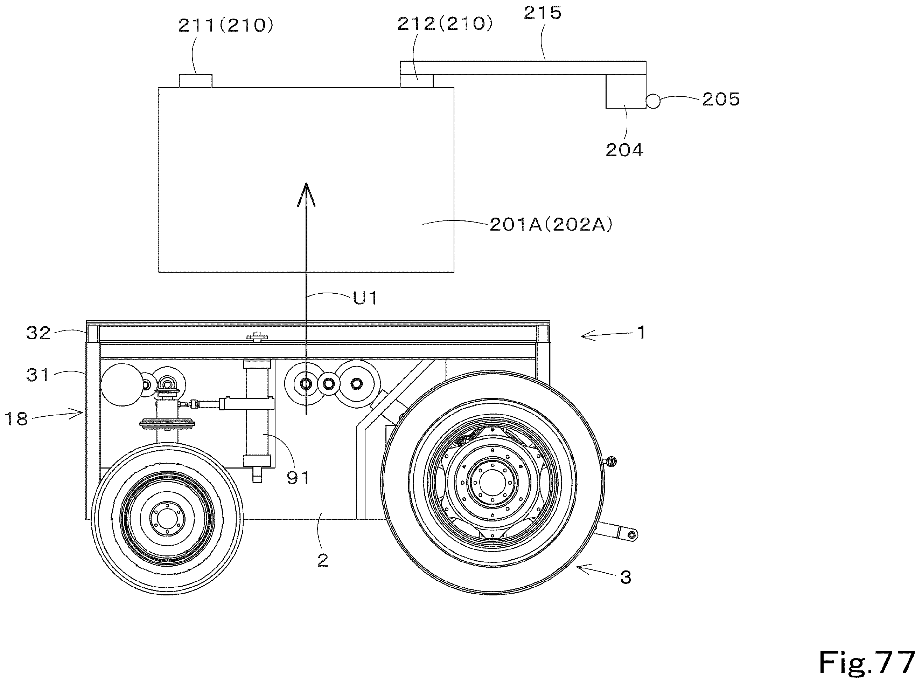

The support frame 210 is attached to the vehicle body 2 from above. Specifically, as illustrated in FIG. 76 and FIG. 77, the support frame 210 is attached to the vehicle body 2 by raising (see an arrow U1) the vehicle body 2 with the movable frame 32 by driving the lifting cylinder 91 of the height changing mechanism 90. Specifically, the support frame 210 is attached to the vehicle body 2 via the frame structure 18 by being placed upward of the frame structure 18.

When the support frame 210 is attached to the vehicle body 2, first, with the vehicle body 2 at a low position (for example, at the first height (the lower limit height)), the support frame 210 is located above the vehicle body 2 (see FIG. 76 and FIG. 77). In this situation, the vehicle body 2 is located between the first piece of equipment 201A and the second piece of equipment 201B in the lateral direction such that the first piece of equipment 201A and the second piece of equipment 201B overlap the vehicle body 2 in the front-rear direction. Next, the vehicle body 2 is raised to a high position (for example, at the second height (the upper limit height)) by driving the height changing mechanism 90 (see an arrow U1 in FIG. 76 and FIG. 77).

Thus, with the vehicle body 2 interposed between the first piece of equipment 201A and the second piece of equipment 201B, and the support frame 210 placed above the frame structure 18 (movable frame 32), the support frame 210 is attached to the vehicle body 2 (see FIG. 74 and FIG. 75).

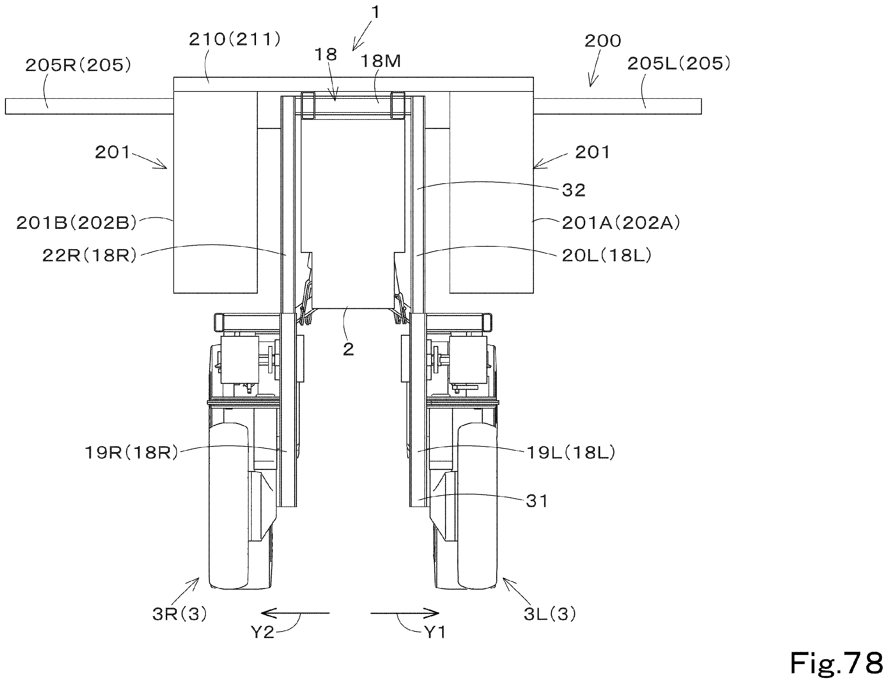

The working vehicle 1 in the embodiment (embodiment A2) illustrated in FIG. 74 to FIG. 77 adopts a configuration in which the height changing mechanism 90 is provided, but instead of the configuration, a configuration may be adopted in which the height changing mechanism 90 is not provided. FIG. 78 illustrates an embodiment (embodiment A3) in a configuration in which the working vehicle 1 is not provided with the height changing mechanism 90 (the lifting cylinder 91 and the like). The working vehicle 1 in the embodiment has a structure that allows the vehicle body 2 to be located above the traveling device 3 by the frame structure 18, and the first piece of equipment 201A and the second piece of equipment 201B are respectively located on both sides of the vehicle body 2.

In the working vehicle 1 in the embodiment, the vehicle body 2 is always at a high position (position above the traveling device 3). Thus, the pieces of equipment 201 can be located (attached) leftward and rightward (or forward and rearward) at opposite sides of the vehicle body 2 from each other without moving the vehicle body 2 upward. In the working vehicle 1 in the embodiment, the support frame 210 can be attached to the vehicle body 2 by raising the support frame 210 upward of the vehicle body 2, and lowering the support frame 210.

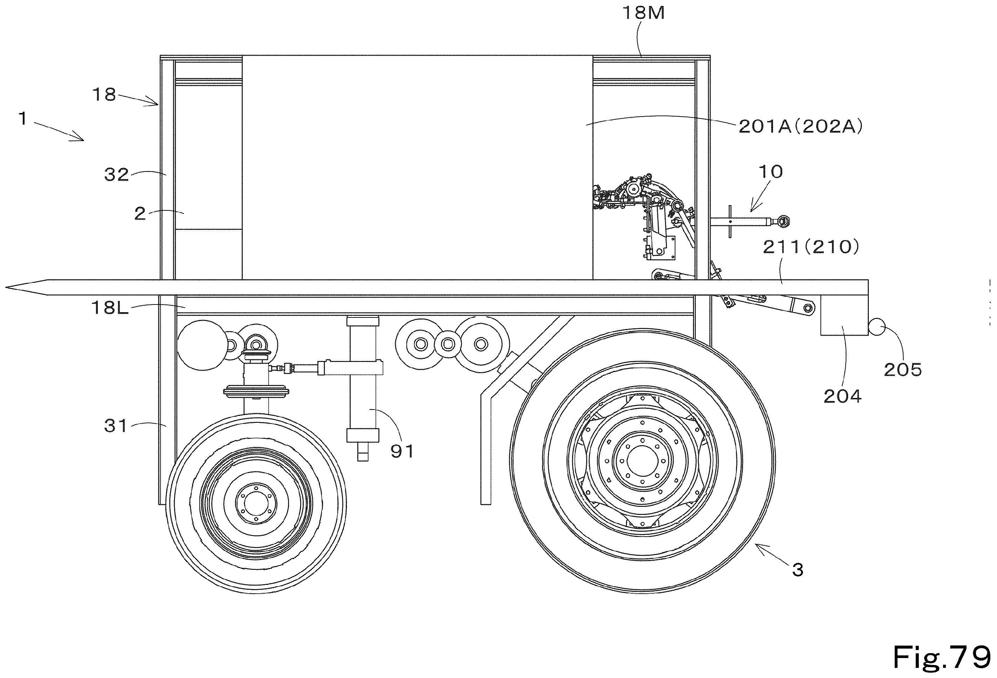

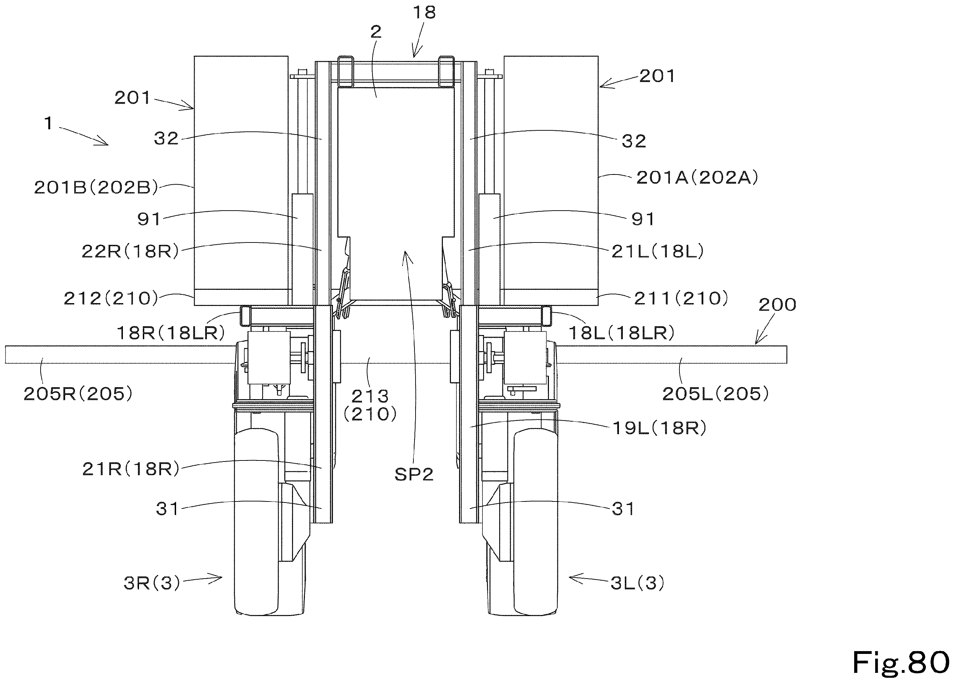

FIG. 79 and FIG. 80 illustrate the working vehicle 1 including the support frame 210 in another embodiment (working vehicle 1 of embodiment A4). The support frame 210 in another embodiment is located below the pieces of equipment 201. The support frame 210 extends in the lateral direction to be located across the first piece of equipment 201A and the second piece of equipment 201B. The first piece of equipment 201A is attached to an upper left portion of the support frame 210. The second piece of equipment 201B is attached to an upper right portion of the support frame 210. In other words, the support frame 210 is attached so as to connect a lower portion of the first piece of equipment 201A and a lower portion of the second piece of equipment 201B. Thus, the support frame 210 supports the pieces of equipment 201 (the first piece of equipment 201A and the second piece of equipment 201B) from below.

As illustrated in FIG. 80, the distance (distance in the lateral direction) between the first piece of equipment 201A and the second piece of equipment 201B attached to the support frame 210 is longer than the width (length in the lateral direction) of the vehicle body 2. Also, the distance between the first piece of equipment 201A and the second piece of equipment 201B attached to the support frame 210 is longer than the width of the frame structure 18. Thus, a space SP2 is provided between the first piece of equipment 201A and the second piece of equipment 201B such that the vehicle body 2 and the frame structure 18 can be located in the space SP2. With the spreader 200 attached to the vehicle body 2, the vehicle body 2 and the frame structure 18 are located in the space SP2.

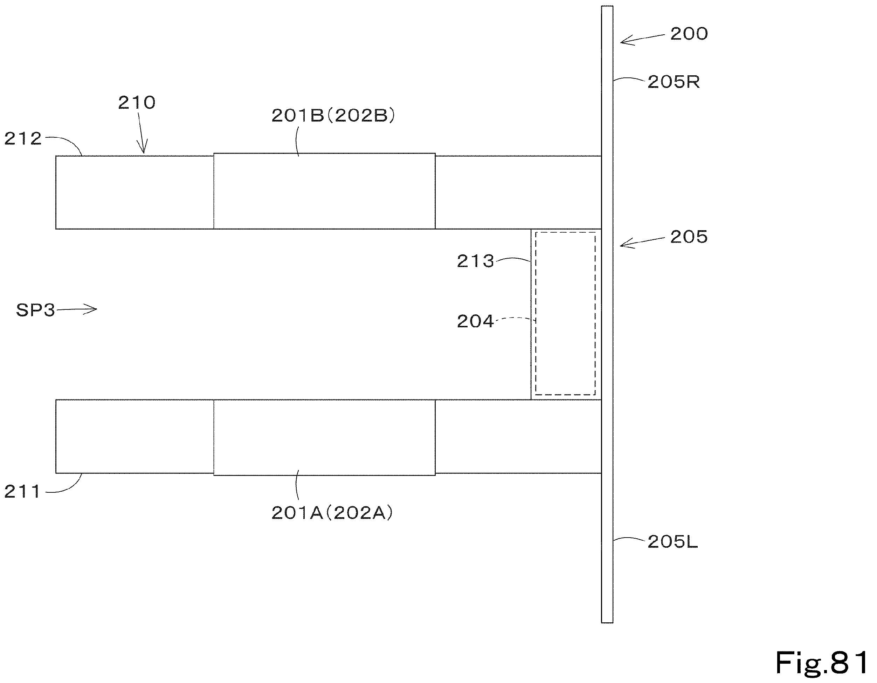

As illustrated in FIG. 81, the support frame 210 includes the first support frame 211, the second support frame 212, and a third support frame 213. The first support frame 211 and the second support frame 212 are spaced apart in the lateral direction, located in parallel to each other and extend in the front-rear direction. The first support frame 211 supports a lower portion of the first piece of equipment 201A. The second support frame 212 supports a lower portion of the second piece of equipment 201B.

The third support frame 213 connects a rear portion of the first support frame 211 and a rear portion of the second support frame 212. A front portion of the first support frame 211 and a front portion of the second support frame 212 are not connected. With the support frame 210 attached to the vehicle body 2, the vehicle body 2 is located in a space SP3 surrounded by the first support frame 211, the second support frame 212 and the third support frame 213.

As illustrated in FIG. 79 and FIG. 81, the pump 204 is attached to the support frame 210. Specifically, the pump 204 is attached to the third support frame 213. The pump 204 attached to the third support frame 213 is located rearward of a lower portion of the vehicle body 2. The boom 205 is located rearward of the third support frame 213. The boom 205 extends in the lateral direction rearward of a lower portion of the vehicle body 2.

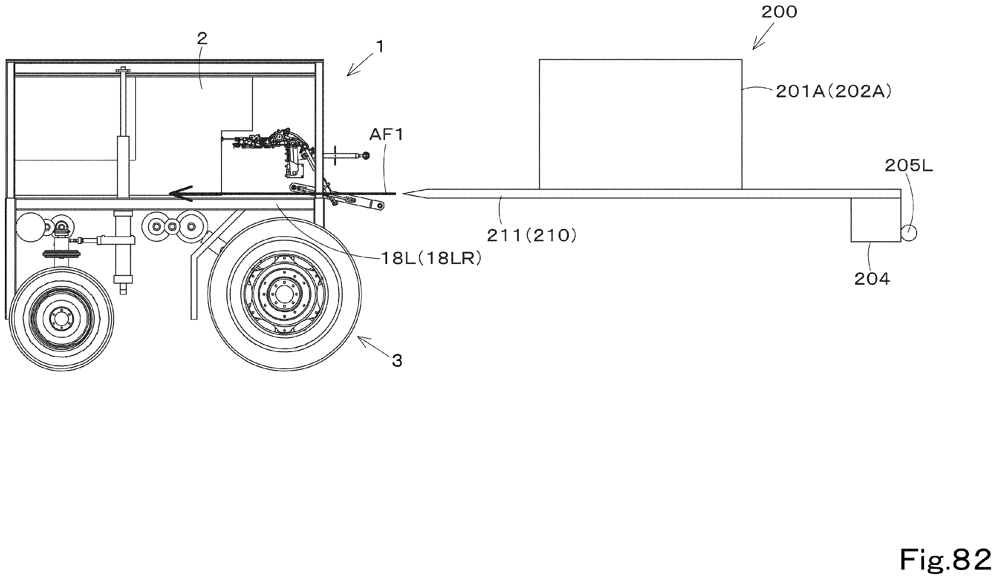

The support frame 210 is attached to the vehicle body 2 from the rear. When the support frame 210 is attached to the vehicle body 2, first, the vehicle body 2 is raised to a high position (for example, at the second height (the upper limit height)) by driving the height changing mechanism 90. Next, with the vehicle body 2 at the high position, the support frame 210 is located rearward of the vehicle body 2 (see FIG. 82). In this situation, the vehicle body 2 is located between the first piece of equipment 201A and the second piece of equipment 201B in the lateral direction such that the first piece of equipment 201A and the second piece of equipment 201B overlap the vehicle body 2 in the up-down direction.

Next, the support frame 210 is moved forward (see an arrow AF1 in FIG. 82). In this situation, the vehicle body 2 is interposed between the first support frame 211 and the second support frame 212. The first support frame 211 is placed on the left frame 18L, and the second support frame 212 is placed on the right frame 18R (see FIG. 80). Thus, with the vehicle body 2 interposed between the first piece of equipment 201A and the second piece of equipment 201B, and the support frame 210 placed above the side frames 18LR (the left frame 18L and the right frame 18R) of the frame structure 18, the support frame 210 is attached to the vehicle body 2 (see FIG. 80). With the support frame 210 attached to the vehicle body 2, the first support frame 211 is located leftward of the vehicle body 2, the second support frame 212 is located rightward of the vehicle body 2, and the third support frame 213 is located rearward of the vehicle body 2.

Note that the support frame 210 may be attached to the vehicle body 2 from the front. In this case, the third support frame 213 connects a front portion of the first support frame 211 and a rear portion of the second support frame 212, and does not connect a rear portion of the first support frame 211 and the rear portion of the second support frame 212. In this case, with the support frame 210 attached to the vehicle body 2, the first support frame 211 is located leftward of the vehicle body 2, the second support frame 212 is located rightward of the vehicle body 2, and the third support frame 213 is located forward of the vehicle body 2.

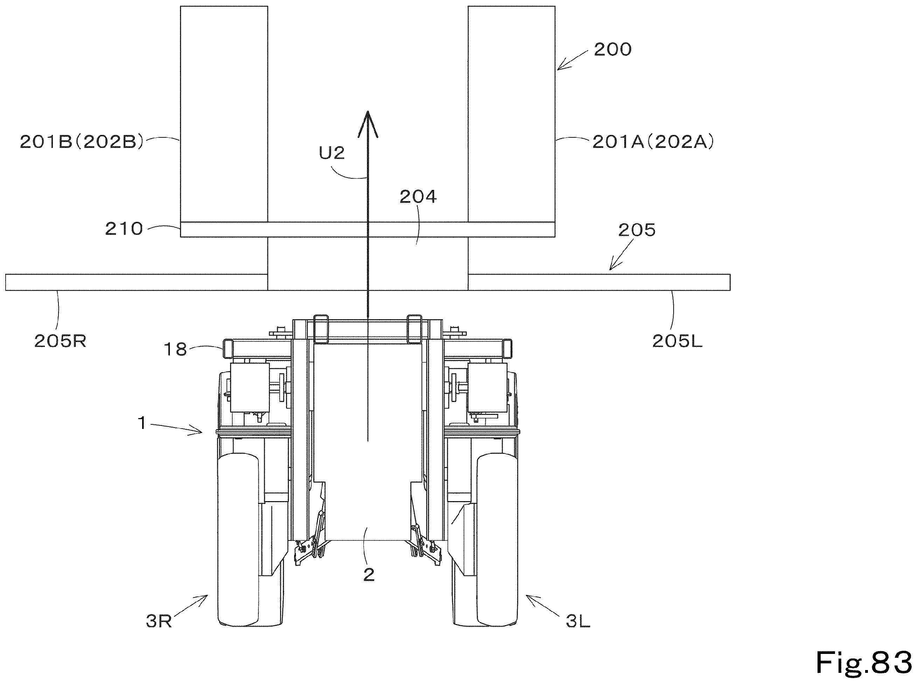

Also, the support frame 210 may be attached to the vehicle body 2 from above. In this case, the support frame 210 is attached to the vehicle body 2 by raising the vehicle body 2 by the above-described height changing mechanism 90. When the support frame 210 is attached to the vehicle body 2, first, with the vehicle body 2 at a low position (for example, at the first height), the support frame 210 is located above the vehicle body 2 (see FIG. 83). In this situation, the vehicle body 2 is located between the first piece of equipment 201A and the second piece of equipment 201B in the lateral direction such that the first piece of equipment 201A and the second piece of equipment 201B overlap the vehicle body 2 in the front-rear direction. Next, the vehicle body 2 is raised to a high position (for example, at the second height) by driving the height changing mechanism 90 (see an arrow U2 in FIG. 83). Thus, with the vehicle body 2 interposed between the first piece of equipment 201A and the second piece of equipment 201B, and the support frame 210 placed above the side frames 18LR (the left frame 18L and the right frame 18R) of the frame structure 18, the support frame 210 is attached to the vehicle body 2 (see FIG. 80).

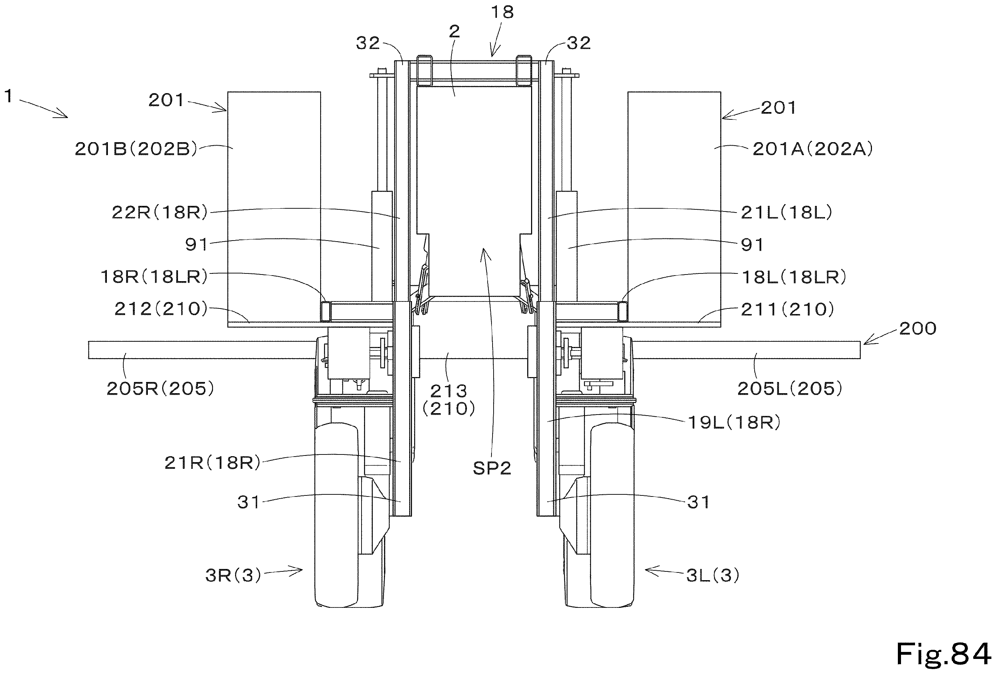

As described above, in the embodiment (embodiment A4) illustrated in FIG. 80, a configuration is adopted in which when the support frame 210 is attached to the vehicle body 2, the support frame 210 is placed above the side frames 18LR. However, in the present invention, instead of this configuration, a configuration may be adopted in which when the support frame 210 is attached to the vehicle body 2, the support frame 210 is located below the side frames 18LR (see FIG. 84).

In the embodiment (embodiment A5) illustrated in FIG. 84, the support frame 210 is located below the side frames 18LR. Also, the fixed frame 31 is interposed between the first support frame 211 and the second support frame 212 from the left and the right. The support frame 210 is attached to the frame structure 18 by interposing the fixed frame 31 between the first support frame 211 and the second support frame 212 from the left and the right. The inner surface (right surface) of the first support frame 211 is in contact with the outer surface (left surface) of the first left frame 19L, and the inner surface (left surface) of the second support frame 212 is in contact with the outer surface (right surface) of the first right frame 21R.

The support frame 210 can be attached to the frame structure 18, for example, by locking a fastener provided on the inner surface of the first support frame 211 and the second support frame 212 in a latch provided on the outer surface of the first left frame 19L and the first right frame 21R.

In the above-described embodiment, the piece of equipment 201 included in the working device 200 is the tank 202, but the piece of equipment 201 included in the working device 200 may be a battery. In this case, the battery includes a first battery located on one side (leftward) of the vehicle body 2, and a second battery located on the other side (rightward) of the vehicle body 2. In other words, the first piece of equipment 201A is the first battery, and the second piece of equipment 201B is the second battery. The first battery is located on one side (leftward or forward) of the vehicle body 2. The second battery is located on the other side (rightward or rearward) of the vehicle body 2.

Although the working vehicle 1 according to embodiments (embodiments 1, A1 to A5) of the present invention has been described above, the working vehicle 1 does not necessarily need to include all components described above. From all the components described above, part of the components may be selected as appropriate and provided according to the application of the working vehicle 1. For example, the controller 15 may include only one or two of the distance changing control unit 15B, the height changing control unit 15C, and the position changing control unit 15D. In this case, the working vehicle 1 may include only one or two of the distance changing mechanism 80, the height changing mechanism 90, and the position changing mechanism 110, the one or two corresponding to the relevant control units.

Embodiments (embodiments A, A1 to A5) of the present invention provide working vehicles 1 described in the following items.

(Item AA1) A working vehicle 1 including a vehicle body 2, left and right traveling devices 3 to support the vehicle body 2 such that the vehicle body 2 is allowed to travel, a first detector 70 to detect a situation in a surrounding area of the vehicle body 2, and a distance changing mechanism 80 to change a distance between the left and right traveling devices 3L, 3R, wherein the distance changing mechanism 80 is configured to change the distance such that the changed distance corresponds to a detection result from the first detector 70.

With the working vehicle 1 according to item AA1, the distance between the left and right traveling devices 3L and 3R can be adjusted according to the situation in the surrounding area. More specifically, the distance between the left and right traveling device 3L and 3R can be adjusted by the distance changing mechanism 80 such that the distance corresponds to the detection result of the situation in the surrounding area of the vehicle body 2 detected by the first detector 70. Thus, it is possible to avoid interference of travel of the working vehicle 1 with an object with a width greater than the distance between the left and right traveling devices.

(Item AA2) The working vehicle 1 according to item AA1, wherein the first detector 70 is configured to detect, as the situation in the surrounding area of the vehicle body 2, road information including a value relating to a road travelable by the left and right traveling devices 3, and the distance changing mechanism 80 is configured to change the distance such that the changed distance corresponds to the road information.

With the working vehicle 1 according to item AA2, the distance between the left and right traveling devices 3L and 3R can be adjusted such that the distance corresponds to road information including a value relating to a road travelable by the traveling device 3.

(Item AA3) The working vehicle 1 according to item AA2, wherein the first detector 70 is configured to detect, as the road information, a width of a travelable road, and the distance changing mechanism 80 is configured to change the distance such that the changed distance corresponds to the width of the travelable road.

With the working vehicle 1 according to item AA3, the distance between the left and right traveling devices 3L and 3R can be adjusted such that the distance corresponds to the width of the travelable road.

(Item AA4) The working vehicle 1 according to item AA3, wherein the first detector 70 is configured to detect, as the width of the travelable road, a width of a ridge on a ground surface, and the distance changing mechanism 80 is configured to change the distance such that the changed distance corresponds to the width of the ridge.

With the working vehicle 1 according to item AA4, the distance between the left and right traveling devices 3L and 3R can be adjusted such that the distance corresponds to the width of the ridge. Thus, even if the width of the ridge is wide, the working vehicle 1 can travel with the ridge located between the left and right traveling devices 3L and 3R.

(Item AA5) The working vehicle 1 according to item AA4, wherein the first detector 70 is configured to detect the width of the ridge UN which is located in front of the vehicle body 2 in a direction of travel of the vehicle body 2, and the distance changing mechanism 80 is configured to change the distance during or before travel of the vehicle body 2 to reach an area above the ridge UN located in front of the vehicle body 2 in the direction of travel of the vehicle body 2.

With the working vehicle 1 according to item AA5, it is possible to avoid contact of the left and right traveling devices 3L and 3R with the ridge in front of the vehicle body 2 in the travel direction.

(Item AA6) The working vehicle 1 according to item AA4, wherein the first detector 70 is configured to, while the vehicle body 2 is traveling along a first ridge UN1, detect a width of a second ridge UN2 adjacent to the first ridge UN1, and the distance changing mechanism 80 is configured to change the distance while the vehicle body 2 which has finished traveling along the first ridge UN1 is turning to start traveling along the second ridge UN2.

With the working vehicle 1 according to item AA6, when the vehicle body 2 moves from the first ridge to the second ridge and travels, it is possible to avoid contact of the left and right traveling devices 3L and 3R with the second ridge.

(Item AA7) The working vehicle 1 according to item AA3, wherein the first detector 70 is configured to detect, as the width of the travelable road, a width of an obstacle on a ground surface that hinders travel, and the distance changing mechanism 80 is configured to change the distance such that the detected obstacle is located between the left and right traveling devices 3 while the vehicle body 2 is traveling.

With the working vehicle 1 according to item AA7, when the vehicle body 2 travels toward an obstacle on the ground surface, it is possible to avoid contact of the left and right traveling devices 3L and 3R with the obstacle.

(Item AA8) The working vehicle 1 according to any one of items AA1 to AA7, wherein the left and right traveling devices 3 include the left traveling device 3L located leftward of the vehicle body 2 and the right traveling device 3L located rightward of the vehicle body 2, the distance changing mechanism 80 includes a left changing mechanism 80L to change a position of the left traveling device 3L in a lateral direction, and a right changing mechanism 80R to change a position of the right traveling device 3R in the lateral direction, and the distance changing mechanism 80 is configured to actuate the left changing mechanism 80L and the right changing mechanism 80R independently of each other based on the detection result from the first detector 70.

In the working vehicle 1 according to item AA8, the left changing mechanism 80L and the right changing mechanism 80R can be independently actuated based on detection results from the first detector 70, and thus the position of the left changing mechanism 80L in the lateral direction and the position of the right changing mechanism 80R in the lateral direction can be set to an optimal position independently according to the positional relationship between the vehicle body 2 and the obstacle and the like.

(Item AA9) The working vehicle 1 according to item AA8, wherein the first detector 70 is configured to detect, as the situation in the surrounding area of the vehicle body 2, an inclination of a ground surface in the lateral direction, and the distance changing mechanism 80 is configured to, based on the detected inclination, move one of the left and right traveling devices 3L, 3R that is located lower than the other away from a widthwise center of the vehicle body 2.

With the working vehicle 1 according to item AA9, it is possible to stabilize the working vehicle 1 on an inclined surface with inclination in the lateral direction.

(Item AA10) The working vehicle 1 according to any one of items AA1 to AA9, wherein the left and right traveling devices include the left traveling device 3L located leftward of the vehicle body 2 and the right traveling device 3R located rightward of the vehicle body 2, the left traveling device 3L includes a left front wheel 3LF and a left rear wheel 3LB, the right traveling device 3R includes a right front wheel 3RF and a right rear wheel 3RB, the distance changing mechanism 80 includes a first changing mechanism 801 to change a position of the left front wheel 3LF in a lateral direction, a second changing mechanism 802 to change a position of the left rear wheel 3LB in the lateral direction, a third changing mechanism 803 to change a position of the right front wheel 3RF in the lateral direction, and a fourth changing mechanism 804 to change a position of the right rear wheel 3RB in the lateral direction, and the distance changing mechanism 80 is configured to, based on the detection result from the first detector 70, actuate the first changing mechanism 801, the second changing mechanism 802, the third changing mechanism 803, and the fourth changing mechanism 804 independently of each other.

With the working vehicle 1 according to item AA10, the positions of the left front wheel 3LF, the left rear wheel 3LB, the right front wheel 3RF, and the right rear wheel 3RB in the lateral direction can be independently set to an optimal position by independently actuating the first changing mechanism 801, the second changing mechanism 802, the third changing mechanism 803, and the fourth changing mechanism 804, respectively.

(Item AA1 1) The working vehicle 1 according to any one of items AA1 to AA10, further including a second detector 75 to detect the distance between the left and right traveling devices 3L, 3R.

With the working vehicle 1 according to item AA11, the distance between the left and right traveling devices 3L and 3R can be adjusted by the distance changing mechanism 80 based on the detection result of the situation in the surrounding area of the vehicle body 2 detected by the first detector 70, and on the distance between the left and right traveling devices 3L and 3R detected by the second detector 75.

(Item AA12) The working vehicle 1 according to item AA11, wherein the left and right traveling devices 3 include the left traveling device 3L located leftward of the vehicle body 2 and the right traveling device 3R located rightward of the vehicle body 2, the distance changing mechanism 80 includes a left changing mechanism 80L to change a position of the left traveling device 3L in a lateral direction, and a right changing mechanism 80R to change a position of the right traveling device 3R in the lateral direction, and the second detector 75 is configured to detect the distance between the left and right traveling devices 3L, 3R by detecting the amount of extension or retraction of each of the left and right changing mechanisms 80L, 80R.

In the working vehicle 1 according to item AA12, the second detector 75 detects the distance between the left and right traveling devices 3L and 3R by detecting the amount of extension or retraction of each of the left changing mechanism 80L and the right changing mechanism 80R, and thus can detect the distance between the left and right traveling devices 3L and 3R accurately and easily.

(Item AA13) The working vehicle 1 according to item AA11, wherein the first detector 70 is configured to detect, as the situation in the surrounding area of the vehicle body 2, a width of a ridge on a ground surface, and the distance changing mechanism 80 is configured to, based on the width of the ridge and the distance between the left and right traveling devices 3L, 3R, change the distance such that the changed distance corresponds to the width of the ridge.

With the working vehicle 1 according to item AA13, the distance between the left and right traveling devices 3L and 3R can be caused to correspond to the width of the ridge based on the width of the ridge and the distance between the left and right traveling devices 3L and 3R. Thus, even if the width of the ridge is wide, the working vehicle 1 can travel with the ridge located between the left and right traveling devices 3L and 3R.

(Item AA14) The working vehicle 1 according to any one of items AA1 to AA13, wherein the first detector 70 includes a camera 71 to capture an image of a ridge located ahead of the vehicle body 2 in a direction of travel, the camera 71 being provided in or on the vehicle body 2, and a calculator 73 to calculate a width of the ridge based on the image captured by the camera 71.

With the working vehicle 1 according to item AA14, it is possible to reliably calculate the width of a ridge located ahead of the vehicle body 2 in the travel direction based on the image captured by the camera 71.

(Item AA15) The working vehicle 1 according to any one of items AA1 to AA13, wherein the first detector 70 includes a sensor 72 to detect a ridge located ahead of the vehicle body 2 in a direction of travel, the sensor 72 being provided in or on the vehicle body 2, and a calculator 73 to calculate a width of the ridge based on detection data from the sensor 72.

With the working vehicle 1 according to item AA15, it is possible to reliably calculate the width of a ridge located ahead of the vehicle body 2 in the travel direction based on the detection data from the sensor 72.

(Item AB1) A working vehicle 1 including a vehicle body 2, a traveling device 3 to support the vehicle body 2 such that the vehicle body 2 is allowed to travel, and a height changing mechanism 90 to change a height of the vehicle body 2 that is a distance of the vehicle body 2 from a ground surface, wherein the height changing mechanism 90 is configured to change the height of the vehicle body 2 to any height between a first height HA and a second height HB higher than the first height HA.

With the working vehicle 1 according to item AB1, it is possible to change the height of the vehicle body according to various situations. Thus, for example, the height of the vehicle body can be changed to a height suitable for the work performed by the working vehicle.

(Item AB2) The working vehicle 1 according to item AB1, further including a mount 10 provided on the vehicle body 2 to attach and detach a working device 200 thereto and therefrom, wherein the height changing mechanism 90 is configured to change the height of the vehicle body 2 according to work performed by the working device 200.

With the working vehicle 1 according to AB2, the height of the vehicle body 2 can be changed according to the work performed by the working device 200, and thus the working device 200 can be set to an optimal height for the work, and the work can be performed smoothly.

(Item AB3) The working vehicle 1 according to item AB2, further including a recognizer 102 to recognize the working device 200 attached to the mount 10, wherein the height changing mechanism 90 is configured to change the height of the vehicle body 2 according to the working device 200 recognized by the recognizer 100.

With the working vehicle 1 according to item AB3, the height of the vehicle body 2 can be changed according to the working device 200 recognized by the recognizer 100, and thus the height of the vehicle body 2 can be changed such that the height reliably corresponds to the working device 200 attached to the mount 10.

(Item AB4) The working vehicle 1 according to item AB1, further including a manual operator 101 to be operated to indicate the height of the vehicle body 2, wherein the height changing mechanism 90 is configured to change the height of the vehicle body 2 according to the indication of the height via the manual operator 101.

With the working vehicle 1 according to item AB4, the height of the vehicle body 2 can be changed by an operator indicating the height of the vehicle body 2 with the manual operator 101.

(Item AB5) The working vehicle 1 according to item AB2, wherein the height changing mechanism 90 is configured to control the height of the vehicle body 2 to be a first work height when the working device 200 attached to the mount 10 is a first working device, and control the height of the vehicle body 2 to be a second work height when the working device 200 attached to the mount 10 is a second working device different from the first working device.

With the working vehicle 1 according to item ABS, the first working device and the second working device can be set to heights suitable for respective types of work by the height changing mechanism 90.

(Item AB6) The working vehicle 1 according to item AB 1, wherein the height changing mechanism 90 is configured to control the height of the vehicle body 2 to be equal to or greater than the first height HA when a crop SM planted in the ground surface is a first crop SM1.

With the working vehicle 1 according to item AB6, it is possible to travel with the first crop SM1 located between the left and right traveling devices while avoiding contact of the vehicle body 2 with the first crop SM1 planted in the ground surface.

(Item AB7) The working vehicle 1 according to item AB6, wherein the height changing mechanism 90 is configured to, when the crop SM planted in the ground surface is a second crop SM2 higher than the first crop SM1, control the height of the vehicle body 2 to be greater than a predetermined height of the vehicle body 2 corresponding to the first crop SM1 and equal to or less than the second height HB.

In the working vehicle 1 according to item AB7, when the crop SM planted in the ground surface is changed to the second crop SM2 higher than the first crop SM1, the height of the vehicle body 2 is controlled to be higher than the predetermined height of the vehicle body 2 corresponding to the first crop SM1 and lower than or equal to the second height HB, and thus the working vehicle 1 can travel with the second crop SM2 located between the left and right traveling devices while avoiding contact of the vehicle body 2 with the second crop SM2.

(Item AB8) The working vehicle 1 according to item AB7, wherein the height changing mechanism 90 is configured to use the predetermined height of the vehicle body 2 corresponding to the first crop SM1 that is higher than the first crop SM1, and a predetermined height of the vehicle body 2 corresponding to the second crop SM2 that is higher than the second crop SM2.

With the working vehicle 1 according to item AB8, when the first crop SM1 and the second crop SM2 with different heights are planted in the ground surface, it is possible to travel with the first crop SM1 and the second crop SM2 located between the left and right traveling devices while avoiding contact of the vehicle body 2 with the first crop SM1 and the second crop SM2.

(Item AB9) The working vehicle 1 according to any one of items AB1 to AB8, wherein the traveling device 3 includes one or more wheels 30, and the height changing mechanism 90 is configured to change the height of the vehicle body 2 between the first height HA at which a position of the vehicle body 2 in an up-down direction overlaps a position of the one or more wheels 30 in the up-down direction and the second height HB at which the vehicle body 2 is located higher than the one or more wheels 30 in the up-down direction.

With the working vehicle 1 according to item AB9, it is possible to travel with a crop, an obstacle, and the like located between the left and right traveling devices while avoiding contact with the crop, obstacle, and the like at approximately the same height as the wheels 30.

(Item AB10) The working vehicle 1 according to any one of items AB1 to AB9, wherein the height changing mechanism 90 is configured to change the height of the vehicle body 2 between the first height HA at which a position of the vehicle body 2 in an up-down direction overlaps a position of the traveling device 3 in the up-down direction and the second height HB at which the vehicle body 2 is located higher than the traveling device 3 in the up-down direction.

With the working vehicle 1 according to item AB10, it is possible to travel with a crop, an obstacle, and the like located between the left and right traveling devices while avoiding contact with the crop, obstacle, and the like at approximately the same height as the traveling device 3.

(Item AB11) The working vehicle 1 according to any one of items AB1 to AB10, wherein the traveling device 3 includes a left traveling device 3L located leftward of the vehicle body 2 and a right traveling device 3R located rightward of the vehicle body 2, the vehicle body 2 is located between the left traveling device 3L and the right traveling device 3R, and the height changing mechanism 90 is configured to change the height of the vehicle body 2 by raising or lowering the vehicle body 2 at a location between the left traveling device 3L and the right traveling device 3R.

With the working vehicle 1 according to item AB11, it is possible to travel with a crop, an obstacle, and the like located between the left traveling device 3L and the right traveling device 3R by positioning the vehicle body 2 higher than the height of the crop, obstacle, and the like.

(Item AB12) The working vehicle 1 according to any one of items AB1 to AB11, further including a frame structure 18 provided at a periphery of the vehicle body 2 and attached to the vehicle body 2, wherein the frame structure 18 includes a left frame 18L located leftward of the vehicle body 2 to extend in an up-down direction, a right frame 18R located rightward of the vehicle body 2 to extend in the up-down direction, and a lateral frame 18M connecting an upper portion of the left frame 18L and an upper portion of the right frame 18R, the vehicle body 2 is positioned such that the vehicle body 2 is in an area defined by the left frame 18L, the right frame 18R, and the lateral frame 18M in a front view, and the height changing mechanism 90 is configured to change the height of the vehicle body 2 that is the distance of the vehicle body 2 from the ground surface by raising or lowering the frame structure 18.

With the working vehicle 1 according to item AB12, the vehicle body 2 is located in an area defined by the left frame 18L, the right frame 18R and the lateral frame 18M, and thus the vehicle body 2 can be protected from an external force. The height of the vehicle body 2 that is the distance of the vehicle body 2 from the ground surface can be changed by raising or lowering the frame structure 18, and thus a load on the vehicle body 2 can be reduced as compared to when the vehicle body 2 is directly raised or lowered.

(Item AB13) The working vehicle 1 according to item AB12, wherein the height changing mechanism 90 includes a lifting cylinder 91 including a rod 91a to extend and retract in the up-down direction and configured to raise and lower the frame structure 18, and the lifting cylinder 91 includes a lower end positioned at the same or substantially the same height from the ground surface as the height of the vehicle body 2 when the vehicle body 2 is at the first height HA.

With the working vehicle 1 according to item AB13, when the vehicle body 2 is lowered to the lower limit position, it is possible to minimize the amount of projection by which the upper portion of the lifting cylinder 91 projects upward from the vehicle body 2.

(Item AB14) The working vehicle 1 according to any one of items AB1 to AB13, further including a situation detector (first detector) 70 to detect a situation in a surrounding area of the vehicle body 2, a height detector (third detector) 77 to detect the height of the vehicle body 2 that is the distance of the vehicle body 2 from the ground surface, and a controller 15 configured or programmed to actuate the height changing mechanism 90 based on detection results from the situation detector 70 and the height detector 77 to change the height of the vehicle body 2.

With the working vehicle 1 according to item AB14, the height of the vehicle body 2 can be changed based on detection results from the situation detector 70 and the height detector 77, and thus the height of the vehicle body 2 can be reliably set to an optimal height according to the situation in the surrounding area.

(Item AB 15) The working vehicle 1 according to item AB14, wherein the situation detector 70 is configured to detect, as the situation in the surrounding area of the vehicle body 2, a height of an obstacle on the ground surface that hinders travel, and the controller 15 is configured or programmed to compare the height of the obstacle detected by the situation detector 70 with the height of the vehicle body 2 detected by the height detector 77, and actuate the height changing mechanism 90 to change the height of the vehicle body 2 such that the changed height of the vehicle body 2 is equal to or greater than the height of the obstacle.

In the working vehicle 1 according to item AB15, the height of the vehicle body 2 can be set to a height which prevents contact with an obstacle, and thus it is possible to reliably avoid contact of the vehicle body 2 with the obstacle.

(Item AB 16) The working vehicle 1 according to item AB15, wherein the situation detector 70 is configured to detect, as the height of the obstacle, a height of a crop SM planted in the ground surface.

In the working vehicle 1 according to item AB 16, the height of the vehicle body 2 can be set to a height which prevents contact with the crop SM, and thus it is possible to reliably avoid contact of the vehicle body 2 with the crop SM.

(Item AB17) The working vehicle 1 according to item AB16, wherein the situation detector 70 is configured to detect the height of the crop SM located forward of the vehicle body 2 in a direction of travel of the vehicle body 2, and the controller 15 is configured or programmed to actuate the height changing mechanism 90 to change the height of the vehicle body 2 during or before travel of the vehicle body 2 to reach the crop SM located in front of the vehicle body 2 in the direction of travel of the vehicle body 2.

With the working vehicle 1 according to item AB17, it is possible to avoid contact of the left and right traveling devices 3L and 3R with the crop SM in front of the vehicle body 2 in the travel direction.

(Item AB 18) The working vehicle 1 according to item AB16, wherein the situation detector 70 is configured to, while the vehicle body 2 is traveling along a first row RT1 of one or more crops SM, detect a height of one or more crops SM in a second row RT2 adjacent to the first row RT1, and the controller 15 is configured or programmed to actuate the height changing mechanism 90 to change the height of the vehicle body 2 while the vehicle body 2 which has finished traveling along the first row RT1 is turning to start traveling along the second row RT2.

With the working vehicle 1 according to item AB 18, when the vehicle body 2 moves from the first row RT1 to the second row RT2 and travels, it is possible to avoid contact of the left and right traveling devices 3L and 3R with the crop SM in the second row RT2.

(Item AC1) A working vehicle 1 including a vehicle body 2, a traveling device 3 to support the vehicle body 2 such that the vehicle body 2 is allowed to travel, and a height changing mechanism 90 to change a height of the vehicle body 2 that is a distance of the vehicle body 2 from a ground surface, wherein the traveling device 3 includes a left traveling device 3L located leftward of the vehicle body 2 and a right traveling device 3R located rightward of the vehicle body 2, the vehicle body 2 is located between the left traveling device 3L and the right traveling device 3R, and the height changing mechanism 90 is configured to raise and lower the vehicle body 2 at a location between the left traveling device 3L and the right traveling device 3R in a width direction of the vehicle body 2.

With the working vehicle 1 according to item AC1, it is possible to travel with a crop and the like reliably located between the left and right traveling devices 3L and 3R by raising and lowering the vehicle body 2 between the left and right traveling devices 3L and 3R.

(Item AC2) The working vehicle 1 according to item AC1, further including a power supply apparatus 4 to generate power to drive the traveling device 3, wherein the vehicle body 2 includes a housing frame 2 to house the power supply apparatus 4.

With the working vehicle 1 according to item AC2, the housing frame 2 which houses the power supply apparatus 4 can be raised and lowered by the height changing mechanism 90.

(Item AC3) The working vehicle 1 according to item AC2, wherein the power supply apparatus 4 includes a motor 5 and a battery 7 to store electricity to be supplied to the motor 5, and the height changing mechanism 90 is configured to raise and lower the housing frame 2 which houses the battery 7.

With the working vehicle 1 according to item AC3, the housing frame 2 which houses the battery 7 can be raised and lowered by the height changing mechanism 90.

(Item AC4) The working vehicle 1 according to any one of items AC1 to AC3, further including a frame structure 18 provided at a periphery of the vehicle body 2, wherein the left traveling device 3L includes a left front wheel 3LF and a left rear wheel 3LB, the right traveling device 3R includes a right front wheel 3RF and a right rear wheel 3RB, and the frame structure 18 includes a left frame 18L connecting the left front wheel 3LF and the left rear wheel 3LB, and a right frame 18R connecting the right front wheel 3RF and the right rear wheel 3RB.

With the working vehicle 1 according to item AC4, the left front wheel 3LF and the left rear wheel 3LB of the left traveling device 3L, and the right front wheel 3RF and the right rear wheel 3RB of the right traveling device 3R can be connected together by the frame structure 18 at the periphery (outer side) of the vehicle body 2.

(Item AC5) The working vehicle 1 according to item AC4, wherein the frame structure 18 includes a fixed frame 31 which has the traveling device 3 attached thereto and a movable frame 32 attached to the vehicle body 2, and the height changing mechanism 90 is configured to raise and lower the movable frame 32 relative to the fixed frame 31.

With the working vehicle 1 according to item AC5, the vehicle body 2 can be raised or lowered relative to the traveling device 3 by raising or lowering the movable frame 32 with relative to the fixed frame 31.

(Item AC6) The working vehicle 1 according to any one of items AC1 to AC5, wherein the height changing mechanism 90 is configured to change the height of the vehicle body 2 to any height within a predetermined height range.

With the working vehicle 1 according to item AC6, the height of the vehicle body 2 can be changed to an optimal height by the height changing mechanism 90.

(Item AC7) The working vehicle 1 according to any one of items AC1 to AC6, wherein the height changing mechanism 90 is configured to change the height of the vehicle body 2 to a height at which the vehicle body 2 is located between the left traveling device 3L and the right traveling device 3R.

With the working vehicle 1 according to item AC7, the height of the vehicle body 2 can be changed to a height between the left traveling device 3L and the right traveling device 3R, and thus the height of the vehicle body 2 can be lowered to reduce the vehicle height (the height of the working vehicle 1).

(Item AC8) The working vehicle 1 according to any one of items AC1 to AC7, wherein the height changing mechanism 90 is configured to change the height of the vehicle body 2 to a height at which the vehicle body 2 is located higher than the left traveling device 3L and the right traveling device 3R.

With the working vehicle 1 according to item AC8, the height of the vehicle body 2 can be changed to a height at which the vehicle body 2 is higher than the left traveling device 3L and the right traveling device 3R, and thus it is possible to travel with crop SM and the like located between the left traveling device 3L and the right traveling device 3R, the crop SM and the like being equivalent in height to the left traveling device 3L and the right traveling device 3R.

(Item AC9) The working vehicle 1 according to item AC4 or AC5, wherein the vehicle body 2 is positioned between the left frame 18L and the right frame 18R.

With the working vehicle 1 according to item AC9, the leftward area and the rightward area of the vehicle body 2 can be protected by the left frame 18L and the right frame 18R.

(Item AC10) The working vehicle 1 according to any one of items AC4, AC5, and AC9, wherein the frame structure 18 includes a lateral frame 18M connecting the left frame 18L and the right frame 18R.

With the working vehicle 1 according to item AC10, it is possible to obtain a highly rigid frame structure 18 in which the left frame 18L, the right frame 18R, and the lateral frame 18M are integral with each other.

(Item AC11) The working vehicle 1 according to item AC10, wherein the lateral frame 18M connects an upper portion of the left frame 18L and an upper portion of the right frame 18R, and the vehicle body 2 is positioned such that the vehicle body 2 is in an area defined by the left frame 18L, the right frame 18R, and the lateral frame 18M in a front view.

With the working vehicle 1 according to item AC11, the leftward area, the rightward area, and the upper area of the vehicle body 2 can be protected by the left frame 18L, the right frame 18R, and the lateral frame 18M.

(Item AC12) The working vehicle 1 according to item AC5, wherein the height changing mechanism 90 includes lifting cylinders 91 to raise and lower a respective plurality of the movable frames 32, the plurality of movable frames 32 are included in the left frame 18L and the right frame 18R, respectively, and a plurality of the fixed frames 31 are included in the left frame 18L and the right frame 18R, respectively, and the lifting cylinders 91 include a left lifting cylinder 91L to raise and lower the corresponding movable frame 32 of the left frame 18L, and a right lifting cylinder 91R to raise and lower the corresponding movable frame 32 of the right frame 18R.

With the working vehicle 1 according to item AC12, each of the movable frame 32 of the left frame 18L and the movable frame 32 of the right frame 18R can be independently raised and lowered by the lifting cylinders 91.

(Item AD1) A working vehicle 1 including a vehicle body 2, a traveling device 3 to support the vehicle body 2 such that the vehicle body 2 is allowed to travel, a power supply apparatus 4 to drive the traveling device 3, and a position changing mechanism 110 to change a position of the power supply apparatus 4.

With the working vehicle 1 according to item AD1, the weight balance of the working vehicle 1 can be adjusted without requiring a weight, and the center of gravity position of the working vehicle 1 can be changed according to the situation. Thus, the working vehicle 1 can stably travel and perform the work according to the situation in the surrounding area. The center of gravity position of the working vehicle 1 is changed by changing the position of the existing power supply apparatus 4 in the front-rear direction, and thus another heavy object (for example, liquid) does not need to be separately mounted on the vehicle body 2 for the purpose of changing the center of gravity position, therefore, increases in the weight of the vehicle body can be prevented.

(Item AD2) The working vehicle 1 according to item AD1, wherein the position changing mechanism 110 is configured to change the position of the power supply apparatus 4 in a front-rear direction.

With the working vehicle 1 according to item AD2, the weight balance of the working vehicle 1 in the front-rear direction can be adjusted without requiring a weight, and the center of gravity position of the working vehicle 1 in the front-rear direction can be changed according to the situation.

(Item AD3) The working vehicle 1 according to item AD1 or AD2, wherein the power supply apparatus 4 includes a motor 5, and a battery 7 to store electricity to be supplied to the motor 5, and the position changing mechanism 110 is configured to change a position of the battery 7.

With the working vehicle 1 according to item AD3, the weight balance of the working vehicle 1 can be easily adjusted by changing the position of the battery 7 which is a heavy object.

(Item AD4) The working vehicle 1 according to any one of items AD1 to AD3, further including a housing frame 2 to house the power supply apparatus 4, wherein the position changing mechanism 110 is configured to change the position of the power supply apparatus 4 in the housing frame 2.

With the working vehicle 1 according to item AD4, the center of gravity position of the working vehicle 1 can be changed according to the situation by changing the position of the power supply apparatus 4 in the housing frame 2.

(Item ADS) The working vehicle 1 according to any one of items AD1 to AD3, further including a housing frame 2 to house the power supply apparatus 4, wherein the position changing mechanism 110 is configured to change the position of the power supply apparatus 4 together with the housing frame 2.

With the working vehicle 1 according to item AD5, the center of gravity position of the working vehicle 1 can be changed according to the situation by changing the position of the power supply apparatus 4 together with the housing frame 2.

(Item AD6) The working vehicle 1 according to any one of items AD1 to AD5, further including a slip ratio measurer 120 to measure a slip ratio of one or more wheels 30 of the traveling device 3 during travel, and a controller 15 configured or programmed to change the position of the power supply apparatus 4 by actuating the position changing mechanism 110 based on the slip ratio measured by the slip ratio measurer 120.

With the working vehicle 1 according to item AD6, it is possible to achieve stable travel in a state where the wheels are unlikely to slip, by changing the position of the power supply apparatus 4 based on the slip ratio measured by the slip ratio measurer 120.

(Item AD7) The working vehicle 1 according to item AD6, wherein the controller 15 is configured or programmed to calculate, as an optimal position, the position of the power supply apparatus 4 where the slip ratio is lowest, and to move the power supply apparatus 4 to the optimal position by actuating the position changing mechanism 110 based on a result of the calculation.

With the working vehicle 1 according to item AD7, it is possible to achieve stable travel in a state where the wheels are unlikely to slip, by moving the power supply apparatus 4 to the optimal position where the slip ratio is the lowest.

(Item AD8) The working vehicle 1 according to item AD6, wherein the traveling device 3 includes one or more front wheels 30F provided at a front portion of the vehicle body 2, and one or more rear wheels 30B provided at a rear portion of the vehicle body 2, and the slip ratio measurer 120 is configured or programmed to calculate the slip ratio using Expression (1) below, "the slip ratio = (Vb - Vw)/Vb, where Vb is a vehicle body speed, and Vw is a wheel speed " ... (1).

With the working vehicle 1 according to item AD8, the slip ratio can be accurately calculated based on the vehicle body speed Vb and the wheel speed Vw.

(Item AD9) The working vehicle 1 according to any one of items AD1 to AD5, further including a torque measurer 121 to measure a torque of one or more wheels 30 of the traveling device 3 during travel, and a controller 15 configured or programmed to change the position of the power supply apparatus 4 by actuating the position changing mechanism 110 based on the torque measured by the torque measurer 121.

With the working vehicle 1 according to item AD9, when the working vehicle 1 gets stuck and wheelspin occurs, resulting in reduced torque, it is possible to recover from the stuck state by changing the center of gravity position of the vehicle by changing the position of the power supply apparatus 4.

(Item AD10) The working vehicle 1 according to item AD9, wherein the traveling device 3 includes one or more front wheels 30F provided at a front portion of the vehicle body 2, and one or more rear wheels 30B provided at a rear portion of the vehicle body 2, the torque measurer 121 is configured or programmed to measure each of a torque of the one or more front wheels 30F and a torque of the one or more rear wheels 30B, and the controller 15 is configured or programmed to, when the torque of the one or more rear wheels 30B is less than or equal to a predetermined value, move the power supply apparatus 4 forward, and when the torque of the one or more front wheels 30F is less than or equal to a predetermined value, move the power supply apparatus 4 rearward.

With the working vehicle 1 according to item AD10, in both cases where the front wheels spin and where the rear wheels spin, it is possible to recover from the stuck state by changing the center of gravity position of the vehicle forward or rearward by changing the position of the power supply apparatus 4.

(Item AD11) The working vehicle 1 according to any one of items AD1 to AD10, wherein a weight to adjust a weight balance of the working vehicle 1 is not provided, and the position changing mechanism 110 is configured to adjust the weight balance of the working vehicle 1 by changing the position of the power supply apparatus 4 without using the weight.

With the working vehicle 1 according to item AD11, a weight is not provided, and thus the working vehicle 1 can be made lighter, and the weight balance of the working vehicle 1 can be adjusted by causing the power supply apparatus 4 to function as a substitute for a weight.

(Item AE1) A working vehicle 1 including a vehicle body 2, a traveling device 3 to support the vehicle body 2 such that the vehicle body 2 is allowed to travel, and a working device 200 to perform work, wherein the working device 200 includes pieces of equipment 201 located at opposite sides of the vehicle body 2 from each other.

With the working vehicle 1 according to item AE1, the center of gravity position of the working vehicle 1 can be lowered as compared to when the pieces of equipment 201 included in the working device 200 are mounted on the vehicle body 2, and thus the stability of the working vehicle 1 can be improved.

(Item AE2) The working vehicle 1 according to item AE1, wherein the opposite sides of the vehicle body 2 at which the pieces of equipment 201 are located are left and right sides of the vehicle body 2.

With the working vehicle 1 according to item AE2, the right and left weight balance of the working device 200 can be made appropriate while lowering the center of gravity position of the working vehicle 1.

(Item AE3) The working vehicle 1 according to item AE1, wherein the opposite sides of the vehicle body 2 at which the pieces of equipment 201 are located are front and rear sides of the vehicle body 2.

With the working vehicle 1 according to item AE3, the front and rear weight balance of the working device 200 can be made appropriate while lowering the center of gravity position of the working vehicle 1.

(Item AE4) The working vehicle 1 according to any one of items AE1 to AE3, wherein the pieces of equipment 201A, 201B located at the opposite sides of the vehicle body 2 from each other have the same function.

In the working vehicle 1 according to item AE4, the pieces of equipment having the same function can be arranged on one of the opposite sides and the other of the opposite sides with the vehicle body 2 therebetween. Thus, the center of gravity position of the working vehicle 1 can be prevented from being raised by providing the pieces of equipment having the same function in or on the vehicle body 2. Also, the right and left weight balance of the working vehicle 1 can be made appropriate.

(Item AE5) The working vehicle 1 according to any one of items AE1 to AE3, wherein the pieces of equipment 201A, 201B located at the opposite sides of the vehicle body 2 from each other have respective different functions.

With the working vehicle 1 according to item AE5, the pieces of equipment having different functions can be arranged on one of the opposite sides and the other of the opposite sides with the vehicle body 2 therebetween. Thus, the center of gravity position of the working vehicle 1 can be prevented from being raised by providing the pieces of equipment having different functions in or on the vehicle body 2. Also, the right and left weight balance of the working vehicle 1 can be made appropriate.

(Item AE6) The working vehicle 1 according to any one of items AE1 to AE5, wherein the working device 200 is a spreader to spread a liquid substance, the pieces of equipment 201 are tanks 202 to store the liquid substance to be spread, and the tanks 202 include a first tank 202A and a second tank 202B located at the opposite sides of the vehicle body 2 from each other.

With the working vehicle 1 according to item AE6, a plurality of tanks (the first tank 202A and the second tank 202B) can be arranged on one of the opposite sides and the other of the opposite sides with the vehicle body 2 therebetween. Thus, the center of gravity position of the working vehicle 1 can be prevented from being raised by providing the plurality of tanks in or on the vehicle body 2. Also, the right and left weight balance of the working vehicle 1 can be made appropriate.

(Item AE7) The working vehicle 1 according to any one of items AE1 to AE6, wherein the pieces of equipment of the working device 200 include batteries 7, and the batteries 7 include a first battery and a second battery located at the opposite sides of the vehicle body 2 from each other.

With the working vehicle 1 according to item AE7, a plurality of batteries (the first battery and the second battery) can be arranged on one of opposite sides and the other of the opposite sides with the vehicle body 2 therebetween. Thus, the center of gravity position of the working vehicle 1 can be prevented from being raised by providing the plurality of batteries in or on the vehicle body 2. Also, the right and left weight balance of the working vehicle 1 can be made appropriate.

(Item AE8) The working vehicle 1 according to any one of items AE1 to AE7, further including a support frame 210 to support the pieces of equipment and attachable to and detachable from the vehicle body 2, wherein the support frame 210 is located above the pieces of equipment.

With the working vehicle 1 according to item AE8, the pieces of equipment can be attached to and detached from the vehicle body 2 with the support frame 210 as needed. The support frame 210 is located above the pieces of equipment, and thus placing the support frame 210 in or on the vehicle body 2 allows the pieces of equipment to be arranged at one of opposite sides and the other of the opposite sides with the vehicle body 2 therebetween.

(Item AE9) The working vehicle 1 according to any one of items AE1 to AE7, further including a support frame 210 to support the pieces of equipment and attachable to and detachable from the vehicle body 2, wherein the support frame 210 is located below the pieces of equipment.

With the working vehicle 1 according to item AE9, the pieces of equipment can be attached to and detached from the vehicle body 2 with the support frame 210 as needed. The support frame 210 is located below the pieces of equipment, and thus the pieces of equipment can be reliably supported by the support frame 210.

(Item AE10) The working vehicle 1 according to item AE2, further including a frame structure 18 provided at a periphery of the vehicle body 2 and attached to the vehicle body 2, wherein the frame structure 18 includes a left frame 18L located leftward of the vehicle body 2 to extend in an up-down direction, a right frame 18R located rightward of the vehicle body 2 to extend in the up-down direction, and a lateral frame 18M connecting the left frame 18L and the right frame 18R, and the pieces of equipment include a first piece of equipment 201A located leftward of the left frame 18L and a second piece of equipment 201B located rightward of the right frame 18R.

With the working vehicle 1 according to item AE10, the vehicle body 2 can be protected by the frame structure 18, and the first piece of equipment 201A can be located leftward of the vehicle body 2, and the second piece of equipment 201B can be located rightward of the vehicle body 2 without being interfered by the frame structure 18.

(Item AE11) The working vehicle 1 according to item AE8, wherein the support frame 210 is configured to be attached to the vehicle body 2 from above.

With the working vehicle 1 according to item AE11, when there is no enough space in the periphery of the vehicle body 2, the pieces of equipment can be attached to the vehicle body 2 with the support frame 210 from above.

(Item AE12) The working vehicle 1 according to item AE9, wherein the support frame 210 is configured to be attached to the vehicle body 2 from front or rear.

In the working vehicle 1 according to item AE12, when there is no enough space on the sides of or above the vehicle body 2, the pieces of equipment can be attached to the vehicle body 2 with the support frame 210 from the front side or the rear side.

(Item AE13) The working vehicle 1 according to any one of items AE1 to AE11, further including a height changing mechanism 90 to change a height of the vehicle body 2 that is a distance of the vehicle body 2 from a ground surface.

With the working vehicle 1 according to item AE13, the pieces of equipment can be easily attached to the vehicle body 2 with the support frame 210 from above by changing the height of the vehicle body 2 by the height changing mechanism 90.

(Item AF1) A working vehicle 1 including a vehicle body 2, at least one wheel 30 located at a side of the vehicle body 2, and a drive assembly 40 to drive the at least one wheel 30, wherein at least a portion of the drive assembly 40 is located at a position which is radially outward of and faces a tread portion 30a of the at least one wheel 30 and which overlaps a position of the at least one wheel 30 in the width direction of the vehicle body 2.

With the working vehicle 1 according to item AF1, as compared to when the drive assembly 40 is located inward (on the vehicle body 2 side) of the wheel 30, it is possible to achieve an area for steering the wheel that is larger by an amount of the overlap OW1 between the width OW2 of the drive assembly 40 in the lateral direction and the outer overlapping position OP1. Thus, a large steering angle of the wheels 30 can be achieved.

(Item AF2) The working vehicle 1 according to item AF1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel 30, and the at least a portion of the drive assembly 40 at the position overlapping the position of the at least one wheel 30 is the steering mechanism 60.

With the working vehicle 1 according to item AF2, as compared to when the steering mechanism 60 is located inward (on the vehicle body 2 side) of the wheel 30, it is possible to achieve an area for steering the wheel that is larger by an amount of overlap between the width of the steering mechanism 60 in the lateral direction and the outer overlapping position OP1. Thus, a large steering angle of the wheels 30 can be achieved.

(Item AF3) The working vehicle 1 according to item AF1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel, and the at least a portion of the drive assembly 40 at the position overlapping the position of the at least one wheel 30 is the drive device 45.

With the working vehicle 1 according to item AF3, as compared to when the drive device 45 is located inward (on the vehicle body 2 side) of the wheel 30, it is possible to achieve an area for steering the wheel that is larger by an amount of overlap between the width of the drive device 45 in the lateral direction and the outer overlapping position OP1. Thus, a large steering angle of the wheels 30 can be achieved.

(Item AF4) The working vehicle 1 according to item AF1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel 30, and the at least a portion of the drive assembly 40 at the position overlapping the position of the at least one wheel 30 is the transmission mechanism 50.

With the working vehicle 1 according to item AF4, as compared to when the transmission mechanism 50 is located inward (on the vehicle body 2 side) of the wheel 30, it is possible to achieve an area for steering the wheel that is larger by an amount of overlap between the width of the transmission mechanism 50 in the lateral direction and the outer overlapping position OP1. Thus, a large steering angle of the wheels 30 can be achieved.

(Item AF5) The working vehicle 1 according to item AF2, wherein the steering mechanism 60 includes a rotating body 61 to rotate about an axis extending in an up-down direction when the at least one wheel 30 is steered, and an axis AX1 of the rotating body 61 is located above the at least one wheel 30.

With the working vehicle 1 according to item AF5, as compared to when the axis AX1 of the rotating body 61 is located inward (on the vehicle body 2 side) of the wheel, a large steering angle of the wheels 30 can be achieved.

(Item AF6) The working vehicle 1 according to item AF4, wherein the transmission mechanism 50 includes a first transmission shaft 501 which is located above the at least one wheel 30 and extends in an up-down direction.

With the working vehicle 1 according to item AF6, the first transmission shaft 501 extends in the up-down direction above the wheel 30, and thus it is possible to eliminate or reduce the likelihood that the movement of the wheel at the time of steering will be hindered by the portion of the transmission mechanism 50 that projects greatly inward (the vehicle body 2 side) from the wheel 30.

(Item AF7) The working vehicle 1 according to item AF6, wherein the transmission mechanism 50 includes a second transmission shaft 502 to receive power transmitted from the first transmission shaft 501 to rotate, and the second transmission shaft 502 is located inward of the at least one wheel 30 and extends in an up-down direction.

With the working vehicle 1 according to item AF7, the second transmission shaft 502 is located inward of the wheel 30 and extends in the up-down direction, and thus power can be easily and reliably transmitted from the second transmission shaft 502 to the wheel 30.

(Item AF8) The working vehicle 1 according to item AF7, further including a height changing mechanism 90 configured to change a height of the vehicle body 2 that is a distance of the vehicle body 2 from a ground surface, wherein the first transmission shaft 501 or the second transmission shaft 502 is extendable and retractable as the height of the vehicle body 2 is changed by the height changing mechanism 90.

With the working vehicle 1 according to item AF8, even when the height of the vehicle body 2 is changed by the height changing mechanism 90, power can be reliably transmitted by the transmission mechanism 50.

(Item AF9) The working vehicle 1 according to item AF8, wherein the first transmission shaft 501 includes an upper shaft 501a to which power from the drive device 45 is transmitted, and a lower shaft 501b to transmit, to the second transmission shaft 502, the power transmitted to the upper shaft 501a, an axis of the upper shaft 501a and an axis of the lower shaft 501b are located on the same straight line, and a distance between an upper end of the upper shaft 501a and a lower end of the lower shaft 501b changes as the height of the vehicle body 2 is changed by the height changing mechanism 90.

With the working vehicle 1 according to item AF9, when the height of the vehicle body 2 is changed by the height changing mechanism 90, the first transmission shaft 501 can be extended or retracted by changing the distance between the upper end of the upper shaft 501a and the lower end of the lower shaft 501b.

(Item AF10) The working vehicle 1 according to item AF9, wherein the first transmission shaft 501 includes a tubular intermediate shaft 501c including an upper portion 501c1 in which the upper shaft 501a is inserted, and a lower portion 501c2 to be inserted in the lower shaft 501b, an outer surface of the upper shaft 501a includes a first spline, the lower shaft 501b is tubular and an inner surface thereof includes a second spline, the intermediate shaft 501c includes an inner spline provided on an inner surface thereof, and an outer spline provided on an outer surface, and the first spline is engaged with the inner spline, and the second spline is engaged with the outer spline.

With the working vehicle 1 according to item AF10, when the height of the vehicle body 2 is changed by the height changing mechanism 90, the first transmission shaft 501 can be extended or retracted while maintaining power transmission between the upper shaft 501a, the intermediate shaft 501c, and the lower shaft 501b.

(Item AF11) The working vehicle 1 according to item AF5, wherein the steering mechanism 60 includes a cylinder 113 including a rod 113a to extend and retract in a direction perpendicular to the axis, the rotating body 61 includes a first connection portion 61a to be connected to the rod 113a, and a second connection portion 61b to be connected to the at least one wheel 30, and the cylinder 113 is configured to cause the at least one wheel 30 to rotate about the axis by rotating the rotating body 61 about the axis by extension or retraction of the rod 113a.

With the working vehicle 1 according to item AF11, the steering mechanism 60 can be compactly placed around the wheel 30, and the wheel 30 can be reliably steered by extending and retracting the rod 113a.

(Item AF12) The working vehicle 1 according to any one of items AF1 to AF11, wherein the at least one wheel30 includes a left front wheel 3LF, a right front wheel 3RF, a left rear wheel 3LB, and a right rear wheel 3RB, the drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB, the first drive assembly 41 includes a portion provided at a periphery of the left front wheel 3LF, the second drive assembly 42 includes a portion provided at a periphery of the right front wheel 3RF, the third drive assembly 43 includes a portion provided at a periphery of the left rear wheel 3LB, and the fourth drive assembly 44 includes a portion provided at a periphery of the right rear wheel 3RB.

With the working vehicle 1 according to item AF12, the left front wheel 3LF, the right front wheel 3RF, the left rear wheel 3LB, and the right rear wheel 3RB can be independently driven by different drive assemblies (the first drive assembly 41, the second drive assembly 42, the third drive assembly 43, and the fourth drive assembly 44), respectively. The first drive assembly 41, the second drive assembly 42, the third drive assembly 43, and the fourth drive assembly 44 can be provided in the respective peripheries of the wheels, and thus a large steering angle of each wheel can be achieved.

(Item AF13) The working vehicle 1 according to any one of items AF1 to AF12, further including a frame structure 18 to support the vehicle body 2, wherein the drive assembly 40 is attached to the frame structure 18.

With the working vehicle 1 according to item AF13, the drive assembly 40 is not provided on the vehicle body 2, but is attached to the frame structure 18, and thus it is easy to position at least a portion of the drive assembly 40 at a position which is radially outward of and faces the tread portion 30a of the wheel 30 and which overlaps the position of the wheel 30 in the width direction of the vehicle body 2.

(Item AF14) The working vehicle 1 according to item AF13, wherein the frame structure 18 includes side frames 18LR located at sides of the vehicle body 2, and an upper frame 18M located above the vehicle body 2, the drive assembly 40 includes a drive device 45 to generate power to drive the at least one wheel 30, and the drive device 45 is attached to each of the side frames 18LR.

With the working vehicle 1 according to item AF14, the drive device 45 to generate power to drive the wheels 30 can be located at a side of the vehicle body 2, and thus it is easy to position the drive device 45 at a position which is radially outward of and faces the tread portion 30a of the wheel 30 and which overlaps the position of the wheel 30 in the width direction of the vehicle body 2.

(Item AF15) The working vehicle 1 according to item AF13, wherein the frame structure 18 includes side frames 18LR located at sides of the vehicle body 2, and an upper frame 18M located above the vehicle body 2, the drive assembly 40 includes a drive device 45 to generate power to drive the at least one wheel 30, and the drive device 45 is attached to the upper frame 18M.

With the working vehicle 1 according to item AF15, the drive device 45 to generate power to drive the wheels 30 can be located above the vehicle body 2, and thus when the vehicle body 2 is raised or lowered, the drive device 45 can be raised or lowered with the vehicle body 2.

Next, the working vehicle 901 according to another embodiment (embodiment B) of the present invention will be described based on FIG. 85 to FIG. 149.

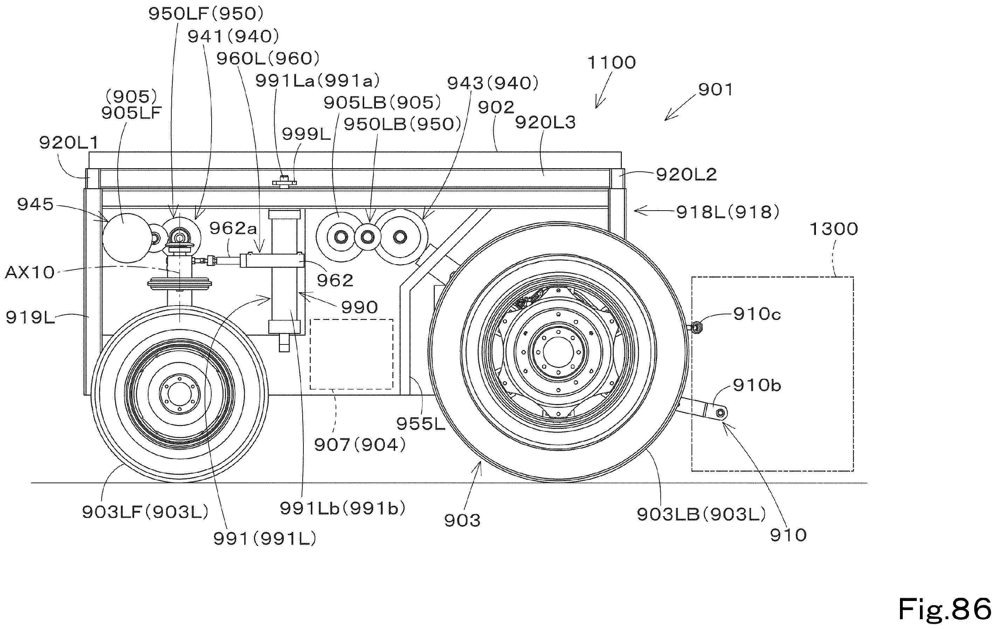

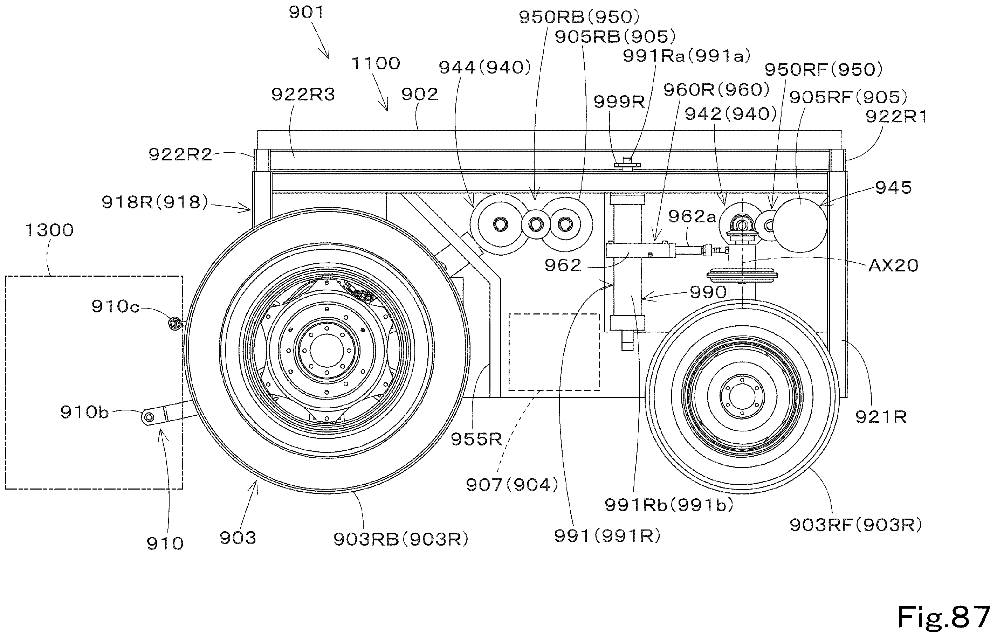

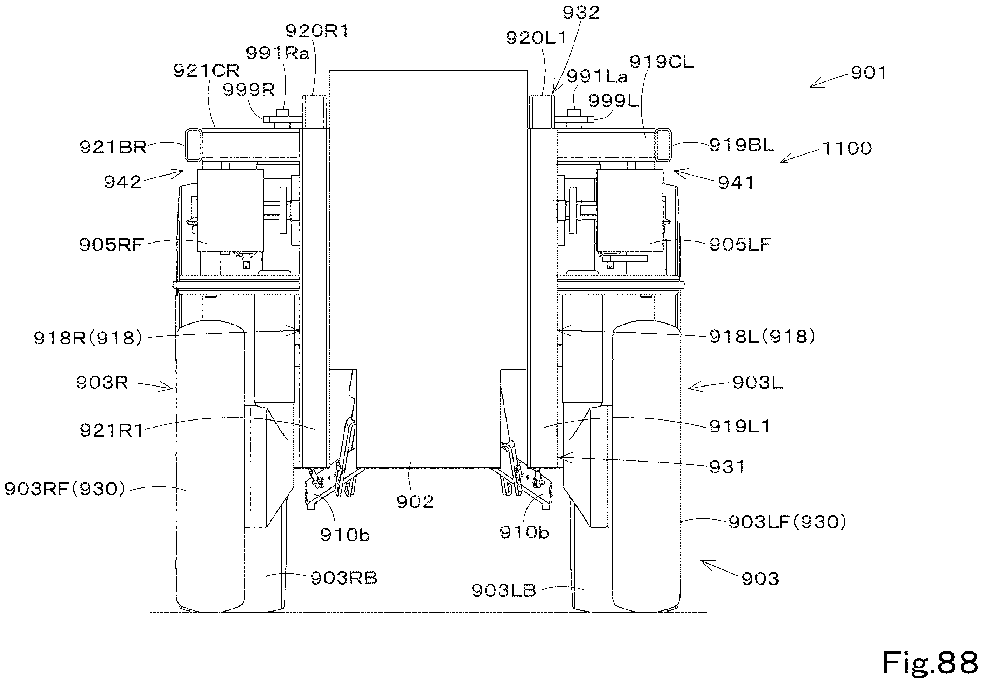

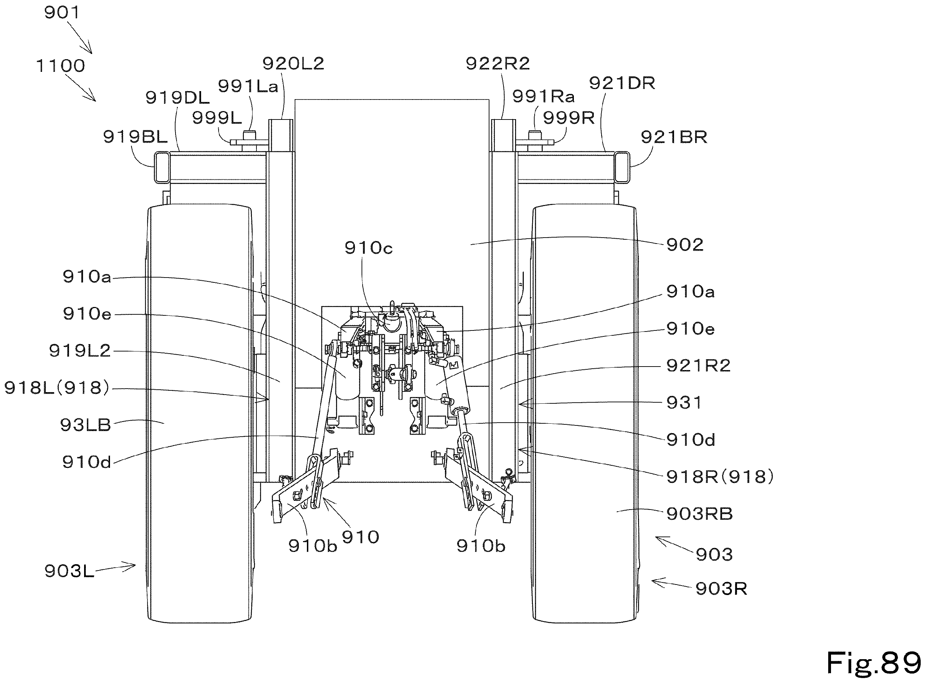

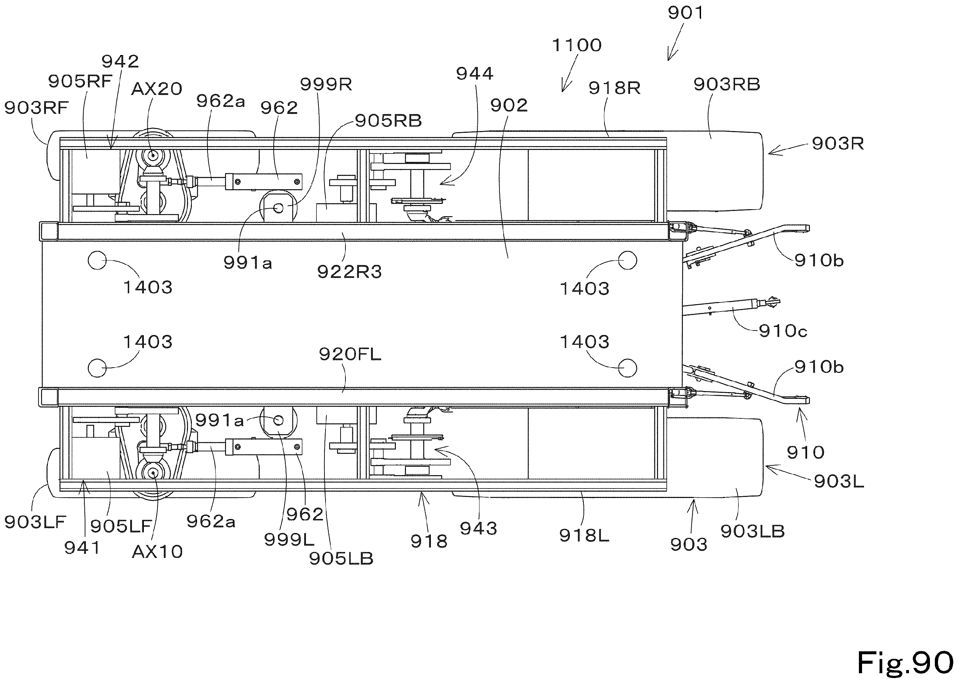

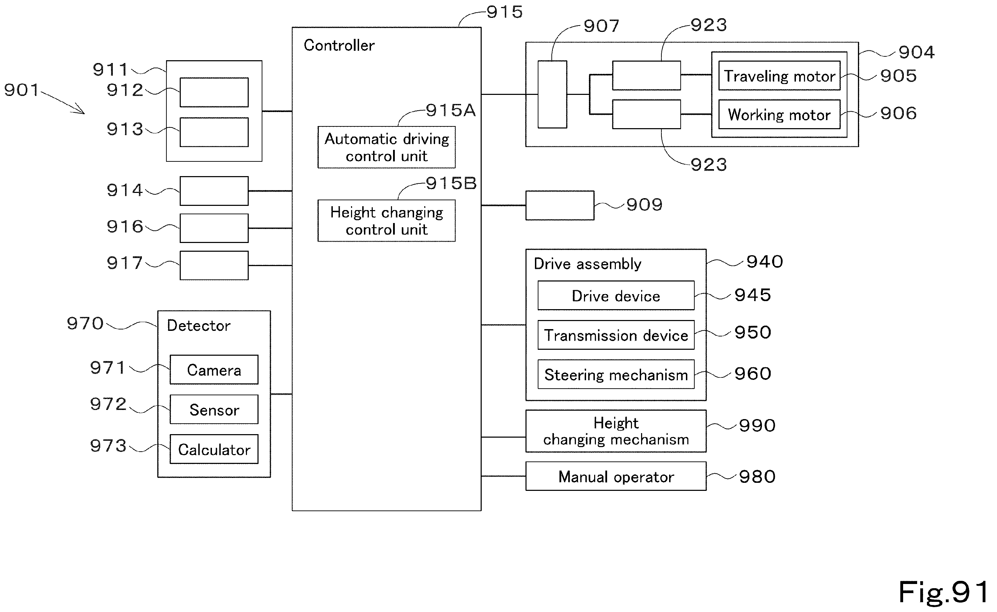

FIG. 85 to FIG. 91 each illustrates a view illustrating another embodiment (embodiment B) of the working vehicle 901. FIG. 85 is a perspective view of the working vehicle 901. FIG. 86 is a left side view of the working vehicle 901. FIG. 87 is a right side view of the working vehicle 901. FIG. 88 is a front view of the working vehicle 901. FIG. 89 is a rear view of the working vehicle 901. FIG. 90 is a plan view of the working vehicle 901. FIG. 91 is a block diagram illustrating the entire configuration of the working vehicle 901.

As illustrated in FIG. 85 to FIG. 90, the working vehicle 901 includes a traveling machine body 1100, and a power supply apparatus 904 (see FIG. 86 and FIG. 87) mounted on the traveling machine body 1100. The traveling machine body 1100 includes a vehicle body 902, and a traveling device 903 to support the vehicle body 902 such that the vehicle body 902 is allowed to travel. In the present embodiment, the vehicle body 902 is in a substantially rectangular parallelepiped shape having an internal space. However, the shape of the vehicle body 902 is not limited to the substantially rectangular parallelepiped shape. Various devices and pieces of equipment are housed in the internal space of the vehicle body 902.

As illustrated in FIG. 86 and FIG. 87, the power supply apparatus 904 to drive the traveling device 903 is mounted (housed) in the internal space of the vehicle body 902. The power supply apparatus 904 generates power to drive the traveling device 903, and the power is supplied to the traveling device 903. As illustrated in FIG. 91, the power supply apparatus 904 includes a motor 905 and a battery 907. In the present embodiment, as the power supply apparatus 904, the battery 907 is mounted (housed) in the vehicle body 902.

The motor 905 is a traveling motor that generates power to drive the traveling device 903. The motor 905 is an electric motor driven by electricity. An inverter 923 is connected to the motor 905. The inverter 923 controls the rotation of the motor 905 based on a control signal from the later-described controller 915. The battery 907 stores the electricity to be supplied to the motor 905. However, the power supply apparatus 904 may include an engine instead of the motor 905. Alternatively, the power supply apparatus 904 may include fuel cells.

As illustrated in FIG. 91, the power supply apparatus 904 includes a motor 906 serving as a working motor in addition to the motor 905 serving as a traveling motor. The working motor generates power to drive devices and mechanisms which are different from the traveling device 903. The motor 906 is an electric motor driven by the electricity supplied from the battery 907. The rotation of the motor 906 can be controlled by the inverter 923. Hereinafter, the motor 905 may be referred to as the "traveling motor 905", and the motor 906 may be referred to as the "working motor 906".

The motors (the traveling motor 905 and the working motor 906) can be mounted on the vehicle body 902. The traveling motor 905 and the working motor 906 can be driven independently from each other. The working motor 906 is a motor to drive a hydraulic pump for actuating the later-described hydraulic cylinder. In addition, the working motor 906 also serves as a motor to drive an external output shaft.

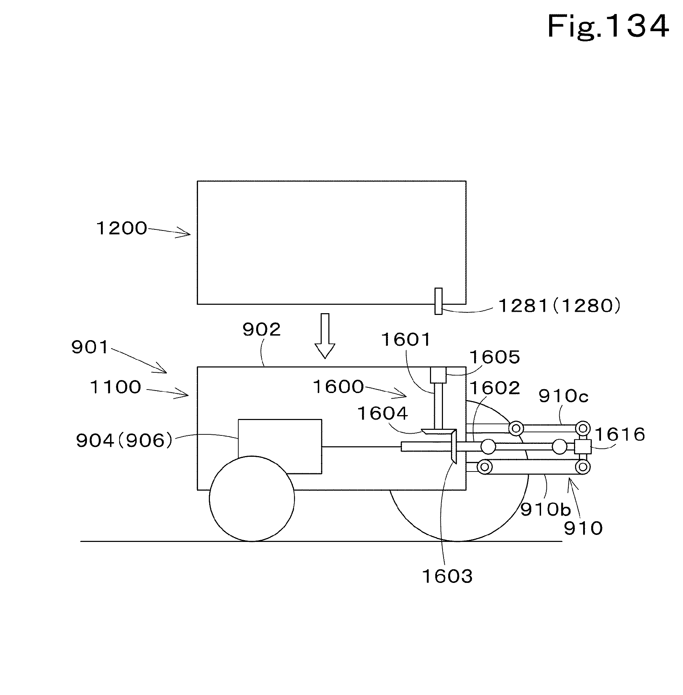

The external output shaft is an output shaft for taking the power of the working motor 906 to the outside of the vehicle body 902. Thus, the working vehicle 901 includes an external output shaft to take the power from the working motor 906 to the outside of the vehicle body 902. The external output shaft is, e.g., a PTO shaft. As the external output shaft, the working vehicle 901 includes the later-described upward output shaft 1601 and/or horizontal output shaft 1602 (see FIG. 134 to FIG. 145). The upward output shaft 1601 and the horizontal output shaft 1602 will be described in detail later.

The working motor 906 may be a hydraulic motor. The hydraulic motor is driven by the hydraulic fluid supplied from a hydraulic pump. In this case, for example, the hydraulic pump is driven by the traveling motor 905, the hydraulic motor (the working motor 906) is driven by the hydraulic fluid supplied from the hydraulic pump, and the external output shaft is driven by driving the hydraulic motor. Alternatively, the working vehicle 901 may include a working motor 906 which is a hydraulic motor, separately from the working motor 906 which is an electric motor.

As described above, the battery 907 which is part of the power supply apparatus 904 is housed in the vehicle body 902 (see FIG. 86 and FIG. 87). Although not illustrated, the vehicle body 902 further houses a cooling system (a radiator, a fan, a water pump, a compressor and the like) that cools the power supply apparatus 904 (the motor 905, the motor 906, the battery 907 and the like); and a hydraulic system (a control valve and the like) to actuate the later-described hydraulic cylinders (cylinder 962 and lifting cylinder 991) and the like based on a control signal from the controller 915.

The vehicle body 902 is allowed to travel by driving the traveling device 903. As illustrated in FIG. 88, FIG. 89 and the like, the traveling device 903 includes a left traveling device 903L provided leftward of the vehicle body 902, and a right traveling device 903R provided rightward of the vehicle body 902. The vehicle body 902 is between the left traveling device 903L and the right traveling device 903R. As illustrated in FIG. 86, the left traveling device 903L includes a left front wheel 903LF and a left rear wheel 903LB. As illustrated in FIG. 87, the right traveling device 903R includes a right front wheel 903RF and a right rear wheel 903RB. Hereinafter, for the purpose of illustration, the left front wheel 903LF, the right front wheel 903RF, the left rear wheel 903LB, and the right rear wheel 903RB may be collectively referred to as the "wheels 930".

The wheels 930 (the left front wheel 903LF, the right front wheel 903RF, the left rear wheel 903LB, and the right rear wheel 903RB) are located laterally of the vehicle body 902. The left front wheel 903LF and the left rear wheel 903LB are located leftward of the vehicle body 902. The right front wheel 903RF and the right rear wheel 903RB are located rightward of the vehicle body 902. In the traveling machine body 1100 of the working vehicle 901 in the present embodiment, the size (the diameter and width) of the rear wheels (the left rear wheel 903LB and the right rear wheel 903RB) is larger than the size (diameter and width) of the front wheels (the left front wheel 903LF and the right front wheel 903RF). However, the size of the front wheels (the left front wheel 903LF and the right front wheel 903RF) may be the same as the size of the rear wheels (the left rear wheel 903LB and the right rear wheel 903RB), or the size of the front wheels may be larger than the size of the rear wheels.

In the present embodiment, the traveling device 903 is a wheel traveling device in which the front wheels (the left front wheel 903LF and the right front wheel 903RF) and the rear wheels (the left rear wheel 903LB and the right rear wheel 903RB) are all tires. However, the traveling device 903 may be a crawler traveling device in which the left traveling device 903L and the right traveling device 903R are crawlers, or the traveling device 903 may be a traveling device in which one of the front wheels and the rear wheels are wheels, and the other are crawlers.

As illustrated in FIG. 85 to FIG. 87, the traveling machine body 1100 of the working vehicle 901 includes a fender 955L to cover upper and forward areas of the left rear wheel 903LB, and a fender 955R to cover upper and forward areas of the right rear wheel 903RB. The fenders 955L and 955R are attached to the later-described frame structure 918. Although not illustrated, the traveling machine body 1100 may include a fender to cover the front wheels (the left front wheel 903LF and the right front wheel 903RF).

As illustrated in FIG. 91, the working vehicle 901 includes a transmission 909. The transmission 909 can change the driving force of the traveling device 903 by changing speed stages. In addition, the transmission 909 can switch between forward drive and reverse drive of the traveling device 903. The transmission 909 may include a transmission clutch that can switch between a four-wheel drive state (4WD) and a two-wheel drive state (2WD), the four-wheel drive state allowing all four wheels (the left front wheel 903LF, the right front wheel 903RF, the left rear wheel 903LB, and the right rear wheel 903RB) to be driven, and the two-wheel drive state allowing only the rear wheels (the left rear wheel 903LB and the right rear wheel 903RB) or only the front wheels (the left front wheel 903LF and the right front wheel 903RF) to be driven.

The working vehicle 901 includes a lifting device 910 to which a working device 1300 different from the later-described working device 1200 is attached, the lifting device 910 being able to be raised and lowered. Hereinafter, for the purpose of illustration, another working device 1300 is referred to as the "second working device 1300". As illustrated in FIG. 86 and FIG. 87, the second working device 1300 can be detachably attached to the lifting device 910. The lifting device 910 is provided in a rear portion of the vehicle body 902. FIG. 89 is a rear view of the lifting device 910. However, the lifting device 910 may be provided in a front portion or a side portion (a left portion or a right portion) of the vehicle body 902.

The type of the second working device 1300 attached to the lifting device 910 is not limited to a specific one. The second working device 1300 includes, e.g., a device to perform work (agricultural work) related to agriculture, a device to perform work related to civil engineering, a device to perform work related to architecture, and a device to perform work related to transportation.

The second working device 1300 that performs agricultural work includes, e.g., a spreader to spread a substance to be spread such as a fertilizer or an agricultural chemical, a seeder to plant seeds, a cultivator to cultivate the soil, a tiller (plow) to till the soil, a weed remover to remove weeds, and a ridging machine to ridge the soil surface.

The second working device 1300 attached to the lifting device 910 can be driven by the power transmitted from the external output shaft (the later-described upward output shaft 1601 and/or horizontal output shaft 1602) for taking off the power of the working motor 906 to the outside of the vehicle body 902. When the second working device 1300 is an electric working device, the second working device 1300 may be driven by the electricity taken from the battery 907 to the outside of the vehicle body 902 through an electricity line, instead of being driven by the power taken from the external output shaft.

The lifting device 910 includes a three-point linkage mechanism. Specifically, as illustrated in FIG. 89, the lifting device 910 includes a lift arm 910a, a lower link 910b, a top link 910c, a lift rod 910d, and a lift cylinder 910e. The front end of the lift arm 910a is supported on an upper rear portion of the vehicle body 902 swingably upward or downward. The lift arm 910a is swung (raised or lowered) by driving the lift cylinder 910e. The lift cylinder 910e includes a hydraulic cylinder. The lift cylinder 910e is connected to a hydraulic pump (not illustrated) via a control valve (not illustrated).

The hydraulic pump is driven by the working motor 906. The control valve is a solenoid valve such that opening and closing of a flow path is controlled by the controller 915. The lift cylinder 910e can be extended and retracted by the control valve controlling the flow of the hydraulic fluid discharged from the hydraulic pump.

The front end of the lower link 910b is supported on a lower rear portion of the vehicle body 902 swingably upward or downward. The front end of the top link 910c is supported on a rear portion of the vehicle body 902 swingably upward or downward, the rear portion being above the lower link 910b. The lift rod 910d connects the lift arm 910a and the lower link 910b. The second working device 1300 is connected to a rear portion of the lower link 910b and a rear portion of the top link 910c. When the lift cylinder 910e is driven (extended or retracted), the lift arm 910a is raised or lowered as well as the lower link 910b connected to the lift arm 910a through the lift rod 910d is raised or lowered. Thus, the second working device 1300 is swung (raised or lowered) upward or downward around a front portion of the lower link 910b, as a fulcrum.

The second working device 1300 attached to the lifting device 910 is towed and moved by the working vehicle 901 with travel of the working vehicle 901. Note that instead of the second working device 1300, a carriage or the like that transports agricultural crops may be attached to the lifting device 910.

As illustrated in FIG. 91, the working vehicle 901 includes a positioning device 911. The positioning device 911 can detect the position (measured position information including the latitude and longitude) of the vehicle body 902 by a satellite positioning system (positioning satellites) such as D-GPS, GPS, GLONASS, Hokuto, Galileo, or Michibiki. Specifically, the positioning device 911 receives satellite signals (such as the positions of the positioning satellites, transmission time, and correction information) transmitted from the positioning satellites, and detects the position (for example, the latitude and longitude) of the vehicle body 902 based on the satellite signals.

The positioning device 911 includes a receiver 912, and an inertial measurement unit (IMU) 913. The receiver 912 is a device including an antenna and being configured to receive the satellite signals transmitted from the positioning satellites, and the device is attached to the vehicle body 902. The IMU 913 includes an acceleration sensor to detect an acceleration, and a gyroscope sensor to detect an angular velocity. The IMU 913 is attached to the vehicle body 902. The IMU 913 can detect the roll angle, pitch angle, yaw angle and the like of the vehicle body 902. Note that the yaw angle may be detected by installing a plurality of positioning devices 911.

As illustrated in FIG. 91, the working vehicle 901 includes a communication device 914. The communication device 914 includes a communication circuit to perform communication via an in-vehicle network, and a wireless communication circuit to perform wireless communication. The wireless communication circuit can directly or indirectly communicate with an external equipment by Wireless Fidelity (Wi-Fi, registered trademark), Bluetooth Low Energy (BLE, registered trademark), Low Power, Wide Area (LPWA), Low-Power Wide-Area Network (LPWAN) and the like of IEEE802.11 series which is a communication standard. As another example, the communication device 914 may be provided with a communication circuit that can indirectly communicate with an external equipment by, e.g., a mobile phone communication network or a data communication network and the like. The external equipment is, e.g., a personal computer, a smartphone, a tablet computer, a PDA or a server and the like. The external equipment may include, e.g., the later-described manual operator 980.

As illustrated in FIG. 91, the working vehicle 901 includes the controller 915. The controller 915 is mounted on the traveling machine body 1100. The controller 915 performs various controls on the working vehicle 901. The controller 915 includes an arithmetic unit (such as a CPU) and a storage (such as a RAM or a ROM). The storage may include an external memory provided outside the controller 915. The controller 915 is connected to various devices and mechanisms illustrated in FIG. 91 through an in-vehicle network (in-vehicle LAN) such as a Controller Area Network (CAN), or a communication line.

The controller 915 controls the operation of various devices and mechanisms communicably connected to the controller 915, by the arithmetic unit executing various control programs stored in the storage. The function of the later-described control units (automatic driving control unit 915A, and height changing control unit 915B) of the controller 915 is implemented by the arithmetic unit executing a predetermined control program stored in the storage.

As illustrated in FIG. 91, the controller 915 includes the automatic driving control unit 915A. The automatic driving control unit 915A controls the automatic driving of the traveling machine body 1100. Thus, the traveling machine body 1100 includes the controller 915 that performs automatic driving. The automatic driving control unit 915A can perform line automatic driving control and autonomous driving control. In the line automatic driving control, the automatic driving control unit 915A controls the operation of the later-described steering mechanism 960, transmission 909, motor 905 and the like such that the traveling machine body 1100 (vehicle body 902) moves along a preset travel scheduled line.

In the autonomous driving control, the automatic driving control unit 915A sets the travel direction (steering direction) and the vehicle speed (speed) of the vehicle body 902 by the positioning device 911 and the like based on results of sensing (detection of an object) the surroundings of the traveling machine body 1100 (vehicle body 902), and controls the operation of the steering mechanism 960, the transmission 909, the motor 905 and the like such that the set steering and vehicle speed are achieved.

Note that the line automatic driving control and the autonomous driving control may be switched by a switch or the like. Alternatively, the automatic driving control unit 915A may be configured to perform either the line automatic driving control or the autonomous driving control. However, the configuration of the automatic driving control unit 915A is not limited to the one described above.

The controller 915 of the traveling machine body 1100 includes the automatic driving control unit 915A, and thus the working vehicle 901 can perform automatic driving (unmanned driving) without an operator on board. Thus, the traveling machine body 1100 in the illustrated embodiment includes no operator's seat where an operator is seated. However, the working vehicle 901 may perform automatic driving with an operator on board. Alternatively, the working vehicle 901 may be driven to travel with an operator on board. When the working vehicle 901 is driven by an operator on board, the vehicle body 902 is provided with an operator's seat.

As illustrated in FIG. 91, the working vehicle 901 includes an illumination device 916. The illumination device 916 is provided in the vehicle body 902. The illumination device 916 includes a headlight that illuminates at least the area ahead of the vehicle body 902. In addition to the headlight, the illumination device 916 may include a plurality of work lights that illuminate the periphery of the vehicle body 902. The work lights can illuminate, for example, the side areas (leftward area and rightward area) of the vehicle body 902 and the rearward area of the vehicle body 902. In addition, the illumination device 916 may include a status indicator light, left and right lights, a brake light and the like.

As illustrated in FIG. 91, the working vehicle 901 includes a notification device 917. The notification device 917 notifies people in the periphery of the vehicle body 902 of danger (such as approach of the vehicle body 902) by sound and light or the like. The notification device 917 is a speaker, a warning light and the like.

As illustrated in FIG. 85 to FIG. 90 and the like, the traveling machine body 1100 includes a frame structure 918 that is provided at the periphery of the vehicle body 902 and attached to the vehicle body 902. The frame structure 918 includes a left frame 918L and a right frame 918R. The left frame 918L and the right frame 918R are located laterally of the vehicle body 902.

The left frame 918L is provided leftward of the vehicle body 902. The left frame 918L extends in the up-down direction along the vehicle body 902. The left frame 918L also extends in the front-rear direction along the vehicle body 902. The left frame 918L connects the left front wheel 903LF and the left rear wheel 903LB.

The right frame 918R is provided rightward of the vehicle body 902. The right frame 918R extends in the up-down direction along the vehicle body 902. The right frame 918R also extends in the front-rear direction along the vehicle body 902. The right frame 918R connects the right front wheel 903RF and the right rear wheel 903RB.

As illustrated in FIG. 88, the vehicle body 902 is provided between the left frame 918L and the right frame 918R in a front view. In other words, the vehicle body 902 is located in an area between the left frame 918L and the right frame 918R.

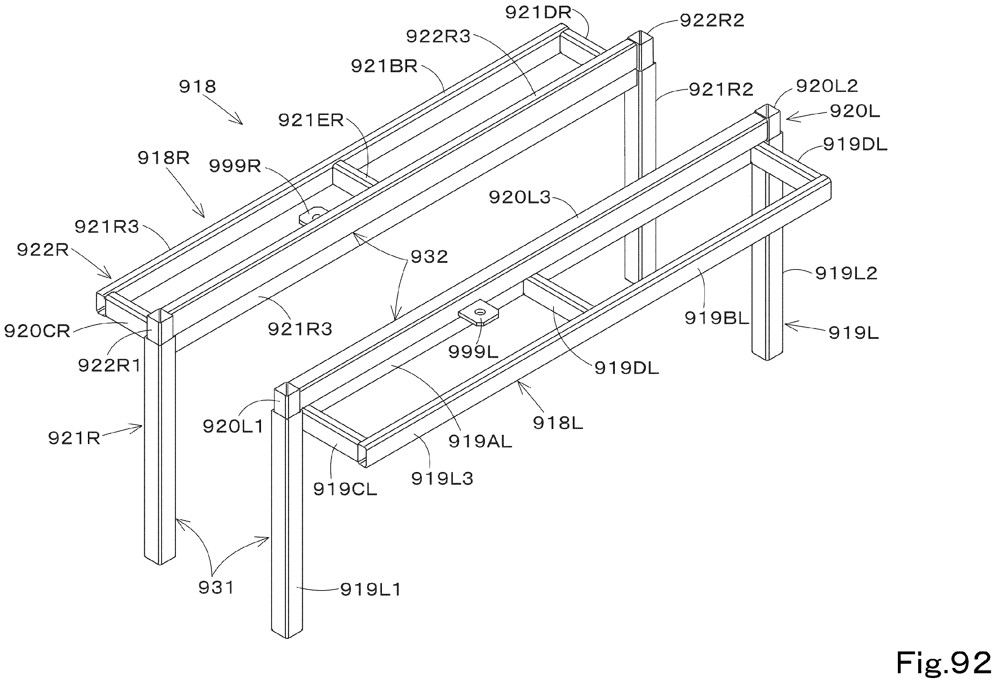

As illustrated in FIG. 92, the left frame 918L includes a first left frame 919L and a second left frame 920L. The first left frame 919L includes a first front pillar 919L1, a first rear pillar 919L2, and a first connector 919L3. The first front pillar 919L1 and the first rear pillar 919L2 are spaced apart in the front-rear direction, and extend in parallel to each other in the up-down direction. As illustrated in FIG. 85 and FIG. 88, the first front pillar 919L1 is located leftward of a front portion of the vehicle body 902. As illustrated in FIG. 89, the first rear pillar 919L2 is located leftward of a rear portion of the vehicle body 902. The first front pillar 919L1 and the first rear pillar 919L2 are in a tubular (square tubular) shape.

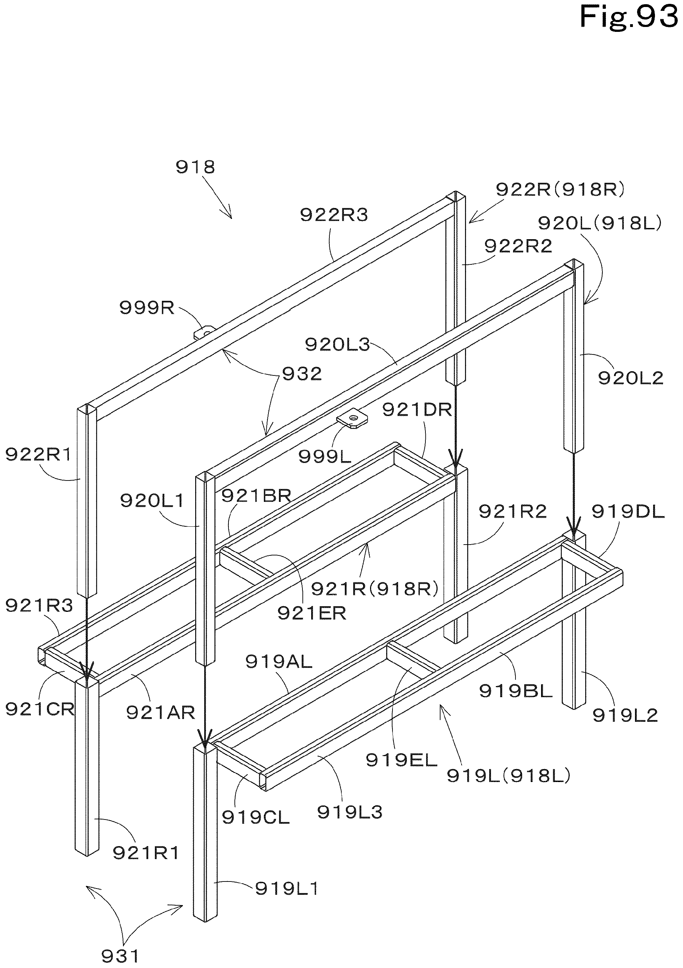

As illustrated in FIG. 93, the first connector 919L3 connects the first front pillar 919L1 and the first rear pillar 919L2. The first connector 919L3 includes a frame member 919AL, a frame member 919BL, a frame member 919CL, a frame member 919DL, and a frame member 919EL. The frame member 919AL extends in the front-rear direction, and connects an upper portion of the first front pillar 919L1 and an upper portion of the first rear pillar 919L2. The frame member 919BL is leftward of the frame member 919AL and extends in the front-rear direction. The frame member 919CL connects a front portion of the frame member 919AL and a front portion of the frame member 919BL. The frame member 919DL connects a rear portion of the frame member 919AL and a rear portion of the frame member 919BL. The frame member 919EL connects an intermediate portion of the frame member 919AL in the front-rear direction and an intermediate portion of the frame member 919BL in the front-rear direction.

As illustrated in FIG. 93, the second left frame 920L includes a second front pillar 920L1, a second rear pillar 920L2, and a second connector 920L3. The second front pillar 920L1 and the second rear pillar 920L2 are spaced apart in the front-rear direction, and extend in parallel to each other in the up-down direction. The second connector 920L3 connects the second front pillar 920L1 and the second rear pillar 920L2. The second connector 920L3 extends in the front-rear direction, and connects an upper portion of the second front pillar 920L1 and an upper portion of the second rear pillar 920L2.

As indicated by a downward arrow in FIG. 93, the second front pillar 920L1 is inserted into the inside of the tubular first front pillar 919L1 from above. The second rear pillar 920L2 is inserted into the inside of the tubular first rear pillar 919L2 from above. Thus, the first left frame 919L and the second left frame 920L are combined (see FIG. 92). The second front pillar 920L1 can be moved in the up-down direction along the first front pillar 919L1. The second rear pillar 920L2 can be moved in the up-down direction along the first rear pillar 919L2. Thus, the second left frame 920L can be moved in the up-down direction with respect to the first left frame 919L.

As illustrated in FIG. 93, the right frame 918R includes a first right frame 921R and a second right frame 922R. The first right frame 921R includes a first front pillar 921R1, a first rear pillar 921R2, and a first connector 921R3. The first front pillar 921R1 and the first rear pillar 921R2 are spaced apart in the front-rear direction, and extend in parallel to each other in the up-down direction. As illustrated in FIG. 85 and FIG. 88, the first front pillar 921R1 is located rightward of a front portion of the vehicle body 902. As illustrated in FIG. 89, the first rear pillar 921R2 is located rightward of a rear portion of the vehicle body 902. The first front pillar 921R1 and the first rear pillar 921R2 are in a tubular (square tubular) shape.

The first connector 921R3 connects the first front pillar 921R1 and the first rear pillar 921R2. The first connector 921R3 includes a frame member 921AR, a frame member 921BR, a frame member 921CR, a frame member 921DR, and a frame member 921ER. The frame member 921AR extends in the front-rear direction, and connects an upper portion of the first front pillar 921R1 and an upper portion of the first rear pillar 921R2. The frame member 921BR is rightward of the frame member 921AR, and extends in the front-rear direction. The frame member 921CR connects a front portion of the frame member 921AR and a front portion of the frame member 921BR. The frame member 921DR connects a rear portion of the frame member 921AR and a rear portion of the frame member 921BR. The frame member 921ER connects an intermediate portion of the frame member 921AR in the front-rear direction and an intermediate portion of the frame member 921BR in the front-rear direction.

The second right frame 922R includes a second front pillar 922R1, a second rear pillar 922R2, and a second connector 922R3. The second front pillar 922R1 and the second rear pillar 922R2 are spaced apart in the front-rear direction, and extend in parallel to each other in the up-down direction. The second connector 922R3 connects the second front pillar 922R1 and the second rear pillar 922R2. The second connector 922R3 extends in the front-rear direction, and connects an upper portion of the second front pillar 922R1 and an upper portion of the second rear pillar 922R2.

As indicated by a downward arrow in FIG. 93, the second front pillar 922R1 is inserted into the inside of the tubular first front pillar 921R1 from above. The second rear pillar 922R2 is inserted into the inside of the tubular first rear pillar 921R2 from above. Thus, the first right frame 921R and the second right frame 922R are combined (see FIG. 92). The second front pillar 922R1 can be moved in the up-down direction along the first front pillar 921R1. The second rear pillar 922R2 can be moved in the up-down direction along the first rear pillar 921R2. Thus, the second right frame 922R can be moved in the up-down direction with respect to the first right frame 921R.

The vehicle body 902 is attached to the second left frame 920L and the second right frame 922R. A left portion (left side surface) of the vehicle body 902 is attached to the second left frame 920L. A right portion (right side surface) of the vehicle body 902 is attached to the second right frame 922R. Specifically, the left portion (the left side surface) of the vehicle body 902 is attached to the second connector 920L3 of the second left frame 920L. A right portion (right side surface) of the vehicle body 902 is attached to the second connector 922R3 of the second right frame 922R.

The method of attaching the vehicle body 902 to the second left frame 920L (the second connector 920L3) and the second right frame 922R (the second connector 922R3) is not limited to a specific one, and, for example, the vehicle body 902 may be detachably attached by a fastener such as a bolt, or attached by welding or adhesive bonding and the like.

As described above, the vehicle body 902 is attached to the second left frame 920L and the second right frame 922R, and thus can be moved integrally with the left frame 918L and the right frame 918R. Thus, when the left frame 918L and the right frame 918R are moved in the up-down direction with respect to the first left frame 919L and the first right frame 921R, the vehicle body 902 is moved in the up-down direction along with the second left frame 920L and the second right frame 922R.

The frame structure 918 includes a fixed frame 931 to which the traveling device 903 is attached, and a movable frame 932 attached to the vehicle body 902. The fixed frame 931 is not moved in the up-down direction. The movable frame 932 is movable in the up-down direction. In the frame structure 918, the second left frame 920L and the second right frame 922R are each movable frame 932. The first left frame 919L and the first right frame 921R are each fixed frame 931. The vehicle body 902 is moved, that is, raised or lowered along with the movable frame 932 in the up-down direction with respect to the fixed frame 931.

The later-described height changing mechanism 990 changes the height of the vehicle body 902 that is the distance of the vehicle body 902 from the ground surface by raising or lowering the movable frame 932 with respect to the fixed frame 931. The traveling device 903 is attached to the fixed frame 931. Specifically, the left traveling device 903L is attached to the first left frame 919L. The right traveling device 903R is attached to the first right frame 921R. When the movable frame 932 is raised or lowered with respect to the fixed frame 931, the vehicle body 902 is raised or lowered with respect to the traveling device 903. Thus, the height of the vehicle body 902 that is the distance of the vehicle body 902 from the ground surface is changed.

Note that the configuration of the frame structure 918 is not limited to the illustrated configuration. For example, the frame structure 918 may include a connection frame that connects the second left frame 920L and the second right frame 922R. In this case, the connection frame can connect, e.g., an upper portion of the second left frame 920L and an upper portion of the second right frame 922R. In this case, the connection frame is also a movable frame 932.

As illustrated in FIG. 91, the working vehicle 901 includes a drive assembly 940 to drive the wheels (the left front wheel 903LF, the right front wheel 903RF, the left rear wheel 903LB, and the right rear wheel 903RB). The drive assembly 940 includes: a drive device 945 to generate power; a transmission mechanism 950 to transmit the power generated by the drive device 945 to the wheels 930; and a steering mechanism 960 to change the direction of the wheels (the left front wheel 903LF and the right front wheel 903RF). In the present embodiment, the steering mechanism 960 is a mechanism to change the direction of the front wheels (the left front wheel 903LF and the right front wheel 903RF), but may be a mechanism to change the direction of the rear wheels (the left rear wheel 903LB and the right rear wheel 903RB). Alternatively, the steering mechanism 960 may be a mechanism to change both the direction of the front wheels and the direction of the rear wheels.

As illustrated in FIG. 86 and FIG. 87, the drive assembly 940 includes a first drive assembly 941 to drive the left front wheel 903LF, a second drive assembly 942 to drive the right front wheel 903RF, a third drive assembly 943 to drive the left rear wheel 903LB, and a fourth drive assembly 944 to drive the right rear wheel 903RB. The first drive assembly 941, the second drive assembly 942, the third drive assembly 943 and the fourth drive assembly 944 each include the later-described drive device 945 and transmission mechanism 950. The first drive assembly 941 and the second drive assembly 942 each include the later-described steering mechanism 960. The drive assemblies are attached to the frame structure 918.

In the present embodiment, the drive device 945 is a motor. Specifically, the drive device 945 is the traveling motor 905 described above. In other words, the motors included in the drive device 945 are the same as the motors included in the above-described power supply apparatus 904. As described below, the motor 905 included in the drive device 945 of the drive assembly 940 includes a motor 905LF, a motor 905RF, a motor 905LB, and a motor 905RB.

As illustrated in FIG. 86, the first drive assembly 941 includes a motor 905LF, and a transmission mechanism 950LF to transmit the power of the motor 905LF to the left front wheel 903LF. The transmission mechanism 950LF is a gear mechanism or the like including a plurality of gears. When the first drive assembly 941 drives the motor 905LF, the power of the motor 905LF is transmitted to the left front wheel 903LF through the transmission mechanism 950LF.

As illustrated in FIG. 87, the second drive assembly 942 includes a motor 905RF, and a transmission mechanism 950RF to transmit the power of the motor 905RF to the right front wheel 903RF. The transmission mechanism 950RF is a gear mechanism or the like including a plurality of gears. When the second drive assembly 942 drives the motor 905RF, the power of the motor 905RF is transmitted to the right front wheel 903RF through the transmission mechanism 950RF.

As illustrated in FIG. 86, the third drive assembly 943 includes a motor 905LB, and a transmission mechanism 950LB to transmit the power of the motor 905LB to the left rear wheel 903LB. The transmission mechanism 950LB is a gear mechanism or the like including a plurality of gears. When the third drive assembly 943 drives the motor 905LB, the power of the motor 905LB is transmitted to the left rear wheel 903LB through the transmission mechanism 950LB.

As illustrated in FIG. 87, the fourth drive assembly 944 includes a motor 905RB, and a transmission mechanism 950RB to transmit the power of the motor 905RB to the right rear wheel 903RB. The transmission mechanism 950RB is a gear mechanism or the like including a plurality of gears. When the fourth drive assembly 944 drives the motor 905RB, the power of the motor 905RB is transmitted to the right rear wheel 903RB through the transmission mechanism 950RB.

As illustrated in FIG. 91, the drive assembly 940 includes a steering mechanism 960 to change the direction of the wheels 930. In the present embodiment, the steering mechanism 960 is a mechanism to change the direction of the front wheels (the left front wheel 903LF and the right front wheel 903RF) among the wheels 930. As illustrated in FIG. 86 and FIG. 87, the steering mechanism 960 includes a left steering mechanism 960L to change the direction of the left front wheel 903LF, and a right steering mechanism 960R to change the direction of the right front wheel 903RF.

As illustrated in FIG. 86, the first drive assembly 941 includes the left steering mechanism 960L. As illustrated in FIG. 87, the second drive assembly 942 includes the right steering mechanism 960R. The left steering mechanism 960L can rotate the left front wheel 903LF around an axis AX10 by driving the cylinder 962 to extend or retract a rod 962a. Similarly, the right steering mechanism 960R can rotate the right front wheel 903RF around an axis AX20 by driving the cylinder 962 to extend or retract the rod 962a. In this manner, the travel direction of the traveling machine body 1100 can be changed by driving the steering mechanism 960 to change the direction of the left front wheel 903LF and the right front wheel 903RF.

Note that as another embodiment of the drive device 945, the motor of the drive device 945 may be an in-wheel motor. In this case, all the left front wheel 903LF, the right front wheel 903RF, the left rear wheel 903LB, and the right rear wheel 903RB may be driven by an in-wheel motor, or part (for example, the left front wheel 903LF and the right front wheel 903RF, or the left rear wheel 903LB and the right rear wheel 903RB) may be driven by an in-wheel motor.

As illustrated in FIG. 91, the working vehicle 901 includes a first detector 970. The first detector 970 detects the situation in the surrounding area of the vehicle body 902. The situation in the surrounding area of the vehicle body 902, detected by the first detector 970 is, e.g., an obstacle and the like that block the path of the vehicle body 902.

As illustrated in FIG. 91, the first detector 970 includes a camera (image pickup device) 971, a sensor 972, and a calculator 973. In the present embodiment, the first detector 970 includes both the camera 971 and the sensor 972, but may include only one of them.

The camera 971 is a charge coupled device (CCD) camera equipped with a CCD image sensor, or a complementary metal oxide semiconductor (CMOS) camera equipped with a CMOS image sensor. The camera 971 is installed in the vehicle body 902 to capture an image of the surrounding area of the vehicle body 902. It is only necessary for the camera 971 to capture an image in at least one or more directions including the travel direction of the vehicle body 902 among the forward, rearward, leftward, and rightward directions of the vehicle body 902. Preferably, the camera 971 is located to capture an image forward, rearward, or laterally (leftward or rightward) of the vehicle body 902. The camera 971 may be located to allow an image to be captured in a direction (e.g., right forward, left forward, front below, or rear below) other than the forward, rearward, and lateral (leftward and rightward) directions of the vehicle body 902.

The camera 971 captures an image of the surrounding area of the vehicle body 902 to generate an image signal. The calculator 973 includes a computer or the like including a signal processing circuit to process the generated image signal. The signal processing circuit detects the state (such as the presence or absence of an object, the position of an object, the type of an object, and the size of an object) of an object based on the image signal output from the camera 971. The object includes the above-mentioned obstacle.

The sensor 972 is an optical sensor, and uses, e.g., light detection and ranging (LiDAR). A LiDAR (laser sensor) emits pulsed measurement light (laser light) millions of times per second from a light source such as a laser diode, and performs scanning in a horizontal direction or a vertical direction by reflecting the measurement light by a rotatable mirror to project the measurement light in a predetermined detection range (sensing range). The LiDAR receives, by a light receiving element, reflected light of the measurement light from an object. The signal processing circuit of the calculator 973 detects the state (such as the presence or absence of an object, the position of an object, the type of an object, and the size of an object) of an object based on a light receiving signal output from the light receiving element of the LiDAR. The object includes the above-mentioned obstacle. The signal processing circuit detects the distance to the object based on the time from emission of the measurement light by the LiDAR until the reflected light is received (time of flight (TOF) method). Note that the distance detection method used by the LiDAR may be a method other than the TOF method.

The sensor 972 may be a sonic sensor. The sensor 972 preferably includes both an optical sensor and a sonic sensor, but may include either one of the sensors. The sonic sensor is, e.g., an airborne ultrasonic sensor such as a sonar. The airborne ultrasonic sensor transmits measurement waves (ultrasonic waves) in a predetermined detection range by a transmitter, and receives, by a receiver, reflection waves which are reflected measurement waves from an object. The signal processing circuit detects the state (such as the presence or absence of an object, the position of an object, the type of an object, and the size of an object) of an object based on the signal output from the receiver. The object includes the above-mentioned obstacle. The signal processing circuit detects the distance to the object based on the time from transmission of measurement waves by the airborne ultrasonic sensor until the reflected waves are received (time of flight (TOF) method). Note that the distance detection method used by the sonic sensor may be a method other than the TOF method.

The above-described sensor 972 is installed in the vehicle body 902 to detect an object in the surrounding area of the vehicle body 902. It is only necessary for the sensor 972 to detect an object in at least one or more directions including the travel direction of the vehicle body 902 among the forward, rearward, leftward, and rightward directions of the vehicle body 902. Preferably, the sensor 972 is located to detect an object forward, rearward, or laterally (leftward or rightward) of the vehicle body 902. The sensor 972 may be located to allow an object to be detected in a direction (e.g., right forward, left forward, front below, or rear below) other than the forward, rearward, and lateral (leftward and rightward) directions of the vehicle body 902.

As illustrated in FIG. 91, the traveling machine body 1100 of the working vehicle 901 includes a height changing mechanism 990. The height changing mechanism 990 changes the height of the vehicle body 902 that is the distance of the vehicle body 902 from the ground surface. The height changing mechanism 990 raises and lowers the vehicle body 902 in which the battery 907 is housed. The height changing mechanism 990 raises and lowers the vehicle body 902 at a location between the left traveling device 903L and the right traveling device 903R in the width direction (the lateral direction) of the vehicle body 902. The height changing mechanism 990 changes the height of the vehicle body 902 that is the distance of the vehicle body 902 from the ground surface by raising or lowering the frame structure 918 attached to the vehicle body 902.

As illustrated in FIG. 85 to FIG. 87 and the like, the height changing mechanism 990 includes a lifting cylinder 991. The lifting cylinder 991 raises and lowers the movable frame 932 (the second left frame 920L and the second right frame 922R) of the frame structure 918. The vehicle body 902 is raised and lowered by raising and lowering the movable frame 932. Thus, the vehicle body 902 can be raised and lowered by driving the lifting cylinder 991. In this manner, the height changing mechanism 990 can raise and lower the vehicle body 902. Hereinafter, the height changing mechanism 990 may be referred to as the "lifting mechanism 990".

The lifting cylinder 991 includes a hydraulic cylinder. The lifting cylinder 991 includes a rod 991a that extends and retracts in the up-down direction, and a cylinder tube 991b to which hydraulic fluid to drive the rod 991a is supplied (see FIG. 85 to FIG. 87). The distal end of the rod 991a is connected to the frame structure 918. The lifting cylinder 991 includes a left lifting cylinder 991L and a right lifting cylinder 991R. The left lifting cylinder 991L is located leftward of the vehicle body 902. The right lifting cylinder 991R is located rightward of the vehicle body 902.

As illustrated in FIG. 85 and FIG. 86, a rod 991La of the left lifting cylinder 991L is connected to the second left frame 920L of the frame structure 918. Specifically, the rod 991La of the left lifting cylinder 991L is connected to a left plate 999L fixed to the second left frame 920L. Thus, the left lifting cylinder 991L can raise and lower the second left frame 920L which is a movable frame of the left frame 918L by extending and retracting the rod 991La.

As illustrated in FIG. 85 and FIG. 87, a rod 991Ra of the right lifting cylinder 991R is connected to the second right frame 922R of the frame structure 918. Specifically, the rod 991Ra of the right lifting cylinder 991R is connected to a right plate 999R fixed to the second right frame 922R. Thus, the right lifting cylinder 991R can raise and lower the second right frame 922R which is a movable frame of the right frame 918R by extending and retracting the rod 991Ra.

A cylinder tube 991Lb of the left lifting cylinder 991L is attached to a bracket (not illustrated) fixed to the first left frame 919L. A cylinder tube 991Rb of the right lifting cylinder 991R is attached to a bracket (not illustrated) fixed to the first right frame 921R.

When the rod 991La of the left lifting cylinder 991L is extended or retracted, the second left frame 920L is extended or retracted. When the rod 991Ra of the right lifting cylinder 991R is extended or retracted, the second right frame 922R is raised or lowered.
Thus, the frame structure 918 (the movable frame 932) can be raised and lowered with extension and retraction of the rod 991a of the lifting cylinder 991 (the left cylinder 991L and the right cylinder 991R). Since the vehicle body 902 is attached to the frame structure 918 (the movable frame 932), the vehicle body 902 can be raised and lowered with extension and retraction of the rod 991a of the lifting cylinder 991. The height of the vehicle body 902 that is the distance of the vehicle body 902 from the ground surface can be changed by raising or lowering the vehicle body 902.

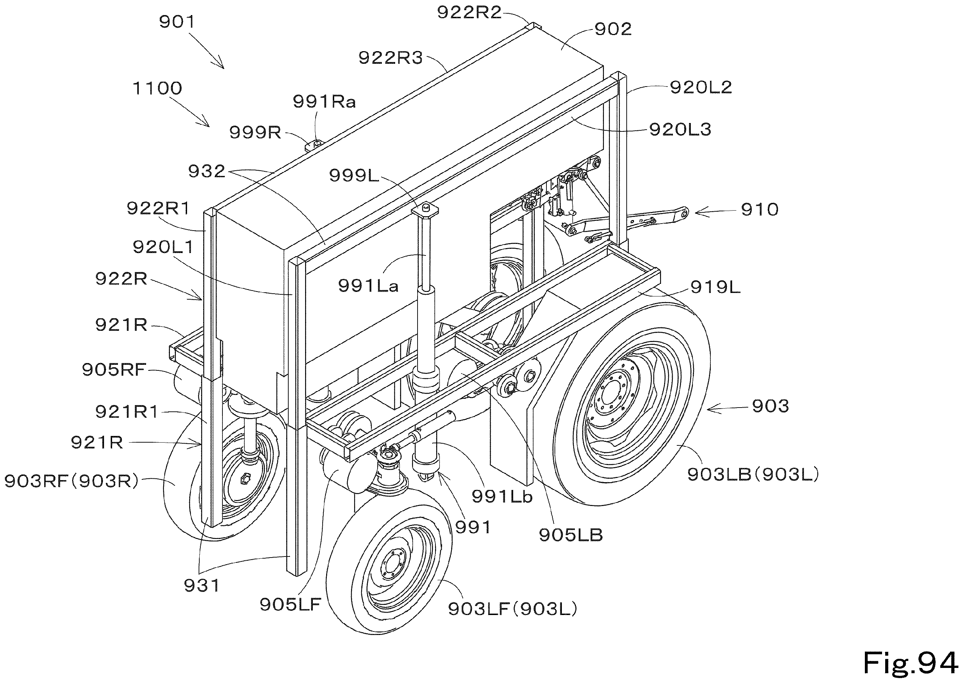

FIG. 94 illustrates a state where the vehicle body 902 is raised by extending the rod 991a of the lifting cylinder 991. With the raise of the vehicle body 902, the lifting device 910 provided in the vehicle body 902 is also raised. Thus, the second working device 1300 attached to the lifting device 910 can be raised by raising the vehicle body 902. In addition, the working device 1200 (described later) such as a harvester attached to an upper portion of the vehicle body 902 can be raised by raising the vehicle body 902.

The operation of the height changing mechanism (lifting mechanism) 990 is controlled by the controller 915. As illustrated in FIG. 91, the controller 915 includes a height changing control unit 915B. The height changing control unit 915B transmits a control signal to the height changing mechanism 990 by the arithmetic unit of the controller 915 executing a program stored in the storage. The height changing mechanism 990 is driven based on the control signal transmitted from the height changing control unit 915B. That is, the height changing mechanism 990 changes the height of the vehicle body 902 by being driven based on the control by the controller 915.

The height changing mechanism 990 can change the height of the vehicle body 902 to any height within a preset height range. Specifically, the height changing mechanism 990 can change the height of the vehicle body 902 to any height between a first height (see FIG. 85) and a second height (see FIG. 94) higher than the first height. Thus, the preset height range is the range between the first height and the second height. In the present embodiment, the first height is the height of the vehicle body 902 when the rod of the lifting cylinder 991 is the shortest, and the second height is the height of the vehicle body 902 when the rod of the lifting cylinder 991 is the longest.

The first height is the height (lower limit height) of the lower limit of the height of the vehicle body 902, changeable by the height changing mechanism 990. The second height is the height (upper limit height) of the upper limit of the height of the vehicle body 902, changeable by the height changing mechanism 990. The height changing mechanism 990 can change the height of the vehicle body 902 to the first height as the lower limit height, the second height as the upper limit height, and any height (intermediate height) between the upper limit height and the lower limit height.

The height changing mechanism 990 can change the height of the vehicle body 902, for example, in response to indication of the height by a manual operator 980 (see FIG. 91). The manual operator 980 can perform an operation of indicating the height of the vehicle body 902. The manual operator 980 is a device (external equipment) outside the working vehicle 901, and is configured to communicate with the controller 915 in a wireless or wired manner. The manual operator 980 is, for example, a portable device such as a remote control device, a tablet, a smartphone, or a PDA.

The manual operator 980 includes an input unit to receive an indicated height of the vehicle body 902. The input unit is, e.g., a push-button, a rotary dial, and a touch panel. When an operator inputs the height to be indicated via the input unit of the manual operator 980, the indicated input height is transmitted to the controller 915. The controller 915 transmits a control signal to drive the lifting cylinder 991 of the height changing mechanism 990 such that the height of the vehicle body 902 reaches the indicated height. Thus, the height of the vehicle body 902 is changed to the height indicated by the manual operator 980.

As described above, the vehicle body 902 is provided between the left traveling device 903L and the right traveling device 903R. The height changing mechanism 990 raises or lowers the vehicle body 902 between the left traveling device 903L and the right traveling device 903R to change the height of the vehicle body 902. In other words, the vehicle body 902 is moved in the up-down direction through the space between the left traveling device 903L and the right traveling device 903R.

The working vehicle 901 includes the later-described power input 1280, mount 1400 and power transmission mechanism 1600. Here, only an overview of the power input 1280, mount 1400 and power transmission mechanism 1600 will be described, and the details will be described later. The working vehicle 901 includes the mount 1400 by which the working device 1200 is attachable to the traveling machine body 1100, the working device 1200 including the power input 1280 to which power is input. The mount 1400 allows at least the power input 1280 of the working device 1200 to be attached on the traveling machine body 1100. The working vehicle 901 includes the power transmission mechanism 1600 to output the power generated by the power supply apparatus 904 upward with respect to the traveling machine body 1100 such that the power is transmittable to the working device 1200.

The working device 1200 attachable to the mount 1400 is a working device different from the second working device 1300 attached to the above-mentioned lifting device 910. The type of the working device 1200 is not limited to a specific one, and a device that performs agricultural work is preferably used. The working device 1200 that performs agricultural work includes, e.g., a harvester that performs harvesting work.

Hereinafter, a description will be given assuming that the working device 1200 is a harvester that performs harvesting work, and a harvester as an example of the working device 1200 is referred to as a "harvester 1200". However, the working device is not limited to the harvester. Thus, the following description holds even if the harvester is replaced by the working device except for the description of a configuration specific to the harvester.

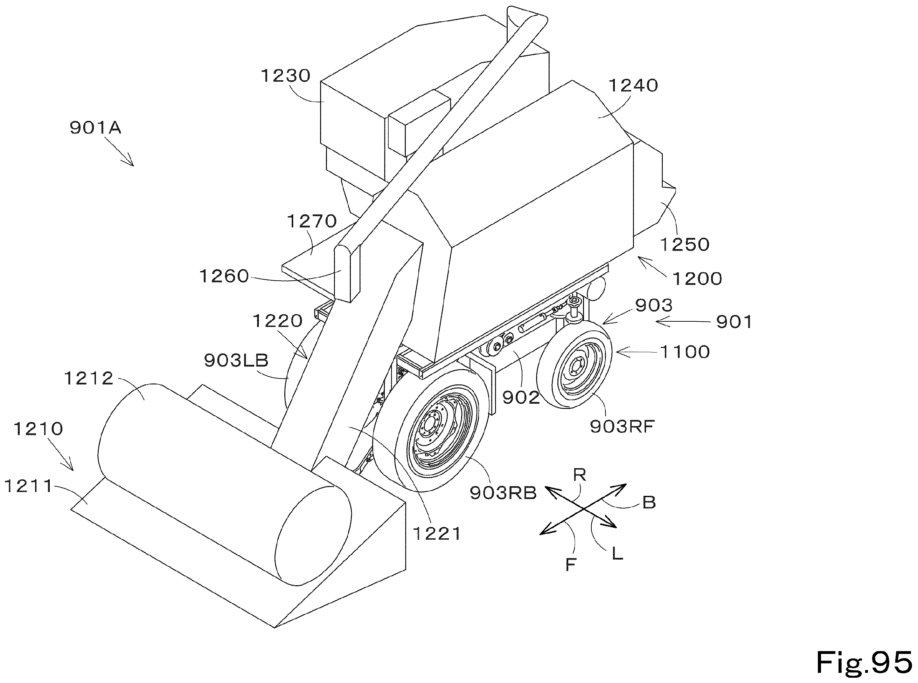

FIG. 95 to FIG. 98 illustrate the working vehicle 901 with the harvester 1200 attached to the traveling machine body 1100. Hereinafter, the working vehicle with the harvester 1200 attached to the traveling machine body 1100 is referred to as the "harvesting machine 901A" or "working vehicle 901A" to distinguish from the working vehicle 901 with the harvester 1200 detached.

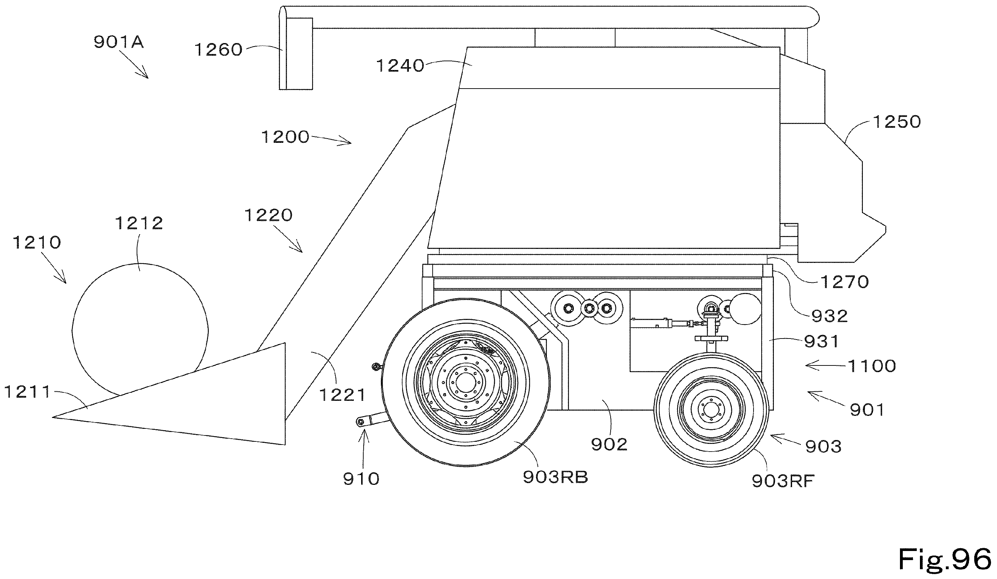

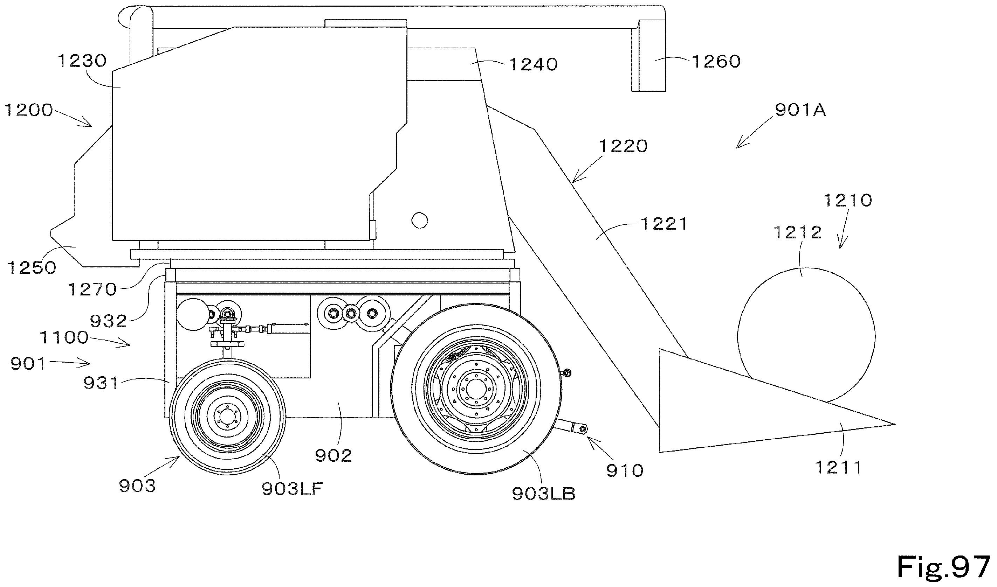

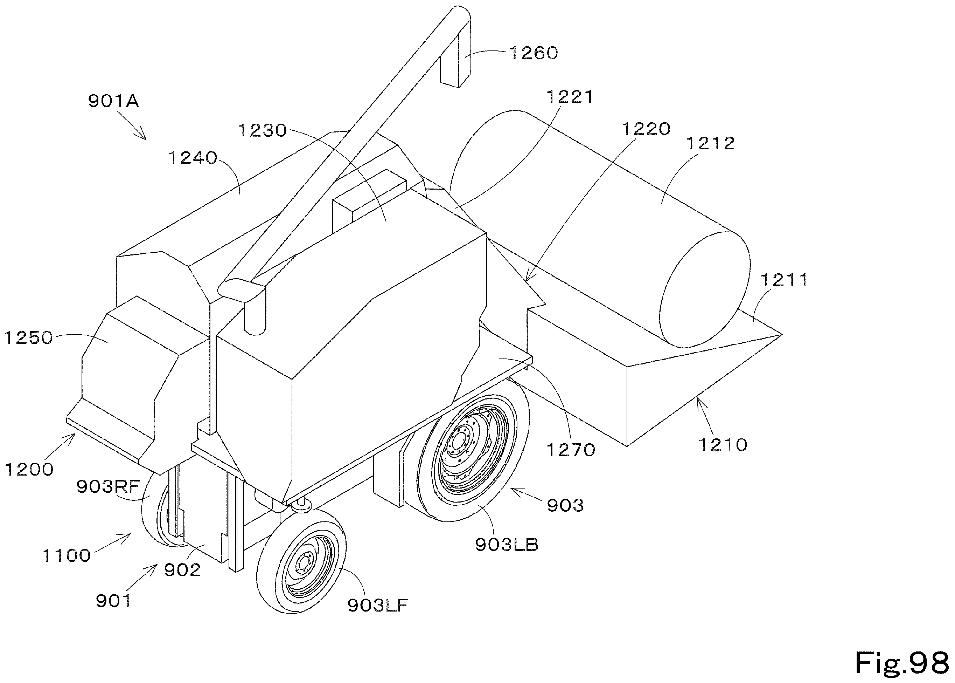

FIG. 95 to FIG. 98 illustrate an embodiment of the harvesting machine (working vehicle) 901A. FIG. 95 is a front perspective view of the harvesting machine 901A. FIG. 96 is a left side view of the harvesting machine 901A. FIG. 97 is a right side view of the harvesting machine 901A. FIG. 98 is a rear perspective view of the harvesting machine 901A. As illustrated in FIG. 95 to FIG. 98, the harvesting machine 901A includes the traveling machine body 1100 and the harvester 1200. Note that FIG. 95 to FIG. 98 illustrate the configuration of harvester 1200 in a simplified manner.

**In** the present specification, the direction (arrow F direction in FIG. 95) in which the harvesting machine 901A travels at the time of harvesting work is defined as forward direction of the harvesting machine 901A, and the opposite side (arrow B direction in FIG. 95) to the forward direction is defined as rearward direction of the harvesting machine 901A. Therefore, the front side of the harvesting machine 901A includes the front side (such as the later-described harvesting unit 1210) of the harvester 1200, and the rear side of the harvesting machine 901A includes the rear side (such as the later-described releaser 1250) of the harvester 1200.

The direction indicated by an arrow L in FIG. 95 is defined as leftward direction of the harvesting machine 901A, and the direction indicated by an arrow R is defined as rightward direction of the harvesting machine 901A. Therefore, the left side of the harvesting machine 901A includes the left side (the later-described thresher 1240) of the harvester 1200, and the right side of the harvesting machine 901A includes the right side (the later-described housing 1230) of the harvester 1200.

The harvesting machine 901A in the embodiment illustrated in FIG. 95 to FIG. 98 has a configuration in which the front side of the harvester 1200 is provided rearward (on the rear wheel side) of the traveling machine body 1100, and the rear side of the harvester 1200 is provided forward (on the front wheel side) of the traveling machine body 1100. Thus, in the harvesting machine 901A in the embodiment illustrated in FIG. 95 to FIG. 98, the front and rear of the harvesting machine 901A and the harvester 1200 are reversed from the front and rear of the traveling machine body 1100, and the right and left of the harvesting machine 901A and the harvester 1200 are reversed from the right and left of the machine body 1100. Thus, the rear wheels of the traveling machine body 1100 are located at a front portion of the harvesting machine 901A, and the front wheels of the traveling machine body 1100 are located at a rear portion of the harvesting machine 901A. In addition, the right wheels of the traveling machine body 1100 are located on the left side of the harvesting machine 901A, and the left wheels of the traveling machine body 1100 are located on the right side of the harvesting machine 901A.

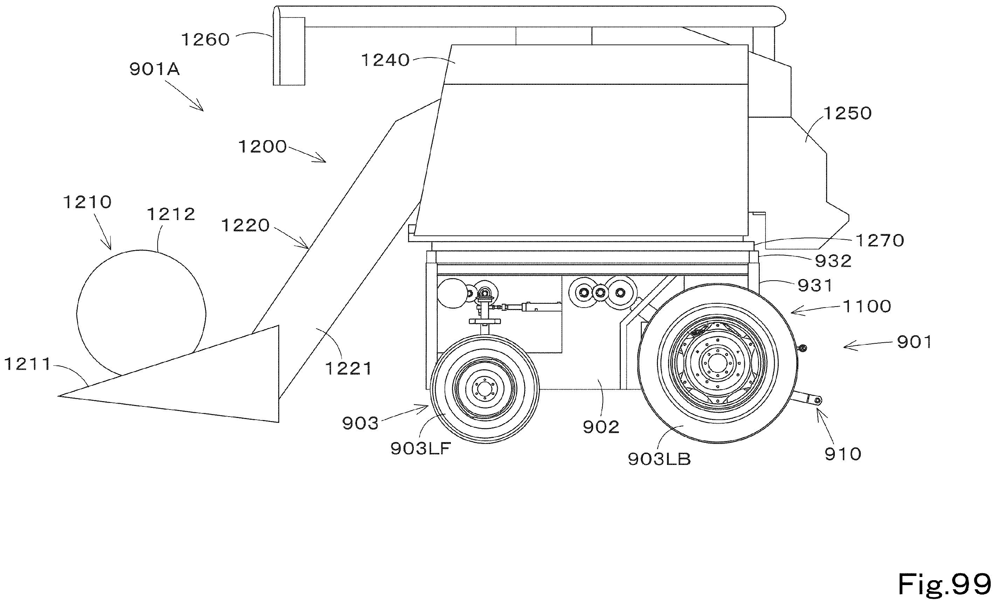

Meanwhile, in another embodiment (such as FIG. 99, FIG. 115, FIG. 123, FIG. 127, and FIG. 131), the front and rear of the harvesting machine 901A and the harvester 1200 match the front and rear of the traveling machine body 1100, and the right and left of the harvesting machine 901A and the harvester 1200 match the right and left of the traveling machine body 1100. Thus, the front wheels of the traveling machine body 1100 are located at a front portion of the harvesting machine 901A, and the rear wheels of the traveling machine body 1100 are located at a rear portion of the harvesting machine 901A. In addition, the left wheels of the traveling machine body 1100 are located on the left side of the harvesting machine 901A, and the right wheels of the traveling machine body 1100 are located on the right side of the harvesting machine 901A.

The harvester 1200 is a device that performs harvesting work of at least one of reaping, digging, and pulling crops with travel of the traveling machine body 1100. The crops reaped by the harvester 1200 include, e.g., paddy, wheat, soybean, and corn, but are not limited to these. The crops dug by the harvester 1200 include, e.g., potato, sweet potato, green onion, and onion, but are not limited to these. The crops pulled by the harvester 1200 include, e.g., Japanese radish, burdock, and carrot, but are not limited to these.

The harvester 1200 includes a harvesting unit 1210, a transporter 1220, and a housing 1230. In addition, the harvester 1200 includes a thresher 1240, a releaser 1250, and a discharger 1260. The harvesting unit 1210 performs harvesting work of at least one of reaping, digging, and pulling crops. The harvester 1200 performs harvesting work in a state where the vehicle body 902 is lowered (a state where the vehicle body 902 is at the first height). FIG. 95 to FIG. 98 illustrate a state where the vehicle body 902 is lowered.

The harvester 1200 included in the harvesting machine 901A in the embodiment illustrated in FIG. 95 to FIG. 98 is a reaping device that performs reaping of crops with travel of the traveling machine body 1100. Thus, the harvesting unit 1210 performs reaping of crops (such as paddy).

The harvesting unit 1210 is located at a front portion (a front portion of the harvesting machine 901A) of the harvester 1200. The harvesting unit 1210 is provided forward or rearward of the bottom of the traveling machine body 1100. **In** the embodiment illustrated in FIG. 95 to FIG. 98, the harvesting unit 1210 is provided rearward (on the rear wheel side) of the traveling machine body 1100, but the harvesting unit 1210 may be provided forward (on the front wheel side) of the traveling machine body 1100 (see FIG. 99). In other words, in the harvesting machine 901A, the direction (direction of the front-rear direction) of attachment of the harvester 1200 to the traveling machine body 1100 may be opposite to the direction illustrated in FIG. 95 to FIG. 98 (see FIG. 99, FIG. 115, FIG. 123, FIG. 127, and FIG. 131). In this manner, in the harvesting machine 901A, the direction (direction in the front-rear direction) of attachment of the harvester 1200 to the traveling machine body 1100 is not limited to a specific one, and can be changed according to the type of the harvester 1200, the content and the like of the harvesting work.

The harvesting unit 1210 includes a grass divider 1211, a pulling reel 1212, and a cutting device (not illustrated). The grass divider 1211 has the function of dividing crops into the right and left with travel of the traveling machine body 1100. The pulling reel 1212 pulls the crops divided by the grass divider 1211 rearward. The cutting device cuts off the base of the crops which have been pulled by the pulling reel 1212.

The transporter 1220 transports the crops harvested by the harvesting unit 1210 to an upper position of the traveling machine body 1100. Specifically, the transporter 1220 transports the crops harvested by the harvesting unit 1210 to an upper position of the traveling machine body 1100 from a position forward (rearward) of a lower portion of the traveling machine body 1100 forward (or backward). The transporter 1220 includes a tubular body 1221, and a conveyor located inside the tubular body 1221. A front portion of the tubular body 1221 is connected to the harvesting unit 1210. A rear portion of the tubular body 1221 is located above the traveling machine body 1100. The transporter 1220 (the tubular body 1221) extends above the traveling machine body 1100 in an upper diagonal direction from a portion connected to the harvesting unit 1210. The crops cut by the cutting device of the harvesting unit 1210 are moved and transported diagonally above the traveling machine body 1100 from a position forward (rearward) of the bottom of the traveling machine body 1100 by the conveyor of the transporter 1220 through the inside of the tubular body 1221.

The housing 1230 houses the crop transported by the transporter 1220. The housing 1230 is, e.g., a grain tank. The housing 1230 houses the crop which has been transported by the transporter 1220, and has passed through the thresher 1240. The thresher 1240 is located above the traveling machine body 1100 and on the left side of the harvester 1200 (the left side of the harvesting machine 901A). The thresher 1240 is connected to a rear portion of the tubular body 1221. The crop transported through the inside of the tubular body 1221 is supplied to the thresher 1240, and threshed therein. The rear of the thresher 1240 is provided with the releaser 1250 that cuts and releases discharged straw produced by the threshing process. The releaser 1250 is located at a rear portion of the harvester 1200 (a rear portion of the harvesting machine 901A).

The housing 1230 houses the grains which have been threshed and selected by the thresher 1240. The housing 1230 is located above the traveling machine body 1100 and on the right side of the harvester 1200 (the right side of the harvesting machine 901A). The housing 1230 is connected to the discharger 1260. The discharger 1260 can discharge the crops (grains) housed in the housing 1230 to the outside by driving an auger or the like. When the housing (grain tank) 1230 becomes full, the crops (grains) housed in the housing 1230 are discharged by the discharger 1260.

The harvester 1200 includes a substrate 1270 that supports the component units having the functions related to harvesting (the harvesting unit 1210, the transporter 1220, the housing 1230, the thresher 1240, the releaser 1250, and the discharger 1260). The harvesting unit 1210 is located below (forward below the substrate 1270) the substrate 1270. Specifically, the harvesting unit 1210 is located forward below the substrate 1270. The front of the transporter 1220 is located below the substrate 1270. Specifically, the front of the transporter 1220 is located forward below the substrate 1270. The rear of the transporter 1220 is located above the substrate 1270. The thresher 1240 and the housing 1230 are fixed onto the substrate 1270.

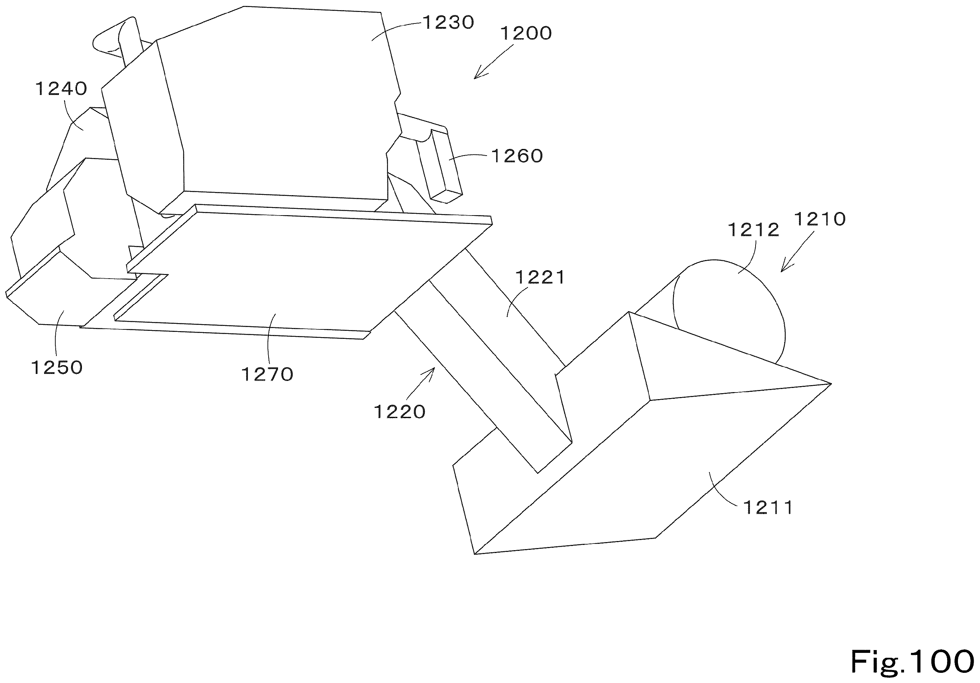

The substrate 1270 is, e.g., a substantially rectangular plate in a plan view. **In** the example illustrated in FIG. 100, the substrate 1270 has a shape with part of a rectangle cut out. The shape, size, and thickness of the substrate 1270 can be changed as appropriate according to the shape, size, weight and the like of the components (the housing 1230 and the thresher 1240) of the harvester 1200 fixed onto the substrate 1270.

The shape, size, and thickness of the substrate 1270 can also be changed according to the structure of attachment (described later) of the harvester 1200 to the traveling machine body 1100. For example, when the later-described recess 1501, insertion hole 1503, projection 1504, groove 1505, and the like are provided in the substrate 1270, the thickness of the substrate 1270 can be increased as necessary.

As illustrated in FIG. 95 to FIG. 98, the harvester 1200 can be attached to the top of the traveling machine body 1100. Thus, the harvester 1200 can be moved with travel of the traveling machine body 1100. Thus, the harvester 1200 is not provided with a traveling device. That is, since the harvester 1200 is attached to the top of the traveling machine body 1100, the harvester 1200 does not need to be provided with a traveling device. Because the traveling machine body 1100 can perform automatic driving, the harvester 1200 does not include an operator's seat. The harvester 1200 is not provided with either a traveling device or an operator's seat like this, and thus the harvester 1200 can be miniaturized and light-weighted.

Note that the mount 1400 allows at least the power input 1280 included in the harvester 1200 to be attached on the traveling machine body 1100. Thus, the harvester 1200 is attached such that at least the power input 1280 is located above the traveling machine body 1100. Thus, the harvester 1200 can receive, above the traveling machine body 1100, the power from the traveling machine body 1100. Preferably, the harvester 1200 is attached such that at least part (such as the thresher 1240) of a drive member to be driven by the power input from the power input 1280 is located (above the vehicle body 902) above the traveling machine body 1100. Preferably, the harvester 1200 is positioned such that at least part of the harvesting unit 1210 is located below (in the vicinity of the ground surface) the upper end of the vehicle body 902.

The harvester 1200 is constructed as an independent body from the traveling machine body 1100, and can be attached to and detached from the traveling machine body 1100. As described above, the harvester 1200 can be miniaturized and light-weighted, and thus it is possible to easily perform attachment and detachment of the harvester 1200 to and from the traveling machine body 1100.

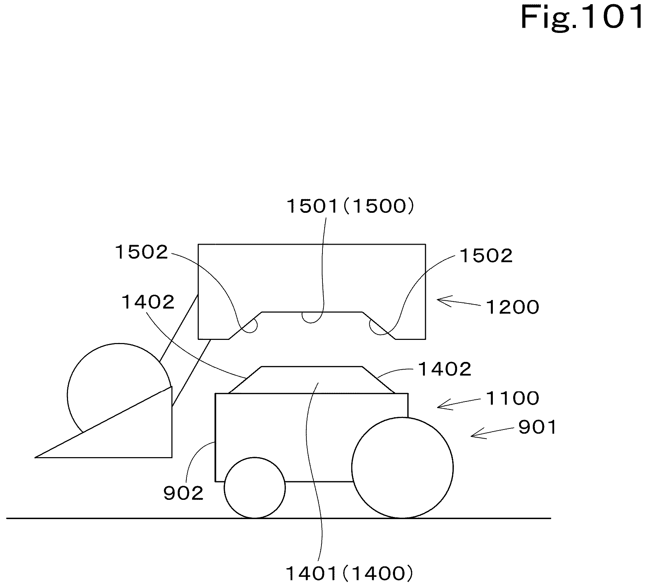

Next, the structure of attachment of the harvester 1200 to the traveling machine body 1100 will be described. FIG. 101 to FIG. 106 illustrate an example of a structure of attachment of the harvester 1200 to the traveling machine body 1100. The structure of attachment includes the mount 1400 provided in the vehicle body 902, and an attached/detached unit 1500 provided in the harvester 1200. The mount 1400 allows the harvester 1200 to be detachably attached to the traveling machine body 1100. Thus, in the following description, the mount 1400 may be referred to as the "attaching/detaching mechanism 1400".

Hereinafter, the structure of attachment of the harvester 1200 to the traveling machine body 1100 will be described based on FIG. 101 to FIG. 106. Note that the traveling machine body 1100 and the harvester 1200 illustrated in FIG. 101 to FIG. 106 are simplified figures of the traveling machine body 1100 and the harvester 1200 illustrated in FIG. 85 to FIG. 90, FIG. 94 to FIG. 98 and the like.

FIG. 101 illustrates a first example of structure of attachment of the harvester 1200 to the traveling machine body 1100. In the first example of structure of attachment, the attaching/detaching mechanism 1400 includes a protrusion 1401 raised upward from the upper surface of the traveling machine body 1100 (the upper surface of the vehicle body 902). That is, the top of the vehicle body 902 is provided with the protrusion 1401 raised upward. The protrusion 1401 is configured to be raised and lowered. Specifically, the protrusion 1401 is raised and lowered by raising and lowering the vehicle body 902.

The protrusion 1401 is raised upward from the upper surface of the vehicle body 902. The protrusion 1401 has an upwardly tapered shape. In other words, the protrusion 1401 has a shape such that the area in a plan view is smaller at an upper cross section. The protrusion 1401 has, e.g., a conical shape, a truncated cone shape, a pyramid shape, a truncated pyramid shape, a semispherical shape and the like. In the embodiment illustrated in FIG. 101, the protrusion 1401 has a truncated cone shape or a truncated pyramid shape.

The protrusion 1401 has a first inclined surface 1402 which is tilted such that the width of the protrusion 1401 decreases upward. The first inclined surface 1402 is tilted such that the width of the protrusion 1401 in the front-rear direction and the lateral direction decreases upward. When the protrusion 1401 has a conical shape or a truncated cone shape, the first inclined surface 1402 is one curved surface. When the protrusion 1401 has a pyramid shape or a truncated pyramid shape, the first inclined surface 1402 consists of a plurality of flat surfaces. For example, when the protrusion 1401 has a square pyramid shape or a truncated square pyramid shape, the first inclined surface 1402 consists of four flat surfaces (the front surface, the rear surface, the left surface, and the right surface).

As illustrated in FIG. 101, the protrusion 1401 is preferably provided as a bulge over the entire or substantially entire upper surface of the vehicle body 902. The harvester 1200 can be stably attached by providing the protrusion 1401 as a bulge over the entire or substantially entire upper surface of the vehicle body 902. However, the size, shape, number of protrusions 1401 can be changed as appropriate according to the type and the like of the harvester 1200. For example, the protrusion 1401 may be provided as a bulge on the upper surface of the vehicle body 902 at multiple positions.

As illustrated in FIG. 101, in the first example of structure of attachment, the attached/detached unit 1500 is the recess 1501 provided on the lower surface of the harvester 1200. The recess 1501 is recessed upward from the lower surface of the harvester 1200. In other words, the bottom of the harvester (the working device) 1200 is provided with the recess 1501 into which the protrusion 1401 is fitted when the harvester 1200 is attached to the vehicle body 902. The size, shape, and number of recesses 1501 are set to correspond to the size, shape, and number of protrusions 1401.

The recess 1501 can be provided in, e.g., the substrate 1270 (see FIG. 95 to FIG. 98, and FIG. 100) of the harvester 1200. In this case, the thickness of the substrate 1270 is set to a thickness sufficient for providing the recess 1501. However, the recess 1501 may be provided in the lower surface of the area other than the substrate 1270 of the harvester 1200.

The recess 1501 has a second inclined surface 1502. The second inclined surface 1502 has a shape matching the first inclined surface 1402 of the protrusion 1401. When the harvester (working device) 1200 is attached to the vehicle body 902, the second inclined surface 1502 comes into contact (surface contact) with the first inclined surface 1402.

The recess 1501 is provided at a position on the harvester 1200 such that when it is attached to the vehicle body 902, the position corresponding to the protrusion 1401 of the attaching/detaching mechanism 1400. The protrusion 1401 of the attaching/detaching mechanism 1400 is fitted in the recess 1501. The details will be described later, but the protrusion 1401 is fitted in the recess 1501 by raising the protrusion 1401 to the recess 1501 (raising the vehicle body 902 to the harvester 1200).

According to the first example of structure of attachment, the harvester 1200 can be attached to the top of the vehicle body 902 by fitting the protrusion 1401 provided on the upper surface of the vehicle body 902 into the recess 1501 provided in the lower surface of the harvester 1200. Also, the harvester 1200 can be detached from the top of the vehicle body 902 by removing the protrusion 1401 from the recess 1501.

More specifically, the protrusion 1401 can be fitted in the recess 1501 by locating the recess 1501 above the protrusion 1401, and raising the vehicle body 902 or lowering the harvester 1200. Thus, the harvester 1200 can be attached to the top of the vehicle body 902. In a state where the protrusion 1401 is fitted in the recess 1501, the protrusion 1401 can be removed from the recess 1501 by lowering the vehicle body 902 or raising the harvester 1200. Thus, the harvester 1200 can be detached from the top of the vehicle body 902.

**In** the above-described first example of structure of attachment, both the first inclined surface 1402 and the second inclined surface 1502 are preferably provided, but it is sufficient that at least one of them be provided. That is, a configuration may be adopted in which the protrusion 1401 includes the first inclined surface 1402, but the recess 1501 does not include the second inclined surface 1502. Alternatively, a configuration may be adopted in which the protrusion 1401 does not include the first inclined surface 1402, but the recess 1501 includes the second inclined surface 1502.

The first inclined surface 1402 is preferably provided in the entirety (from the upper end to the lower end) of the protrusion 1401, but it is sufficient that the first inclined surface 1402 be provided in an upper portion (the range from the upper end to an intermediate portion in the up-down direction) of the protrusion 1401 including at least the upper end thereof. The second inclined surface 1502 is preferably provided in the entirety (from the lower end to the upper end) of the recess 1501, but it is sufficient that the second inclined surface 1502 be provided in an upper portion (the range from the upper end to an intermediate portion in the up-down direction) of the recess 1501 including at least the upper end thereof. That is, it is sufficient that the second inclined surface 1502 be provided at a location (range) such that when the protrusion 1401 is fitted in the recess 1501, the second inclined surface 1502 comes into contact with the first inclined surface 1402 at the location, which is provided in an upper portion of the protrusion 1401 including the upper end thereof.

Instead of providing the first inclined surface 1402 in the protrusion 1401, chamfering may be performed to remove the corner of the outer peripheral edge of the upper end of the protrusion 1401. Instead of providing the second inclined surface 1502 in the recess 1501, chamfering may be performed to remove the corner of the inner peripheral edge of the lower end of the recess 1501.

As a variation of the above-described first example of structure of attachment, the harvester 1200 may be provided with the protrusion 1401, and the traveling machine body 1100 may be provided with the recess 1501. In this case, the protrusion 1401 is raised downward from the lower surface of the harvester 1200 (for example, the lower surface of the substrate 1270). The recess 1501 is recessed downward from the upper surface of the traveling machine body 1100 (the upper surface of the vehicle body 902).

A method of attaching the harvester 1200 to the traveling machine body 1100 and a method of detaching the harvester 1200 from the traveling machine body 1100 using the first example of structure of attachment will be described in detail later.

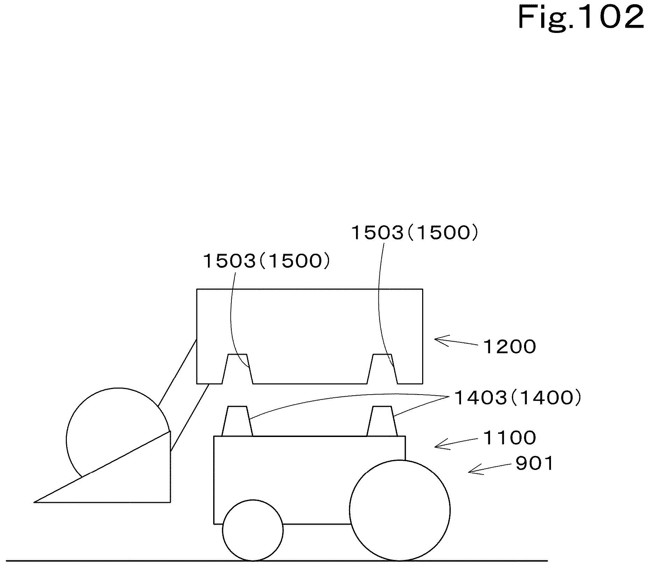

FIG. 102 illustrates a second example of structure of attachment of the harvester 1200 to the traveling machine body 1100. In the second example of structure of attachment, the attaching/detaching mechanism 1400 includes a projection 1403 that projects upward from the top of traveling machine body 1100. The projection 1403 projects upward from the top of the vehicle body 902. The projection 1403 projects upward from multiple positions on the upper surface of the vehicle body 902. For example, as illustrated in FIG. 90, the projection 1403 can be provided in the vicinity of each of four corners of the upper surface of the vehicle body 902. However, the number and positions of projections 1403 can be changed as appropriate according to the type, size and the like of the harvester 1200.

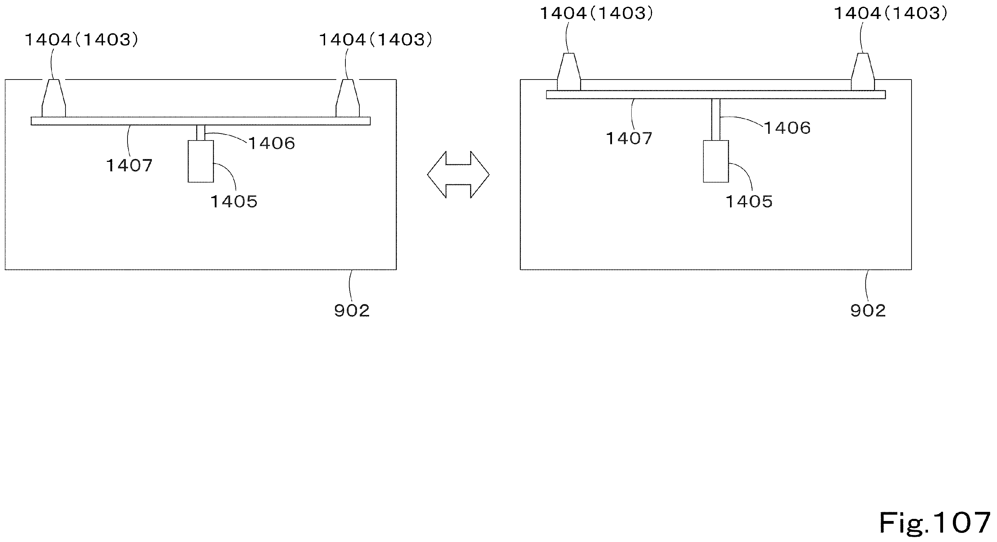

The projection 1403 is, e.g., a rod-shaped (such as cylindrical, conical, or truncated conical) pin. The projection 1403 may be fixed to the upper surface (the upper surface of the vehicle body 902) of the traveling machine body 1100, or may be provided to allow itself to appear from the upper surface (the upper surface of the vehicle body 902) of the traveling machine body 1100. When the projection 1403 is provided to allow itself to appear, for example, as illustrated in FIG. 107, the pins 1404 included in the projection 1403 are connected to an upward rod 1406 of a cylinder device 1405. Thus, it is possible to allow the pins 1404 included in the projection 1403 to appear from the upper surface (the upper surface of the vehicle body 902) of the traveling machine body 1100 by moving (extending or retracting) the rod 1406 in the up-down direction. The cylinder device 1405 is, e.g., a hydraulic cylinder that can be driven by the hydraulic fluid supplied from the above-mentioned hydraulic pump.

In the example illustrated in FIG. 107, a plurality of (all) pins 1404 included in the projection 1403 are provided upright on one piece of plate 1407, and the plate 1407 is connected to the upward rod 1406 of the cylinder device 1405. Thus, it is possible to allow the plurality of pins 1404 to move with the plate 1407 simultaneously and appear by moving (extending or retracting) the rod 1406 in the up-down direction. However, a configuration may be adopted in which a plurality of cylinder devices 1405 are provided, and the plurality of pins 1404 are individually connected to respective rods 1406 of the cylinder devices 1405.

As illustrated in FIG. 102, in the second example of structure of attachment, the attached/detached unit 1500 is an insertion hole 1503 provided in the bottom of the harvester 1200. The shape of the insertion hole 1503 corresponds to the shape of the projection 1403 of the attaching/detaching mechanism 1400. The number and positions of insertion holes 1503 correspond to the number and positions of projections 1403 of the attaching/detaching mechanism 1400.

An insertion hole 1503 may be provided in, e.g., the substrate 1270 of the harvester 1200. When the projection 1403 is provided in the vicinity of each of four corners of the upper surface of the vehicle body 902 (see FIG. 90), the insertion hole 1503 is provided in the vicinity of each of four corners of the lower surface of the substrate 1270. However, the number and positions of insertion holes 1503 can be changed according to the number and positions of projections 1403. An insertion hole 1503 may be provided in the area other than the substrate 1270 of the harvester 1200.

According to the second example of structure of attachment, the harvester 1200 can be attached to the top of the vehicle body 902 by inserting each projection 1403 provided on the top of the vehicle body 902 into a corresponding insertion hole 1503 provided in the bottom of the harvester 1200. The harvester 1200 can be detached from the top of the vehicle body 902 by removing each projection 1403 from a corresponding insertion hole 1503.

When each projection 1403 is fixed onto the upper surface of the vehicle body 902, the projection 1403 can be inserted into a corresponding insertion hole 1503 by locating the insertion hole 1503 above the projection 1403, and raising the vehicle body 902 or lowering the harvester 1200. In a state where the projection 1403 is inserted in the insertion hole 1503, the projection 1403 can be removed from the insertion hole 1503 by lowering the vehicle body 902 or raising the harvester 1200.

When a configuration is adopted which allows the projection 1403 to appear from the upper surface of the vehicle body 902, in a state where the projection 1403 does not project from the vehicle body 902, the projection 1403 can be inserted into the insertion hole 1503 by providing the insertion hole 1503 above the projection 1403, and moving the projection 1403 upward. In a state where the projection 1403 is inserted in the insertion hole 1503, the projection 1403 can be removed from the insertion hole 1503 by moving the projection 1403 downward.

A method of attaching the harvester 1200 to the traveling machine body 1100 and a method of detaching the harvester 1200 from the traveling machine body 1100 using the second example of structure of attachment will be described in detail later.

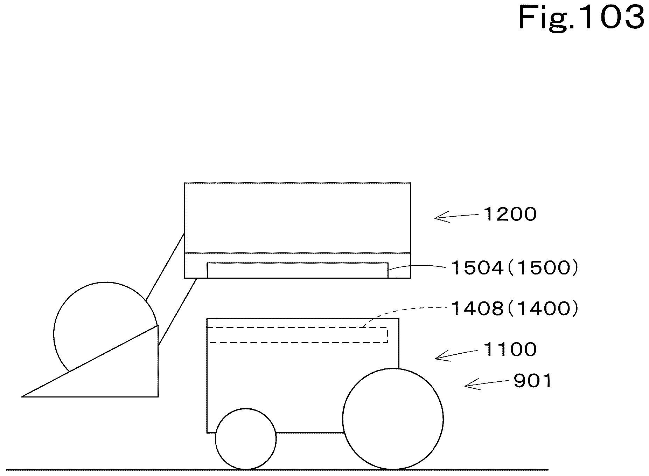

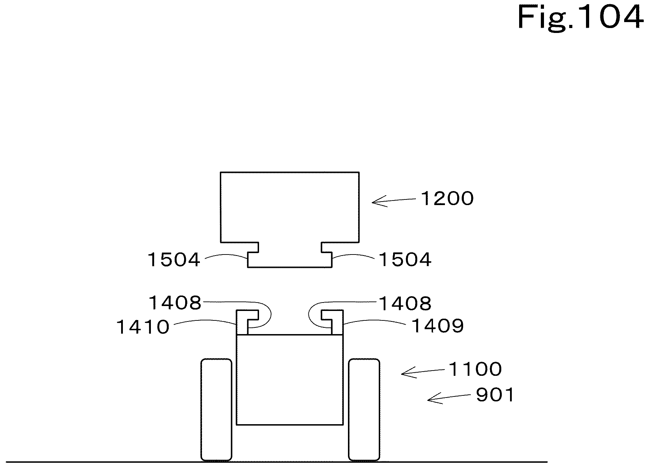

FIG. 103 and FIG. 104 illustrate a third example of structure of attachment of the harvester 1200 to the traveling machine body 1100. In the third example of structure of attachment, the attaching/detaching mechanism 1400 includes a groove 1408 that extends in the front-rear direction of the traveling machine body 1100. The groove 1408 is provided in an upper portion of the vehicle body 902. As illustrated in FIG. 104, the vehicle body 902 is provided with an upper left section 1409 that projects upward from the left of the upper surface of the vehicle body 902 and extends in front-rear direction, and an upper right section 1410 that projects upward from the right of the upper surface of the vehicle body 902 and extends in front-rear direction. The groove 1408 is provided in each of the inner surface (right surface) of the upper left section 1409 and the inner surface (left surface) of the upper right section 1410.

**In** the third example of structure of attachment, the attached/detached unit 1500 is a projection 1504 provided in the harvester 1200. The projection 1504 is provided in each of a lower portion of the left side surface and a lower portion of the right side surface of the harvester 1200. The projection 1504 extends in the front-rear direction of the harvester 1200. The projection 1504 may be provided on the substrate 1270 (see FIG. 95 to FIG. 98 and FIG. 100) of the harvester 1200. However, the projection 1504 may be provided in the area other than the substrate 1270 of the harvester 1200.

According to the third example of structure of attachment, the harvester 1200 can be attached to the top of the vehicle body 902 by sliding and inserting the projection 1504 provided on the harvester 1200 into the groove 1408 provided in the vehicle body 902. The harvester 1200 can be detached from the upper portion of the vehicle body 902 by sliding the projection 1504 through the groove 1408 to remove the projection 1504 from the groove 1408.

In the above-described third example of structure of attachment, the upper surface and the lower surface of the projection 1504 are preferably inclined surfaces in which the width of the projection 1504 in the up-down direction decreases toward the outer side (the side facing the groove 1408) of the projection 1504. In addition, the upper surface and the lower surface of the groove 1408 are preferably inclined surfaces in which the width of the groove 1408 in the up-down direction increases toward the inward side (the side facing the projection 1504) of the groove 1408.

In this case, the inclined surface is preferably provided on both the projection 1504 and the groove 1408, but it is sufficient that the inclined surface be provided on at least one of them. Thus, a configuration may be adopted in which the projection 1504 includes an inclined surface, but the groove 1408 does not include an inclined surface. Also, a configuration may be adopted in which the projection 1504 does not include an inclined surface, but the groove 1408 includes an inclined surface.

A method of attaching the harvester 1200 to the traveling machine body 1100 and a method of detaching the harvester 1200 from the traveling machine body 1100 using the third example of structure of attachment will be described in detail later.

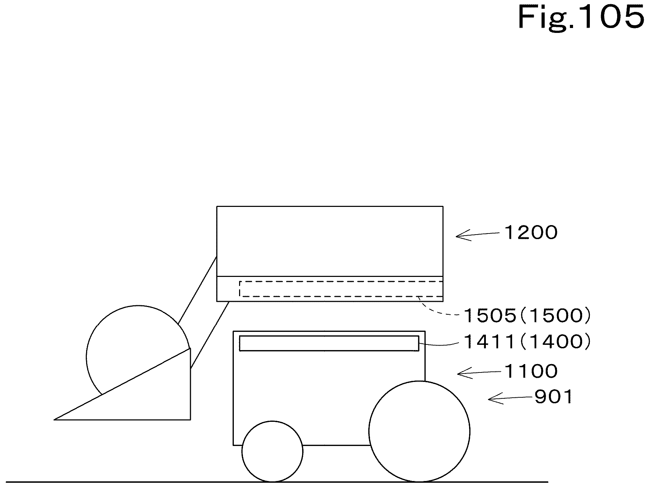

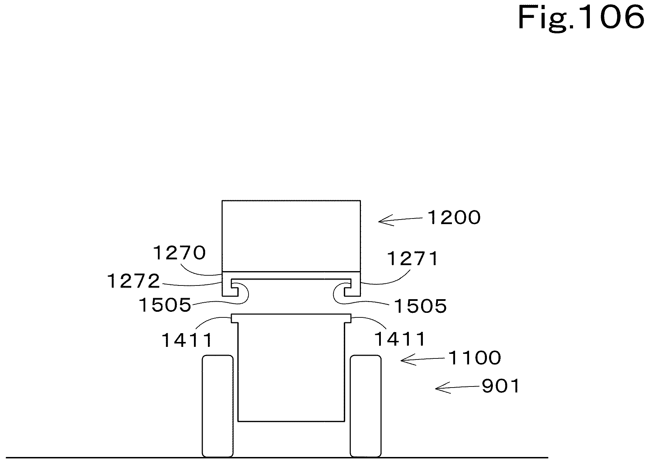

FIG. 105 and FIG. 106 illustrate a fourth example of structure of attachment of the harvester 1200 to the traveling machine body 1100. In the fourth example of structure of attachment, the attaching/detaching mechanism 1400 includes a projection 1411 that extends in the front-rear direction of the traveling machine body 1100. The projection 1411 is provided in each of the top of the left side surface and the top of the right side surface of the vehicle body 902. The projection 1411 extends in the front-rear direction of the vehicle body 902.

In the fourth example of structure of attachment, the attached/detached unit 1500 is a groove 1505 provided in the harvester 1200. The groove 1505 may be provided in, e.g., the substrate 1270. In the example illustrated in FIG. 106, the substrate 1270 is provided with a lower left section 1271 that projects downward from the left of the lower surface of the substrate 1270 and extends in the front-rear direction, and a lower right section 1272 that projects downward from the right of the lower surface of the substrate 1270 and extends in the front-rear direction. The groove 1505 is provided in each of the inner surface (right surface) of the lower left section 1271 and the inner surface (left surface) of the lower right section 1272. However, the groove 1505 may be provided in the area other than the substrate 1270 of the harvester 1200.

According to the fourth example of structure of attachment, the harvester 1200 can be attached to the top of the vehicle body 902 by sliding and inserting the projection 1411 provided on the vehicle body 902 into the groove 1505 provided in the harvester 1200. The harvester 1200 can be detached from the top of the vehicle body 902 by sliding the projection 1411 through the groove 1505 to remove the projection 1411 from the groove 1505.

In the above-described fourth example of structure of attachment, the upper surface and the lower surface of the projection 1411 are preferably inclined surfaces in which the width of the projection 1411 in the up-down direction decreases toward the outer side (the side facing the groove 1505) of the projection 1411. In addition, the upper surface and the lower surface of the groove 1505 are preferably inclined surfaces in which the width of the groove 1505 in the up-down direction increases toward the inward side (the side facing the projection 1411) of the groove 1505.

In this case, the inclined surface is preferably provided on both the projection 1411 and the groove 1505, but it is sufficient that the inclined surface be provided on at least one of them. Thus, a configuration may be adopted in which the projection 1411 includes an inclined surface, but the groove 1505 does not include an inclined surface. Also, a configuration may be adopted in which the projection 1411 does not include an inclined surface, but the groove 1505 includes an inclined surface.

A method of attaching the harvester 1200 to the traveling machine body 1100 and a method of detaching the harvester 1200 from the traveling machine body 1100 using the fourth example of structure of attachment will be described in detail later.

In the first to fourth examples of structure of attachment described above, the attaching/detaching mechanism 1400 preferably has a locking mechanism 1420. The locking mechanism 1420 is a mechanism that fixes the traveling machine body 1100 and the harvester 1200 together. Specifically, the locking mechanism 1420 is a mechanism that fixes the vehicle body 902 and the harvester 1200 together.

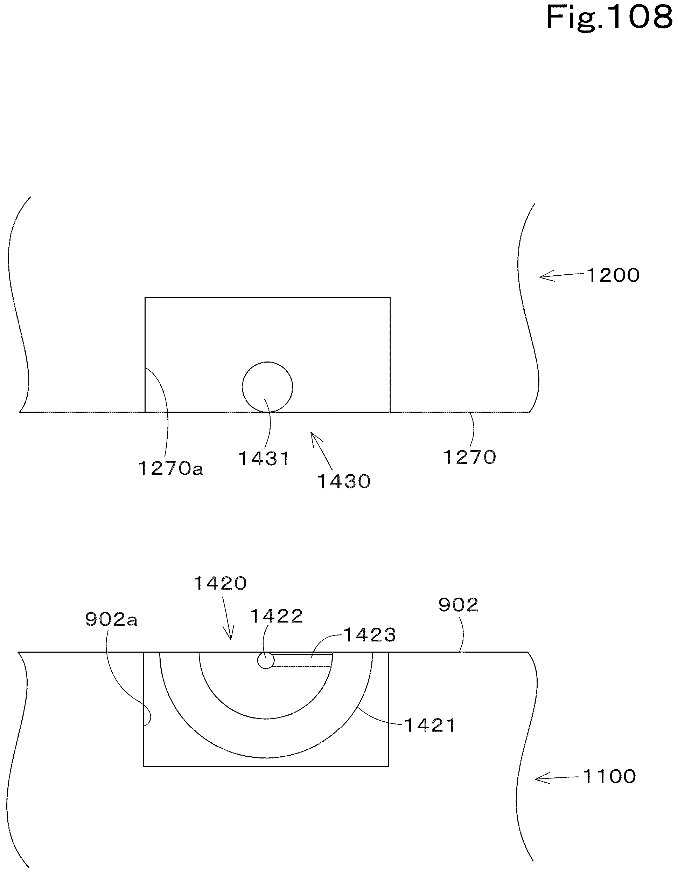

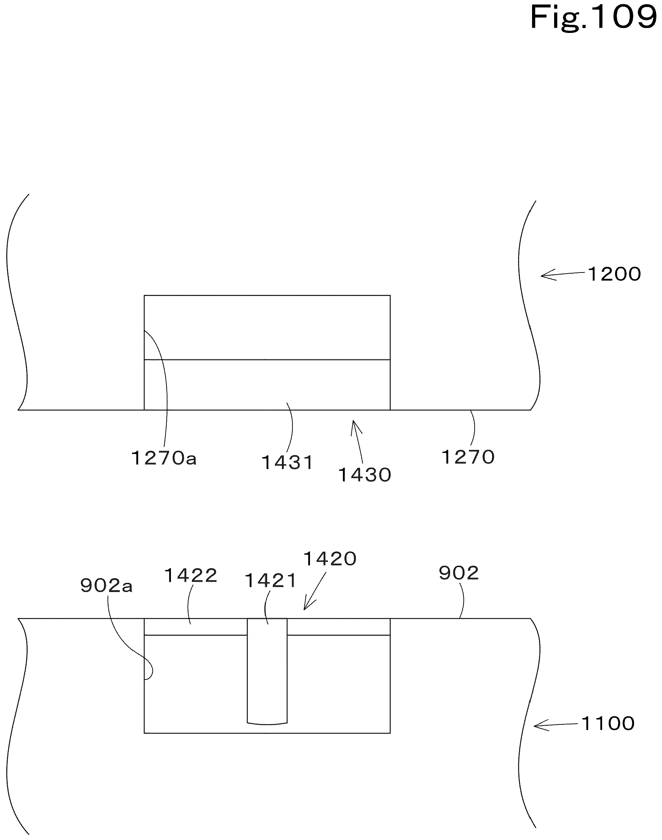

FIG. 108 and FIG. 109 are views illustrating an example of a configuration of the locking mechanism 1420, and a to-be-to-be-fixed portion 1430 fixed by the locking mechanism 1420. The locking mechanism 1420 is provided in the traveling machine body 1100 (specifically, the vehicle body 902). The to-be-fixed portion 1430 is provided in the harvester 1200.

FIG. 108 is a vertical sectional view of the locking mechanism 1420 and the to-be-fixed portion 1430 as seen from the side. FIG. 109 is a vertical sectional view of the locking mechanism 1420 and the to-be-fixed portion 1430 as seen from the front. In FIG. 108 and FIG. 109, hatching is omitted for simplicity of the drawings. Note that the illustrated locking mechanism 1420 and to-be-fixed portion 1430 are an example, and the configuration of the locking mechanism 1420 and the to-be-fixed portion 1430 is not limited to this.

The locking mechanism 1420 is provided in an upper portion of the vehicle body 902. The locking mechanism 1420 includes an arc-shaped locking member 1421 in a side view, and a rotating shaft 1422 which is the rotational center of the locking member 1421. A recess 902a is provided in the upper surface of the vehicle body 902, and the locking member 1421 and the rotating shaft 1422 are located in the recess 902a. The rotating shaft 1422 extends in the lateral direction, and rotates around the shaft in the lateral direction. The rotating shaft 1422 is directly or indirectly connected to the output shaft (not illustrated) of a motor, and rotates by driving the motor. The locking member 1421 and the rotating shaft 1422 are connected via a connector 1423. Thus, the locking member 1421 rotates around the rotating shaft 1422 with the rotation of the rotating shaft 1422.

The to-be-fixed portion 1430 is provided in a lower portion of the substrate 1270 of the harvester 1200. The to-be-fixed portion 1430 includes a to-be-fixed shaft 1431 that extends in the lateral direction. A recess 1270a is provided in the lower surface of the substrate 1270, and the to-be-fixed shaft 1431 is located in the recess 1270a. The recess 902a provided in the upper surface of the vehicle body 902, and the recess 1270a provided in the lower surface of the substrate 1270 are positioned such that when the harvester 1200 is attached to the top of the vehicle body 902, the recess 902a and the recess 1270a overlap in the up-down direction.

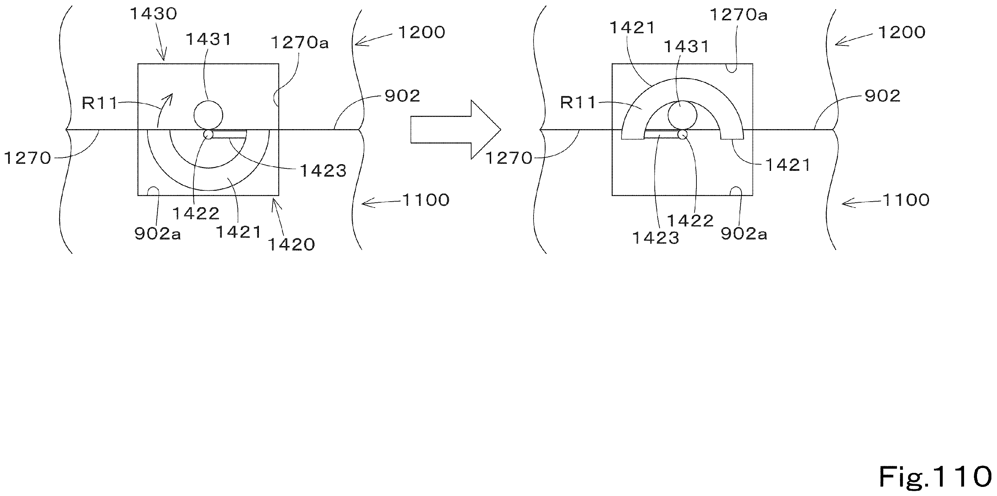

FIG. 110 illustrates a state (left figure) where the locking mechanism 1420 is not actuated, and a state (right figure) after the locking mechanism 1420 is actuated. In a state where the locking mechanism 1420 is not actuated, the locking member 1421 of the locking mechanism 1420 is in the recess 902a of the vehicle body 902, and does not project from the upper surface of the vehicle body 902. In this state, the locking member 1421 is not locked in the to-be-fixed shaft 1431 of the to-be-fixed portion 1430.

In a state where the locking mechanism 1420 is not actuated, when the locking member 1421 is rotated (see an arrow R11) with the rotating shaft 1422 by driving the motor, the locking member 1421 projects upward from the recess 902a of the vehicle body 902, and is locked in the to-be-fixed shaft 1431 in the recess 1270a of the substrate 1270. Thus, the traveling machine body 1100 (specifically, the vehicle body 902) and the harvester 1200 are fixed together.

In the first example of structure of attachment, in a state where the protrusion 1401 provided in the vehicle body 902 is inserted in the recess 1501 provided in the harvester 1200, the locking mechanism 1420 fixes the traveling machine body 1100 (specifically, the vehicle body 902) and the harvester 1200 together. In the second example of structure of attachment, in a state where the projection 1403 provided in the vehicle body 902 is inserted in the insertion hole 1503 provided in the harvester 1200, the locking mechanism 1420 fixes the traveling machine body 1100 (specifically, the vehicle body 902) and the harvester 1200 together. In the third example of structure of attachment, in a state where the projection 1504 provided in the harvester 1200 is inserted in the groove 1408 provided in the vehicle body 902, the locking mechanism 1420 fixes the traveling machine body 1100 (specifically, the vehicle body 902) and the harvester 1200 together. In the fourth example of structure of attachment, in a state where the projection 1411 provided in the vehicle body 902 is inserted in the groove 1505 provided in the harvester 1200, the locking mechanism 1420 fixes the traveling machine body 1100 (specifically, the vehicle body 902) and the harvester 1200 together.

Note that the locking mechanism 1420 may be a mechanism that fixes the movable frame 932 and the harvester 1200 which are attached to the vehicle body 902. In this case, the locking mechanism 1420 is provided in the movable frame 932. In this case, the traveling machine body 1100 and the harvester 1200 are fixed together by fixing the movable frame 932 and the harvester 1200 together.

The first to fourth examples of structure of attachment described above may be adopted in combination. For example, the traveling machine body 1100 is provided with the protrusion 1401 in the first example and the projection 1403 in the second example, and the harvester 1200 is provided with the recess 1501 in the first example and the insertion hole 1503 in the second example.

As described above, the vehicle body 902 of the traveling machine body 1100 includes the attaching/detaching mechanism 1400 to allow attachment and detachment of the working device (harvester) 1200 to and from the vehicle body 902. The attaching/detaching mechanism 1400 includes the above-mentioned locking mechanism 1420. Specifically, the attaching/detaching mechanism 1400 includes the locking mechanism 1420 that, when the working device (harvester) 1200 is placed on the vehicle body 902, fixes the working device (harvester) 1200 to the vehicle body 902.

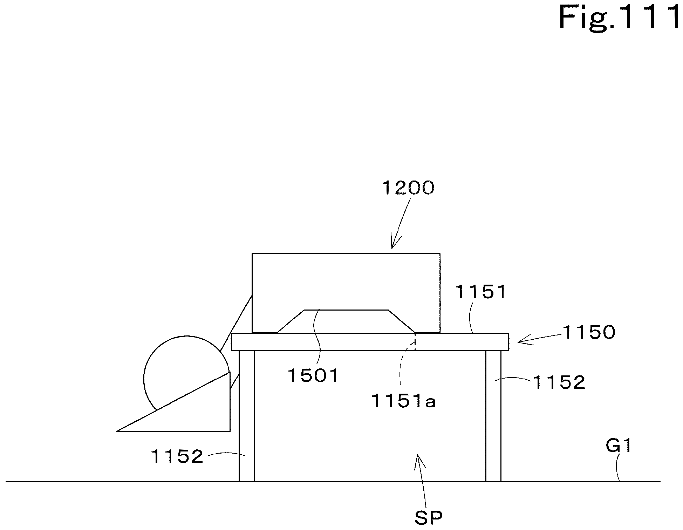

Hereinafter, a method of attaching the harvester 1200 to the traveling machine body 1100 will be described. FIG. 111 to FIG. 131 illustrate an example of a method of attaching the harvester 1200 to the traveling machine body 1100. Hereinafter, a method of attaching the harvester 1200 to the traveling machine body 1100 will be described based on FIG. 111 to FIG. 131. Note that the traveling machine body 1100 and the harvester 1200 illustrated in FIG. 111 to FIG. 131 are simplified figures of the traveling machine body 1100 and the harvester 1200 illustrated in FIG. 85 to FIG. 89, FIG. 94 to FIG. 98 and the like.

FIG. 111 to FIG. 115 illustrate a first example of a method of attaching the harvester 1200 to the traveling machine body 1100. Hereinafter, the first example of attachment method will be described. The first example of attachment method is utilized when the traveling machine body 1100 and the harvester 1200 have the above-described first example of structure of attachment. In the first example of attachment method, the vehicle body 902 can be raised and lowered by the above-described height changing mechanism (lifting mechanism) 990.

First, as illustrated in FIG. 111, the harvester 1200 is held in a state of being elevated from a ground surface G1 (holding step). Specifically, the harvester 1200 is held in a state of being elevated from the ground surface G1 by placing the harvester 1200 on a rest 1150.

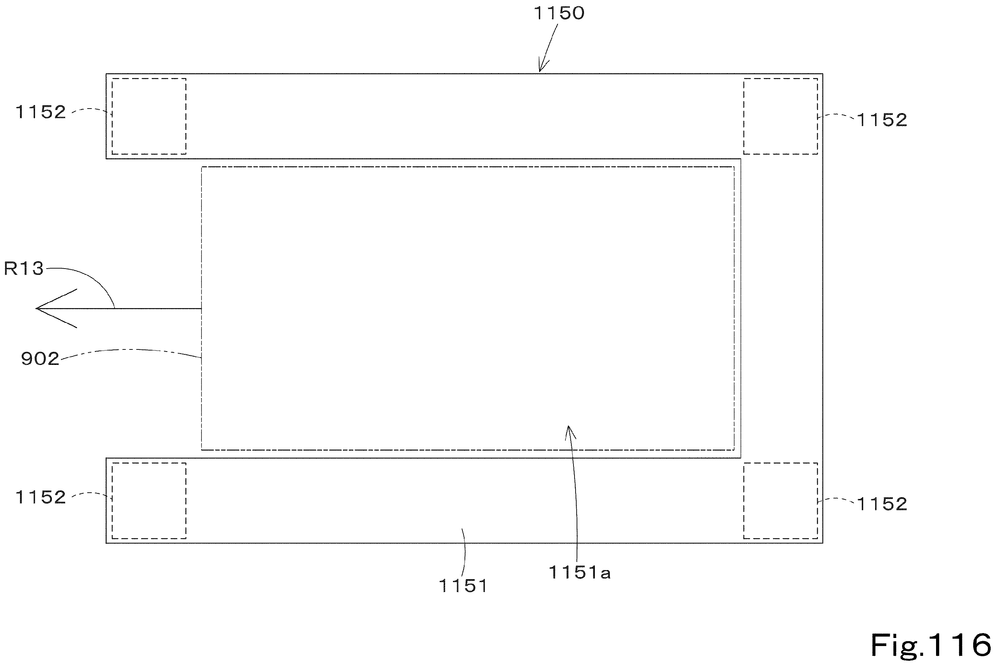

The rest 1150 includes an upper plate 1151 and pillars 1152. The upper plate 1151 is a plate on which the harvester 1200 is placed. The upper plate 1151 is not necessarily made of a board material, and may be a combination of multiple rods in a frame shape. The pillars 1152 are provided upright on the ground surface G1 to support the upper plate 1151 at a position (height) away from the ground surface G1. Under the upper plate 1151 of the rest 1150, space SP is provided which can be occupied by the traveling machine body 1100. The upper plate 1151 is provided with an opening 1151a into which an upper portion of the vehicle body 902 is inserted. As illustrated in FIG. 116, the upper plate 1151 has a substantially U-shape with a forward opening in a plan view by providing the opening 1151a.

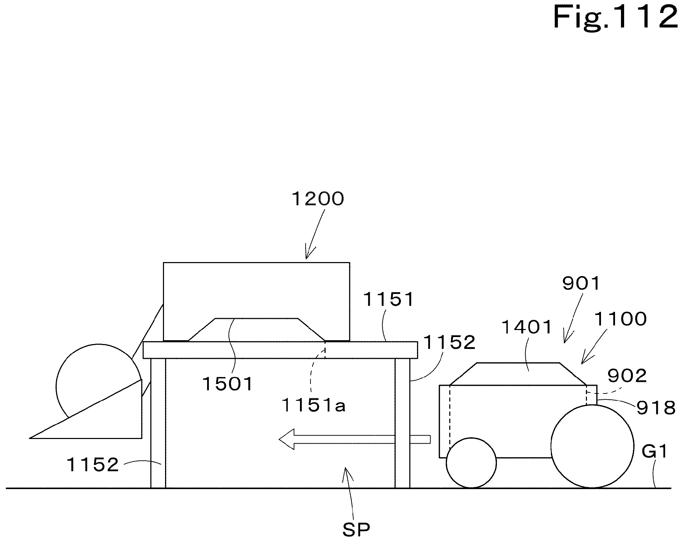

Next, as illustrated in FIG. 112, the vehicle body 902 is located below the harvester 1200 by moving the traveling machine body 1100 to the area under the harvester 1200 (moving step). When the vehicle body 902 is located below the harvester 1200, the vehicle body 902 need not be located below the entirety of the harvester 1200, and it is sufficient that the vehicle body 902 be located below at least a portion of the harvester 1200, the portion being attached to the vehicle body 902. This also applies to another attachment method described later. In this case, the traveling machine body 1100 is located in a space SP provided under the upper plate 1151 of the rest 1150. The moving step is performed in a state where the vehicle body 902 of the traveling machine body 1100 is at a height (a height lower than the upper plate 1151) at which no contact is made with the upper plate 1151. The height of the vehicle body 902 in this state is, e.g., the above-described first height (the lower limit height).

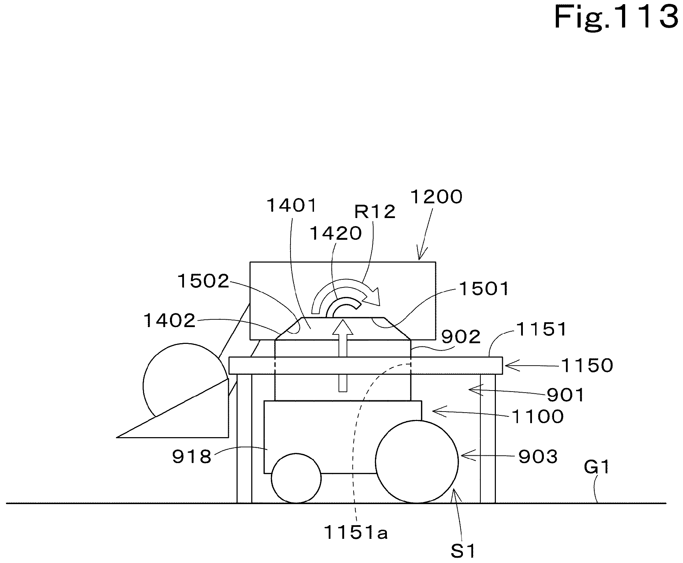

Next, as illustrated in FIG. 113, the harvester (working device) 1200 is attached onto the vehicle body 902 by raising the vehicle body 902 located below the harvester 1200 (attaching step). In this case, the vehicle body 902 is moved upward with respect to the traveling device 903 and the frame structure 918 (fixed frame 931). In the attaching step, the top of the vehicle body 902 is raised above the rest 1150 (above the upper plate 1151) through the opening 1151a in the upper plate 1151. Thus, the harvester 1200 is raised with the vehicle body 902 above the rest 1150 (above the upper plate 1151), and is placed on the top of the vehicle body 902. In this case, the protrusion 1401 provided in the vehicle body 902 is fitted in the recess 1501 provided in the harvester 1200. The protrusion 1401 is smoothly fitted into the recess 1501 by guiding the first inclined surface 1402 to the second inclined surface 1502.

When the harvester 1200 is raised with the vehicle body 902 above the rest 1150, the harvester 1200 placed on the vehicle body 902 is located above the rest 1150 (above the upper surface of the upper plate 1151) (see FIG. 113). The height of the vehicle body 902 in this state is, e.g., the above-mentioned second height (the upper limit height), but may be a height between the first height and the second height.

Subsequently, with the protrusion 1401 fitted in the recess 1501, the harvester 1200 is fixed to the top of the vehicle body 902 by actuating the locking mechanism 1420 (see an arrow R12). Thus, the harvester 1200 is attached to the vehicle body 902.

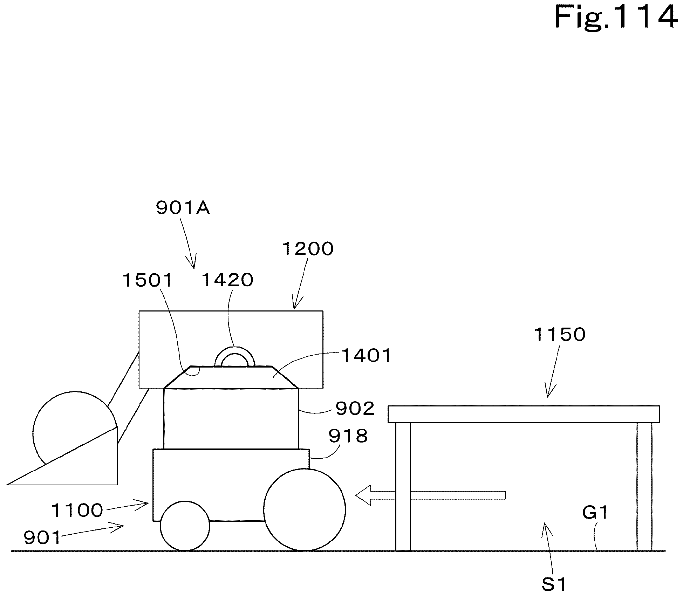

Next, as illustrated in FIG. 114, the traveling machine body 1100 with the harvester 1200 attached to the vehicle body 902 is moved in a direction away from the rest 1150 (move-away step). Thus, the traveling machine body 1100 is moved away from the space SP provided under the upper plate 1151 of the rest 1150. In this case, the vehicle body 902 can be moved away from the rest 1150 through the front of the opening 1151a (see an arrow R13 in FIG. 116) in a substantially U-shape in a plan view.

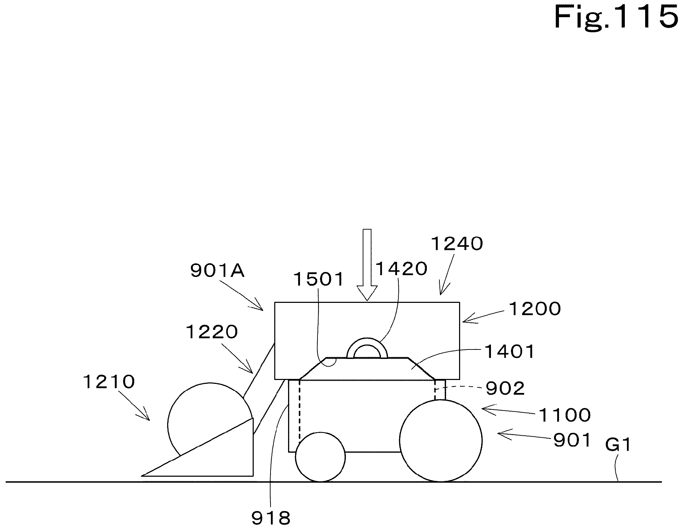

Finally, as illustrated in FIG. 115, the vehicle body 902 with the harvester 1200 attached thereto is lowered (lowering step). Thus, the height of the harvester 1200 attached to the vehicle body 902 is adjusted to a height suitable for harvesting work. In other words, in the lowering step, the vehicle body 902 is lowered such that the harvester 1200 reaches a height suitable for harvesting work. The height of the vehicle body 902 after lowering is, e.g., the above-described first height (the lower limit height).

The operations in the above-described steps (the holding step, the moving step, the attaching step, the move-away step, and the lowering step) are performed, and thus a state where the traveling machine body 1100 and harvester 1200 are separated proceeds to a state where the traveling machine body 1100 and harvester 1200 are integrated. In short, the harvesting machine 901A (see FIG. 95 to FIG. 98), that is, the working vehicle 901A including the traveling machine body 1100 and the harvester 1200 is implemented. Thus, crop harvesting work can be performed using the harvesting machine 901A (working vehicle 901A).

In the first example of attachment method described above, in the holding step, the harvester 1200 can be held in a state of being placed on the rest 1150. Thus, the harvester 1200 can be stably held in a state of being elevated from the ground surface G1. Thus, the attaching step can be stably and securely performed.

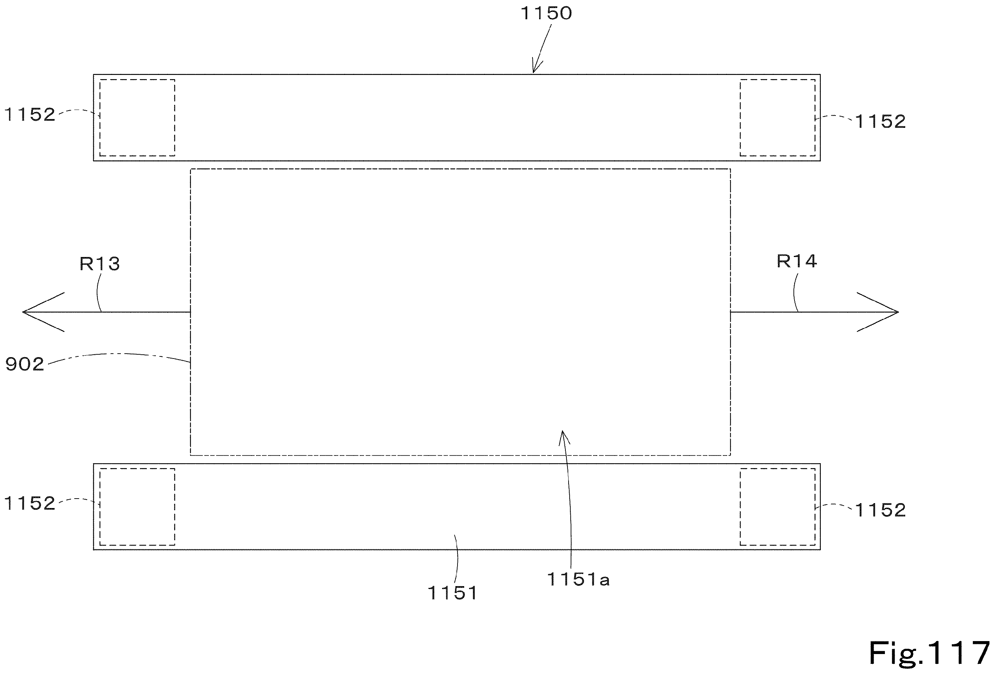

FIG. 117 is a variation of the upper plate 1151 to be used in the first example of attachment method described above. The variation of the upper plate 1151 has a shape with an opening in each of the front and the rear. In other words, the opening 1151a is provided from the front end to the rear end of the upper plate 1151. In other words, the upper plate 1151 has a shape divided into the left and the right with the opening 1151a therebetween. When the variation of the upper plate 1151 is used, in the move-away step, the traveling machine body 1100 can be moved in the same direction as or a different direction from the direction of entering the space SP in the moving step. When entering the space SP from the rear in the moving step, the traveling machine body 1100 can move forward and move away from the rest 1150 (see the arrow R13), or can move rearward and move away from the rest 1150 (see an arrow R14).

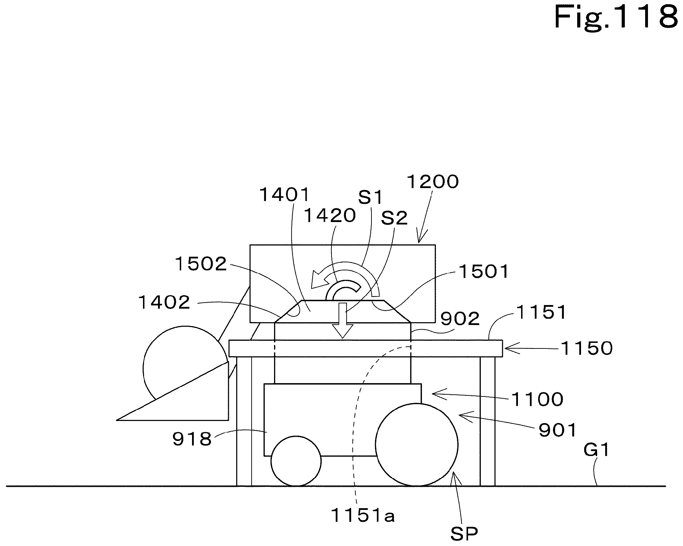

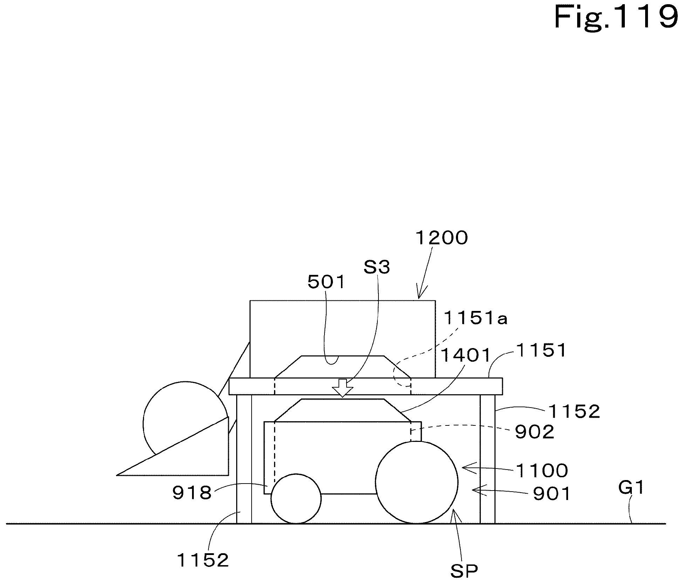

When the harvester (working device) 1200 is detached from the traveling machine body 1100, as illustrated in FIG. 118, fixing by the locking mechanism 1420 is released (see an arrow S1), then in a state where the harvester (working device) 1200 attached to the vehicle body 902 is located above the rest 1150 (a state of being elevated above the rest 1150), the harvester (working device) 1200 is lowered with the vehicle body 902 to the rest 1150 (see an arrow S2). Thus, the harvester (working device) 1200 is placed on the upper surface of the upper plate 1151 of the rest 1150. Next, as illustrated in FIG. 119, in a state where the harvester (working device) 1200 is placed on the upper surface of the upper plate 1151 of the rest 1150, only the vehicle body 902 is lowered to a position lower than the upper plate 1151 (see an arrow S3). Thus, the harvester (working device) 1200 can be detached from the vehicle body 902.

In the first example of attachment method described above, the height changing mechanism (lifting mechanism) 990 is used. The raising of the vehicle body 902 in the attaching step is performed by the height changing mechanism 990. In a state where the vehicle body 902 is located below the harvester (working device) 1200, the height changing mechanism 990 raises the vehicle body 902, and attaches the harvester (working device) 1200 to the vehicle body 902 (see FIG. 113). The height changing mechanism 990 raises the vehicle body 902 with the power supply apparatus 904 including the battery 907 and/or the motor 905, and the power transmission mechanism 1600 mounted, and attaches the harvester (working device) 1200 to the vehicle body 902.

In a state where the harvester (working device) 1200 attached to the vehicle body 902 is located above the rest 1150, the height changing mechanism (lifting mechanism) 990 lowers the harvester (working device) 1200 with the vehicle body 902 to the rest 1150, and thus detaches the harvester (working device) 1200 from the vehicle body 902 (see FIG. 118 and FIG. 119).

The first example of attachment method described above can also be used when the traveling machine body 1100 and the harvester 1200 have the second example of structure of attachment. In this case, in the attaching step, the projection 1403 provided in the vehicle body 902 is inserted in the insertion hole 1503 provided in the harvester 1200, and the harvester 1200 is fixed to the top of the vehicle body 902 by actuating the locking mechanism 1420 with the projection 1403 inserted in the insertion hole 1503. Other than this respect, the attachment method for the first example of structure of attachment applies.

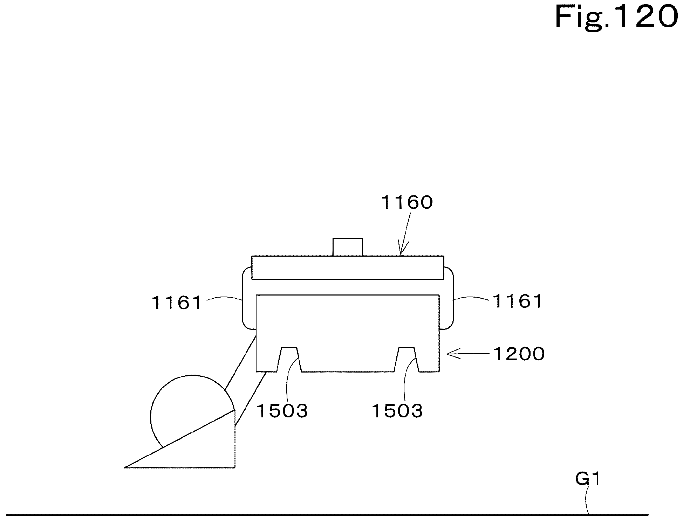

FIG. 120 to FIG. 123 illustrate a second example of a method of attaching the harvester 1200 to the traveling machine body 1100. Hereinafter, the second example of attachment method will be described. The second example of attachment method is utilized when the traveling machine body 1100 and the harvester 1200 have the above-described second example of structure of attachment.

First, as illustrated in FIG. 120, the harvester 1200 is held in a state of being elevated from the ground surface G1 (holding step). Specifically, the harvester 1200 is held in a state of being elevated from the ground surface G1 by hoisting the harvester 1200 with a hoisting device 1160 such as a crane. The hoisting device 1160 includes a holding mechanism that can switch between a state where the harvester 1200 is held and a state where holding of the harvester 1200 is released. The hoisting device 1160 illustrated in FIG. 120 includes a pair of openable and closable holding pawls 1161 as a holding mechanism.

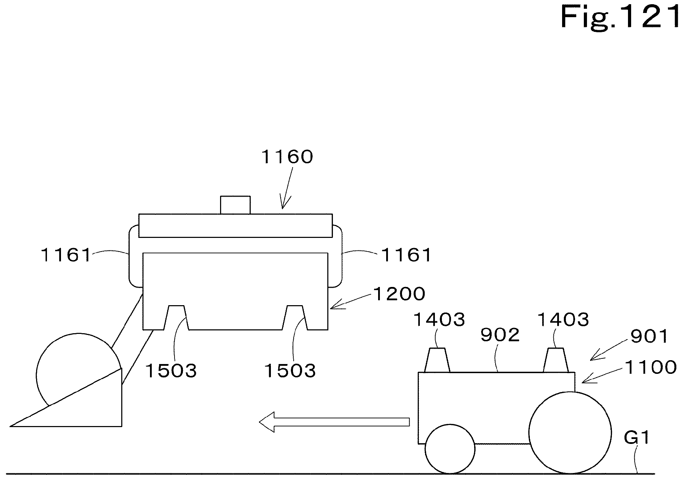

Next, as illustrated in FIG. 121, the vehicle body 902 is located below the harvester 1200 by moving the traveling machine body 1100 to the area under the harvester 1200 (moving step). The moving step is performed in a state where the height of the vehicle body 902 of the traveling machine body 1100 is such that the vehicle body 902 is not in contact with the hoisted harvester 1200. The height of the vehicle body 902 in this state is, e.g., the above-described first height (the lower limit height), but may be higher than the first height. When the height of the vehicle body 902 is higher than the first height, after the later-described move-away step, the vehicle body 902 with the harvester 1200 attached thereto is lowered to the first height.

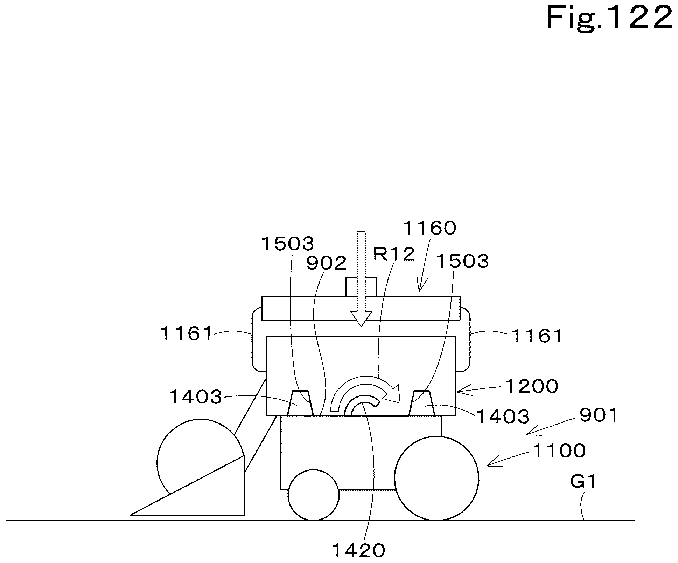

Next, as illustrated in FIG. 122, the harvester 1200 is lowered with the hoisting device 1160, and the harvester 1200 is attached onto the vehicle body 902 (attaching step). In this case, the projection 1403 provided in the vehicle body 902 is inserted into the insertion hole 1503 provided in the harvester 1200. The harvester 1200 is fixed to the top of the vehicle body 902 by actuating the locking mechanism 1420 (see the arrow R12) with the projection 1403 inserted in the insertion hole 1503. Thus, the harvester 1200 is attached to the vehicle body 902.

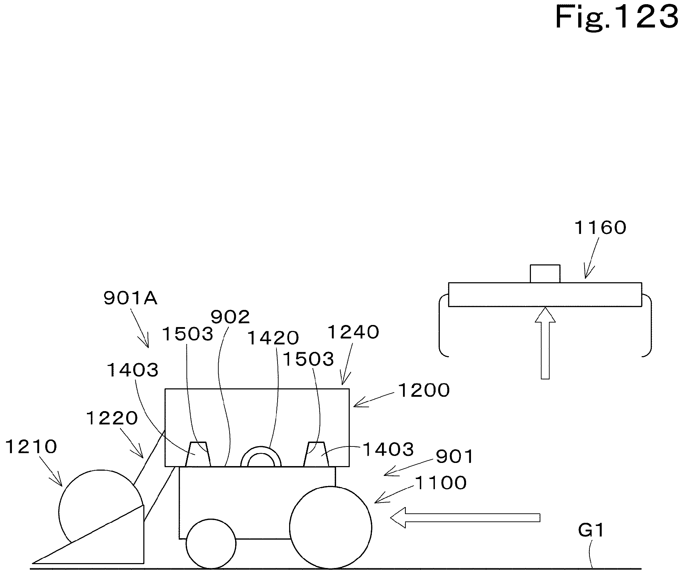

Finally, as illustrated in FIG. 123, along with raising the hoisting device 1160 after releasing the holding of the harvester 1200 by the hoisting device 1160, the traveling machine body 1100 with the harvester 1200 attached to the vehicle body 902 is moved in a direction away from the hoisting device 1160 (move-away step).

The operations in the above-described steps (the holding step, the moving step, the attaching step, and the move-away step) are performed, and thus the harvesting machine (working vehicle) 901A (see FIG. 95 to FIG. 98) including the traveling machine body 1100 and the harvester 1200 is implemented. In the second example of attachment method, in the holding step, the rest 1150 as in the first example does not need to be constructed. Since the rest 1150 is not used, attachment work can be performed at various positions.

When the traveling machine body 1100 is detached from the harvester 1200, fixing by the locking mechanism 1420 is released, then the harvester 1200 attached to the vehicle body 902 is raised by the hoisting device 1160. Thus, the projection 1403 provided in the vehicle body 902 is removed from the insertion hole 1503 provided in the harvester 1200, and thus the harvester 1200 can be detached from the vehicle body 902.

The above-described second example of attachment method can also be used when the traveling machine body 1100 and the harvester 1200 have the first example of structure of attachment. In this case, in the attaching step, the protrusion 1401 provided in the vehicle body 902 is fitted in the recess 1501 provided in the harvester 1200, and the harvester 1200 is fixed to the top of the vehicle body 902 by actuating the locking mechanism 1420 with the projection 1401 fitted in the recess 1501. Other than this respect, the attachment method for the second example of structure of attachment applies.

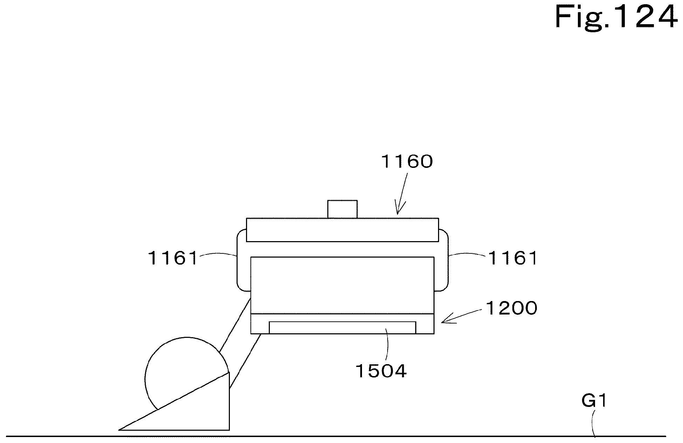

FIG. 124 to FIG. 127 illustrate a third example of a method of attaching the harvester 1200 to the traveling machine body 1100. Hereinafter, the third example of attachment method will be described. The third example of attachment method is utilized when the traveling machine body 1100 and the harvester 1200 have the above-described third example of structure of attachment.

First, as illustrated in FIG. 124, the harvester 1200 is held in a state of being elevated from the ground surface G1 (holding step). Specifically, the harvester 1200 is held in a state of being elevated from the ground surface G1 by hoisting the harvester 1200 with the hoisting device 1160 such as a crane. The hoisting device 1160 includes a holding mechanism that can switch between a state where the harvester 1200 is held and a state where holding of the harvester 1200 is released. The hoisting device 1160 illustrated in FIG. 124 includes a pair of openable and closable holding pawls 1161 as a holding mechanism.

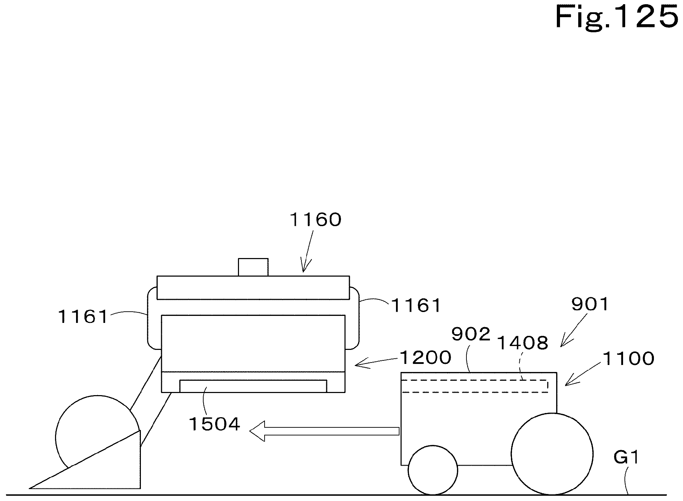

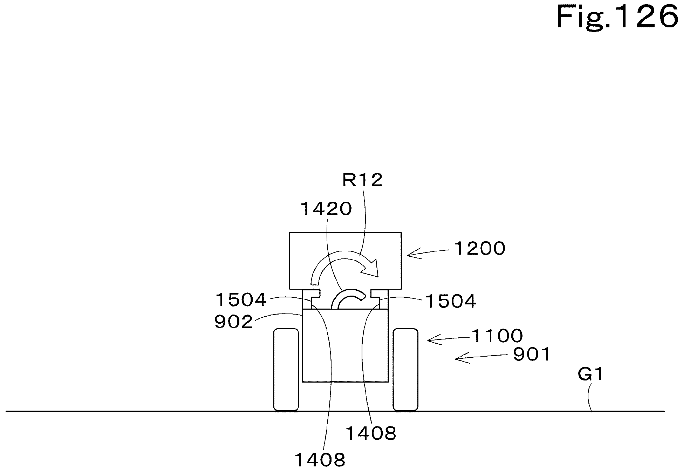

Next, as illustrated in FIG. 125, the harvester 1200 is attached onto the vehicle body 902 by moving the traveling machine body 1100 (forward or rearward) to the harvester 1200 (attaching step). In this case, the projection 1504 provided on the harvester 1200 is slid and inserted into the groove 1408 provided in the vehicle body 902 (see FIG. 126). The harvester 1200 is then fixed to the top of the vehicle body 902 by actuating the locking mechanism 1420 (see the arrow R12) with the projection 1504 inserted in the groove 1408. Thus, the harvester 1200 is attached to the vehicle body 902.

The height of the vehicle body 902 in the attaching step is the above-described first height (the lower limit height) in the illustrated example, but may be higher than the first height. When the height of the vehicle body 902 is higher than the first height, after the later-described move-away step, the vehicle body 902 with the harvester 1200 attached thereto is lowered to the first height.

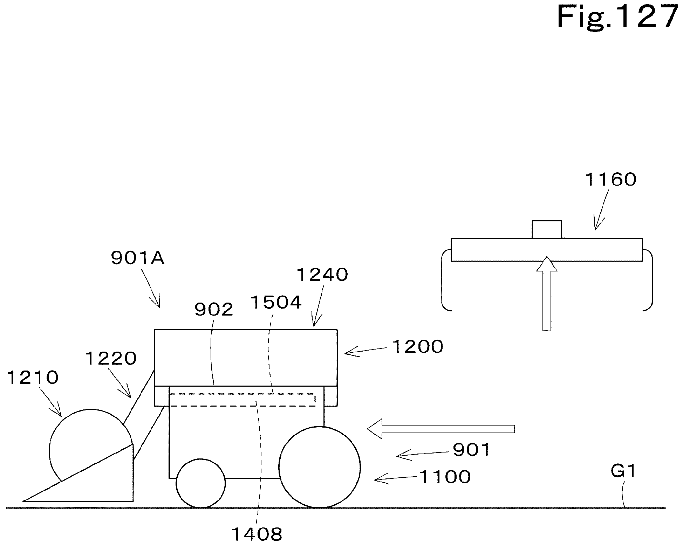

Finally, as illustrated in FIG. 127, along with raising the hoisting device 1160 after releasing the holding of the harvester 1200 by the hoisting device 1160, the traveling machine body 1100 with the harvester 1200 attached to the vehicle body 902 is moved in a direction away from the hoisting device 1160 (move-away step).

The operations in the above-described steps (the holding step, the attaching step, and the move-away step) are performed, and thus the harvester (working vehicle) 901A (see FIG. 95 to FIG. 98) including the traveling machine body 1100 and the harvester 1200 is implemented. Also, in the third example of attachment method, in the holding step, the rest 1150 as in the first example does not need to be constructed. Since the rest 1150 is not used, attachment work can be performed at various positions.

When the harvester 1200 is detached from the traveling machine body 1100, the harvester 1200 is held by the holding mechanism of the hoisting device 1160, fixing by the locking mechanism 1420 is released, then the traveling machine body 1100 is moved (forward or rearward) relative to the harvester 1200. The direction of movement of the traveling machine body 1100 then is opposite to the direction of movement in the attaching step. Due to this movement, the projection 1504 provided in the harvester 1200 is removed from the groove 1408 provided in the vehicle body 902, and thus the harvester 1200 can be detached from the vehicle body 902.

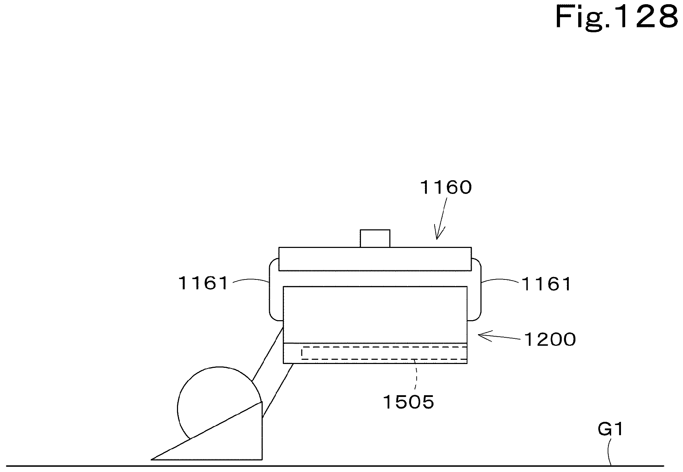

FIG. 128 to FIG. 131 illustrate a fourth example of a method of attaching the harvester 1200 to the traveling machine body 1100. Hereinafter, the fourth example of attachment method will be described. The fourth example of attachment method is utilized when the traveling machine body 1100 and the harvester 1200 have the above-described fourth example of structure of attachment.

First, as illustrated in FIG. 128, the harvester 1200 is held in a state of being elevated from the ground surface G1 (holding step). Specifically, the harvester 1200 is held in a state of being elevated from the ground surface G1 by hoisting the harvester 1200 with the hoisting device 1160 such as a crane. The hoisting device 1160 includes a holding mechanism including the above-mentioned pair of holding pawls 1161.

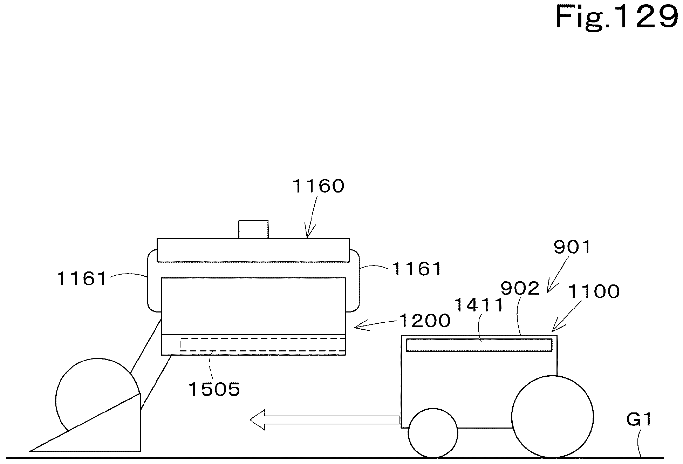

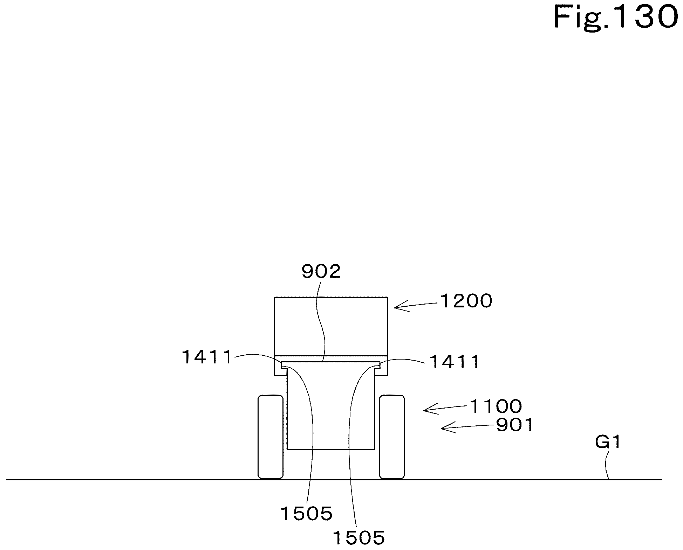

Next, as illustrated in FIG. 129, the harvester 1200 is attached onto the vehicle body 902 by moving the traveling machine body 1100 (forward or rearward) to the harvester 1200 (attaching step). In this case, the projection 1411 provided in the vehicle body 902 is slid and inserted into the groove 1505 provided in the harvester 1200 (see FIG. 130). The harvester 1200 is then fixed to the top of the vehicle body 902 by actuating the locking mechanism (not illustrated) with the projection 1411 inserted in the groove 1505. Thus, the harvester 1200 is attached to the vehicle body 902.

The height of the vehicle body 902 in the attaching step is the above-described first height (the lower limit height) in the illustrated example, but may be higher than the first height. When the height of the vehicle body 902 is higher than the first height, after the later-described move-away step, the vehicle body 902 with the harvester 1200 attached thereto is lowered to the first height.

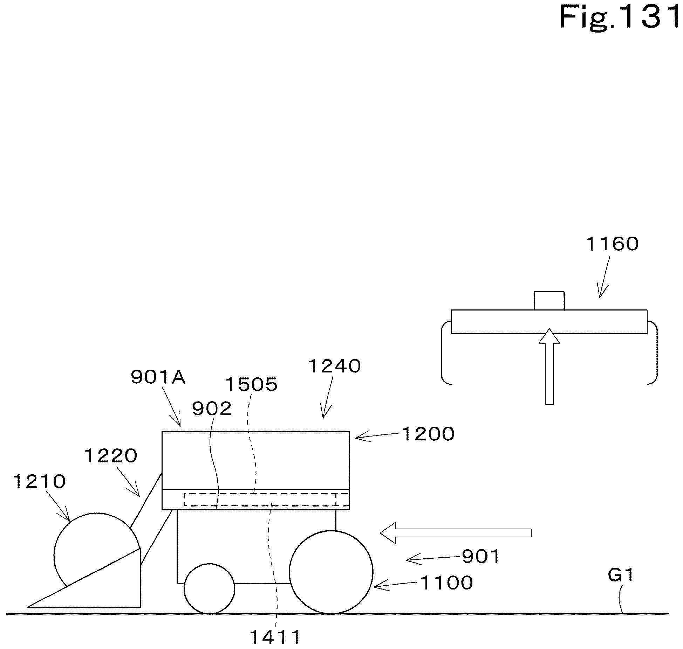

Finally, as illustrated in FIG. 131, along with raising the hoisting device 1160 after releasing the holding of the harvester 1200 by the hoisting device 1160, the traveling machine body 1100 with the harvester 1200 attached to the vehicle body 902 is moved in a direction away from the hoisting device 1160 (move-away step).

The operations in the above-described steps (the holding step, the attaching step, and the move-away step) are performed, and thus the harvester (working vehicle) 901A (see FIG. 95 to FIG. 98) including the traveling machine body 1100 and the harvester 1200 is implemented. Also, in the fourth example of attachment method, in the holding step, the rest 1150 as in the first example does not need to be constructed. Since the rest 1150 is not used, attachment work can be performed at various positions.

When the harvester 1200 is detached from the traveling machine body 1100, the harvester 1200 is held by the holding mechanism of the hoisting device 1160, fixing by the locking mechanism 1420 is released, then the traveling machine body 1100 is moved (forward or rearward) relative to the harvester 1200. The direction of movement of the traveling machine body 1100 then is opposite to the direction of movement in the attaching step. Due to this movement, the projection 1411 provided in the vehicle body 902 is removed from the groove 1505 provided in the harvester 1200, and thus the harvester 1200 can be detached from the vehicle body 902.

The first to fourth examples of attachment method have been described so far, but the method of attaching the harvester 1200 to the traveling machine body 1100 is not limited to the above-described methods. For example, also, in the holding step in the first example of attachment method described above, the holding step as in the second and third examples may be performed. Specifically, as a method of holding the harvester 1200 in a state of being elevated from the ground surface G1, the harvester 1200 may be hoisted by the hoisting device 1160 instead of placing the harvester 1200 on the rest 1150. In this case, in the moving step, the vehicle body 902 is located below the harvester 1200 by moving the traveling machine body 1100 to the area under the hoisted harvester 1200. In the attaching step, the harvester 1200 is attached to the top of the vehicle body 902 by raising the vehicle body 902 to the hoisted harvester 1200. After the attaching step, the hoisting device is removed from the harvester 1200, and the lowering step is performed.

The protrusion 1401, the projection 1403, the groove 1408, and the projection 1411 in the above-described structure of attachment and attachment method are provided in the traveling machine body 1100. Specifically, the protrusion 1401, the projection 1403, the groove 1408, and the projection 1411 are provided in the vehicle body 902 of the traveling machine body 1100. Specifically, the protrusion 1401, the projection 1403, the groove 1408, and the projection 1411 can be provided on the top of the vehicle body 902 as follows.

As illustrated in FIG. 85 to FIG. 89, the upper surface of the vehicle body 902 is located above the upper surface of the frame structure 918. Thus, the top of each side surface of the vehicle body 902 projects upward of the frame structure 918. The groove 1408 and the projection 1411 can be provided in the portion of the vehicle body 902, projecting upward of the frame structure 918 on the side surfaces of the vehicle body 902. The upper surface of the vehicle body 902 is not covered by the frame structure 918 and is exposed. Thus, the protrusion 1401 and the projection 1403 can be provided on the upper surface of the vehicle body 902 which is not covered by the frame structure 918 and is exposed.

However, the protrusion 1401, the projection 1403, the groove 1408, and the projection 1411 may be provided in the area other than the vehicle body 902 of the traveling machine body 1100. For example, the protrusion 1401, the projection 1403, the groove 1408, and the projection 1411 may be provided in the frame structure 918 of the traveling machine body 1100. In this case, the structure of attachment to attach the working device 1200 to the traveling machine body 1100 is not a structure to directly attach the working device (harvester) 1200 to the vehicle body 902, but a structure to indirectly attach the working device 1200 to the vehicle body 902 through the frame structure 918. In short, the working device 1200 is attached to the frame structure 918 of the traveling machine body 1100.

When a structure to attach the working device 1200 to the frame structure 918 is adopted, the upper surface of the vehicle body 902 does not need to be located above the upper surface of the frame structure 918. In this case, upper portions (an upper portion of the left surface of the second left frame 920L and an upper portion of the right surface of the second right frame 922R) of the side surfaces of the frame structure 918 can be provided with the groove 1408 and the projection 1411. Alternatively, part or all of the upper surface of the vehicle body 902 may be covered by the frame structure 918 (the above-mentioned connection frame). In this case, the upper surface (the upper surface of the connection frame) of the frame structure 918 can be provided with the protrusion 1401 and the projection 1403.

As described above, when a structure to attach the working device 1200 to the frame structure 918 is adopted, the protrusion 1401, the projection 1403, the groove 1408, and the projection 1411 can be provided in the movable frame 932 (the second left frame 920L, the second right frame 922R, and the connection frame) of the frame structure 918. In this case, the working device 1200 is indirectly attached to the vehicle body 902 through the movable frame 932.

Next, the power transmission path of the harvesting machine 901A (working vehicle 901A) will be described. Specifically, the path for transmitting power to drive the traveling device 903 and the harvester 1200 included in the harvesting machine 901A will be described using several examples.

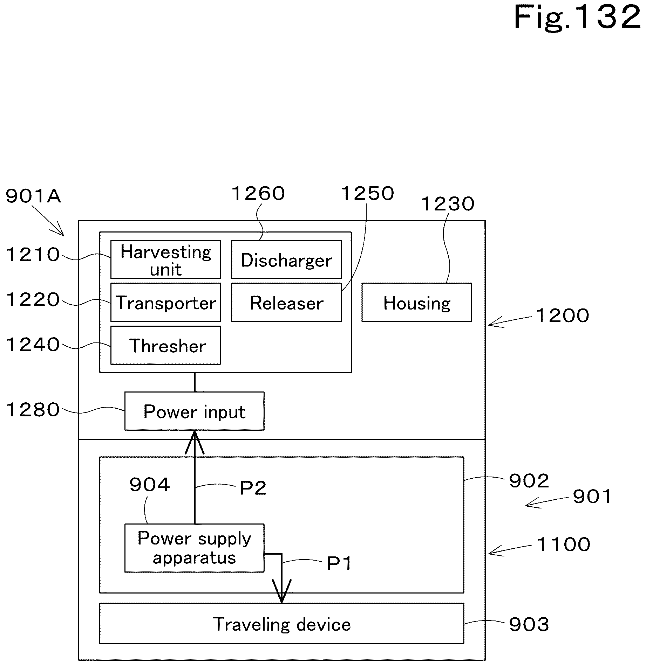

FIG. 132 illustrates an example (first example) of a power transmission path of the harvesting machine 901A. In the first example, the power generated by the power supply apparatus 904 mounted on the traveling machine body 1100 is supplied to the traveling device 903 and the harvester 1200 (see an arrow P1 and an arrow P2). Thus, in the harvesting machine 901A, power is supplied from the power supply apparatus 904 mounted on the traveling machine body 1100 to the harvester 1200. The power supplied from the power supply apparatus 904 to the harvester 1200 is input to the power input 1280 of the harvester 1200.

Thus, the drive members (the harvester unit 1210, the transporter 1220, the thresher 1240, the discharger 1260, and the releaser 1250) of the harvester 1200 are driven, and the harvesting work can be performed. In this manner, the harvester 1200 performs the harvesting work based on the power supplied from the power supply apparatus 904 mounted on the traveling machine body 1100. Thus, the harvester 1200 is not provided with a power supply apparatus that supplies power to perform the harvesting work. The harvester 1200 includes no traveling device, and thus is not provided with a power supply apparatus to supply power for traveling.

Like this, in the harvesting machine 901A including the first example of power transmission path, the operation (harvesting work, traveling) can be performed by the power supply apparatus 904 mounted on the traveling machine body 1100, and thus the harvester 1200 is not provided with a power supply apparatus. Thus, the harvester 1200 can be light-weighted and miniaturized.

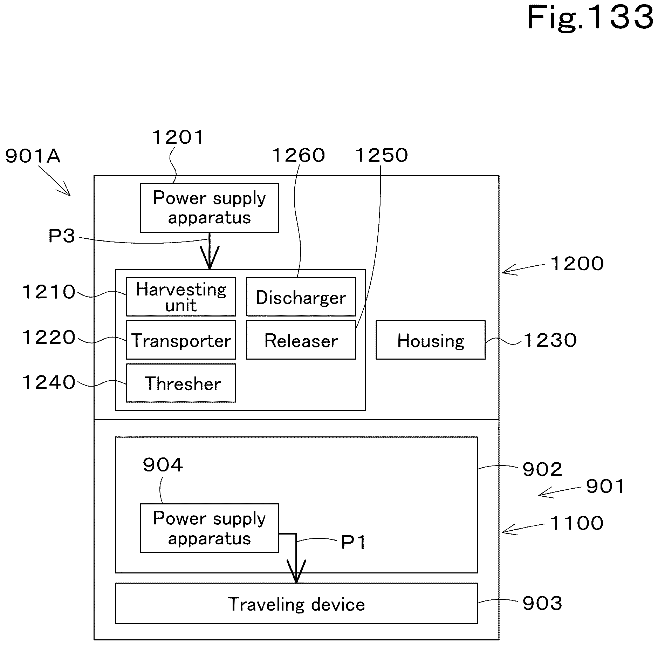

FIG. 133 illustrates another example (second example) of the power transmission path of the harvesting machine 901A. In the second example, the harvester 1200 includes another power supply apparatus 1201 that generates power to perform the harvesting work, separately from the power supply apparatus 904 mounted on the traveling machine body 1100. The power generated by the power supply apparatus 904 mounted on the traveling machine body 1100 is supplied to the traveling device 903 (see the arrow P1), but not supplied to the harvester 1200. The power generated by the power supply apparatus 1201 included in the harvester 1200 is supplied to the drive members (the harvester unit 1210, the transporter 1220, the thresher 1240, the discharger 1260, and the releaser 1250) of the harvester 1200 (see an arrow P3).

Thus, the drive members (the harvester unit 1210, the transporter 1220, the thresher 1240, the discharger 1260, and the releaser 1250) of the harvester 1200 are driven, and harvesting work can be performed. In this manner, the harvester 1200 performs the harvesting work based on the power supplied from the power supply apparatus 1201 included in the harvester 1200. Thus, power is not supplied to the harvester 1200 from the power supply apparatus 904 mounted on the traveling machine body 1100.

In the second example, the power supply apparatus 1201 included in the harvester 1200 is not limited to a specific one, and may include a motor and a battery as in the power supply apparatus 904 mounted on the traveling machine body 1100. Alternatively, the power supply apparatus 1201 included in the harvester 1200 may include an engine or may include fuel cells instead of a motor.

Like this, in the harvesting machine 901A including the second example of power transmission path, the power from the power supply apparatus 904 mounted on the traveling machine body 1100 is not transmitted to the harvester 1200. Thus, it is possible to omit a mechanism for transmitting power from the traveling machine body 1100 to the harvester 1200.

Next, the mechanism for transmitting power from the traveling machine body 1100 to the harvester 1200 will be described. In the above-described harvesting machine 901A including the first example of power transmission path, the harvesting machine 901A is configured (see FIG. 132) to supply power to the harvester 1200 from the power supply apparatus 904 mounted on the traveling machine body 1100. When this configuration is adopted, the working vehicle 901 includes the power transmission mechanism 1600 that can transmit the power generated by the power supply apparatus 904 to the harvester 1200. The power transmission mechanism 1600 outputs the power generated by the power supply apparatus 904 to an upper position of the traveling machine body 1100 such that the power can be transmitted to the harvester 1200.

Hereinafter, the working vehicle 901 including the power transmission mechanism 1600 will be described. FIG. 134 is a view illustrating: the working vehicle 901 including the first example of the power transmission mechanism 1600; and the harvester 1200 to be attached to the traveling machine body 1100 of the working vehicle 901.

First, the configuration of the working vehicle 901 including the first example of the power transmission mechanism 1600 will be described. The first example of the power transmission mechanism 1600 includes an upward output shaft 1601 to extend upward, and output the power generated by the power supply apparatus 904 to an upper position of the traveling machine body 1100. The upward output shaft 1601 extends in a vertical direction or a substantially vertical direction.

The working vehicle 901 including the first example of the power transmission mechanism 1600 includes, in addition to the upward output shaft 1601, a horizontal output shaft 1602 that outputs the power generated by the power supply apparatus 904 rearward. The horizontal output shaft 1602 extends in a horizontal direction or a substantially horizontal direction. The front end of the horizontal output shaft 1602 is connected to the working motor 906 of the power supply apparatus 904. The rear end of the horizontal output shaft 1602 projects rearward from the vehicle body 902. The horizontal output shaft 1602 can supply power to the working device (the second working device) attached to the lifting device 910 including a three-point linkage mechanism.

The upward output shaft 1601 branches from an intermediate portion of the horizontal output shaft 1602, and extends upward. Specifically, a first bevel gear 1603 is attached to an intermediate portion of the horizontal output shaft 1602 in the extension direction (front-rear direction). A second bevel gear 1604 to be engaged with the first bevel gear 1603 is attached to the lower end of the upward output shaft 1601. The first bevel gear 1603 and the second bevel gear 1604 are engaged with each other, and thus the upward output shaft 1601 branches from an intermediate portion of the horizontal output shaft 1602. The upper end of the upward output shaft 1601 is located in the vicinity of the upper end of the vehicle body 902. The upper end of the upward output shaft 1601 is provided with a shaft coupling 1605 which can connect shafts.

According to the first example of power transmission mechanism 1600, the power generated by the power supply apparatus 904 is transmitted to the horizontal output shaft 1602, and the horizontal output shaft 1602 rotates around the axis in the front-rear direction. The rotation of the horizontal output shaft 1602 is transmitted from the first bevel gear 1603 to the second bevel gear 1604. Thus, the upward output shaft 1601 rotates around the axis in the up-down direction.

Next, the configuration of the harvester 1200 attached to the traveling machine body 1100 of the working vehicle 901 including the first example of power transmission mechanism 1600 will be described. As illustrated in FIG. 134, the harvester 1200 attached to the traveling machine body 1100 of the working vehicle 901 including the first example of power transmission mechanism 1600 includes the power input 1280 that receives an input of the power which is output upward with respect to the traveling machine body 1100 from the power transmission mechanism 1600. The harvester 1200 includes, as the power input 1280, a downward input shaft 1281 connected to the upward output shaft 1601. The lower end of the downward input shaft 1281 projects downward from the harvester 1200.

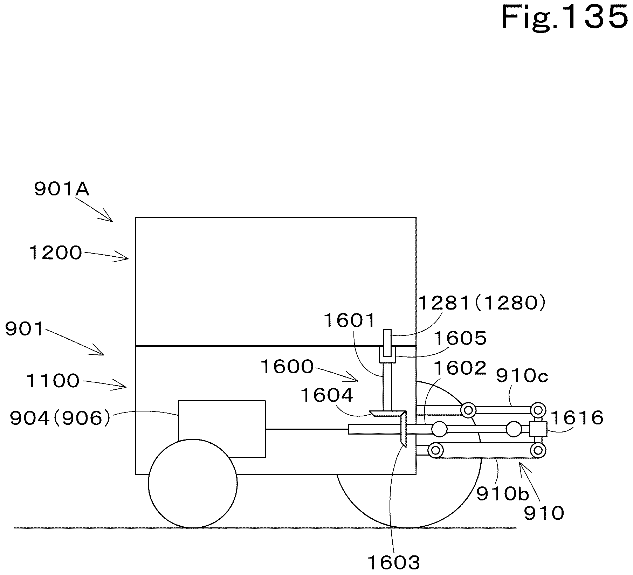

As indicated by a downward arrow in FIG. 134, when the harvester 1200 is attached to the top of the traveling machine body 1100 of the working vehicle 901 including the first example of power transmission mechanism 1600, the upward output shaft 1601 and the downward input shaft 1281 are connected through the shaft coupling 1605 (see FIG. 135). Thus, the rotational power output from the upward output shaft 1601 is input to the downward input shaft 1281. The drive members (the harvester unit 1210, the transporter 1220, the thresher 1240, the discharger 1260, and the releaser 1250) of the harvester 1200 are driven by the power input to the downward input shaft 1281.

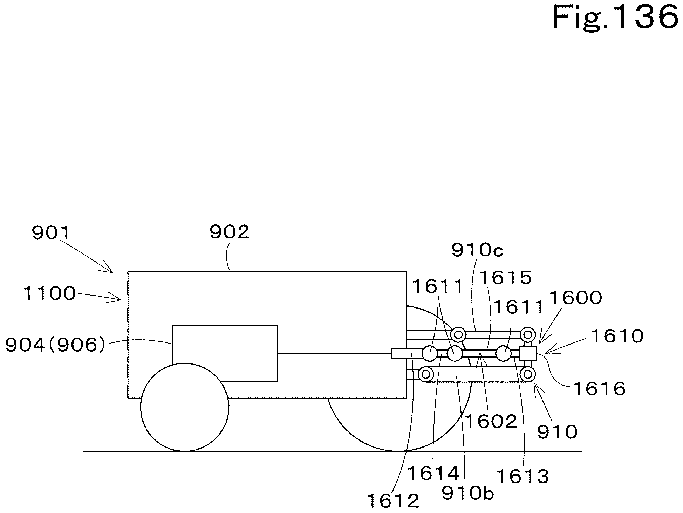

FIG. 136 is a view illustrating the traveling machine body 1100 of the working vehicle 901 including the second example of the power transmission mechanism 1600. The second example of the power transmission mechanism 1600 includes an upward changeable changing mechanism 1610 that extends the horizontal output shaft 1602 upward, which outputs the power generated by the power supply apparatus 904 rearward. The changing mechanism 1610 includes the lifting device 910 that raises and lowers the second working device 1300 (see FIG. 86 and FIG. 87) located rearward of the traveling machine body 1100. The second working device 1300 located rearward of the traveling machine body 1100 can be raised and lowered by attaching the second working device 1300 to the lifting device 910 provided rearward of the vehicle body 902.

When the second working device 1300 is not attached to the lifting device 910, the lifting device 910 changes the horizontal output shaft 1602 to an upward shaft which extends upward. Specifically, when the second working device 1300 is not attached to the lifting device 910, the lifting device 910 is raised with respect to the vehicle body 902, and thus changes the horizontal output shaft 1602 to an upward shaft which extends upward. In other words, the horizontal output shaft 1602 is changed from the horizontal direction to the upward direction with the raise of the lifting device 910. Also, the horizontal output shaft 1602 is changed from the upward direction to the horizontal direction with lowering of the lifting device 910.

A portion projecting (hereinafter referred to as a "projection of the horizontal output shaft 1602") from the traveling machine body 1100 (vehicle body 902) of the horizontal output shaft 1602 has a configuration in which a plurality of shafts are connected via a joint 1611. The joint 1611 is configured to be bendable in at least the up-down direction. As the joint 1611, a universal joint bendable in multiple directions is preferably used. Hereinafter, a description will be given assuming that the joint 1611 is a universal joint. However, the joint 1611 is not limited to the universal joint.

As illustrated in FIG. 136, the plurality of shafts include at least a first shaft 1612 located on the base end side (the vehicle body 902 side) of the projection of the horizontal output shaft 1602, and a second shaft 1613 located on the distal end side (opposite side to the vehicle body 902) of the projection of the horizontal output shaft 1602.

Note that the plurality of shafts included in the horizontal output shaft 1602 may be two or more than two. The number of universal joints 1611 can be increased corresponding to the number of the plurality of shafts included in the horizontal output shaft 1602. In the illustrated example, four shafts of the horizontal output shaft 1602 are connected by three universal joints 1611. Specifically, the horizontal output shaft 1602 in the illustrated example further includes two shafts (a third shaft 1614 and a fourth shaft 1615) between the first shaft 1612 and the second shaft 1613 (see FIG. 136).

The projection of the horizontal output shaft 1602 is bendable at the universal joints 1611. The second shaft 1613 can be rotated upward with respect to the first shaft 1612 by bending the projection of the horizontal output shaft 1602 at the universal joints 1611.

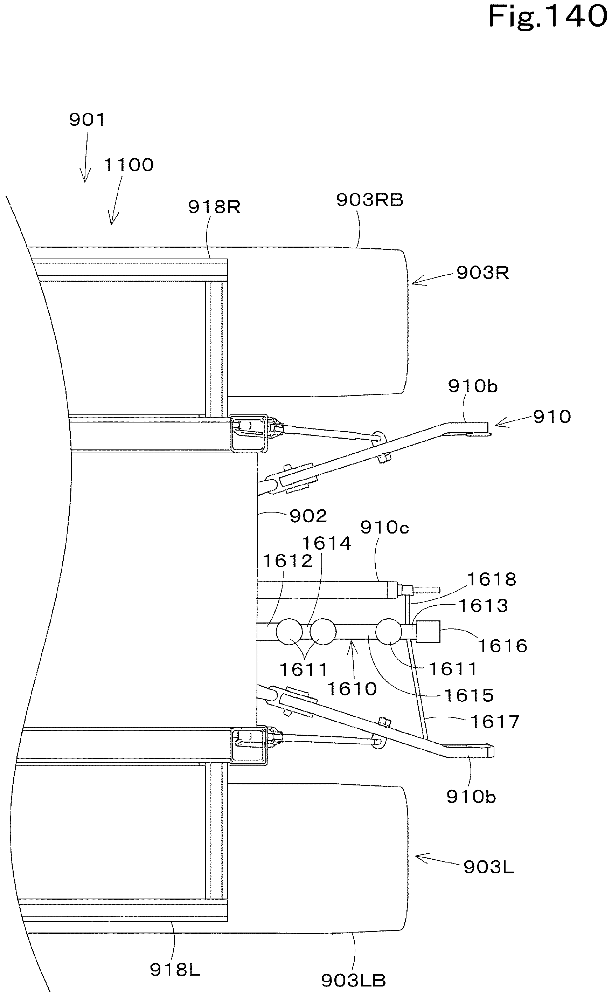

The projection of the horizontal output shaft 1602 is connected to the lifting device 910. Specifically, the projection of the horizontal output shaft 1602 is connected to the lower link 910b and/or the top link 910c of the lifting device 910. In the example illustrated in FIG. 140, the projection of the horizontal output shaft 1602 is connected to the lower link 910b through a connection member 1617, and is connected to the top link 910c through a connection member 1618. Thus, the projection of the horizontal output shaft 1602 is raised and lowered with the raising and lowering (raising and lowering of the lower link 910b and the top link 910c) of the lifting device 910. However, it is sufficient that the projection of the horizontal output shaft 1602 be connected to at least one of the lower link 910b and the top link 910c.

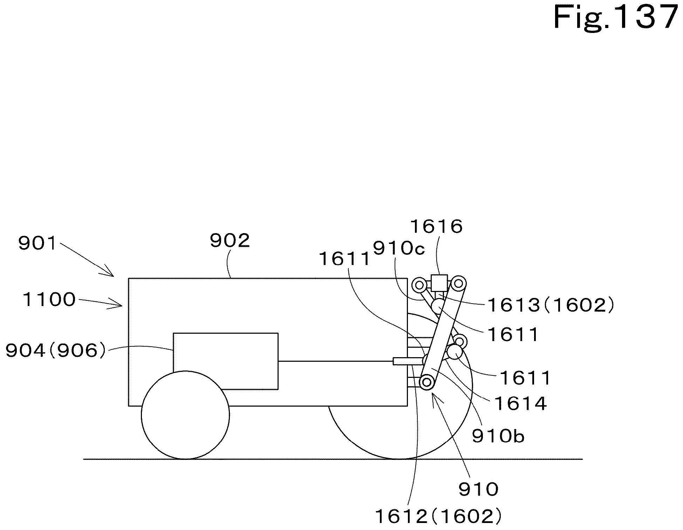

When the lower link 910b and the top link 910c are raised and lowered, the projection of the horizontal output shaft 1602 is bent at the universal joints 1611, and the second shaft 1613 rotates upward or downward with respect to the first shaft 1612. When the lower link 910b and the top link 910c are raised, the second shaft 1613 rotates upward with respect to the first shaft 1612. Thus, the horizontal output shaft 1602 (specifically, the second shaft 1613) is changed to an upward shaft that extends upward (see FIG. 137).

The distal end (the distal end of the second shaft 1613) of the projection of the horizontal output shaft 1602 is provided with a shaft coupling 1616 which can connect shafts. When the lower link 910b and the top link 910c are raised, the second shaft 1613 rotates upward with respect to the first shaft 1612, and the shaft coupling 1616 becomes upward (see FIG. 137).

The projection of the horizontal output shaft 1602 is located below the top link 910c and above the lower link 910b of the lifting device 910 (see FIG. 136). The projection of the horizontal output shaft 1602 is located at a position displaced from the top link 910c in the lateral direction (see FIG. 140). Thus, the horizontal output shaft 1602 can be prevented from interfering with the top link 910c when the horizontal output shaft 1602 (specifically, the second shaft 1613) is changed to upward by raising or lowering the lower link 910b and the top link 910c.

Note that, as in the horizontal output shaft 1602, the top link 910c and/or the lower link 910b may adopt a configuration in which a plurality of members are connected by a bendable joint (universal joint). Thus, the top link 910c and/or the lower link 910b are bendable at an intermediate portion in a longitudinal direction, and thus it is easy to change the horizontal output shaft 1602 (specifically, the second shaft 1613) connected to the top link 910c and/or the lower link 910b to upward.

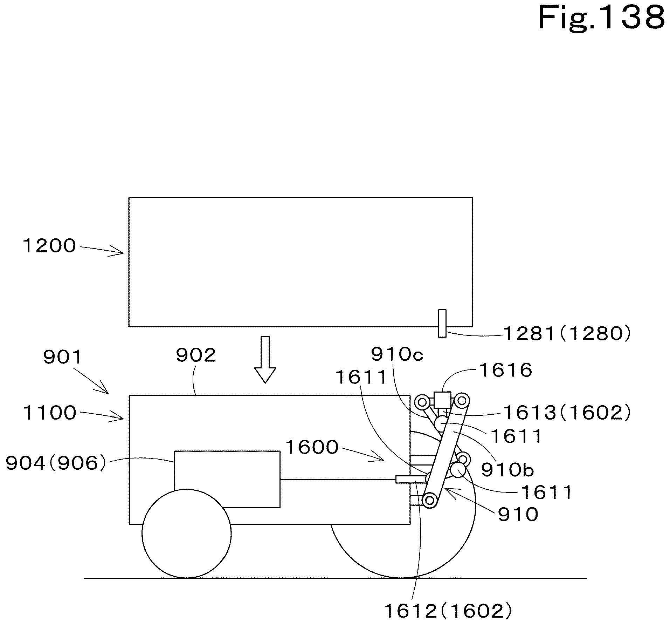

Next, the configuration of the harvester 1200 attached to the traveling machine body 1100 of the working vehicle 901 including the second example of the power transmission mechanism 1600 will be described. As illustrated in FIG. 138, the harvester 1200 attached to the traveling machine body 1100 of the working vehicle 901 including the second example of the power transmission mechanism 1600 includes the power input 1280 that receives an input of the power which is output upward with respect to the traveling machine body 1100 from the power transmission mechanism 1600. The harvester 1200 includes, as the power input 1280, the downward input shaft 1281 connected to the horizontal output shaft 1602 changed upward. The lower end of the downward input shaft 1281 projects downward from the harvester 1200.

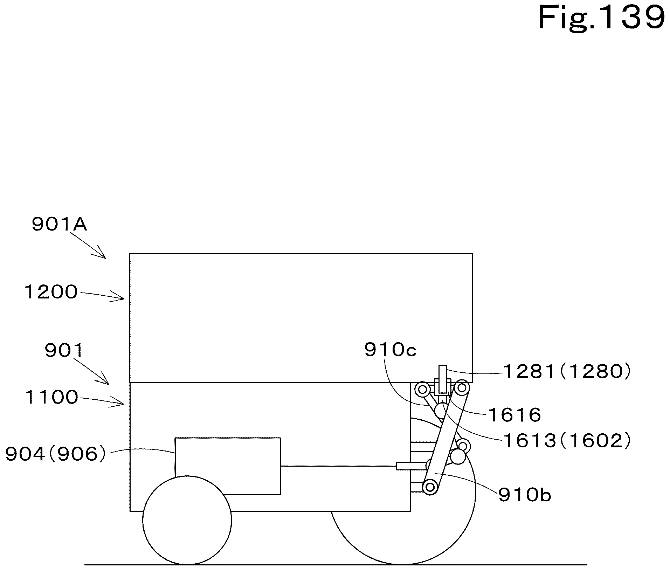

As illustrated in FIG. 138, in a state where the horizontal output shaft 1602 (the second shaft 1613) of the traveling machine body 1100 of the working vehicle 901 including the second example of the power transmission mechanism 1600 is changed to an upward shaft that extends upward, when the harvester 1200 is attached to the top of the traveling machine body 1100, the horizontal output shaft 1602 (the second shaft 1613) and the downward input shaft 1281 are connected through the shaft coupling 1616 (see FIG. 139). Thus, the rotational power output from the horizontal output shaft 1602 changed upward is input to the downward input shaft 1281. The drive members (the harvester unit 1210, the transporter 1220, the thresher 1240, the discharger 1260, and the releaser 1250) of the harvester 1200 are driven by the power input to the downward input shaft 1281.

Note that the lifting device 910 may raise and lower the second working device 1300 located forward of the traveling machine body 1100. In this case, the second working device 1300 located forward of the traveling machine body 1100 can be raised and lowered by attaching the second working device 1300 to the lifting device 910 provided forward of the vehicle body 902. In this case, the horizontal output shaft 1602 outputs the power generated by the power supply apparatus 904 to the front, and the changing mechanism 1610 changes the horizontal output shaft 1602 that outputs power forward to an upward shaft that extends upward.

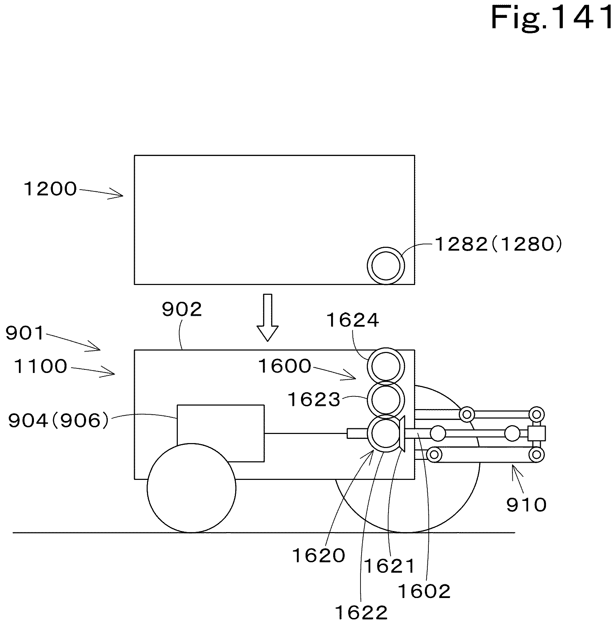

FIG. 141 is a view illustrating: the traveling machine body 1100 of the working vehicle 901 including a third example of the power transmission mechanism 1600; and the harvester 1200 attached to the traveling machine body 1100.

First, the configuration of the traveling machine body 1100 of the working vehicle 901 including the third example of the power transmission mechanism 1600 will be described. The third example of the power transmission mechanism 1600 includes a gear transmission mechanism 1620 to take power from an intermediate portion of the horizontal output shaft 1602, and output the power upward with respect to the traveling machine body 1100. The gear transmission mechanism 1620 includes a plurality of gears. In the example illustrated in FIG. 141, the gear transmission mechanism 1620 includes a first gear 1621, a second gear 1622, a third gear 1623, and a fourth gear 1624.

The first gear 1621 and the second gear 1622 are bevel gears. The first gear 1621 is attached to an intermediate portion of the horizontal output shaft 1602, and rotates around the axis of the horizontal output shaft 1602. The second gear 1622, the third gear 1623, and the fourth gear 1624 are arranged side by side in the up-down direction. The second gear 1622 is engaged with the first gear 1621. The first gear 1621 and the second gear 1622 are engaged with each other, and thus power can be taken from an intermediate portion of the horizontal output shaft 1602.

The third gear 1623 is a spur gear located above the second gear 1622, and is engaged with the second gear 1622. The fourth gear 1624 is a spur gear located above the third gear 1623, and is engaged with the third gear 1623. The fourth gear 1624 is located in the vicinity of the upper end of the vehicle body 902. The fourth gear 1624 is an output gear 1624 that outputs power upward with respect to the traveling machine body 1100, the power being taken from an intermediate portion of the horizontal output shaft 1602.

When the horizontal output shaft 1602 rotates, the first gear 1621 rotates, and the second gear 1622 engaged with the first gear 1621 rotates. When the second gear 1622 rotates, the third gear 1623 engaged with the second gear 1622 rotates. When the third gear 1623 rotates, the fourth gear 1624 engaged with the third gear 1623 rotates. The fourth gear (output gear) 1624 at the uppermost position of the gear transmission mechanism 1620 rotates, and thus the power can be output upward with respect to the traveling machine body 1100.

The number of gears included in the gear transmission mechanism 1620 can be changed (increased or decreased) as appropriate. For example, three gears (the first gear 1621, the third gear 1623, and the fourth gear 1624) engaged with each other arranged in the up-down direction may be increased or decreased in number. When the gears are increased or decreased in number, the uppermost gear (output gear) is located in the vicinity of the upper end of the vehicle body 902 by adjusting the diameters of the gears.

Next, the configuration of the harvester 1200 attached to the traveling machine body 1100 of the working vehicle 901 including the third example of the power transmission mechanism 1600 will be described. As illustrated in FIG. 141, the harvester 1200 attached to the traveling machine body 1100 of the working vehicle 901 including the third example of the power transmission mechanism 1600 includes the power input 1280 that receives an input of the power which is output upward with respect to the traveling machine body 1100 from the power transmission mechanism 1600. The harvester 1200 includes, as the power input 1280, an input gear 1282 to be engaged with the output gear 1624 (the fourth gear 1624) of the gear transmission mechanism 1620.

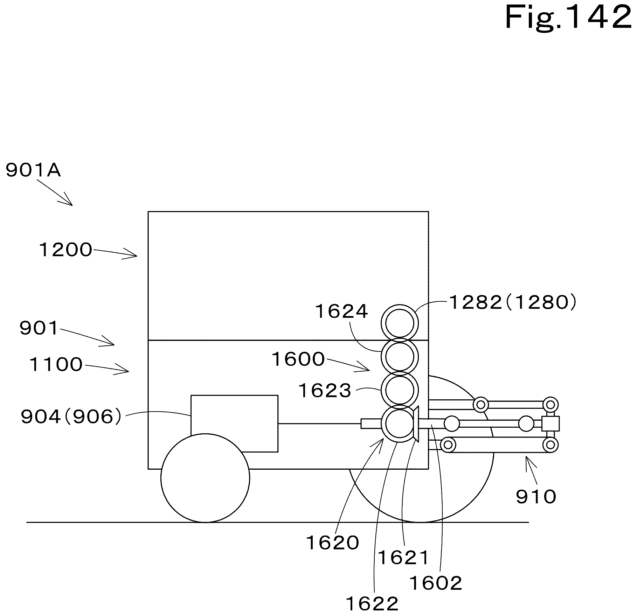

As indicated by a downward arrow in FIG. 141, when the harvester 1200 is attached to the top of the traveling machine body 1100 of the working vehicle 901 including the third example of the power transmission mechanism 1600, the output gear 1624 (the fourth gear 1624) provided in the traveling machine body 1100, and the input gear 1282 provided in the harvester 1200 are engaged with each other (see FIG. 142). Thus, the rotational power output from the output gear 1624 (the fourth gear 1624) is input to the input gear 1282. The drive members (the harvester unit 1210, the transporter 1220, the thresher 1240, the discharger 1260, and the releaser 1250) of the harvester 1200 are driven by the power input to the input gear 1282.

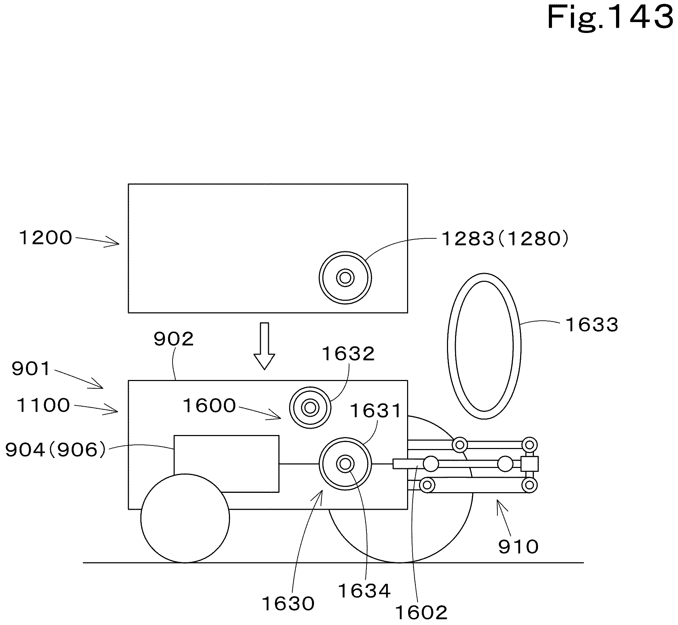

FIG. 143 is a view illustrating: the traveling machine body 1100 of the working vehicle 901 including a fourth example of the power transmission mechanism 1600; and the harvester 1200 attached to the traveling machine body 1100.

First, the configuration of the traveling machine body 1100 of the working vehicle 901 including a fourth example of the power transmission mechanism 1600 will be described. The fourth example of the power transmission mechanism 1600 includes a belt transmission mechanism 1630 to take power from an intermediate portion of the horizontal output shaft 1602, and output the power upward with respect to the traveling machine body 1100. The belt transmission mechanism 1630 includes a plurality of pulleys. In the example illustrated in FIG. 143, the belt transmission mechanism 1630 includes a plurality of pulleys (an output pulley 1631 and a tension pulley 1632), and an endless (looped) belt 1633. The number of pulleys included in the belt transmission mechanism 1630 can be changed (increased or decreased) as appropriate.

The output pulley 1631 includes a central shaft 1634 extending in the lateral direction. The rotational power of the horizontal output shaft 1602 is transmitted to the central shaft 1634 through a transmission mechanism and the like (not illustrated) such as a gear mechanism provided at an intermediate portion of the horizontal output shaft 1602. The output pulley 1631 is a pulley that takes power from an intermediate portion of the horizontal output shaft 1602. The tension pulley 1632 is a pulley that applies tension to the belt 1633. The belt 1633 is wound around the output pulley 1631, and power is transmitted from the output pulley 1631.

Next, the configuration of the harvester 1200 attached to the traveling machine body 1100 of the working vehicle 901 including the fourth example of the power transmission mechanism 1600 will be described. As illustrated in FIG. 143, the harvester 1200 attached to the traveling machine body 1100 of the working vehicle 901 including the fourth example of the power transmission mechanism 1600 includes the power input 1280 that receives an input of the power which is output upward with respect to the traveling machine body 1100 from the power transmission mechanism 1600. The harvester 1200 includes an input pulley 1283 as the power input 1280. The input pulley 1283 has the belt 1633 of the belt transmission mechanism 1630 wound thereon, and power is transmitted from the output pulley 1631.

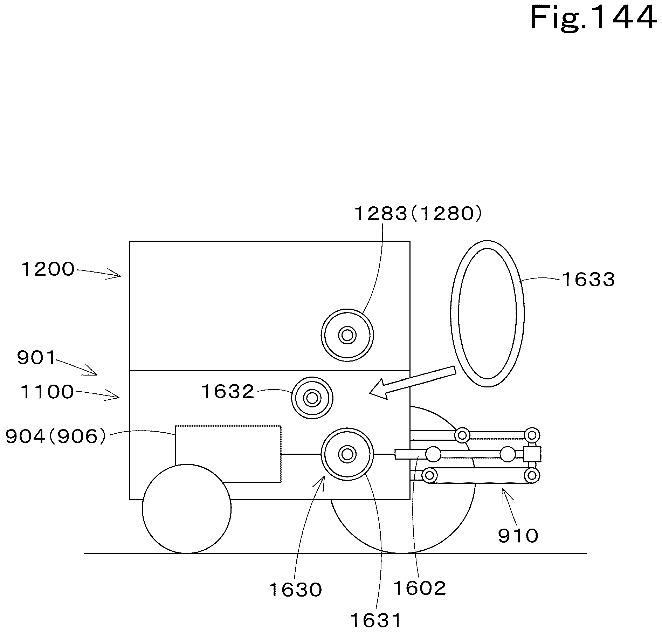

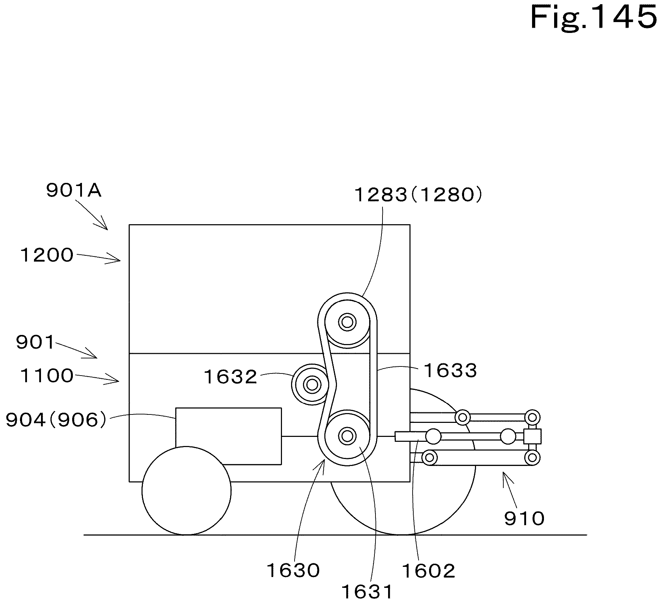

As illustrated in FIG. 144 and FIG. 145, when the harvester 1200 is attached to the top of the traveling machine body 1100 of the working vehicle 901 including the fourth example of the power transmission mechanism 1600, the belt 1633 is wound around the output pulley 1631 provided in the traveling machine body 1100 and the input pulley 1283 provided in the harvester 1200, and the tension pulley 1632 is brought into contact with the outer surface of the belt 1633. Thus, the rotational power output from the output pulley 1631 is input to the input pulley 1283 through the belt 1633. The drive members (the harvester unit 1210, the transporter 1220, the thresher 1240, the discharger 1260, and the releaser 1250) of the harvester 1200 are driven by the power input to the input pulley 1283.

In the first to fourth examples described above, the horizontal output shaft 1602 may output the power generated by the power supply apparatus 904 to the front. In this case, the rear end of the horizontal output shaft 1602 projects forward from the vehicle body. The lifting device 910 is preferably provided at a front portion of the vehicle body 902 such that the power output from the horizontal output shaft 1602 forward of the vehicle body 902 can be input to the second working device 1300 attached to the lifting device 910.

In the first to fourth examples described above, the horizontal output shaft 1602 may output the power generated by the power supply apparatus 904 laterally (leftward or rightward). In this case, the rear end of the horizontal output shaft 1602 projects laterally from the vehicle body 902. In this case, the lifting device 910 is preferably provided laterally of the vehicle body 902 such that the power output from the horizontal output shaft 1602 laterally of the vehicle body 902 can be input to the second working device 1300 attached to the lifting device 910.

The power transmission mechanism 1600 described above may be a power transmission mechanism as a combination of the gear transmission mechanism 1620 and the belt transmission mechanism 1630. In this case, the power input 1280 of the harvester 1200 includes an input gear and/or an input pulley that can receive an input of power from the power transmission mechanism as a combination of the gear transmission mechanism 1620 and the belt transmission mechanism 1630.

As described above, the working vehicle 901 includes the upward output shaft 1601 and/or the horizontal output shaft 1602 as an external output shaft for taking off the power of the power supply apparatus 904 (the working motor 906) to the outside of the vehicle body 902. The power taken from the upward output shaft 1601 can be input to the harvester 1200 serving as a working device attached to an upper portion of the traveling machine body 1100. When the horizontal output shaft 1602 is in a horizontal state, the power taken from the horizontal output shaft 1602 can be input to the second working device 1300 different from the harvester 1200, and when the horizontal output shaft 1602 is changed to an upward state, the power can be input to the harvester 1200.

The configuration of the embodiments described above is applicable not only when the harvester 1200 is a reaping device to perform reaping of crops, but also when the harvester 1200 is a digging machine to dig up crops and when the harvester 1200 is a pulling up machine to pull up crops.

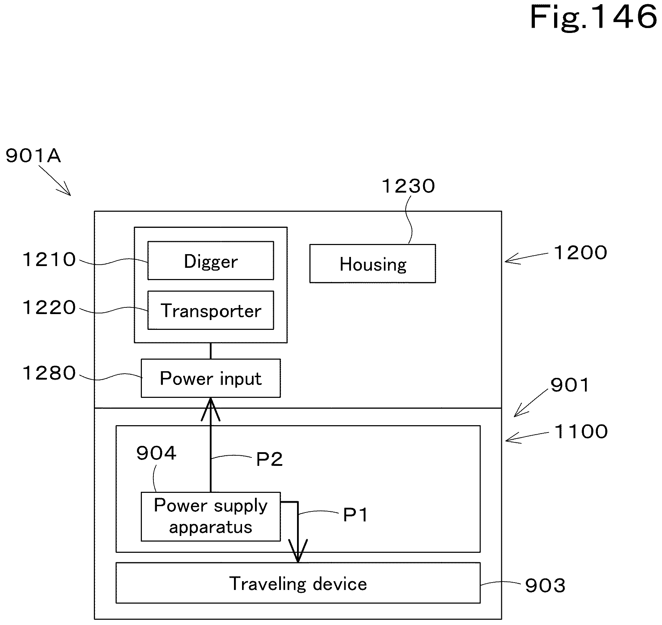

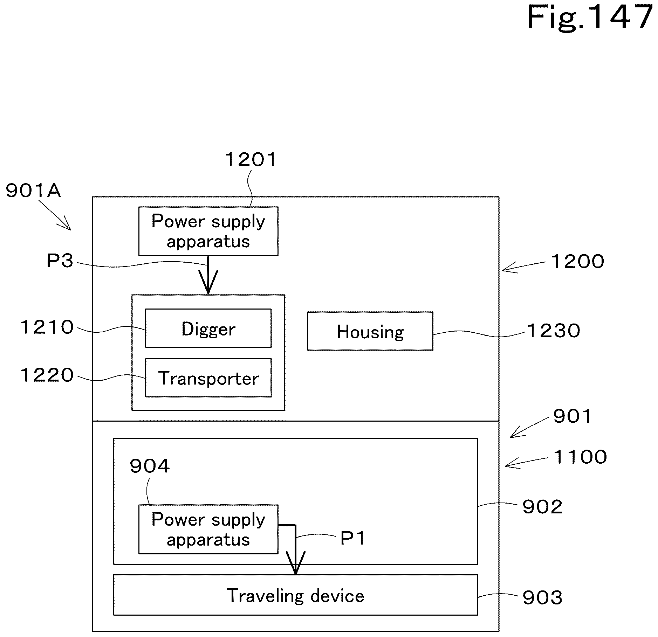

FIG. 146 and FIG. 147 are views illustrating the power transmission path of the harvesting machine 901A when the harvester 1200 is a digging machine that digs up crops. The digging machine serving as the harvester 1200 includes a digger (hereinafter referred to as a "digger 1210") as the harvester 1210, the transporter 1220, and the housing 1230.

The digger 1210 includes, e.g., a plate-like or comb-like digging blade. The digger 1210 digs up crops (such as potatoes) planted in an agricultural field, for example, by swinging a digging blade vertically with a cylinder device. The digger 1210 is located forward of the harvester 1200 (forward of the harvesting machine 901A). The digger 1210 is provided forward (on the front wheel side) or rearward (on the rear wheel side) of the bottom of the traveling machine body 1100.

The transporter 1220 includes a conveyer that transports the crops dug up by the digger 1210 upward (to an area above the traveling machine body 1100). The front of the transporter 1220 is connected to the digger 1210. The transporter 1220 extends to an area above the traveling machine body 1100 in an upper diagonal direction from a portion connected to the digger 1210. The transporter 1220 transports the crops dug up by the digger 1210 upward with respect to the traveling machine body 1100 from a position forward (rearward) of the bottom of the traveling machine body 1100. A rear portion of the transporter 1220 is connected to the housing 1230. The housing 1230 houses the crop transported by the transporter 1220. The housing 1230 is located above the traveling machine body 1100.

However, the configuration of the above-described digging machine is an example, and the configuration of the digging machine is not limited to the above configuration.

FIG. 146 is a view illustrating an example (first example) of the power transmission path of the harvesting machine 901A when the harvester 1200 is a digging machine that digs up crops. As indicated by the arrow P2, in the harvesting machine 901A, power is supplied from the power supply apparatus 904 mounted on the traveling machine body 1100 to the harvester (digging machine) 1200. The power generated by the power supply apparatus 904 is also supplied to the traveling device 903 of the traveling machine body 1100 (see the arrow P1).

The power supplied from the power supply apparatus 904 to the harvester (digging machine) 1200 is input to the power input 1280 of the harvester (digging machine) 1200. Thus, the drive members (the digger 1210 and the transporter 1220) of the harvester (digging machine) 1200 are driven, and the work (digging work) can be performed. In this manner, the harvester (digging machine) 1200 can perform the harvesting work (digging work) based on the power supplied from the power supply apparatus 904 mounted on the traveling machine body 1100.

FIG. 147 is a view illustrating another example (second example) of the power transmission path of the harvesting machine 901A when the harvester 1200 is a digging machine. In the second example, the harvester (digging machine) 1200 includes another power supply apparatus 1201 that generates power to perform the harvesting work (digging work), separately from the power supply apparatus 904 mounted on the traveling machine body 1100. Thus, as indicated by the arrow P3, power is supplied from the power supply apparatus 1201 included in the harvester (digging machine) 1200 to the drive members (the digger 1210 and the transporter 1220) of the harvester (digging machine) 1200. Thus, the drive members (the digger 1210 and the transporter 1220) of the harvester (digging machine) 1200 are driven, and the work (digging work) can be performed.

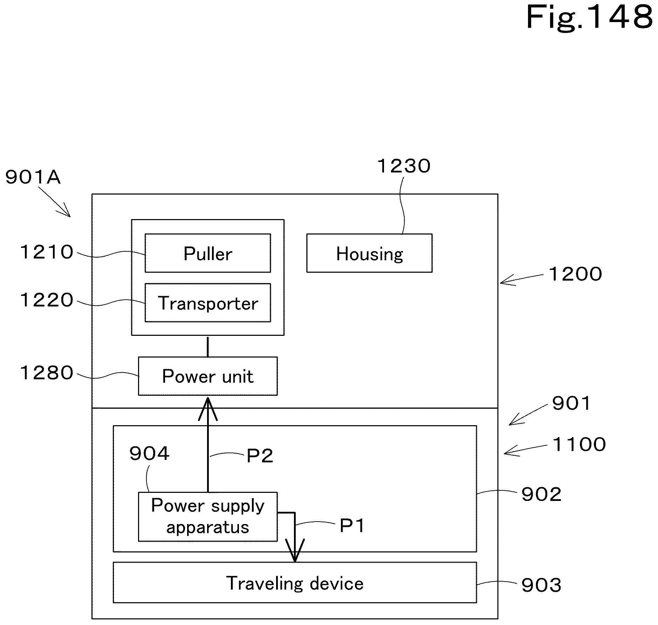

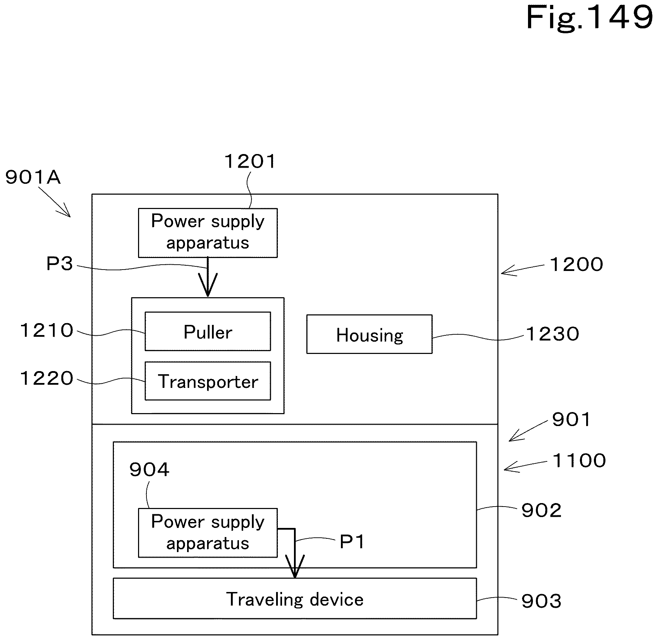

FIG. 148 and FIG. 149 illustrate the power transmission path of the harvesting machine 901A when the harvester 1200 is a pulling up machine that pulls up crops. The pulling up machine serving as the harvester 1200 includes a puller (hereinafter referred to as a "puller 1210") as the harvester 1210, the transporter 1220, and the housing 1230.

The puller 1210 includes a holder that holds, e.g., the stem and leaves of crops (such as carrot and Japanese radish) planted in an agricultural field from the left and right sides. The puller 1210 pulls up crops by pulling the stem and leaves held by the holder along an inclined surface as the puller 1210 moves forward. The puller 1210 is located forward of the harvester 1200 (forward of the harvesting machine 901A). The puller 1210 is provided forward (on the front wheel side) or rearward (on the rear wheel side) of the bottom of the traveling machine body 1100.

The transporter 1220 includes a conveyer that transports the crops pulled up by the puller 1210 upward (to an area above the traveling machine body 1100). A front portion of the transporter 1220 is connected to the puller 1210. The transporter 1220 extends to an area above the traveling machine body 1100 in an upper diagonal direction from a portion connected to the puller 1210. The transporter 1220 transports the crops pulled up by the puller 1210 upward with respect to the traveling machine body 1100 from a position forward (rearward) of the bottom of the traveling machine body 1100. A rear portion of the transporter 1220 is connected to the housing 1230. The housing 1230 houses the crop transported by the transporter 1220. The housing 1230 is located above the traveling machine body 1100.

However, the configuration of the above-described pulling up machine is an example, and the configuration of the pulling up machine is not limited to the above configuration. For example, the puller 1210 may be configured to pull the stem and leaves held by the holder by extension or retraction of the rod of a cylinder device.

FIG. 148 is a view illustrating an example (first example) of the power transmission path of the harvesting machine 901A when the harvester 1200 is a pulling up machine. As indicated by the arrow P2, in the harvesting machine 901A, power is supplied from the power supply apparatus 904 mounted on the traveling machine body 1100 to the harvester (pulling up machine) 1200. The power generated by the power supply apparatus 904 is also supplied to the traveling device 903 of the traveling machine body 1100 (see the arrow P1).

The power supplied from the power supply apparatus 904 to the harvester (pulling up machine) 1200 is input to the power input 1280 of the harvester (pulling up machine) 1200. Thus, the drive members (the transporter 1220, or the puller 1210 and the transporter 1220) of the harvester (pulling up machine) 1200 are driven, and the work (pulling up work) can be performed. In this manner, the harvester (pulling up machine) 1200 can perform the harvesting work (pulling up work) based on the power supplied from the power supply apparatus 904 mounted on the traveling machine body 1100.

FIG. 149 is a view illustrating another example (second example) of the power transmission path of the harvesting machine 901A when the harvester 1200 is a pulling up machine. In the second example, the harvester (pulling up machine) 1200 includes another power supply apparatus 1201 that generates power to perform the harvesting work (pulling up work), in addition to the power supply apparatus 904 mounted on the traveling machine body 1100. Thus, as indicated by the arrow P3, power is supplied from the power supply apparatus 1201 included in the harvester (pulling up machine) 1200 to the drive member (the transporter 1220) of the harvester (pulling up machine) 1200. Thus, the drive member (the transporter 1220) of the harvester 1200 is driven, and the harvesting work (pulling up work) can be performed.

The embodiment (embodiment B) of the present invention provides the working vehicles 901 and 901A, and the method of attaching the working device 1200 thereto which are described in the following items.

(Item BA1) A working vehicle 901 including a vehicle body 902, a traveling device 903 to support the vehicle body 902 such that the vehicle body 902 is allowed to travel, and a lifting mechanism 990 to raise and lower the vehicle body 902, wherein the lifting mechanism 990 is configured to raise the vehicle body 902 from a position below a working device 1200 to attach the working device 1200 to the vehicle body 902.

With the working vehicle 901 according to item BA1, the working device 1200 can be attached to an upper portion of the vehicle body 902. Specifically, the working device 1200 can be easily attached to an upper portion of the vehicle body 902 by raising the vehicle body 902 located below the working device 1200, by the lifting mechanism 990.

(Item BA2) The working vehicle 901 according to item BA1, wherein the lifting mechanism 990 is configured to lower, together with the vehicle body 902, the working device 1200 attached to the vehicle body 902 from a position above a rest 1150 toward the rest 1150 to detach the working device 1200 from the vehicle body 902.

With the working vehicle 901 according to item BA2, the working device 1200 attached to an upper portion of the vehicle body 902 can be detached. Specifically, when the working device 1200 attached to the vehicle body 902 is lowered with the vehicle body 902 to the rest 1150, and the vehicle body 902 can be lowered with the working device 1200 left on the rest 1150, therefore, the working device 1200 can be detached from the vehicle body 902.

(Item BA3) The working vehicle 901 according to item BA1 or BA2, wherein the vehicle body 902 has therein or thereon a power supply apparatus 904 and a power transmission mechanism 1600 to transmit power generated by the power supply apparatus 904 to the working device 1200, and the lifting mechanism 990 is configured to raise the vehicle body 902, which has therein or thereon the power supply apparatus 904 and the power transmission mechanism 1600, to attach the working device 1200 to the vehicle body 902.

With the working vehicle 901 according to item BA3, the working device 1200 can be attached to an upper portion of the vehicle body 902 with the power supply apparatus 904 and the power transmission mechanism 1600 therein or thereon.

(Item BA4) The working vehicle 901 according to item BA3, wherein the power supply apparatus 904 includes a battery 907 and a motor 905, 906 to be driven by electricity supplied from the battery 907, and the lifting mechanism 990 is configured to raise the vehicle body 902, which has therein or thereon the battery 907 and the motor 905, 906, to attach the working device 1200 to the vehicle body 902.

With the working vehicle 901 according to item BA4, the working device 1200 can be attached to an upper portion of the vehicle body 902 with the battery 907 and the motors 905 and 906 therein or thereon.

(Item BA5) The working vehicle 901 according to any one of items BA1 to BA4, wherein the vehicle body 902 includes an attaching/detaching mechanism 1400 to allow attachment and detachment of the working device 1200 to and from the vehicle body 902.

With the working vehicle 901 according to item BA5, the attaching/detaching mechanism 1400 allows attachment and detachment of the working device 1200 to and from the vehicle body 902.

(Item BA6) The working vehicle 901 according to item BA5, wherein the attaching/detaching mechanism 1400 includes a locking mechanism 1420 to secure the working device 1200 to the vehicle body 902 when the working device 1200 is placed on the vehicle body 902.

With the working vehicle 901 according to item BA6, in a state where the working device 1200 is placed on the vehicle body 902, the working device 1200 can be secured to the vehicle body 902 by the locking mechanism 1420. Thus, the working device 1200 can be reliably prevented from being detached from the vehicle body 902 during work, for example.

(Item BA7) The working vehicle 901 according to any one of items BA1 to BA6, wherein the vehicle body 902 includes a protrusion 1401 raised upward at an upper portion thereof, and the working device 1200 includes, at a lower portion thereof, a recess 1501 to receive the protrusion 1401 when the working device 1200 is attached to the vehicle body 902.

With the working vehicle 901 according to item BA7, the working device 1200 can be reliably attached to an upper portion of the vehicle body 902 by fitting the recess 1501 onto the protrusion 1401.

(Item BA8) The working vehicle 901 according to item BA7, wherein the protrusion 1401 includes a first inclined surface 1402 inclined such that a width of the protrusion 1401 decreases upward, and the recess 1501 includes a second inclined surface 1502 to contact the first inclined surface 1402 when the working device 1200 is attached to the vehicle body 902.

With the working vehicle 901 according to item BA8, the working device 1200 can be accurately positioned and attached to an upper portion of the vehicle body 902 by bringing the second inclined surface 1502 into contact with the first inclined surface 1402.

(Item BA9) The working vehicle 901 according to any one of items BA1 to BA8, wherein the working device 1200 includes a harvester 1200 to perform harvesting work including at least one of reaping, digging or pulling a crop, and the harvester 1200 is configured to perform the harvesting work with the vehicle body 902 in a lowered position.

With the working vehicle 901 according to item BA9, the harvester 1200 attached to an upper portion of the vehicle body 902 can be provided at a height suitable for reaping, digging and pulling crops and used for the harvesting work.

(Item BA10) A method of attaching a working device 1200 to a traveling machine body 1100 which includes a vehicle body 902, a traveling device 903 to support the vehicle body 902 such that the vehicle body 902 is allowed to travel, and a lifting mechanism 990 to raise and lower the vehicle body 902, the method including an attaching step including raising the vehicle body 902 from a position below the working device 1200 to attach the working device 1200 to the vehicle body 902.

With the method of attaching the working device 1200 according to item BA10, the working device 1200 can be attached to an upper portion of the vehicle body 902. Specifically, the working device 1200 can be attached to an upper portion of the vehicle body 902 by raising the vehicle body 902 from a position below the working device 1200 by the lifting mechanism 990.

(Item BB1) A working vehicle 901 including a traveling machine body 1100, a power supply apparatus 904 mounted on the traveling machine body 1100, a mount 1400 to allow a working device 1200 including a power input 1280 to receive an input of power to be attached to the traveling machine body 1100, and to allow at least the power input 1280 to be attached on the traveling machine body 1100, and a power transmission mechanism 1600 to output power generated by the power supply apparatus 904 upward with respect to the traveling machine body 1100 such that the power is transmittable to the working device 1200.

With the working vehicle 901 according to item BB1, the power generated by the power supply apparatus 904 can be output upward with respect to the traveling machine body 1100, and transmitted to the working device 1200. Specifically, the power generated by the power supply apparatus 904 can be transmitted to the working device 1200 through the power input 1280 attached on the traveling machine body 1100 via the mount 1400.

(Item BB2) The working vehicle 901 according to item BB1, wherein the power transmission mechanism 1600 includes an upward output shaft 1601 extending upward to output the power generated by the power supply apparatus 904 upward with respect to the traveling machine body 1100.

With the working vehicle 901 according to item BB2, the power generated by the power supply apparatus 904 can be output with respect to the traveling machine body 1100 via the upward output shaft 1601. Thus, the power generated by the power supply apparatus 904 can be easily and reliably transmitted to the power input 1280 of the working device 1200 attached on the traveling machine body 1100.

(Item BB3) The working vehicle 901 according to item BB2, further including a horizontal output shaft 1602 to output the power generated by the power supply apparatus 904 forward, rearward or laterally, wherein the upward output shaft 1601 branches from an intermediate portion of the horizontal output shaft 1602 and extends upward.

With the working vehicle 901 according to item BB3, the power generated by the power supply apparatus 904 can be partially drawn from an intermediate portion of the horizontal output shaft 1602, and can be transmitted to the upward output shaft 1601 that extends upward.

(Item BB4) The working vehicle 901 according to any one of items BB1 to BB3, further including a horizontal output shaft 1602 to output the power generated by the power supply apparatus 904 forward, rearward or laterally, wherein the power transmission mechanism 1600 includes a changing mechanism 1610 to allow the horizontal output shaft 1602 to be changed to an upward shaft that extends upward.

With the working vehicle 901 according to item BB4, the power transmitted from the power supply apparatus 904 to the horizontal output shaft 1602 can be output upward by changing the horizontal output shaft 1602 to an upward shaft that extends upward. Also, an output shaft to output power upward does not need to be provided, separately from the horizontal output shaft 1602.

(Item BB5) The working vehicle 901 according to item BB4, wherein the changing mechanism 1610 includes a lifting device 910 to raise and lower a second working device 1300 located forward or rearward of the traveling machine body 1100, and the lifting device 910 is configured to, when the second working device 1300 is not attached to the lifting device 910, change the horizontal output shaft 1602 to an upward shaft.

With the working vehicle 901 according to item BB5, when the second working device 1300 is attached to the lifting device 910, power can be supplied to the second working device 1300 attached to the lifting device 910 from the horizontal output shaft 1602 which has not been changed to an upward shaft (and remains horizontal). When the second working device 1300 is not attached to the lifting device 910, the horizontal output shaft 1602 can be changed to an upward shaft, and power can be supplied to the working device 1200 attached to the mount 1400.

(Item BB6) The working vehicle 901 according to item BB1, further including a horizontal output shaft 1602 to output the power generated by the power supply apparatus 904 forward, rearward or laterally, wherein the power transmission mechanism 1600 includes a gear transmission mechanism 1620 to take power from an intermediate portion of the horizontal output shaft 1602 and output the power upward with respect to the traveling machine body 1100.

With the working vehicle 901 according to item BB6, the power generated by the power supply apparatus 904 can be taken from an intermediate portion of the horizontal output shaft 1602 and transmitted upward with respect to the traveling machine body 1100 by the gear transmission mechanism 1620.

(Item BB7) The working vehicle 901 according to item BB1, further including a horizontal output shaft 1602 to output the power generated by the power supply apparatus 904 forward, rearward or laterally, wherein the power transmission mechanism 1600 includes a belt transmission mechanism 1630 to take power from an intermediate portion of the horizontal output shaft 1602 and output the power upward with respect to the traveling machine body 1100.

In the working vehicle 901 according to item BB7, the power generated by the power supply apparatus 904 can be taken from an intermediate portion of the horizontal output shaft 1602, and transmitted upward with respect to the traveling machine body 1100 via the belt transmission mechanism 1630.

(Item BB8) The working vehicle 901 according to any one of items BB1 to BB7, further including a working device 1200 attached to the mount 1400, wherein the working device 1200 includes a power input 1280 to receive an input of the power output upward from the power transmission mechanism 1600 with respect to the traveling machine body 1100.

With the working vehicle 901 according to item BB8, the power output upward with respect to the traveling machine body 1100 can be input, via the power input 1280, into the working device 1200 attached to the mount 1400.

(Item BB9) The working vehicle 901 according to item BB8 taken in combination with item BB2, wherein the working device 1200 includes, as the power input 1280, a downward input shaft 1281 connected to the upward output shaft 1601.

With the working vehicle 901 according to item BB9, the power output upward with respect to the traveling machine body 1100 by the upward output shaft 1601 can be input, through the downward input shaft 1281, into the working device 1200 attached to the mount 1400.

(Item BB10) The working vehicle 901 according to item BB8 taken in combination with item BB4, wherein the working device 1200 includes, as the power input 1280, a downward input shaft 1281 connected to the horizontal output shaft 1602 which is in the form of an upward shaft.

With the working vehicle 901 according to item BB10, the power output upward with respect to the traveling machine body 1100 via the horizontal output shaft 1602 in the form of an upward shaft can be input, through the downward input shaft 1281, into the working device 1200 attached to the mount 1400.

(Item BB11) The working vehicle 901 according to item BB8 taken in combination with item BB6, wherein the gear transmission mechanism 1620 includes an output gear 1624 to output power upward with respect to the traveling machine body 1100, the power being taken from an intermediate portion of the horizontal output shaft 1602, and the working device 1200 includes, as the power input 1280, an input gear 1282 to be engaged with the output gear 1624.

With the working vehicle 901 according to item BB11, the power output upward with respect to the traveling machine body 1100 by the output gear 1624 can be input, through the input gear 1282, into the working device 1200 attached to the mount 1400.

(Item BB12) The working vehicle 901 according to item BB8 taken in combination with item BB7, wherein the belt transmission mechanism 1630 includes an output pulley 1631 to take power from an intermediate portion of the horizontal output shaft 1602, and a belt 1633 wound around the output pulley 1631 to transmit power from the output pulley 1631, and the working device 1200 includes, as the power input 1280, an input pulley 1283 with the belt 1633 wound thereon to receive power transmitted from the output pulley 1631.

With the working vehicle 901 according to item BB12, the power output upward with respect to the traveling machine body 1100 by the output pulley 1631 can be input, through the belt 1633 and the input pulley 1283, into the working device 1200 attached to the mount 1400.

(Item BB13) A working vehicle 901A including a traveling machine body 1100, a power supply apparatus 904 mounted on the traveling machine body 1100, a working device 1200 including a power input 1280 to receive an input of power, a mount 1400 to allow the working device 1200 to be attached to the traveling machine body 1100 and allow at least the power input 1280 to be attached on the traveling machine body 1100, and a power transmission mechanism 1600 to output power generated by the power supply apparatus 904 upward with respect to the traveling machine body 1100 such that the power is transmittable to the working device 1200.

With the working vehicle 901A according to item BB13, the working vehicle 901A including the working device 1200 allows the power generated by the power supply apparatus 904 to be transmitted to the working device 1200 through the power input 1280 attached on the traveling machine body 1100 via the mount 1400.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 working vehicle
2 vehicle body
3 traveling device
3L left traveling device
3R right traveling device
7 battery
18 frame structure
18L left frame
18R right frame
18M lateral frame
90 height changing mechanism
200 working device (spreader)
201 pieces of equipment
201A piece of equipment provided on one side (first piece of equipment)
201B piece of equipment provided on the other side (second piece of equipment)
202 tank
202A first tank
202B second tank
210 support frame
901 working vehicle
902 vehicle body
903 traveling device
904 power supply apparatus
905 motor
906 motor
907 battery
990 lifting mechanism
1150 rest
1200 working device (harvester)
1400 attaching/detaching mechanism
1401 protrusion
1402 first inclined surface
1420 locking mechanism
1501 recess
1502 second inclined surface
1600 power transmission mechanism

## Claims

1. A working vehicle comprising:
a vehicle body;
a traveling device to support the vehicle body such that the vehicle body is allowed to travel; and
a working device to perform work; wherein
the working device includes pieces of equipment located at opposite sides of the vehicle body from each other.

2. The working vehicle according to claim 1, wherein the opposite sides of the vehicle body at which the pieces of equipment are located are left and right sides of the vehicle body.

3. The working vehicle according to claim 1, wherein the opposite sides of the vehicle body at which the pieces of equipment are located are front and rear sides of the vehicle body.

4. The working vehicle according to claim 1, wherein the pieces of equipment located at the opposite sides of the vehicle body from each other have the same function.

5. The working vehicle according to claim 1, wherein the pieces of equipment located at the opposite sides of the vehicle body from each other have respective different functions.

6. The working vehicle according to claim 1, wherein
the working device is a spreader to spread a liquid substance;
the pieces of equipment are tanks to store the liquid substance to be spread; and
the tanks include a first tank and a second tank located at the opposite sides of the vehicle body from each other.

7. The working vehicle according to claim 1, wherein
the pieces of equipment of the working device include batteries; and
the batteries include a first battery and a second battery located at the opposite sides of the vehicle body from each other.

8. The working vehicle according to claim 1, further comprising a support frame to support the pieces of equipment and attachable to and detachable from the vehicle body; wherein
the support frame is located above the pieces of equipment.

9. The working vehicle according to claim 1, further comprising a support frame to support the pieces of equipment and attachable to and detachable from the vehicle body; wherein
the support frame is located below the pieces of equipment.

10. The working vehicle according to claim 2, further comprising a frame structure provided at a periphery of the vehicle body and attached to the vehicle body; wherein
the frame structure includes:
a left frame located leftward of the vehicle body to extend in an up-down direction;
a right frame located rightward of the vehicle body to extend in the up-down direction; and
a lateral frame connecting the left frame and the right frame; and
the pieces of equipment include a first piece of equipment located leftward of the left frame and a second piece of equipment located rightward of the right frame.

11. The working vehicle according to claim 8, wherein the support frame is configured to be attached to the vehicle body from above.

12. The working vehicle according to claim 9, wherein the support frame is configured to be attached to the vehicle body from front or rear.

13. The working vehicle according to claim 11 or 12, further comprising a height changing mechanism to change a height of the vehicle body that is a distance of the vehicle body from a ground surface.

14. A working vehicle comprising:
a vehicle body;
a traveling device to support the vehicle body such that the vehicle body is allowed to travel; and
a lifting mechanism to raise and lower the vehicle body; wherein
the lifting mechanism is configured to raise the vehicle body from a position below a working device to attach the working device to the vehicle body.

15. The working vehicle according to claim 14, wherein the lifting mechanism is configured to lower, together with the vehicle body, the working device attached to the vehicle body from a position above a rest toward the rest to detach the working device from the vehicle body.

16. The working vehicle according to claim 14, wherein
the vehicle body has therein or thereon a power supply apparatus and a power transmission mechanism to transmit power generated by the power supply apparatus to the working device; and
the lifting mechanism is configured to raise the vehicle body, which has therein or thereon the power supply apparatus and the power transmission mechanism, to attach the working device to the vehicle body.

17. The working vehicle according to claim 16, wherein
the power supply apparatus includes a battery and a motor to be driven by electricity supplied from the battery; and
the lifting mechanism is configured to raise the vehicle body, which has therein or thereon the battery and the motor, to attach the working device to the vehicle body.

18. The working vehicle according to claim 14, wherein the vehicle body includes an attaching/detaching mechanism to allow attachment and detachment of the working device to and from the vehicle body.

19. The working vehicle according to claim 18, wherein the attaching/detaching mechanism includes a locking mechanism to secure the working device to the vehicle body when the working device is placed on the vehicle body.

20. The working vehicle according to claim 14, wherein
the vehicle body includes a protrusion raised upward at an upper portion thereof; and
the working device includes, at a lower portion thereof, a recess to receive the protrusion when the working device is attached to the vehicle body.

21. The working vehicle according to claim 20, wherein
the protrusion includes a first inclined surface inclined such that a width of the protrusion decreases upward; and
the recess includes a second inclined surface to contact the first inclined surface when the working device is attached to the vehicle body.

22. The working vehicle according to any one of claims 14 to 21, wherein
the working device includes a harvester to perform harvesting work including at least one of reaping, digging or pulling a crop; and
the harvester is configured to perform the harvesting work with the vehicle body in a lowered position.

23. A method of attaching a working device to a traveling machine body which includes a vehicle body, a traveling device to support the vehicle body such that the vehicle body is allowed to travel, and a lifting mechanism to raise and lower the vehicle body, the method comprising:
an attaching step including raising the vehicle body from a position below the working device to attach the working device to the vehicle body.
